**Europäisches Patentamt**

**European Patent Office**

**Office européen des brevets**

(19)

(11) Publication number: **0 140 302**

**A2**

(12)

# EUROPEAN PATENT APPLICATION

(21) Application number: **84112625.3**

(22) Date of filing: **19.10.84**

(51) Int. Cl.⁴: **G 06 F 15/40**

(30) Priority: **28.10.83 US 546751**

(43) Date of publication of application:
**08.05.85 Bulletin 85/19**

(84) Designated Contracting States:
**DE FR GB IT**

(71) Applicant: **International Business Machines Corporation**
**Old Orchard Road**
**Armonk, N.Y. 10504(US)**

(72) Inventor: **Ghosh, Sakti Pada**
**1381 Echo Valley Drive**
**San Jose California 95120(US)**

(72) Inventor: **Mattson, Richard Lewis**
**6838 Rockview Court**
**San Jose California 95120(US)**

(72) Inventor: **Peled, Abraham**
**13 Withington Road**
**Scarsdale New York 10583(US)**

(74) Representative: **Lancaster, James Donald**
**IBM United Kingdom Patent Operations Hursley Park**
**Winchester, Hants, S021 2JN(GB)**

(54) Method for accessing data using a self-service point-of-sale terminal.

(57) A use of relational database management at a host CPU interacting with selection requests from remote POS terminal includes (1) dynamic database generation of textual screens from the CPU relational data manager together with information for accessing a video picture source local to the POS terminal for generating selected picture screens, and (2) the textual searching of a virtual menu tree (part of a text screen) whose starting node is dependent upon the user's choice of picture or text information. The changed content of the text and picture screens is solely a function of the relationally accessed data designated by the user's menu selection.

METHOD FOR ACCESSING DATA USING A

SELF-SERVICE POINT-OF-SALE TERMINAL

TECHNICAL FIELD

This invention relates to using relational database management to increase the flexibility and performance of a data processing system. The preferred embodiment of the invention concerns a system with point-of-sale terminals, but the invention is applicable to other systems using information retrieval or data access or enquiry terminals.

BACKGROUND

The prior art is replete with point-of-sale (POS) terminals interacting with network model databases. In such network model databases entities and relationships are explicit. The entities are represented by records, while relationships are name links which connect sets of records together. In such systems (a) menu screens must all be designated, (b) the updating of distributed entities (tree-connected IMS) requires substantial computing resources, and (c) the program, patterns, and protocols driving such systems exhibit inflexibility.

For purposes of this specification, an "entity" references a collection of real world objects. A "relationship" is a logical association among the members of the entity. A "graphical representation of a relationship" would be by way of name linking of connecting sets of data usually stored in the form of records together.

Guterl and Truxal in IEEE Spectrum, September 1982, pp. 46-54, "The Wonderful World Of Epcot", describes methods for storing menus statically, and linking them together with pointers and storing them in a flat file. A "flat file" is a sequence of records on a storage medium accessible by any file access method. This reference teaches that pictorial frames may be searched by visual access methods displayed on CRT screens using a tree structure searching technique. However, the Epcot system fails to utilize information generated by the interaction of the man-machine interface such as updating. In considering the application of such systems to commercial use, for example, in point-of-sale terminals, such technology is limited in its flexibility and the amount of storage space required.

Lippman, (Movie Maps), "An Application Of The Optical Video Disk To Computer Graphics", ACM Computer Graphics, pp. 32-42, published 1980, describes a pictorial touch selection system in which pictures are displayed on a surface and selection made by an operator on a portion of the screen which in turn, invokes additional pictures associated with the touched area. However, the Lippman system lacks use of any text information, database systems, and dynamic generation of screens.

## The Relational Data Model

It should be appreciated that a database management system provides access to the database by user application processes. Such access is also given to relational utilities such as logging, recovery, and for database reorganization. Of the three extant data models; namely, hierarchical, e.g. IMS, network, and relational, the latter (relational) is based upon the theory of relations. In order to use a mathematical theory of relations, the data model relation must be treated as a set. Relational database management methods are extensively described in the literature, i.e. Sakti P. Ghosh, "Data Base Organization for Data Management", Academic Press, 1977; Wiederhold, "Database Design", McGraw Hill, 1977.

Definitionally, "normalized relations" are merely a table of information consisting of columns (attributes) and rows (tuples). Note, that any given tuple is merely a row of attribute values. A "domain" is defined to be the set of all possible values that a column may have. A "tuple" is a set of values row entered in the table associated with an object in the real world. Further, a "key" is a unique identification of a row by one or more column entries.  Significantly, a "relation" is a set of tuples.  Further, "views" combine any of the columns and select any of the rows of one or more relations.  Additionally, "view generation" is the process of selecting record subsets and their relations.

## THE INVENTION

In this invention, it was unexpectedly observed that by arranging data relationally, then screensful of data could be data driven, exhibit flexibility of path selection, and reduce computational resource necessary for updating and insertion of new information.  This substantially enhances the POS terminal.  More particularly, this new use of relational database within the POS terminal context permits (1) dynamic database generation of picture frames from a selected amount of information obtained from the relational database, and (2) the searching of a virtual menu tree, whose starting node is dependent upon the user's choice of pictorial information.  In this regard, "relational database accessing" is broadly defined as a method of accessing information and viewing the accessed information in the form of tables.  Dynamic generation of textual screens refers to intermixing information from the relational database to create screens of information or menus.  Note, the terms "screen" and "frame" are treated as synonyms.  A POS terminal, for purposes of this invention, includes at least one video display, touch sensitive input means, local memory, an intercoupling microprocessor, and a facility for connecting the terminal to a host processor.

Relational databases utilize tuples and tuple compositions.  A "tuple" is a string of attribute values.  For purposes of this invention, a "collection of tuples" forms a menu and a linked list of menus forms a tree.  Also in this invention, "menus" are created in a virtual sense.  By "virtual", it is meant that a menu is dynamically generated only for the life of the transaction and no residual image of the menu is retained subsequent to the transaction.

The invention contemplates a method for dynamically generating screens of textual data upon at least one information display surface of a point-of-sale (POS) terminal. The terminal communicates with a database management system across a message interface. The terminal further has facility for locally storing (caching) and for selectively projecting information received from the database system upon the display surface. Lastly, the terminal sends operator initiated data to the database system. The method steps comprise (a) storing object names, attributes, and values relationally as tuples and relations into the database system; (b) exhibiting a first menu of textual data upon the display surface; (c) selecting of a data element from the displayed first menu by an operator at the POS terminal; (d) responsive to the operator selection, querying the relationally stored data and acquiring a set of tuples therefrom designated by the selection; (e) generating a text screen including any menu from the acquired tuple set; and (f) displaying the generated text screen upon the display surface and rendering the system available for yet another selection of a data element from a displayed menu at the POS terminal.

Yet another aspect of the method of this invention is one in which the data is relationally stored in first and second normal forms and to which elision of objects and values is accomplished by blocking the data from inclusion within a tuple or tuples, which tuple or tuples define a screen of data. In this invention, the information needed to generate the displayed picture is entirely stored within the database in an encoded form. This enables the information to be dynamically changed in the database which will result in modified textual screens. Parenthetically, a relation in "first normal form" is defined as a table of data without any missing entries. Likewise, a relation exists in "second normal form" if it is in the first normal form and has no dependency among the non-key attributes. It should be recalled that "keys" can be formed among or on multiple attributes in a relational database. Additionally, a non-key attribute cannot be used or manipulated as a key.

In this invention, all data are stored in databases as tables. A relational database management system permits the selection of sets of the data and creates a menu. There are no previously defined menus, screens, or logical paths. As applied to the point-of-sale terminal context, the database consists of data regarding inventory such as would be sold by a department store. As items are purchased or new items added to the inventory, then the data in the database changes. In this invention, as the screens of data are generated from the information in the database, it follows that the menu presented to the operator is constantly changing. The menu tree (logical path) will also change because it is dated appended. For example, if an item is temporarily out of stock, all the logical paths associated with that item will not be generated. Also, all screens which had exhibited this item will change at generation time as the particular item will no longer be part of the menu screen. This illustrates dynamic generation of a virtual menu from a database.

## BRIEF DESCRIPTION OF THE DRAWING

Figure 1 is a state diagram for a View and Shop system.

Figure 2 defines the logical and information components supporting the method.

Figure 3 sets out the method and POS system within a typical retail operation.

Figure 4 sets out an equipment configuration upon which the method steps are executed.

Figures 5-10 depict the pointers and their relations of the principle machine-executable procedures supporting the steps of the method of the invention.

Figure 11 depicts a system flow of the state diagram in Figure 1.

Figure 12 shows screensful of data utilizing dynamic screen generation.

## DESCRIPTION OF THE PREFERRED EMBODIMENT
## AND INDUSTRIAL APPLICABILITY

### System Structure

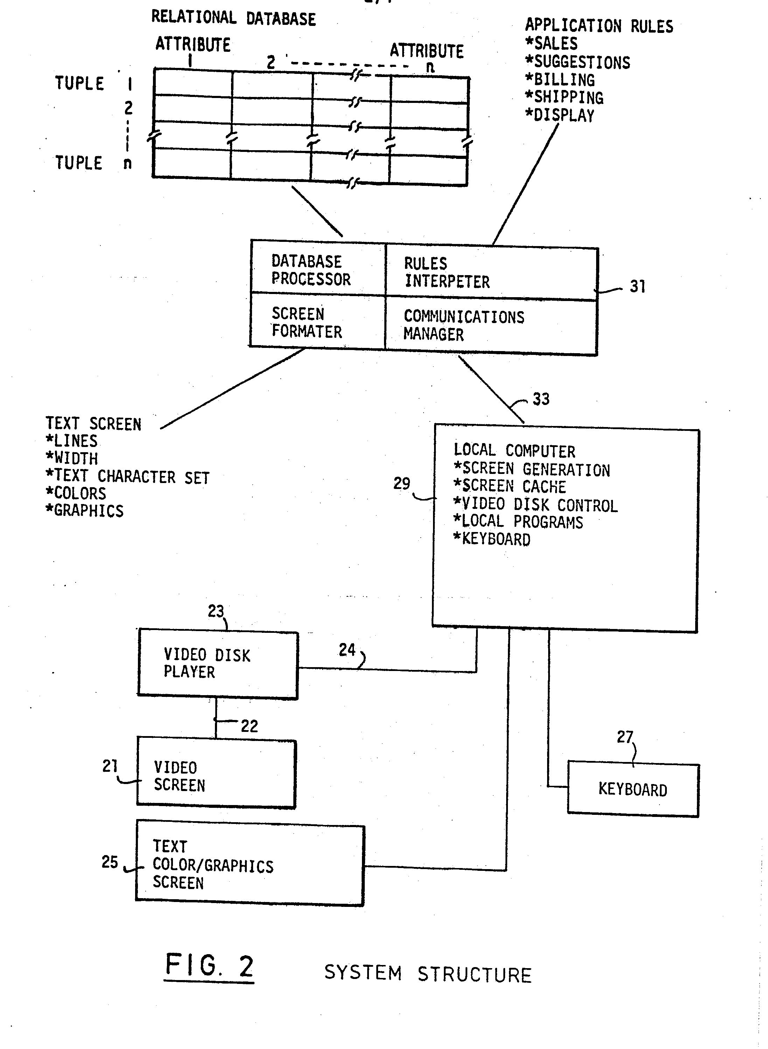

Referring now to Figure 2, there is depicted the logical organization, information, and relationships among the elements forming the system upon which the method of the invention is executable. As may be recalled, the invention is laid in the context of POS terminals. Such terminals include a video screen 21, a source of video information 23, a text color and graphics screen 25, a keyboard 27, all terminating in a microprocessor 29. The POS terminal communicates with a remote host 31 over a communicating path 33. The remote host includes a relational database, the logic of the application (application rules), and selected utilities such as a screen formatter and communications manager. For purposes of this invention, the screen formatter contains information required by the screen generator for composing the display. Whereas the screen formatter is resident at the host, the screen generator is resident at the terminal.

Operationally, microprocessor 29 communicates with host 31 by sending a service request. At this point the microprocessor assumes a hold or wait mode, i.e. goes to sleep. The host 31 decodes the service request, accesses the database, and extracts information therefrom according to the rules, and formats a reply message which includes screen formatting information. The reply message is returned to the local computer over path 33. The microprocessor 29 is "awakened" upon receipt of the return message from host 31. Responsive to this message, microprocessor 29 updates every screen cache, generates the screen of data for display, invokes the necessary video command to operate video screen 21 to create an information environment to enable the user to make his or her next selection. Keyboard 27 is the facility by which the user communicates his or her selection obtained from a menu
displayed on the text screen 25.  The input of menu selection could also
be performed on a touch sensitive display surface or a display such as
the IBM 3277 permitting light pen selection.  Lastly, to avoid sending
additional service requests where information defining a text screen or
a picture (video) screen has been generated, then it may be temporarily
stored in a local buffer until the transaction is completed.  Such a
local buffer may be denominated as a "video cache".  A local buffer may
be created out of memory directly accessed by the microprocessor such as
its main memory or on local DASD.

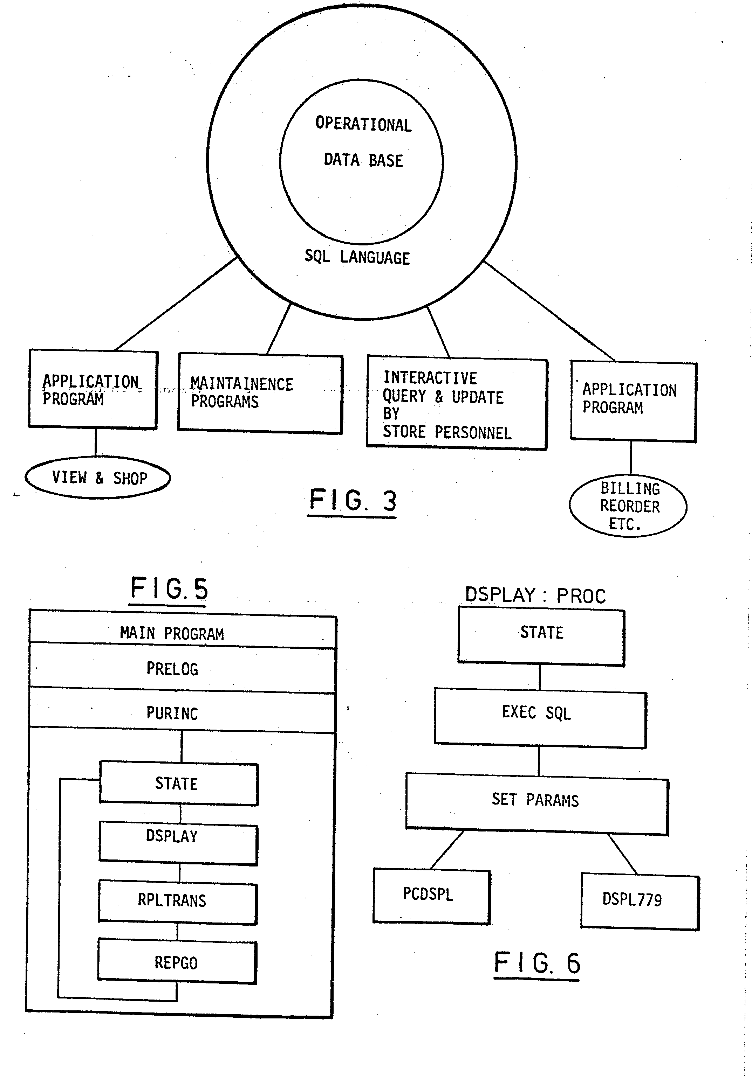

Referring now to Figure 3, there is shown a depiction of elements
of the method and POS system within a typical retail operation.  First,
there exists an operational database formed from sales and promotional
information, customer billing, ordering, and preference information.
Overlaying this database is a relational data view and accessing
facilities.  One commercially available accessing method called IBM DB2
supports the IBM SQL language facility.  The latter being denominated
the Structured Query Language.  Interacting with SQL are a range of
application processes, maintenance processes, and processes invocable by
store personnel at POS terminals or at the host associated with
updating.  The relational database accessing language SQL is described
in IBM publications, "SQL Data System and Terminal Users Guide",
SH24-5016, and "SQL Data Systems Application Programs", SH24-5018.

## View and Shop

Significant field of use of relational data management on POS
terminals is in the context of department store sales.  Department store
sales have long endured high overhead including significant numbers of
sales personnel.  POS terminals are seen as a substitute for catalog
review of sales, question facility of sales personnel, and order entry.
A customer may be considered as being either in a browse or purchase
mode.  This means that the customers who desire to view samples and
information relating to present or prospective sales transactions can be machine aided to a depth exceeding the depth or scope of individual salespersons.

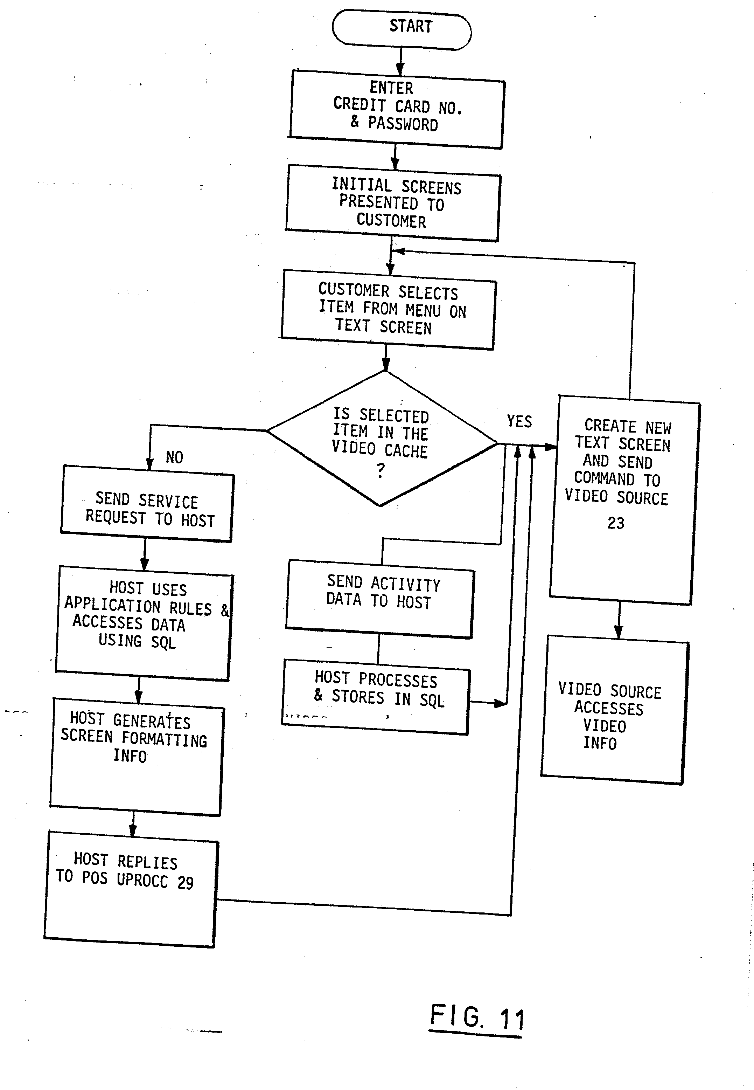

Referring to Figure 11, in order to initialize a transaction, a customer at a POS terminal may initiate a transaction by entering an appropriate credit card or user number and password. Displayed on text screen 25 is an initial menu permitting the customer to select or make a request by name, department, brand, or key words responsive to customer selection entered over keyboard 27 to microprocessor 29. If the requested item is locally stored in the video cache, activity data is sent to the host. The host processes and stores the activity data in SQL. Next, the microprocessor 29 creates a new text screen and sends a command to video source 23. The video source responsively accesses the video data and presents either a still or multiple pictures according to the nature of the command upon video screen 21. If the selected item is not in the local video cache, microprocessor 29 sends a service request to the host. In turn, the host uses the application rules and accesses data again using SQL. After this, the host generates screen formatting information and sends a reply to microprocessor 29. At this point, microprocessor 29 will also create a new text screen and send a command if indicated to video source 23 where it is acted upon.

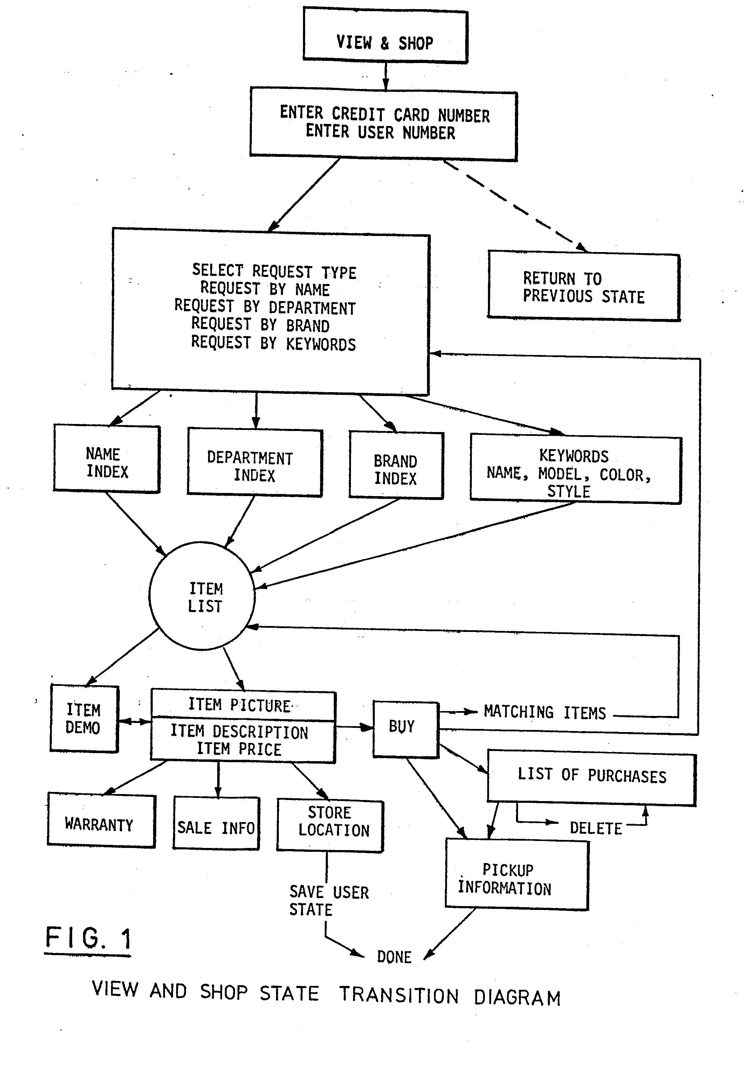

The flow of control of this process is depicted in Figure 11. The nature of the information pertinent to the View and Shop context is depicted in Figure 1. At the point where the information needs of the customer are satisfied, a customer desiring to buy would invoke an order entry mode. However, even if a customer desires not to purchase the store has beneficial use of his browse and customer satisfaction experience. It should be noted from Figure 1 that the customer may reiterate any number of times through any number of paths so that either a view or many departments or brands or items have been exposed to the customer.

### Dynamic Generation of Textual Screens

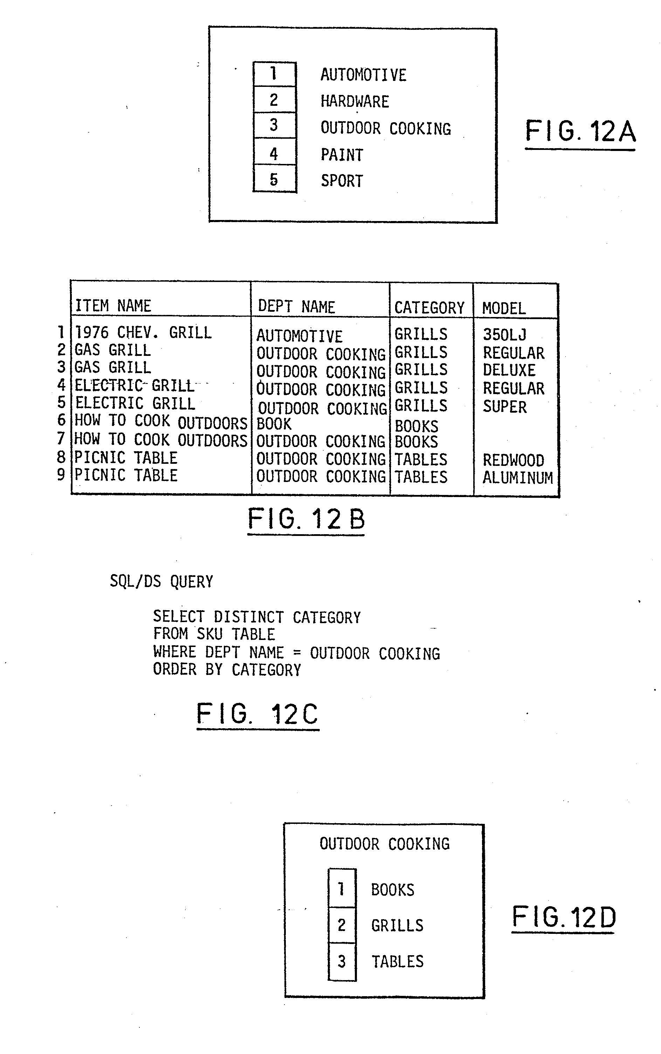

Figure 12 illustrates how textual screens are dynamically created from the database. In Figure 12A is shown a screen that a user of the POS might see in a department store. If the user pushes button 3 for Outdoor Cooking, Figure 12D shows the next screen that the user would see listing the department at the top, Outdoor Cooking, and things that are found in that department, including grills and tables. In this system, the screen shown in Figure 12D is created dynamically from the database.

Figure 12B illustrates a "relation" in a relational database which is manifest as a table. The table has columns with column names. The table in Figure 12B includes item names, department names, categories, and models. Other things that might be in this relation would be price, description of the item, etc. When the user selects Outdoor Cooking in Figure 12A, button 3 is transmitted to the host where a query is formed in the host computer. The query that is formed is also depicted in this figure. The query asks the user to select a distinct category from the table where the department name is Outdoor Cooking and order the result by category. Responsively, the database manager then goes to the SKU table, finds all items that are in the Outdoor Cooking department (those would be items 2, 3, 4, 5, 7, 8 and 9), and from those items it ascertains the distinct categories which would be grills, books, and tables. The database manager then orders these in alphabetical order and sends that list to the POS terminal. Next, the POS terminal constructs the screen Outdoor Cooking with books, grills, and tables as shown in Figure 12D. This is a dynamic process because if subsequently one were to eliminate all items or all books from the Outdoor Cooking department, then item 7 would disappear from the database and the next time a user selected Outdoor Cooking in Figure 12A a screen would be created in Figure 12D that would just have grills and tables.

One can contrast the dynamic generation of screens shown in Figure 12 with the techniques presented in the previously mentioned "Wonderful

World of Epcot" reference in the following way. That is, if one were to use the approach given in the "Wonderful World of Epcot", then the designer of the system would have to predetermine every possible combination that might occur, such as being out of books in the Outdoor Cooking department. Therefore, a screen would need to be constructed offering only grills and tables. If grills were out of stock, a screen would need to be constructed offering only books and tables. If both books and grills were out of stock a screen would need to be constructed with only tables on it. So the number of screens that the user would have to create grows combinatorially with things that might happen in the retail system and that only covers the case of something being out of stock. There are many other cases which would illustrate the same feature, whereas in this dynamic generation of screens the screen is created based upon whatever is in the database and one would not have to determine all the combinations and permutations that might occur.

## Hardware Implementation of the System Structure

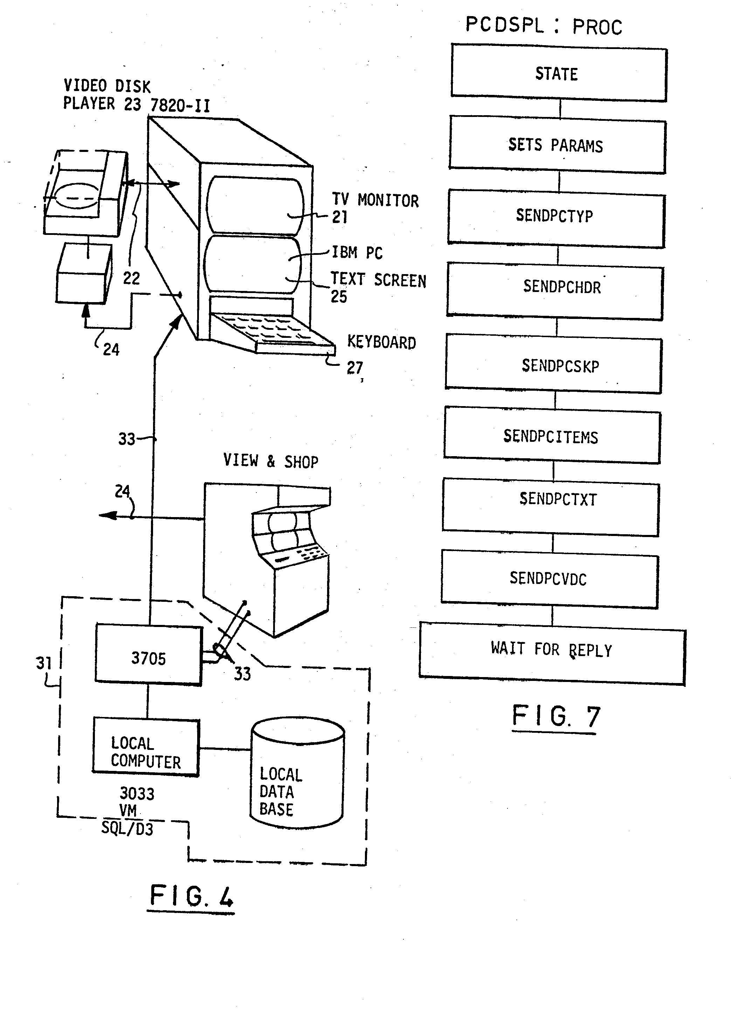

Referring now to Figure 4, there is shown the equipment configuration upon which the method steps are executed. The host 31 preferably includes an IBM 3033 with a local database coupling the remote POS terminals over respective paths 33. The View and Shop terminal may be variously configured into a tabletop model or indeed may occupy a booth. In the tabletop model, a TV monitor 21 may be mounted atop an IBM PC adding an associated text screen 25, keyboard 27, and microprocessor 29 therein. The microprocessor/IBM PC is slotted and has facility for adaptor cards for driving the video disk player 23 over paths 22 and 24, respectively.

The View and Shop POS terminal in booth form differs from the tabletop model only in the packaging and the particular selection of components. In other respects it should be a functional equivalent.

0140302

## The View and Shop Command Language

In order to facilitate communication between the POS terminal and the host, a command language is defined which permits the host to direct the POS terminal activities. The language in short form is set out in the accompanying table.

### TABLE 1

All messages start and end with 3 of the following symbols: @, #, %, /, +

Messages that start with headers ijk must end with header kji so that %#@abcde@#% is a legal message.

The following message types have been assigned:

| COMMAND | MEANING | EXAMPLES |
|---------|---------|----------|
| 1 @#% --- Screen ID | | @#%request%#@ |
| 2 #%/ --- Video Disk Command | | #%/3333C2/%# |
| 3 @#/ --- Screen Header | | @#/40,1,27,2,0,0,4,10/#@ |
| 4 @%/ --- List Follows | | @%/40,9,35,0,6,0,6,1/%@ |
| 5 @%+ --- List Item | | @%+Request Item by Name:!REQ00000NA+%@ |
| 6 #@% --- Response | | #@%B:!REQ00000HD%@# |
| 7 #%@ --- Do not cache screen | | #%@@%# |
| 8 %@# --- Accept Numeric entry | | %@##@% |
| 9 #/% --- Pause until last cmd done | | #/%%/# |
| 10 #@/ --- Text | | #@/ENTER QUANTITY TO BE PURCHASED/@# |
| 11 ### --- Ignore this message | | ###### |
| 12 @@@ --- Set delay time in secs | | @@@180@@@ |
| 13 #/+ --- End of screen | | #/++/# |

Referring now to Table 1, there are displayed three columns.  The leftmost column is designated "command", the second column "meaning", and the third column an illustrative "example".  The commands are generated by the host and are included as part of the reply or message sent to the terminal in order to direct terminal activities.  Every message sent to the POS terminal from the host must begin with a Screen ID which consists of the symbol shown in row 1 of the table, leftmost column, followed by a name and terminated by the symbol in reverse order.  All messages are terminated by the End of Screen shown in row 13.  Again, note that in the example the termination of the End of Screen symbol is by the symbol in reverse order.  Note that the term "ending" is used in two senses.  One designates a beginning and end of a command while the other bounds the beginning and end of a message.  The beginning of a message starts with the Screen ID command on row 1.  The message terminates with the End of Screen command on row 13.  Among the commands which may be embedded in the message might be the video disk command shown in row 2.  The video disk command symbol brackets the information utilized by the video disk player, i.e. 3333C2.  For purposes of consistency, it should be noted that the video source and video disk player are used synonymously in this specification.

The commands in Table 1 may be categorized as either video commands, textual display commands, or control commands.  The video commands direct the selection of picture information to the video monitor, the textual display directs the microprocessor to write a message on the text screen 25, while the control command activates or deactivates the selected elements in the POS terminal.  Further details of these commands are set out in the succeeding paragraphs.

Detail for Screen ID
@#% followed by any number of characters except @#%/+
followed by %#@

Detail for Video Disk Command
#%/ followed by a frame number (0 - 54000)
                CO (Search command)
                C2 (Autostop)
                C3 (Stop)
                C5 (Frame number)
      followed by /%#

Detail for Screen Header
@#/ followed by (screen width),                {40 or 80}
                (number of lines that follow,   {usually 1 or 2}
                (width of the header),
                (foreground color),             {0 - 15}
                (background color),             {0 - 15}
                (font),                         {usually 0; 7 spec case}
                (row location),
                (column location),              {0 = center heading}
      followed by /#@

Detail for List Follows
@%/ followed by (screen width),                {40 or 80}
                (number of lines that follow),  {maximum of 9}
                (width of lines),               {max width of a line}
                (foreground color),             {0 - 15}
                (background color),             {0 - 15}
                (font),                         {must be 0}
                (row location),
                (column location),              {0 = center list}
      followed by /%@

Detail for List Item
@%+ followed by (text string)                  {to appear on current screen}
      followed by :!
      followed by (text string)                {null or next Screen ID}
      followed by +%@

Detail for Response
#@% followed by (character)                    {any legal character on keyboard}
      followed by :!
      followed by (text string)                {null or next Screen ID}
      followed by %@#

Detail for Do not cache Screen
#%@@%# means that this screen should not be cached locally on the PC disk.

Detail for Accept Numeric Entry
%@#@% means that numeric entries will be made from this screen thus
      program should enable numeric keys 1 - 9.

Detail for Pause until last command done
#/%%/# means that video disk commands should be completed before a
        keystroke can be made.

Detail for Text
#@/ followed by (text string)            {<40 or <80, depending on width}
      followed by /@#

Detail for Ignore Message
######  means that this message is unrelated to the screen description and
        should be ignored.  (e.g. Intervening Computer Operator message)

Detail for Set delay time in seconds
 @@@ followed by (number)                {number of seconds for delay}
      followed by @@@

Detail for End of Screen
 #/++/# means that all the information needed to construct the screen and
        specify the actions to be taken for all possible user responses
        preceded this message.

At microprocessor 29 in the POS terminal, a software facility for interpreting each of the host-originated commands is set out in source code written in the IBM version of BASIC to be found in Table 2. This software facility consists of a POS terminal initialization or startup routines. After the customer is in communication with the database, commands received from the host may be interpreted by corresponding sections of the software facility. Illustratively, upon receipt of a message from the host, microprocessor 29 operating with the software facility in Table 2 does initial bookkeeping and next at step 12930 ascertains which one of the commands set out in Table 1 has been received. Assuming, that the command is that of "Screen ID" then a branch is made to step 13290. This subroutine processes the Screen ID. Upon completion, control is then returned or passed to step 13040. Since messages from the host frequently consist of strings of commands, steps 12930 to 13040 form a loop so that after completion of the Screen ID command, then the very next message element might be processed in a Screen Header and a similar branch to a subroutine is made. The header information is processed with a return being made to steps 13040 in Table 2 as previously described.

### Host Processing

As may be recalled, the host processing utilizes the SQL language running under DB2 which is the database management portion of an operating system. A processor can be the IBM 3081. The host facilities include a relational database management part and application programs which utilize the services of the relational database manager. It is the application processes which communicate with the relational database manager and with the POS terminal in supporting the interactive relationship between the customer and the data in the database. In this regard, Figures 5-10 relate to the applications program which is included in the specification in detail in Table 3. In discussing the content of Figures 5-10, reference will be made to the principal function to be executed. Counterpart detail can be immediately obtained with reference to the corresponding section in Table 3.

Referring now to Figure 5, there is shown a flow diagram of the main program and the different execution sequences within the main program and their execution logic. The PRELOG process generates the initial logo appearing on the screen, starts the video disk player 23, establishes a communication relations link with the POS terminal 31. The PURINC process verifies the customer through credit card identification and password and then it raises the first initial screen involved in the customer transaction.

After this initialization, the system assumes an initial state which is one of a preselected number of states designated by a variable (STATEN) which may be referenced in Table 3. In the reduction to practice the number of usable states was chosen to be 21. A procedure is then invoked DSPLAY shown in detail in Figure 6.

## The DSPLAY Procedure

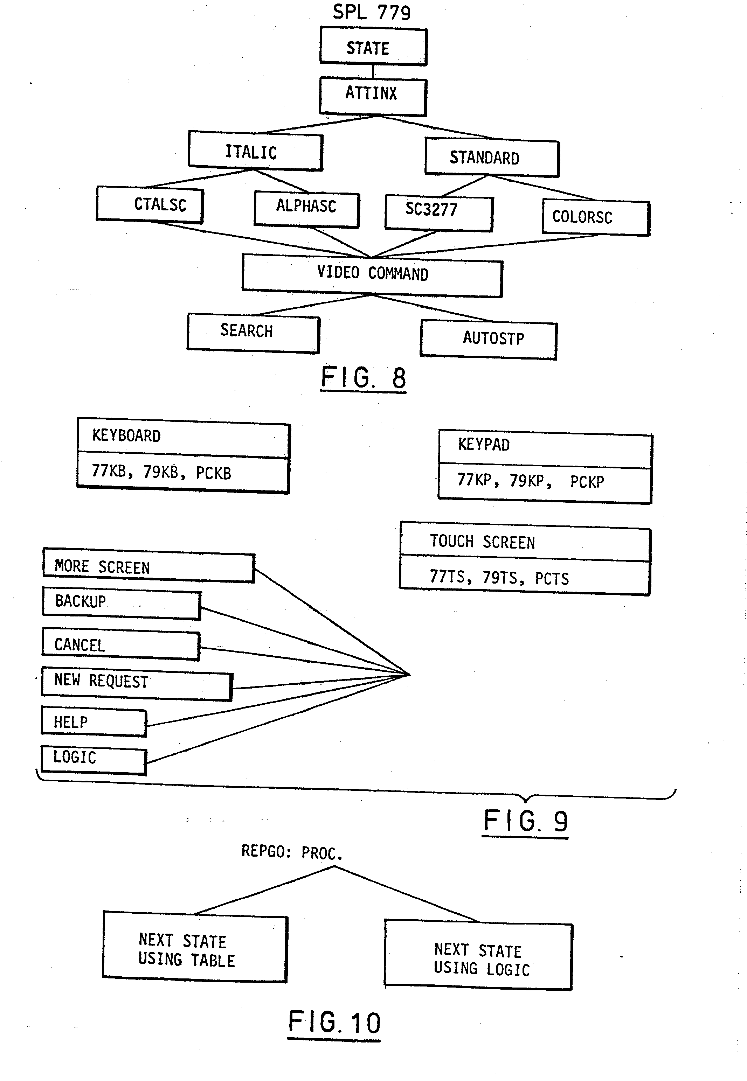

The DSPLAY process executes SQL commands, sets parameters, and invokes either one of two subordinate processes; namely, PCDSPL or DSPL779. Again, the procedure details are available with reference to Table 3. After execution of either PSDSPL or DSPL779, screen formatting information is communicated to the POS terminal. At this point, the host awaits a reply from the POS terminal responsive to this communication. Additional details of PCDSPL and DSPL779 may be found with reference to Figures 7 and 8. Upon receipt of a reply from the POS terminal, a procedure labeled RPLTRANS is then invoked. The details of this procedure are given in Figure 9 with the implementation in the counterpart portions of Table 3. The RPLTRANS procedure then in turn invokes the procedure REPGL set out in detail in Figure 10 and counterpart Table 3 section.

The application rules for abstracting data from the relational database are ascertained from the reply received from the POS terminal and the state in which the system is executing at that instant, and the data retrieved by the SQL statement. A list of the SQL programs are cited under SHOWQ5 portion of Table 3.

The additional facilities pointed out in Table 3 for satisfying host processing requirements include the actual relational tables used by SQL instructions in relationally accessing the information requested by the POS terminal. Reference should be made to pages 2-6 of SHOWQ5.

Attached herewith and conforming as a portion of the specification are original computer instruction listings in Tables 2 and 3. Table 2 is the listing executable at a POS terminal microprocessor 29 while Table 3 is the host sequences executable on the IBM 3033. The Table 2 listing references code sequences executable upon an IBM Personal Computer with a resident BASIC interpreter. The IBM PC is operative as microprocessor 29 in Figures 2 and 4. The Table 3 listing sets out the host code sequences QKSHOP1 PLIOPT and SHOW5 PLISQL.

TABLE 2

```
REM        +=========================================================
REM        |      IBM Personal Computer VIEW & SHOP              |
REM        |   Version M0.04 Copyright IBM Corp., 1982           |
REM        |              Mar. 23, 1983                          |
REM        +=========================================================
        DEFINT A-Z
        DIM PT(5,1),MSGA$(80), BADS$(10)
        DIM SCB$(22),FONTT$(9),FONTV(9),FONTF$(9)
        DIM STK$(50),IPT(300,1), LRU$(300,2), INFO$(20)
        REM    --------------------------------------------------
        GOSUB 10700        '   Read in phone,logon,password,params
        GOSUB 12750        '   Set Parameters  ds  and  ms
        GOSUB 12850        '   Set parameter DIAL
        GOSUB 15890        '   Select Monitor
        GOSUB 20000        '   Initialize
        GOSUB 10800        '   Set Disk Drive for LRU & Random File
        REM    --------------------------------------------------
10160   GOSUB 12530        'L1 Display Logo Screen
        GOSUB 16070        '   Start Video Disc
        GOSUB 11310        '   Wait for User to Push ENTER
        GOSUB 12590        '   Display  Please Wait Screen
        ON DIAL GOTO 10170,10180 '   Choose Auto-Dial or Manual Dial
10170   GOSUB 50002        '   LOGON & Start HOST program QR5
        GOTO  10190        '   Start Main Program
        REM                -----------------------------------------
10180   GOSUB 50400        '   Start Manual Dial Program
10190   GOSUB 11470        'La:Wait for HOST  OK  Message
        IF RC=1 THEN 10550 '   ELSE END PROGRAM
        GOSUB 10840        'Lb:Send Host "ok" message
        GOSUB 39800        '   Open Random File to Cache Screens
        GOSUB 39900        '   Read in Screens not to be saved      11-30-82
        GOSUB 40000        '   Read in cached Screens from previous run
        REM                -----------------------------------------
10270   GOSUB 11520        'Ld:Wait for HOST  ID  Request
        IF RC=1 THEN 10550 '     if EXIT received     THEN LOGOFF    at Lx:
        GOSUB 12090        '   Display Credit Card Screen
10300   GOSUB 12230        'Lc:Display User Entered Credit Card Number
        GOSUB 10870        '    Send Host NUMBER
        IF CCERR=1 THEN 10300
        REM                -----------------------------------------
        GOSUB 11570        '   Wait for HOST  PASS  Request
        IF RC=2 THEN 10300 '     if wrong card number THEN try again at Lc:
        IF RC=1 THEN 10550 '     if EXIT received     THEN LOGOFF    at Lx:
        GOSUB 12310        '   Display Password Screen and get number
10370   GOSUB 12450        'Lp:Display User Entered Pass Number
        GOSUB 10870        '    Send Host NUMBER
        IF CCERR=1 THEN 10370
        REM                -----------------------------------------
        GOSUB 11690        '   Wait for HOST  REQ00000RE Screen
        IF RC=2 THEN 10370 '     if wrong pass number THEN try again at Lp:
        IF RC=1 THEN 10550 '     if EXIT received     THEN LOGOFF    at Lx:
        GOSUB 16000        '   Initialize for New Customer
        GOTO  10510        '   Process Screen
```

```
      REM ════════════════════════════════════════════════════════
10460 GOSUB 12590        'Lt:Display  Please Wait Screen
10470 GOSUB 11810        '   Wait for Next Host Screen
      IF RC=0 THEN 10526 '   Check if Screen is correct screen
      IF RC=1 THEN 10550 '      if EXIT received      THEN LOGOFF    at Lx:
10510 GOSUB 12900        '   Process Screen
10511 IF LRUFD=1 THEN 10514
      GOSUB 39000        '      Set NSN$=Screen ID              11-23-82
      GOSUB 39100 .      ' Check if NSN$ is a bad screen        11-24-82
      IF NSAV=1  THEN 10512   '  Add screen to STK$             12-03-82
      GOSUB 40400        '   Check if screen already in LRU     11-23-82
      IF LRUFD=1 THEN 10513   '                                 11-23-82
      GOSUB 17000        '   Check if screen is too large       12-01-82
      IF NSAV=1  THEN 10512   '  Add screen to STK$             12-03-82
      GOSUB 18000        '   Check if disk is full              11-29-82
      GOSUB 15680        '   Save this screen?
      IF NSAV=1  THEN 10512   '*A*
      GOSUB 15740        '   Put ending record no. in array IPT
      GOSUB 40500        '*B*  Add screen to LRU list
10512 GOSUB 15830        '*A2* Update the stack of saved screens
10513 NSAV=0
10514 GOSUB 15410        '*B1* Check Commpletion of Command YSM$
      IF YRC=0 THEN 10520 ELSE  GOSUB 41000: END
10520 GOSUB 30000        '*BP* Sound a two tone beep
      GOSUB 10900        '     Send Host User Key or VF$
      IF RC=0 THEN 10460 '     Send Host Keystroke + "y"
      IF RC=1 THEN GOSUB 12900: GOTO 10470 '    Go Process Screen
      IF RC<>2 THEN PRINT "ERROR in Keystroke Routine": GOSUB 41000: END
      GOTO  10270        '     RC=2; New Customer - Loop back to Ld.
10526 GOSUB 16300        '     Check if Screen is correct screen
      IF SCROK=0 THEN 10510 ELSE 10520
      REM ════════════════════════════════════════════════════════
10550 GOSUB 50024        'Lx:LOGOFF
      GOSUB 41000        '   Save list of screens on disk: LRULIST.DAT
      CLOSE '            '   Close all files
      GOTO 10160         '   Start over
      REM --------------------------------------------------------
```

20
-22-

```
10560    GOSUB 41000: END   '   Special ending when ERROR is printed on screen
         REM   ----------------------------------------------------------------
50001    RETURN
50002    CR$=CHR$(13):XLF$=CHR$(10):CRLF$=CR$+XLF$
         CLOSE #1:OPEN "com1:1200,m,7,2,DS,CD" AS #1
50003    C$="Initialize Modem":GOSUB 50071
         P$=XLF$+CRLF$+CR$:C$="?...":GOSUB 50050:GOSUB 50054
         IF RC=0 THEN 50006 ELSE 50031
50006    C$="Send Phone Number":GOSUB 50071
         P$=FONE$+CR$:C$="DATA MODE."+CRLF$:GOSUB 50050:GOSUB 50054
         IF RC=0 THEN 50009 ELSE 50031
50009    C$="Waiting for VM":GOSUB 50071
         P$=CHR$(17)+CR$:C$="%#%":GOSUB 50050:GOSUB 50054
         IF MSG$="" THEN FOR I=1 TO 8000:NEXT I:GOTO 50009 ELSE 50031
50012    C$="Send Logon":GOSUB 50071
         P$="logon "+USID$+CR$:C$="SS"+CHR$(13)+"."+CHR$(17):GOSUB 50050
         GOSUB 50054: IF RC=0 THEN 50015 ELSE 50031
50015    C$="Send Password":GOSUB 50071
         P$=PASS$+CR$:C$="."+CHR$(17):GOSUB 50050:GOSUB 50054:GOTO 50031
50017    C$="System Reconnected, Send b":GOSUB 50071
         P$="b"+CR$:C$="."+CHR$(17):GOSUB 50050:GOSUB 50054:GOTO 50019
50019    C$="Send hx":GOSUB 50071
         P$="hx"+CR$:C$="."+CHR$(17):GOSUB 50050:GOSUB 50054:GOTO 50031
50021    C$="Send i cms":GOSUB 50071
         P$="i cms"+CR$:C$="."+CHR$(17):GOSUB 50050:GOSUB 50054:GOTO 50031
50023    P$="qr5"+CR$:C$="Host Program Started":GOSUB 50050:GOSUB 50071:RETURN
50024    C$="Send Disconnect M":GOSUB 50071
         P$="discm"+CR$:C$="."+CHR$(17):GOSUB 50050:GOSUB 50054
         FOR I=1 TO 5000:NEXT I:RETURN
50027    END
50028    C$="Send Logoff":GOSUB 50071
         P$="logoff"+CR$:C$="."+CHR$(17):GOSUB 50050:GOSUB 50054
         FOR I=1 TO 5000:NEXT I:RETURN
50031 REM ▓ Check Returned Message ▓ ----------------------------------------
         IF MSG$="" THEN 50003
         C$="!":                     GOSUB 50066:IF RC=0 THEN 50012
         C$="RECONNECTED":           GOSUB 50066:IF RC=0 THEN 50017
         C$="DISCM":                 GOSUB 50066:IF RC=0 THEN 50023
         C$=XLF$+CHR$(19)+"CMS":     GOSUB 50066:IF RC=0 THEN 50023
         C$=CHR$(0)+CHR$(0)+"CMS":   GOSUB 50066:IF RC=0 THEN 50023
         C$="UNKNOWN CP/CMS COM":    GOSUB 50066:IF RC=0 THEN 50023
         C$="?CP: HX":               GOSUB 50066:IF RC=0 THEN 50023
         C$=CHR$(19)+"CP":           GOSUB 50066:IF RC=0 THEN 50021
         C$="Q"+CRLF$+"BYE":         GOSUB 50066:IF RC=0 THEN 50003
         C$="DATA MODE.":            GOSUB 50066:IF RC=0 THEN 50009
         C$="?...":                  GOSUB 50066:IF RC=0 THEN 50006
         C$="VM/370 ONLINE":         GOSUB 50066:IF RC=0 THEN 50012
         C$="restart":               GOSUB 50066:IF RC=0 THEN 50012
         C$="ALREADY LOG":           GOSUB 50066:IF RC=0 THEN 50028
         C$="LOGOFF AT":             GOSUB 50066:IF RC=0 THEN 50027
         C$="DISCONNECT AT":         GOSUB 50066:IF RC=0 THEN 50027
         C$="SSSSSSSS":              GOSUB 50066:IF RC=0 THEN 50015
         MSG$="ERROR MESSAGE ***** "+MSG$:GOSUB 50061:GOTO 50003
```

```
50050 REM ▌ Send P$ to Modem ▌ ----------------------------------------------
        FOR I=1 TO LEN(P$)
          K$=MID$(P$,I,1):FOR J=1 TO 500:NEXT J:PRINT #1,K$;
        NEXT I:RETURN
50054 REM ▌ Wait Modem Reply ▌ -----------------------------------------------
        MSG$=""
50056    FOR MI!=1 TO 5000
          IF EOF(1) THEN 50060
          MSG$=RIGHT$(MSG$+INPUT$(LOC(1),#1),128)
          IF RIGHT$(MSG$,LEN(C$))=C$ THEN RC=0:RETURN ELSE 50056
50060    NEXT MI!:RC=1:RETURN
50061 REM ▌ Print MSG$ ▌ -----------------------------------------------------
      return
      FOR I=1 TO LEN(MSG$)
       K$=MID$(MSG$,I,1):K=ASC(K$):IF (K<32 OR K>122) THEN K$="<"+STR$(K)+">"
       PRINT K$;:IF K=10 THEN PRINT
      NEXT I:PRINT:PRINT "----------------":RETURN
 50066 REM ▌ ChecK MSG$ for C$ ▌ ----------------------------------------------
        IF LEN(C$)>LEN(MSG$) THEN RC=2:RETURN
        FOR I=1 TO 1+LEN(MSG$)-LEN(C$)
          IF C$=MID$(MSG$,I,LEN(C$)) THEN RC=0:RETURN
        NEXT I:RC=1:RETURN
50071 REM ▌ Display C$, line 1 ,Center ▌ -------------------------------------
        c=1:if ms=1 THEN color 0,6 ELSE color 0,7:if owid=40 THEN c=21
        LOCATE 1,c,0:PRINT LEFT$(BLNK$,owid-2);:X=((owid-2)-LEN(C$))\2
        LOCATE 1,X,0:PRINT " "+C$+" ";:RETURN
50075 REM  **********************************************************************
      REM ----------▌ Start of Manual Dial for LOGON ▌----------------------
      REM
      REM ▌ Wait for Connection with HOST ▌ ----------------------------------
50400   C$="Dial "+FONE$+", press ENTER": GOSUB 12650
50410   GOSUB 12860: IF K$<>"e" THEN 50410
        CLOSE #1: OPEN "com1:1200,m,7,2,DS,CD" AS #1
        GOSUB 12590                           'Display Please Wait Screen
      REM ▌ LOGON & Start HOST Program VASP ▌ --------------------------------
50500   C$="VM/370 ONLINE":GOSUB 12650:GOSUB 12010
        P$="": C$="CR Sent": ISW=1:GOSUB 12650: GOSUB 11250: GOSUB 11950
50620   P$="logon "+USID$:C$="User ID Sent":GOSUB 12650:GOSUB 11250: GOSUB 11950
        B$="SSS": GOSUB 50740: IF RC=0 THEN 50640 ELSE 50620
50640   P$=PASS$: C$="Password Sent":GOSUB 12650: GOSUB 11250
50650   GOSUB 11950
        B$="CMS": GOSUB 50740: IF RC=0 THEN 50790
        B$="REC": GOSUB 50740: IF RC=0 THEN 50720
        B$="RES": GOSUB 50740: IF RC=0 THEN 50620
        B$="CP":  GOSUB 50740: IF RC=0 THEN 50710
        P$="": ISW=1: GOSUB 11250: GOTO 50650
50710   P$="i CMS":C$=P$: GOSUB 12650: GOSUB 11250: GOTO 50650
50720   P$="b":    C$=P$: GOSUB 12650: GOSUB 11250: GOSUB 11950
        P$="hx":   C$=P$: GOSUB 12650: GOSUB 11250: GOSUB 11950: GOTO 50790
50740   IF LEN(MSG$)<3 THEN RC=1: RETURN
        FOR I=LEN(MSG$) TO 3 STEP -1
         RC=ASC(MID$(MSG$,I,1)): IF (RC<48 OR RC>90) THEN 50780
         IF MID$(MSG$,I-2,3)=B$ THEN RC=0: RETURN ELSE RC=1: RETURN
50780   NEXT I: RC=1: RETURN
```

```
50790   P$="qr5": C$="Host Program Started": GOSUB 12650: GOSUB 11250: RETURN
        REM --------- ▌End of the Manual Dial Program ▌--------------------
        REM *****************************************************************
        REM ▌ Read in phone no., logon, password, ds, ms, lru lists
10700   CLOSE #1: OPEN "A:PARAMS.DAT" FOR INPUT AS #1
        K=0
10710   IF EOF(1) THEN 10750
        INPUT #1, INFO$(K)
        K=K+1: GOTO 10710
10750   CLOSE #1
        FONE$ =INFO$(0):USID$=INFO$(1):PASS$ =INFO$(2): LRU1$=INFO$(3)
        FILE1$=INFO$(4):LRU2$=INFO$(5):FILE2$=INFO$(6): DS$  =INFO$(7)
        MS$   =INFO$(8):BSCR$ =INFO$(9):LOGO$=INFO$(10):REQ$ =INFO$(11)
        RETURN
        REM
        REM ▌ Set Disk Drive for LRU and Random File ▌ ------------------------
10800   DSKR$=FILE1$: DSKL$=LRU1$: RETURN
        REM
10840 REM ▌ Send Host  OK  Message ▌ -------------------------------------------
        P$="OK":C$="OK sent to Host":gosub 12650:GOSUB 11250:RETURN
        rem
10870 REM ▌ Send Host ..... Number ▌ -------------------------------------------
        C$="Number Being Verified":GOSUB 11250:GOSUB 12650:RETURN
        rem
10900 REM ▌ Send Host User Key + y   or  VF$ ▌ ---------------------------------
        FOR I=0 TO 49:MSGA$(I)="":NEXT I ' <==DUMB TERMINAL ONLY
        if vf$="" THEN 10940
        P$=VF$:C$="Frame Number = "+VF$:VF$="":GOTO 11060
10940   GOSUB 12860
        IF K$="k"  THEN K$="hx":C$=K$:P$=K$:GOTO 11060
        IF K$="c"  THEN K$="cy":C$=K$:P$=K$:GOSUB 11250:GOSUB 12650:RC=2:RETURN
        FOR I=1 TO 22
          IF K$=MID$(NUM$,I,1) THEN IF SCB$(I)="" THEN 11000 ELSE 11010
        NEXT I
11000   IF K$="m"  THEN 11007
        IF K$="e"  THEN 11008
        IF K$="b"  THEN 11009
        C$=K$+" is an invalid choice, TRY AGAIN":GOSUB 12650:beep:GOTO 10900
11007   C$="MORE TEXT is invalid, TRY AGAIN":    GOSUB 12650:beep:GOTO 10900
11008   C$="ENTER is invalid, TRY AGAIN":        GOSUB 12650:beep:GOTO 10900
11009   C$="BACKUP is invalid, TRY AGAIN":       GOSUB 12650:beep:GOTO 10900
11010   YW$="C3":GOSUB 14380
        GOSUB 11090                    'Check stack for saved screens
        IF KEYOK=0 THEN 11000          '*C*
        GOSUB 40400                    'Check if screen is in LRU$ list
        IF LRUFD=1 THEN 11015 ELSE 11050
11015   P$=K$+"n":C$="Number Sent "+P$
        GOSUB 11250:GOSUB 12590:        RC=1:   RETURN  'Return to *Z*
11050   P$=K$+"y":C$="Number Sent "+P$
11060   GOSUB 11250:GOSUB 12650: LRUFD=0: RC=0:  RETURN  'Return to *Z*
        REM
```

```
11090   REM █ Check Stack For Saved Screens █ --------------------------------
        IF K$="n" OR K$="N" THEN GOSUB 11150: RETURN
        IF K$="b" OR K$="B" THEN GOSUB 11120: RETURN
        NSN$=SCB$(I): KEYOK=1: RETURN   'Return to *C*
    REM
    REM █ Keystroke = b for BACKUP; Update Stack; Update Stack Counter█-----
11120   IF ISTK<>1 THEN 11135
        KEYOK=0: RETURN
11135   NSN$=SCB$(13): IF NSN$<>"B" THEN 11137
11136   II=ISTK-2:GOSUB 11170: KEYOK=1:  RETURN
11137   IF NSN$="" THEN 11136
        FOR II = ISTK-1 TO 0 STEP -1: IF NSN$=STK$(II) THEN 11140
        NEXT II
        II=0
11140   GOSUB 11170: KEYOK=1: RETURN
    REM
    REM █ Keystroke = n for NEW REQUEST; Clear Stack and Set Counter = 1█---
11150   NSN$=SCB$(14)
        IF NSN$=""   THEN 11155
        IF NSN$="N" THEN 11155
        IF NSN$<> STK$(0)   THEN 11160
11155   ISTK=1: NSN$="REQ00000HD": KEYOK=1: RETURN
11160   PRINT "ERROR: N not in SCB$(14)": GOSUB 41000: end
    rem
11170 REM █ Clear out saved screens not needed anymore █ --------------------
        JT=ISTK: ISTK=II+1:  FOR JJ=II+1 TO JT: STK$(JJ)="": NEXT JJ
        RETURN
    rem
11250 REM █ Send  P$  To Host █ ----------------------------------------------
        IF ISW=1 THEN 11270
        IF P$="" THEN 11260 ELSE 11270
11260   C$="Invalid Choice, Please Try Again": CCERR=1: RETURN
11270   FOR I=1 TO LEN(P$)
        IF EOF(1) THEN 11280 ELSE B$=INPUT$(LOC(1),#1):GOTO 11270
11280   PRINT #1,MID$(P$,I,1);
        NEXT I:PRINT #1,CHR$(13):GOSUB 12700
        CCERR=0: RETURN
    REM
11310 REM █ Wait for User to Push ENTER █ ------------------------------------
        c$=" To Begin, Push  ENTER ":GOSUB 12650
        GOSUB 12860:if K$<>"e"  THEN 11350
        if ds=0 then return else YSM$="E3E6E8":GOSUB 15000:RETURN 'Audio on
11350   if k$<>"k"  THEN 11310
        if ds=1 then YSM$="F9":GOSUB 15000 'Reject Video Disc
        color 15,0,0:locate 1,1:print "Do you want monochrome Monitor ? (y/n)";
        GOSUB 12860:if K$<>"y"  THEN CLS:end
        KEY OFF:WIDTH 40:DEF SEG=0:POKE &H410,PEEK(&H410) OR &H30
        WIDTH 80:LOCATE ,,1,12,13:KEY ON:SCREEN 0,0,0:CLS:end
    REM
```

```
11470 REM █ Wait for HOST  OK Message █ -------------------------------------
      GOSUB 11810:IF RC=1 THEN RETURN
      IF MID$(MSG$,4,2)="OK" THEN RC=0:RETURN
      P$="NO":C$="OK not received":GOSUB 11250:GOSUB 12650:GOTO 11470
      REM
11520 REM █ Wait for HOST  ID  Request █ ------------------------------------
      GOSUB 11810:IF RC=1 THEN RETURN
      IF MID$(MSG$,10,3)="CUS" THEN RC=0:RETURN
      P$="NO":C$="ID not received":GOSUB 11250:GOSUB 12650:GOTO 11520
      REM
11570 REM █ Wait for HOST  PASS Request █ -----------------------------------
      GOSUB 11810:IF RC=1 THEN RETURN
      IF MID$(MSG$,10,3)="PAS" THEN RC=0:RETURN
      IF MID$(MSG$,4,3)="WRO" THEN 11620
      P$="NO":C$="PASS not received":GOSUB 11250:GOSUB 12650:GOTO 11570
11620    beep:if ms=0 THEN color 16,7:c=20 ELSE color 16,6:c=0
         beep:locate 8,3+c,0:print "==> ";
         beep:if ms=0 THEN color 0,7 ELSE color 0,6
             PRINT "Invalid CARD Number, Try Again"
         beep:if ms=0 THEN color 15,0 ELSE color 15,4
         BEEP:LOCATE 21,12+c:PRINT STRING$(15,255):LOCATE 21,12+c,1:RC=2:RETURN
      REM
11690 REM █ Wait for HOST  REQ00000RE  Screen █ ------------------------------
      GOSUB 11810:if rc=1 THEN RETURN
      IF MID$(MSG$,4,10)="REQ00000HD" THEN RC=0:RETURN
      IF MID$(MSG$,4,3)="WRO" THEN 11740
      P$="NO":C$="REQ not received":GOSUB 11250:GOSUB 12650:GOTO 11690
11740    beep:if ms=0 THEN color 16,7:c=20 ELSE color 16,6:c=0
         beep:locate 8,3+c,0:print "==> ";
         beep:if ms=0 THEN color 0,7 ELSE color 0,6
             PRINT "Invalid PASS Number, Try Again"
         beep:if ms=0 THEN color 15,0 ELSE color 15,2
         beep:LOCATE 21,12+c:PRINT STRING$(15,255):LOCATE 21,12+c,1:RC=2:RETURN
      REM
11810 REM █ Wait for Host Next Screen █ --------------------------------------
      MP=PT(PN,0):B$=""
11830 REM  B$=INKEY$:IF B$="" THEN 11840 ELSE RETURN              ' 9-23-82
11840    LINE INPUT #1,MSG$:GOSUB 12700
         IF LEN(MSG$)>1 THEN MSG$=RIGHT$(MSG$,LEN(MSG$)-2) ELSE 11830
         MSGA$(MP)=MSG$:MP=MP+1:IF MSG$ <> "#/++/#" THEN 11830
11870    IF EOF(1) THEN 11870
         MSG$=INPUT$(LOC(1),#1):IF RIGHT$(MSG$,1) <> CHR$(17) THEN 11870
         PT(PN,1)=MP-2:PT(PN+1,0)=MP-1:MP=PT(PN,0)
11880    MSG$=MSGA$(MP)
         IF LEFT$(MSG$,8) ="#@/OK/@#"    THEN RC=0:RETURN
         IF LEFT$(MSG$,10)="#@/EXIT/@#"  THEN RC=1:RETURN
         IF LEFT$(MSG$,3) ="@#%"         THEN RC=2:RETURN
         IF LEFT$(MSG$,3) ="#@/"         THEN RC=3:RETURN
         MP=MP+1: GOTO 11880
      REM
```

```
11950 REM ▌ Wait for Host Reply CHR$(17) ▌ -------------------------------------
11960 REM  K$=INKEY$:IF K$="" THEN 11970 ELSE RETURN            ' 9-23-82
11970   IF EOF(1) THEN 11960
        MSG$=RIGHT$(MSG$+RIGHT$(INPUT$(LOC(1),#1),72),72):GOSUB 12700
        IF RIGHT$(MSG$,1)=CHR$(17) THEN RETURN ELSE 11960
      REM
12010 REM ▌ Wait For Host Reply C$ ▌ ---------------------------------------------
        MSG$="":
12030   FOR I=1 TO 5000:IF EOF(1) THEN next i:RETURN
        MSG$=RIGHT$(MSG$+INPUT$(LOC(1),#1),72):GOSUB 12700
        FOR I=1 TO LEN(MSG$)-LEN(C$)
         IF MID$(MSG$,I,LEN(C$))=C$ THEN RETURN
        NEXT I:GOTO 12030
      REM
12090 REM ▌Display credit card screen ▌ -------------------------------------------
        if ms=0 THEN color 7,0,0:c=20 ELSE color 0,3,3:c=0
        CLS:width 40:LOCATE 10,3+c,0:PRINT "Please Enter Your":
                LOCATE 13,3+c,0:PRINT "Do Not Leave Any Blanks"
                LOCATE 18,3+c,0:PRINT "THEN Press"
                LOCATE 21,3+c,0:PRINT STRING$(7,61)+CHR$(62)
        if ms=0 THEN color 0,7 ELSE color 15,3
                LOCATE 10,21+c,0:PRINT "CREDIT CARD NUMBER"
        if ms=0 THEN color 0,7 ELSE color 15,1
                LOCATE 17,14+c,0:PRINT CHR$(218)+STRING$(7,196)+CHR$(191)
                LOCATE 18,14+c,0:PRINT CHR$(179)+STRING$(7,255)+CHR$(179)
                LOCATE 19,14+c,0:PRINT CHR$(192)+STRING$(7,196)+CHR$(217)
                LOCATE 18,16+c,0:PRINT "ENTER":return
      REM
12230 REM ▌ Display User Entered Credit Card Number ▌------------------------------
        if ms=0 THEN color 0,7 ELSE color 15,3
                LOCATE 21,12+c,1:P$="" : ISW=0
                GOSUB 12860:IF K$="e" THEN RETURN
                LOCATE 8,1+c:PRINT LEFT$(BLNK$,40);:LOCATE 21,12+c,1
12280           P$=RIGHT$(P$+K$,15):LOCATE 21,12+c,1:PRINT P$;
                GOSUB 12860:IF K$="e" THEN RETURN ELSE 12280
      REM
12310 REM ▌Display Password screen ▌ ----------------------------------------------
        if ms=0 THEN color 7,0,0:c=20 ELSE color 0,2,2:c=0
        CLS:width 40:LOCATE 10,3+c,0:PRINT "Please Enter Your":
                LOCATE 13,3+c,0:PRINT "Do Not Leave Any Blanks"
                LOCATE 18,3+c,0:PRINT "THEN Press"
                LOCATE 21,3+c,0:PRINT STRING$(7,61)+CHR$(62)
        if ms=0 THEN color 0,7 ELSE color 15,2
                LOCATE 10,21+c,0:PRINT "PASS NUMBER"
        if ms=0 THEN color 0,7 ELSE color 15,1
                LOCATE 17,14+c,0:PRINT CHR$(218)+STRING$(7,196)+CHR$(191)
                LOCATE 18,14+c,0:PRINT CHR$(179)+STRING$(7,255)+CHR$(179)
                LOCATE 19,14+c,0:PRINT CHR$(192)+STRING$(7,196)+CHR$(217)
                LOCATE 18,16+c,0:PRINT "ENTER":return
      REM
```

```
12450 REM █ Display User Entered Pass Number █ ------------------------------
         if ms=0 THEN color 0,7 ELSE color 15,2
                  LOCATE 21,12+c,1:P$="" : ISW=0
                  GOSUB 12860:IF K$="e" THEN RETURN
                  LOCATE 8,1+c:PRINT LEFT$(BLNK$,40);:LOCATE 21,12+c,1
12500             P$=RIGHT$(P$+K$,6):PRINT "*";
                  GOSUB 12860:IF K$="e" THEN RETURN ELSE 12500
      rem
12530 REM █ Display Logo Screen █ -----------------------------------------
         if ms=1 THEN color 15,1,1:c=1 ELSE color 15,0,0:c=21
         CLS:OPEN LOGO$ FOR INPUT AS #3
         FOR I=2 TO 23:INPUT #3,K$:LOCATE I,c,0:PRINT K$;:NEXT
         CLOSE #3:RETURN
      REM
12590 REM █ Please Wait Screen █ ------------------------------------------
         if ms=0 THEN color 0,7,7:c=20
         width 40:owid=40:CLS: if ms=1 THEN color 0,6,6: CLS: c=0
         LOCATE 10,15+c,0:PRINT "Please Wait"
         LOCATE 13,5+c,0: PRINT "Your Request is being Processed";:RETURN
      REM
12650 REM █ Display C$, line 1 ,Center █ ------------------------------------
         c=1:if ms=1 THEN color 0,6 ELSE color 0,7:if owid=40 THEN c=21
         LOCATE 1,c,0:PRINT LEFT$(BLNK$,owid-2);:X=((owid-2)-LEN(C$))\2
         LOCATE 1,X,0:PRINT " "+C$+" ";:RETURN
      REM
12700 REM █ Display flashing square at line 20, Center █ --------------------
         RETURN
         if n<>0 THEN color 7,0:n=0 ELSE color 0,7:n=1
         if ms=1 THEN c=39 ELSE c=79
         locate 1,c,0:print chr$(220);:RETURN
      REM
12750 REM █ Set Parameters █ -----------------------------------------------
         color 15,0,0:CLS:locate 1,1
12770    print "Do you want the VideoDisc Player ? (y/n) ";: K$=LEFT$(DS$,1)
         if (K$="y" or K$="Y") THEN ds=1:print "- YES":print:GOTO 12810
         if (K$="n" or K$="N") THEN ds=0:print "- NO ":print:GOTO 12810
         print "- ??, Try Again":GOTO 12770
12810    print "Do you have a Color Monitor ? (y/n) ";: K$=LEFT$(MS$,1)
         if (K$="y" or K$="Y") THEN ms=1:print "- YES":RETURN
         if (K$="n" or K$="N") THEN ms=0:print "- NO ":RETURN
         print "- ??, TRY AGAIN":GOTO 12810
      rem
      REM █ Set Paramter for Autodial or Manual Dial █ --------------------------
12850    print
         print "Please press 1 for Auto-dial"
         print "  OR   press 2 for Manual-dial"
12855    K$=INKEY$: IF K$="" THEN 12855 ELSE BEEP
         if K$="1"  THEN DIAL=1: PRINT "-AUTO-DIAL":RETURN
         if K$="2"  THEN DIAL=2: PRINT "-MANUAL-DIAL": RETURN
         PRINT "-??, TRY AGAIN": GOTO 12850
      REM
```

```
12860    REM ▌ Wait for User to hit a NEW Key ▌ ------------------------------
12870    K$=INKEY$:if K$<>"" THEN 12870 ' Clear Keys
12880    K$=INKEY$:IF K$="" THEN 12880 ELSE beep:RETURN
         REM
12900 REM ▌ Process Screen PN ▌ -----------------------------------------------
         IF LRUFD=1 THEN 13100
12930    FOR I=PT(PN,0) TO PT(PN,1)
            B$=LEFT$(MSGA$(I),3)
            IF B$=SID$ THEN GOSUB 13290:GOTO 13040 ' Process Screen ID
            IF B$=VDC$ THEN GOSUB 14250:GOTO 13040 ' Process Video Command
            IF B$=SCH$ THEN GOSUB 13330:GOTO 13040 ' Process Screen Header
            IF B$=LF$  THEN GOSUB 13650:GOTO 13040 ' Process List Follows
            IF B$=RES$ THEN GOSUB 14200:GOTO 13040 ' Process Response
            IF B$=DNC$ THEN GOSUB 14300:GOTO 13040 ' Do not cache screen
            IF B$=ANE$ THEN GOSUB 14330:GOTO 13040 ' Accept numeric entry
            IF B$=PAZ$ THEN GOSUB 15410:GOTO 13040 ' Pause until last cmd done
            IF B$=IGN$ THEN 13040                  ' Bad Message found
            B$=IGN$: MSGA$(I)=B$+MSGA$(I)          ' Flag Bad Messages  1-07-83
13040    NEXT I
         IF SCB$(17)="" THEN RETURN
         GOSUB 15850: RETURN              'Print message for more text
         REM
13100    GOSUB 13260                      '*D* Copy saved screen into MSGA$ array
         GOSUB 13270                      '*DD* Does stack have saved screen?
         GOTO  12930                      '*DDD*
         rem
         REM ▌ Copy Saved Screen into MSGA$ array ▌ ------------------------------
13260  NN=0
         FOR II=0 TO 50: MSGA$(II)="": NEXT II
         FOR NREC%=IPT(INS,0) TO IPT(INS,1)
         GET #4, NREC%
         N1$=S1$: GOSUB 13265
         NEXT NREC%                       ' *D1*
         GOSUB 13269
         RETURN '                         ' *EE*  Return to *DD*
         REM
13265    REM ▌ Separate record into sections and put in MSGA$ array ▌
         N$=N1$
         NRCT=VAL(LEFT$(N$,2))
         N$=MID$(N$,3,LEN(N$))
            FOR N=1 TO NRCT
            LMSG=VAL(LEFT$(N$,2))
            NN=NN+1: MSGA$(NN)=MID$(N$,3,LMSG)
            LSTRT=LMSG+3: N$=MID$(N$,LSTRT,LEN(N$))
            NEXT N
         RETURN                           ' Return to *D1*
         REM
```

```
     REM   Set PT values  ---------------------------------------------------------
13269    PT(1,0)= 1: PT(1,1)=NN: PN=1
         RETURN                        ' Return to  *EE*
     REM
     REM   Update stack after saved screen was found  -------------------
13270   FOR KK=0 TO ISTK
        IF STK$(KK)<>NSN$ THEN 13275 ELSE RETURN      'Return to *DDD*
13275   NEXT KK
        IF STK$(ISTK)<>"" THEN 13280  ELSE 13285
13280   ISTK=ISTK+1
13285   STK$(ISTK)=NSN$
        ISTK=ISTK+1: RETURN               'Return to *DDD*
     rem
13290 REM   Process Screen ID   ------------------------------------------------
        FOR J=1 TO 22:SCB$(J)="":NEXT J:SCB$(13)="B":SCB$(14)="N"
        NS$=MID$(MSGA$(I),4,LEN(MSGA$(I))-6):SCB$(0)=NS$:ss=0:RETURN
     REM
13330 REM   Process Screen Header   --------------------------------------------
        GOSUB 14070:GOSUB 14030:IF LINS=0 THEN RETURN
        GOSUB 13990:if ms=0 THEN fc=15:bc=0
        if ss=0 THEN 13340
        COLOR FC,BC: GOTO 13350
13340   color fc,bc,bc: CLS:ss=1
13350   IF FONT=0 THEN 13440 ELSE i=i+1
        FOR J=0 TO 9
           IF (MSGA$(I)=FONTT$(J) AND FONT=FONTV(J)) THEN 13410
        NEXT J:PRINT "FONT ERROR"
        GOSUB 41000: END            ' Save Cached Screens on disk
13410   OPEN FONTF$(J) FOR INPUT AS #3
        FOR J=0 TO FONT-1
           INPUT #3,B$:LOCATE RLOC+J,CLOC,0:PRINT B$;
        NEXT J:CLOSE #3
           GOSUB 13490             '      Clear Stack
           RETURN                  '*E* Return to "Process Screen Header"
        REM
13440   FOR J=0 TO LINS-1  '
          LOCATE RLOC+J,CLOC,0:PRINT LEFT$(BLNK$,HW)
          I=I+1
          GOSUB 13500            ' Check for valid message header  1-07-83
          LOCATE RLOC+J,CLOC,0:PRINT MID$(MSGA$(I),4,LEN(MSGA$(I))-6);
        NEXT J:RETURN            'Return to "Process Screen Header"
     REM
13490   REM   Clear Stack   -----------------------------------------------------
        FOR NN=1 TO 50:STK$(NN)="": NEXT NN
        ISTK=1: NSAV=0:           ' RETURN    'Return to *E*
     REM   Check if message is a TEXT type TXT$   ----------------1-07-83
13500   BB$=LEFT$(MSGA$(I),3)
        IF BB$=TXT$ THEN RETURN
        MSGA$(I)=IGN$+MSGA$(I): I=I+1
        IF I>PT(PN,1)  THEN 13510 ELSE 13500
13510   PRINT "13510 - ERROR: TXT$ msg should follow scr hdr":  GOTO 10560
     REM
```

```
13650 REM █ Process List Follows █ ---------------------------------------------
        GOSUB 14070:GOSUB 14030:IF LINS=0 THEN RETURN
        HW=HW+4:GOSUB 13990:if ms=0 THEN fc=15:bc=0
        GOSUB 13760          '   Print +--+******* ... *********
        FOR J=1 TO LINS      '
           GOSUB 13800       '   Print | 1|******* ... *********
           GOSUB 13900       '   Print +--+******* ... *********
        NEXT J
        GOSUB 13950          '   Print +--
        RETURN               '   RETURN
        REM
13760 REM █ Print +--+******* ... ********* █ -------------------------------------
        COLOR 0,7:LOCATE RLOC,CLOC,0:PRINT CHR$(218)+STRING$(2,196)+CHR$(191);
        COLOR FC,BC:LOCATE RLOC,CLOC+4,0:PRINT STRING$(HW-4,255);:RETURN
        REM
13800 REM █ Print | 1|******* ... ********* █ ----------------------------------
        COLOR 0,7:LOCATE RLOC+(2*J)-1,CLOC,0
        PRINT CHR$(179)+CHR$(255)+MID$(NUM$,J,1)+CHR$(179);
        COLOR FC,BC:I=I+1
           GOSUB 13870        '   Check for valid LIT$ msg header   1-07-83
        LOCATE RLOC+(2*J)-1,CLOC+4,0:PRINT STRING$(HW-4,255);
        MSG$=MID$(MSGA$(I),4,LEN(MSGA$(I))-6):K=0
13860   K=K+1:IF MID$(MSG$,K+1,2)<>":!" THEN 13860
        LOCATE RLOC+(2*J)-1,CLOC+4,0:PRINT MID$(MSG$,1,K);
        SCB$(J)=MID$(MSG$,K+3,LEN(MSG$)-(K+2)):RETURN
        REM
        REM █ Check for valid LIT$ message header █----------------1-07-83
13870   BB$=LEFT$(MSGA$(I),3)
        IF BB$=LIT$ THEN RETURN
        MSGA$(I)=IGN$+MSGA$(I): I=I+1
        IF I>PT(PN,1) THEN 13880 ELSE 13870
13880 PRINT "13880 -ERROR: List item should follow ": GOTO 10560
        REM
13900 REM █ Print +--+******* ... ********* █ -------------------------------
        COLOR 0,7:LOCATE RLOC+(2*J),CLOC,0
        PRINT CHR$(195)+STRING$(2,196)+CHR$(180);
        COLOR FC,BC:LOCATE RLOC+(2*J),CLOC+4,0:PRINT STRING$(HW-4,255);:RETURN
        REM
13950 REM █ Print +--+ █ -----------------------------------------------------
        COLOR 0,7:LOCATE RLOC+(2*LINS),CLOC,0
        PRINT CHR$(192)+STRING$(2,196)+CHR$(217);:RETURN
        REM
13990 REM █ Set Column Location █ --------------------------------------------
        if (ms=0 and wid=40) THEN c=20 ELSE c=0
        IF CLOC<>0 THEN RETURN ELSE CLOC=c+((WID-HW)\2):RETURN
        REM
14030 REM █ Set Width █ ------------------------------------------------------
        IF OWID=WID THEN RETURN
        WIDTH WID:owid=wid:RETURN
        REM
```

```
14070 REM █ Set Screen Parameters █ ------------------------------------------
       J=4:MSG$=MSGA$(I)
       GOSUB 14170:WID=VAL(MID$(MSG$,J,K)):J=J+K+1
       GOSUB 14170:LINS=VAL(MID$(MSG$,J,K)):J=J+K+1
       GOSUB 14170:HW =VAL(MID$(MSG$,J,K)):J=J+K+1
       GOSUB 14170:FC =VAL(MID$(MSG$,J,K)):J=J+K+1
       GOSUB 14170:BC =VAL(MID$(MSG$,J,K)):J=J+K+1
       GOSUB 14170:FONT=VAL(MID$(MSG$,J,K)):J=J+K+1
       GOSUB 14170:RLOC=VAL(MID$(MSG$,J,K)):J=J+K+1
       K=LEN(MSG$)-(J+2):CLOC=VAL(MID$(MSG$,J,K)):RETURN
14170  K=0
14180  K=K+1:IF MID$(MSG$,J+K,1)<>"," THEN 14180 ELSE RETURN
       REM
14200 REM █ Process Response █ ------------------------------------------------
       K=0
14220  K=K+1:IF MID$(MSGA$(I),4,1)<>MID$(RSP$,K,1) THEN 14220
       KLNG=LEN(MSGA$(I))-9
       SCB$(K+10)=MID$(MSGA$(I),7,KLNG)
       RETURN
       REM
14250 REM █ Process Video Command █ ------------------------------------------
       IF DS=0 THEN RETURN
       GOSUB 14260              '  Check for valid VDC$ msg header 1-07-83
       YW$=MSGA$(I):YW$=LEFT$(YW$,LEN(YW$)-3):YW$=RIGHT$(YW$,LEN(YW$)-3)
       GOSUB 14380:RETURN
       REM
       REM █ Check for valid VDC$ message header █--------------------1-07-83
14260  BB$=LEFT$(MSGA$(I),3)
       IF BB$=VDC$ THEN RETURN
       MSGA$(I)=IGN$+MSGA$(I): I=I+1
       IF I>PT(PN,1) THEN 14270 ELSE 14260
14270  PRINT "14270 - ERROR: Should be a Video Disc Command": GOTO 10560
14300 REM █ Process Don't Cache Screen █ --------------------------------------
       NSAV=1
       RETURN                           'Return to "Do not cache screen"
14330 REM █ Accept numeric entries █
       FOR J=1 TO 9
         IF SCB$(J)="" THEN SCB$(J)="x"
       NEXT J:RETURN
       rem
14380 REM █ Video Player Command Processing █ -------------------------------
       IF DS=0 THEN RETURN
       YCKF$=RIGHT$(YW$,2)
       IF (YCKF$="c0" OR YCKF$="C0") THEN 14460 ' Search
       IF (YCKF$="c2" OR YCKF$="C2") THEN 14510 ' Autostop
       IF (YCKF$="c3" OR YCKF$="C3") THEN 14560 ' Stop
       IF (YCKF$="c5" OR YCKF$="C5") THEN 14600 ' Frame Number
       color 15,0,0:locate 1,1:print "Video Command Error",YW$
       GOSUB 41000: END              ' Save Cached Screens on Disk
       rem
```

```
14460 REM ▓ Video Search ▓ ------------------------------------------
      YCKS$="7":YCKF$=LEFT$(YW$,LEN(YW$)-2):GOSUB 14650
14480   IF LEN(YCKF$)<5 THEN YCKF$="0"+YCKF$:GOTO 14480
      YSM$=YSM$+"F7":VCMD$=YSM$:GOSUB 15000:RETURN
   rem
14510 REM ▓ Video Autostop ▓ -----------------------------------------
      YCKS$="8":YCKF$=LEFT$(YW$,LEN(YW$)-2):GOSUB 14650
14530   IF LEN(YCKF$)<5 THEN YCKF$="0"+YCKF$:GOTO 14530
      YSM$=YSM$+"F3":GOSUB 15000:RETURN
   rem
14560 REM ▓ Video Stop ▓ ---------------------------------------------
      YCKS$="3":YCKF$="N"
      YSM$="BFFB":GOSUB 15000:RETURN
   rem
14600 REM ▓ Video Frame Number ▓ ------------------------------------
      YCKS$="N":YCKF$="N"
      YSM$="EA":GOSUB 15000
      GOSUB 14810:VF$=YVF$:RETURN
   rem
14650 REM ▓ Convert Number ▓ ----------------------------------------
      YSM$=""
      FOR YI=1 to len(yckf$)
         YV$=MID$(YCKF$,YI,1)
         IF YV$="0" THEN YSM$=YSM$+"3F":GOTO 14790
         IF YV$="1" THEN YSM$=YSM$+"0F":GOTO 14790
         IF YV$="2" THEN YSM$=YSM$+"8F":GOTO 14790
         IF YV$="3" THEN YSM$=YSM$+"4F":GOTO 14790
         IF YV$="4" THEN YSM$=YSM$+"2F":GOTO 14790
         IF YV$="5" THEN YSM$=YSM$+"AF":GOTO 14790
         IF YV$="6" THEN YSM$=YSM$+"6F":GOTO 14790
         IF YV$="7" THEN YSM$=YSM$+"1F":GOTO 14790
         IF YV$="8" THEN YSM$=YSM$+"9F":GOTO 14790
         IF YV$="9" THEN YSM$=YSM$+"5F"
14790   NEXT YI:RETURN
   rem
14810 REM ▓ Convert Frame Number and store in yVF ▓ -----------------------
      YB$=MID$(YRM$,2,1):GOSUB 14920:YVF!=YVN
      YB$=MID$(YRM$,1,1):GOSUB 14920:YVG!=16:GOSUB 14910
      YB$=MID$(YRM$,4,1):GOSUB 14920:YVG!=256:GOSUB 14910
      YB$=MID$(YRM$,3,1):GOSUB 14920:YVG!=4096:GOSUB 14910
      YVF$=STR$(YVF!)
14870   IF LEFT$(YVF$,1) <> " " THEN 14890
      YVF$=RIGHT$(YVF$,LEN(YVF$)-1):GOTO 14870
14890   IF LEN(YVF$)=5 THEN RETURN
      YVF$="0"+YVF$:GOTO 14890
14910   YVF!=YVF!+(YVG!*YVN):RETURN
14920   IF YB$="A" THEN YVN=10:RETURN
         IF YB$="B" THEN YVN=11:RETURN
         IF YB$="C" THEN YVN=12:RETURN
         IF YB$="D" THEN YVN=13:RETURN
         IF YB$="E" THEN YVN=14:RETURN
         IF YB$="F" THEN YVN=15:RETURN
         YVN=VAL(YB$):RETURN
      rem
```

```
15000 REM ▊ Send YSM$ To Player, wait for yRM$ ▊ -----------------------------
          if ds=0 THEN return
          GOSUB 15110                                              '12-06-82
          YRM$="":PRINT #2,"D0":GOSUB 15110
          FOR YI=1 TO LEN(YSM$) STEP 2
           PRINT #2,MID$(YSM$,YI,2)
15040      FOR YDD!=1 TO YDY!
              IF EOF(2) THEN 15080
              YRM$=YRM$+INPUT$(LOC(2),#2)
              IF RIGHT$(YRM$,1)=CHR$(10) THEN 15090 ELSE 15040
15080      NEXT YDD!
15090      NEXT YI:PRINT #2,"D1":GOSUB 15110
          IF LEFT$(YRM$,1)="!" THEN GOTO 15130 ELSE RETURN
15110      FOR YDD!=1 TO YDY!:YDY!=YDY!:NEXT YDD!:RETURN
          rem
15130 REM ▋ UEI ERror ▋ -------------------------------------------------------
          GOSUB 15320:YB$=LEFT$(YRM$,3)
          IF YB$="!02" THEN YRM$="Overrun Condition      ":GOTO 15270
          IF YB$="!01" THEN YRM$="ASCII Parity Error      ":GOTO 15270
          IF YB$="!03" THEN YRM$="Interface Framing Error":GOTO 15270
          IF YB$="!10" THEN YRM$="Link Fault Detected    ":GOTO 15270
          IF YB$="!12" THEN YRM$="RAM dump Checksum Error":GOTO 15270
          IF YB$="!13" THEN YRM$="Link Initialization Err":GOTO 15270
          IF YB$="!14" THEN YRM$="UEI Link Not Activated ":GOTO 15270
          IF YB$="!20" THEN YRM$="Command Stack Overflow ":GOTO 15270
          IF YB$="!21" THEN YRM$="ASCII Char. Not Hex    ":GOTO 15270
          IF YB$="!22" THEN YRM$="Invalid Player Command ":GOTO 15270
                          YRM$="???? Unknown Error     ":GOTO 15270
          rem
15270 REM ▋ Increase UEI Delay and Resend Message ▋ --------------------------
          YDY!=YDY!+50                                             ' 9-23-82
          FOR XI= 1 TO 5000: NEXT XI                               ' 9-23-82
          IF YDY!<10000! THEN 15000 ELSE GOSUB 41000: END
          rem
15320 REM ▋ Print UEI Message yRM$ ▋ ---------------------------------------
          RETURN                                                   ' 9-23-82
          color 7,0,0:CLS:locate 1,1:PRINT " * UEI ERROR=";
          FOR YI=1 TO LEN(YRM$)
           YB$=MID$(YRM$,YI,1)
           IF YB$=CHR$(10) THEN YB$=CHR$(221)
           IF YB$=CHR$(13) THEN YB$=CHR$(220)
           PRINT YB$;
          NEXT YI:PRINT:RETURN
          rem
```

```
15410 REM █ Check for Completion of Command YSM$ █ --------------------------
      IF (YCKS$="N" OR DS=0) THEN 15660
15430   YSM$="EB":GOSUB 15000:YQ$=MID$(YRM$,2,1)
        IF (YCKS$="3" AND YQ$="3") THEN 15660      ' Stop
        IF (YCKS$="8" AND YQ$="8") THEN 15660      ' Autostop
        IF (YCKS$="8" AND YQ$="7") THEN 15640      ' Search Done
        IF (YCKS$="7" AND YQ$="7") THEN 15640      ' Search Done
        IF YQ$="0" THEN 15430                      ' Transition
        IF YQ$="1" THEN YSM$="FD":GOTO 15630       ' Park to    Play
        IF YQ$="2" THEN YSM$="BFFB":GOTO 15630     ' Play to    Stop
        IF YQ$="3" THEN YSM$=VCMD$:GOTO 15630      ' Stop to    Last Cmd
        IF YQ$="4" THEN YSM$="BFFB":GOTO 15630     ' Slo Fwd to Stop
        IF YQ$="5" THEN YSM$="BFFB":GOTO 15630     ' Slo Rev to Stop
        IF YQ$="6" THEN YSM$="F9":GOTO 15630       ' Focus to   Park
        IF YQ$="7" THEN YSM$=VCMD$:GOTO 15630      ' Search to  Last Cmd
        IF YQ$="8" THEN YSM$=VCMD$:GOTO 15630      ' Autostop - Last Cmd
        IF YQ$="9" THEN YSM$="BFFB":GOTO 15630     ' Input(stp) Stop
        IF YQ$="A" THEN YSM$="BFFB":GOTO 15630     ' Input(ply) Stop
        IF YQ$="B" THEN YSM$="EF":GOTO 15630       ' Wrt Prog to END PG
        IF YQ$="C" THEN YSM$="F9":GOTO 15630       ' Soft Rejt  Park
        IF YQ$="D" THEN YSM$="F9":GOTO 15630       ' Med. Rejt  Park
                      YSM$=chr$(27):GOTO 15630     ' ? to Software Reset
15630   GOSUB 15000:GOTO 15430
15640   YSM$="EA":GOSUB 15000:GOSUB 14810
        IF YCKF$<>YVF$ THEN YRC=1:RETURN
15660   YRC=0:RETURN
      REM
15680 REM █ Save SCreen coming from host █ -----------------------------------
      IF NSAV=1 THEN 15720
      IF ITOT=NMAX THEN 15685
      IPT(INS,0)=(INS-1)*NBLOK+1
15685   IREC%=IPT(INS,0)
      I=PT(PN,0): NRCT=0
15690 ' GOSUB 15800              ' Check if msg header is IGN$-ignore 1-07-83
      IF IL=1 THEN 15725
      IF (LEN(M1$) + LEN(MSGA$(I)))>508 THEN 15700
      NRCT=NRCT+1
      LMSG$=STR$(LEN(MSGA$(I)))
      M1$=M1$+RIGHT$(LMSG$,2)+MSGA$(I)
      IF I<PT(PN,1) THEN 15710
      M1$=RIGHT$(STR$(NRCT),2) + M1$ : GOSUB 15730: RETURN        '*M1*
15700   M1$=RIGHT$(STR$(NRCT),2) + M1$ : GOSUB 15730: I=I-1: NRCT=0  '*M2*
15710   I=I+1: IF I>PT(PN,1) THEN 15720 ELSE 15690
15720   RETURN                         ' Return to *A*
15725   M1$=RIGHT$(STR$(NRCT),2) + M1$ : GOSUB 15730: RETURN
      REM
15730 REM █ Write one record out on disk █ ----------------------------
      LSET S1$=M1$
      PUT #4, IREC%
      M1$="": IREC%=IREC%+1
      RETURN
      REM
```

```
15740  REM ▮ Put ending record number in array IPT ▮
       IPT(INS,1)=IREC%-1: RETURN
       REM
       REM ▮ Check if msg header is type IGN$ - ignore ▮ ----------- 1-07-83
15800   IL=0: BB$=LEFT$(MSGA$(I),3)
        IF BB$=IGN$ THEN 15810 ELSE RETURN
15810   I=I+1: IF I>PT(PN,1) THEN IL=1: RETURN
        GOTO 15800
       REM
15830 REM ▮ Update the stack of saved screens ▮ -----------------------------
        GOSUB 15840                    ' Check if msg type is screen ID   1-07-83
          LN=LEN(MSGA$(PT(PN,0)))-6
          STK$(ISTK)=MID$(MSGA$(PT(PN,0)),4,LN)
          ISTK=ISTK+1
          RETURN                       ' Return to *B* or *B2*
       REM
       REM ▮ Check if message type is screen ID ▮ --------------------'1-07-83
15840   NT=PT(PN,0)
15842   BB$=LEFT$(MSGA$(NT),3): IF BB$<>SID$ THEN 15845 ELSE RETURN
15845   NT=NT+1: IF NT>PT(PN,1) THEN 15846 ELSE 15842
15846   PRINT "15846 - ERROR Scr. ID not found ": GOTO 10560
       REM
       REM ▮ Print message: For more information: push MORE TEXT ▮ ------------
15850    C$="For more information: push MORE TEXT"
         GOSUB 12650
         RETURN                        'Return to *a*
       rem
15890 REM ▮ Select Monitor ▮ -------------------------------------------------
         if ms=0 THEN 15940
         DEF SEG=0:POKE &H410,(PEEK(&H410) AND &HCF) OR &H20
         WIDTH 40:SCREEN 0,1,0,0:LOCATE 1,1,0,6,7:KEY OFF
         WIDTH 40:SCREEN 0,1,0,0:LOCATE 1,1,0,6,7:KEY OFF:RETURN
15940    def seg=0:POKE &H410,PEEK(&H410) OR &H30
         WIDTH 40:SCREEN 0,0,0,0:LOCATE 1,1,0,12,13:KEY OFF
         WIDTH 40:SCREEN 0,0,0,0:LOCATE 1,1,0,12,13:KEY OFF:RETURN
       rem
16000 REM ▮ Initialize for New Customer ▮ ------------------------------------
         NSN$="REQ00000HD": STK$(0)= NSN$
         FOR II=1 TO ISTK: STK$(II)="": NEXT II
         ISTK=1
         GOSUB 40400                    ' Search LRU
16010    RETURN
       rem
```

```
16070 REM █ Start Video Disc Player █ ------------------------------------------
      close #1:WIDTH "com1:",255:if ds=0 THEN RETURN
      CLOSE #2:OPEN "com2:1200,E,7,1,CS,DS" AS #2            '12-06-82
      YSM$="E3E5E7":GOSUB 15000:GOTO 16120 ' Disp-off, Audio2-off,Audio1-off
16110 YSM$="FD":GOSUB 15000
16120 YSM$="EB":GOSUB 15000:YQ$=MID$(YRM$,2,1)
      IF YQ$="0" THEN 16120 ' Transition
      IF YQ$="1" THEN 16110 ' Park to Play
      if yq$<>"3" THEN YSM$="BFFB":GOSUB 15000:GOTO 16120
      YW$="6600C0":GOSUB 14380:GOSUB 15410:return ' Get to Frame 10
      rem
16180 REM █ Run Time Error Programs █ -------------------------------------------
      IF ERR=57  THEN 16220 ELSE IF ERR <> 24 THEN 16210 ELSE 16200
16200 CLOSE #1:OPEN "com1:1200,m,7,2,DS,CD" AS #1
16210 ON ERROR GOTO 0
16220 RESUME
      REM
16300 REM █ Check if Screen ID is same as screen currently displayed █---------
      IF K$="n" THEN 16320
      GOSUB 16400                    ' Check if scr. header valid   1-07-83
      LN=LEN(MSGA$(MP+1))-6
      TEMP$=MID$(MSGA$(MP+1),4,LN)
      IF NSN$=TEMP$ THEN 16320
16310 SD$=NSN$: NSN$=TEMP$
      SCROK=0: GOSUB 40400
      IF LRUFD=1 THEN RETURN
      GOSUB 16500
16320 SCROK=1 :RETURN
      REM
      REM
16400 REM █Check if screen header is valid █ -----------------------1-07-83
      NT=MP
16405 NT=NT+1
16410 BB$=LEFT$(MSGA$(NT),3)
      IF BB$<>SID$ THEN 16420 ELSE RETURN
16420 IF NT=PT(PN,1) THEN 16430 ELSE 16405
16430 PRINT "16430 - ERROR - msg after OK not a screen ID ": GOTO 10560
      REM
16500 REM █ Print an error screen █----------------------------------------------
      if ms=0 THEN color 7,0,0 ELSE color 0,1,1
      CLS: WIDTH 40
      LOCATE 3,1,0: PRINT "SYSTEM ERROR"
      LOCATE 4,1,0: PRINT "Screen Desired is " SD$
      LOCATE 5,1,0: PRINT "HOST Sent  " TEMP$ "  ;NOT in LRU"
      LOCATE 6,1,0: PRINT "Please press -n- for NEW REQUEST"
      RETURN                          'Return to *CSID*
      REM
      REM █ -----Test for size of screen -------------------------------------
```

```
17000    SUM=0: BLCTR=0: NSAV=0
         NN=PT(PN,0)
17010    SUM=SUM+LEN(MSGA$(NN))+2
         IF SUM<511 THEN 17100
         SUM=0: BLCTR=BLCTR+1: GOTO 17010
17100    IF NN=PT(PN,1) THEN 17110
         NN=NN+1: GOTO 17010
17110    BLCTR=BLCTR+1
         IF BLCTR<NBLOK+1 THEN RETURN
         NSAV=1: RETURN
         REM
         REM █ Check if Disk is full █-----------------------------------------
18000    IF ITOT=NMAX    THEN 18010 ELSE RETURN
18010    GOSUB 18100                         'DELETE ONE FROM LRU
         RETURN
         REM
         REM █ ----- DELETE A BLOCK FROM THE LRU █
18100    INS=NLAST
         LRU$(NLAST,1)="0": LRU$(NLAST,0)=""
         IT=VAL(LRU$(NLAST,2))
         LRU$(IT,1)=STR$(0)
         NLAST=IT
         RETURN
         REM
20000 REM █ Initialize █ ------------------------------------------------------
         ON ERROR GOTO 0:ON ERROR GOTO 16180
         SID$="@#%":SCH$="@#/":SKP$="@#+":LF$="@%/":LIT$="@%+":ANE$="%@#"
         TXT$="#@/":VDC$="#%/":RLM$="%/+":RES$="#@%":EOS$="#/+":DNC$="#%@"
         PAZ$="#/%":NUM$="1234567890,.bnecmhqzwx":OWID=40:VF$="": M1$=""
         RSP$="☆#BNECMHQZWX":FONTT$(0)="#@/REQUEST/@#":FONTV(0)=7
         FONTF$(0)=REQ$:ydy!=150:BLNK$=STRING$(79,255): IGN$="###"
         ISTK=0: NSAV=0 : IREC%=1:  NRUN=0: LRUFD=0
         RETURN
         rem   ------------------------------------------------------------------
         REM █-----Play a G then a C ---------------------------------------
30000    PLAY "O3L4GC": RETURN
         REM
         REM █----- Set NSN$ = Screen ID ------------------------------------11-22-82
39000    XT=PT(PN,0): LN=LEN(MSGA$(XT))-6 : NSN$= MID$(MSGA$(XT),4,LN): RETURN
         REM
         REM █----- Check if screen is a BAD  screen - Don't save █
39100    FOR N= 0 TO NBAD
         IF NSN$=BADS$(N) THEN 39110
         NEXT N
         RETURN
39110    NSAV=1: RETURN
         REM
39800 REM █ Open Random File on Disk to Cache Screens █ ---------------------
         OPEN DSKR$ AS #4 LEN=512
         FIELD #4, 512 AS S1$
         RETURN                       ' Return to L1
         rem
         REM █ Read in Screens not to be saved - patch coding █
```

```
39900   OPEN BSCR$ FOR INPUT AS #5
        JK=0
39910   IF EOF(5) THEN 39950
        INPUT #5, BADS$(JK)
        JK=JK+1: GOTO 39910
39950   CLOSE #5: NBAD=JK-1: RETURN
        REM
        REM -----READ THE LRU LIST FROM DISK--------------------------------
40000   OPEN DSKL$ FOR INPUT AS  #5
        JK=0
40010   IF EOF(5) THEN 40050
        INPUT #5, LRU$(JK,0), LRU$(JK,1), LRU$(JK,2), IB$, IND$
        IPT(JK,0)=VAL(IB$): IPT(JK,1)=VAL(IND$)
        JK=JK+1: GOTO 40010
40050   CLOSE #5: NBLOK=VAL(LRU$(0,2)): NLAST=IPT(0,1)
        NMAX=300/NBLOK
        IF JK=1 THEN 40060 ELSE 40070
40060   ITOT=1:   INS=1: ICS=0:   RETURN
40070   ITOT=JK-1: INS=JK: ICS=JK-1: RETURN
        REM
        REM -----SEARCH LRU------------------------------------------------------
        REM  NPT = Points to the next screen in the LRU list------------------
40400   NPT=VAL(LRU$(0,1))
40410   IF NSN$=LRU$(NPT,0) THEN 40420
        NPT=VAL(LRU$(NPT,1))
        IF NPT=0 THEN 40450 ELSE 40410
40420   LRUFD=1: INS=NPT: GOSUB 40600: GOTO 40460
40450   LRUFD=0: IF ICS=0 THEN RETURN
        IF ITOT=NMAX THEN RETURN
        INS=ITOT+1
40460   RETURN
        REM
        REM -----ADD TO LRU-------------------------------------------------------
        REM  INS= Location in LRU of next screen
        REM  ICS= Location in LRU of current screen
40500   IF ICS=0 THEN 40550
        LRU$(ICS,2)= STR$(INS)              'BP(PS)= LOC OF NS IN LRU
40550   LRU$(INS,0)=NSN$                    'SCR. ID(N-TH SCR)= NEXT SCREEN
        LRU$(INS,1) = LRU$(0,1)             'FP(NS)=FP(0-TH screen)
        IF VAL(LRU$(INS,1))<>0 THEN 40555
        NLAST=INS
40555   LRU$(INS,2)=STR$(0)                 'BP(NS)=0-th screen
        LRU$(0,1) = STR$(INS)               'FP(0-TH screen)= new screen loc
        ICS=INS
        IF ITOT <> NMAX THEN 40560 ELSE RETURN
40560   ITOT=INS
        RETURN
        REM
```

```
       REM █-----UPDATE LRU----------------------------------------------------------
40600   IT=VAL(LRU$(INS,2))
        LRU$(IT,1) = LRU$(INS,1)          'FP(NS-1)=FP(NS)   NS= Next Screen
        IF VAL(LRU$(IT,1))<>0 THEN 40610
        NLAST=IT
40610   IT=VAL(LRU$(INS,1))
        LRU$(IT,2) = LRU$(INS,2)          'BP(NS+1)=BP(NS)
        IT=VAL(LRU$(0,1))
        LRU$(IT,2) = STR$(INS)            'BP(FS)= LOC OF NS IN LRU
        LRU$(INS,1)=LRU$(0,1)             'FP(NS)=FP(0-th screen)
        LRU$(INS,2)=STR$(0)               'BP(NS)=0
        LRU$(0,1)=STR$(INS)               'FP(0-TH screen)= LOC OF NS .IN LRU
        ICS=INS                           'I-th pos of CS = I-th of Next Screen
        RETURN
       REM
       REM █ ----- PRINT LRU LIST █
41000   CLOSE: OPEN DSKL$ FOR OUTPUT AS #5
        IUP=ITOT: LRU$(0,2)= STR$(NBLOK):IPT(0,1)=NLAST
        FOR I=0 TO IUP
        IB$=STR$(IPT(I,0)): IND$=STR$(IPT(I,1))
        WRITE #5, LRU$(I,0), LRU$(I,1), LRU$(I,2), IB$, IND$         -
        NEXT I
41500   CLOSE: RETURN
       REM
```

TABLE 3

```
LE: SHOWQ5   PLISQL   A   SAN JOSE RESEARCH LABORATORY - VM/SP CMS (1.11)


HOWQ: PROCEDURE OPTIONS ( MAIN );
/* ================================================================= */
/* CONNECT: ENTRY (          T, RCODE);   CONNECT TO SQL/DS          */
/* COMMIT:  ENTRY (          T, RCODE);   COMMIT ALL WORK            */
/* WARRTXT: ENTRY (ITM, XTD,XL,T, RCODE); /* GET TEXT FROM WARRAN5   */
/* SALETXT: ENTRY (ITM, XS,XL,T, RCODE);  /* GET TEXT FROM SALE5     */
/* DISTXT:  ENTRY (XC8,XTD,XL, T, RCODE);  GET DISPLAY TEXT          */
/* RPLTXT:  ENTRY (XC8,XSR,XL, T, RCODE);  GET REPLY OPTIONS TEXT    */
/* INXDATA: ENTRY (XC20,XSR,XL, T, RCODE); GET INDEX DATA            */
/* ITEMINF: ENTRY (XC8,XI, T, RCODE);  GET ITEM INFORMATION          */
/* ITEMNM:  ENTRY (XC8,C40, T, RCODE);  GET ITEM NAME                */
/* FINDIT:  ENTRY (XI, CV, T, RCODE);    GET   ITEM  FROM FRAME#     */
/* ITEMCUR: ENTRY(FF, FL, T, RCODE); FILL XI1 WITH DEMO ITEMS        */
/* ITEMSET: ENTRY(XI, T, RCODE); SET POSITION OF SELECTED DEMO ITEM  */
/* SUGGITM: ENTRY(XC8,XCI,XL, T, RCODE); GET COMPLEMENTARY ITEMS     */
/* ADJITEM: ENTRY (XI, RP, T, RCODE);    GET   ADJACENT ITEM         */
/* ITEMCSM: ENTRY (ITM,MSCI,XSR,XL, T, RCODE);  GET ITEM COLOR       */
/* ADJQUAN: ENTRY (ITM,TYP,T, RCODE); ADJUST QUANTITY OF ITEM        */
/* IPRICE:  ENTRY (XC8,XP,T, RCODE);  GET ITEM PRICE                 */
/* CHARGE:  ENTRY (C12,XL,  T, RCODE);   CHARGE CREDIT OF CUSTOMER   */
/* PASSWD:  ENTRY (C12,C8,  T, RCODE);   FETCH CUSTOMER PASSWORD     */
/* ================================================================= */
EXEC SQL BEGIN DECLARE SECTION;
    DCL I8          CHAR(8);
    DCL C8          CHAR(8);
    DCL CL8         CHAR(8);
    DCL C12         CHAR(12);
    DCL S8          CHAR(8);
    DCL RP      _   CHAR(2);
    DCL CH6         CHAR(6);
    DCL CH20        CHAR(20);
    DCL C40         CHAR(40);
    DCL CHV20       CHAR(20) VARYING;
    DCL CHV20V      CHAR(20) VARYING;
    DCL F1    FIXED BIN(31);
    DCL (FF,FL) FIXED BIN(31);
    DCL XL          FIXED BIN(31);
    DCL F31         FIXED BIN(31);
    DCL MSCI        FIXED BIN;
    DCL TYP         CHAR(3);
/* VIDEO3.ITEM5 TABLE -- -------ITEM TABLE----------------------*/
                        /*   SORTED BY IIC                     */

    DCL IIT     CHAR(8);   /* ITEM  ID, UNIQUE FOR AN ITEM.  */
    DCL IIC     CHAR(20);  /* ITEM  KEY WORD E.G. SHOE,
                              DRESS ETC.
                              SORT BY THIS FIELD.             */
    DCL IODN    CHAR(12);  /* CATALOGUE NUMBER OR ORDER
                              NUMBER. SOME TIMES SPECIAL CODES
                              WILL POINT TO TABLE SIZCOL2.    */
    DCL ICIT    CHAR(8);   /* ITEM  ID OF COMPLEMENT ITEM,
                              NON ZERO IMPLIES ENTRY IN TABLE
                              ICOMP. ZERO VALUE, IF NO COMPLEMENTARY
                              ITEM OR QOH IS ZERO.            */
    DCL INM     CHAR(40);  /* NAME OF ITEM.                  */
```

40
-42-

FILE: SHOWQ5   PLISQL   A   SAN JOSE RESEARCH LABORATORY - VM/SP CMS (1.11)

```
      DCL IVF  FIXED BIN(31);   /* VIDEO FRAME NUMBER FOR STATIC
                                    DISPLAY.                       */
      DCL IFM  FIXED BIN(31);   /* FIRST FRAME # FOR DISPLAYING
                                    ITEM FROM DIFFERENT POSITIONS. */
      DCL ILM  FIXED BIN(31);   /* LAST  FRAME # FOR DISPLAYING
                                    ITEM FROM DIFFERENT POSITIONS. */
      DCL IFC  FIXED BIN(31);   /* FIRST COMMERCIAL FRAME NUMBER. */
      DCL ILC  FIXED BIN(31);   /* LAST  COMMERCIAL FRAME NUMBER. */
      DCL IEC  FIXED BIN(31);   /* END   COMMERCIAL FRAME NUMBER. */

   /* VIDEO3.DEPT5 TABLE ----------DEPARTMENT INDEX TABLE---------
                                   SORTED BY IDEPT                 */

      DCL IDEPT      CHAR(20); /* DEPARTMENT NAME IN WHICH ITEM
                                   SOLD, REPEATING VALUE.
          IIT        CHAR(8)      ITEM  ID, NON UNIQUE.
          INM        CHAR(40)     NAME OF ITEM.
          IFC  FIXED BIN(31)      FIRST COMMERCIAL FRAME NUMBER.
          ILC  FIXED BIN(31)      LAST  COMMERCIAL FRAME NUMBER.
          IEC  FIXED BIN(31)      END   COMMERCIAL FRAME NUMBER. */

   /* VIDEO3.BRAND5 TABLE----------BRAND NAME INDEX TABLE---------
                                   SORTED BY IBRAND                */

      DCL IBRAND     CHAR(20); /* BRAND NAME OF ITEM
                                      REPEATING VALUE.
                                   E.G. SEARS, GM, FRIGIDAIRE ETC.
          IIT        CHAR(8)      ITEM  ID, NON UNIQUE.
          INM        CHAR(40)     NAME OF ITEM.
          IFC  FIXED BIN(31)      FIRST COMMERCIAL FRAME NUMBER.
          ILC  FIXED BIN(31)      LAST  COMMERCIAL FRAME NUMBER.
          IEC  FIXED BIN(31)      END   COMMERCIAL FRAME NUMBER. */

   /* VIDEO3.TEXT5   TABLE ----------ITEM TEXT TABLE--------------
                                   SORTED BY TIT                   */

      DCL TIT        CHAR(8);  /* ITEM ID, SAME AS ITEM2.IIT.
                                   TEXTS COVERING MULTIPLE TUPLES
                                   ARE LINKED BY SAME VALUE OF THIS
                                   FIELD.                          */
      DCL TCN        CHAR(8);  /* CONTINUATION NUMBER. A LINK CODE
                                   FOR ITEMS HAVING SAME TEXT.     */
      DCL TSEQ       CHAR(7);  /* A SEQUENCE NUMBER FOR EACH TUPLE
                                   OF THIS TABLE.                  */
      DCL DFCL FIXED BIN(31);  /* TEXT COLOR DISPLAY CODE. USED
                                   BY SCREEN GENERATOR PROGRAM.    */
      DCL DBCL FIXED BIN(31);  /* BACK GROUND COLOR DISPLAY CODE. USED
                                   BY SCREEN GENERATOR PROGRAM.    */
      DCL DSL  FIXED BIN(31);  /* TEXT LETTER SIZE DISPLAY CODE.
                                   USED BY SCREEN GENERATOR PROGRAM.*/
      DCL TTX        CHAR(74); /* TEXT.                            */

   /* VIDEO3.SIZCOL5 TABLE -------MICRO INFORMATION TABLE---------
                                   SORTED BY IIT,SIZE,COLOR,MODEL
```

```
            IIT        CHAR(8)              ITEM NUMBER. SAME AS ITEM2.IIT, BUT
                                            WILL BE REPEATED.            */
        DCL SIZE       CHAR(8);        /* ITEM SIZE, DATA ONLY FOR SIZES
                                            OF THE ITEM AVAILABLE IN STORE. */
        DCL COLOR      CHAR(8);        /* ITEM COLOR, DATA ONLY FOR COLORS
                                            OF THE ITEM AVAILABLE IN STORE. */
        DCL MODEL      CHAR(20);       /* ITEM MODEL, DATA ONLY FOR MODELS
                                            OF THE ITEM AVAILABLE IN STORE
                                            E.G. RUBBER WHEEL, RECTANGLE ETC.
            IODN       CHAR(12)             ITEM CATALOGUE, SAME AS ITEM2.IODN
                                            BUT NO CODES.
            IBRAND     CHAR(20)             BRAND NAME OF ITEM
                                            REPEATING VALUE.
                                            SAME AS IN BRAND.IBRAND,
                                            E.G. SEARS, GM, FRIGIDAIRE ETC.*/
        DCL ISP        CHAR(8);        /* ITEM SALES PROMOTION CODE. POINTS
                                            TO TABLE SALE2. A ZERO VALUE
                                            IMPLIES ITEM NOT ON SALE.       */
        DCL IWN        CHAR(8);        /* ITEM WARRANTY CODE. POINTS TO
                                            TABLE WARRAN. A ZERO VALUE
                                            IMPLIES ITEM HAS NO WARRANTY.
            IFM    FIXED BIN(31)            FIRST MICRO INFORMATION FRAME
                                            NUMBER.VALUE ZERO IF NO MICRO
                                            INFORMATION AVAILABLE FOR ITEM.
            ILM    FIXED BIN(31)            LAST  MICRO INFORMATION FRAME
                                            NUMBER.VALUE ZERO IF NO MICRO
                                            INFORMATION AVAILABLE FOR ITEM. */
        DCL IEM    FIXED BIN(31);      /* END   MICRO INFORMATION FRAME
                                            NUMBER.VALUE ZERO IF NO MICRO
                                            INFORMATION AVAILABLE FOR ITEM. */
    DCL QOH BIN FIXED (31);            /* ITEM QUANTITY ON HAND. SUBTRACT
                                            QUANTITY PURCHASED, AFTER EACH
                                            PURCHASE. ADD BACK QUANTITY, IF
                                            PURCHASE FAILS FOR SOME REASONS. */
    DCL ISW BIN FIXED (31);            /* SHIPPING WEIGHT OF EACH ITEM.  */

/* VIDEO3.SALE5 TABLE ----------SALES TABLE----------------------
                           SORTED BY ISP

            ISP            CHAR(8)          SALES PROMOTION CODE, SAME AS
                                            SIZCOL2.ISP              */
        DCL SSD            CHAR(8);    /* START DATE OF SALES PROMOTION.     */
        DCL SED            CHAR(8);    /* TERMINATION DATE OF SALES PROMOTION.*/
        DCL STXT           CHAR(74);   /* TERMS AND CONDITIONS OF SALES
                                            PROMOTION, SALE PRICE AND OTHER
                                            RESTRICTIONS TO SALE.        */
        DCL SFC    FIXED BIN(31);      /* FIRST SALES PROMOTION FRAME
                                            NUMBER.VALUE ZERO IF NO SALES
                                            PROMOTION AVAILABLE FOR ITEM.  */
        DCL SLC    FIXED BIN(31);      /* LAST  SALES PROMOTION FRAME
                                            NUMBER.VALUE ZERO IF NO SALES
                                            PROMOTION AVAILABLE FOR ITEM.  */
        DCL SEC    FIXED BIN(31);      /* END SALES PROMOTION FRAME
                                            NUMBER.VALUE ZERO IF NO SALES
                                            PROMOTION AVAILABLE FOR ITEM . */
```

FILE: SHOWQ5   PLISQL   A   SAN JOSE RESEARCH LABORATORY - VM/SP CMS (1.11)


```
/* VIDEO3.WARRAN5 TABLE ----------WARRANTY TABLE-----------------
                           SORTED BY IWN

         IWN         CHAR(8)        WARRANTY CODE, SAME AS IN
                                    SIZCOL2.IWN.
                                    REPEAT FOR MULTIPLE TUPLE TEXT. */
      DCL WTXT       CHAR(40);   /* TEXTUAL DETAILS OF WARRANTY.    */
      DCL WGEN       CHAR(40);   /* INFORMATION NEEDED TO OBTAIN OR
                                    GENERATE WARRANTY.              */
      DCL WFI  FIXED BIN(31);    /* FIRST WARRANTY INFORMATION FRAME
                                    NUMBER.VALUE ZERO IF NO WARRANTY
                                    INFORMATION AVAILABLE FOR ITEM.  */
      DCL WLI  FIXED BIN(31);    /* LAST WARRANTY INFORMATION FRAME
                                    NUMBER.VALUE ZERO IF NO WARRANTY
                                    INFORMATION AVAILABLE FOR ITEM.  */

/* VIDEO3.PRICE5 TABLE -- -------PRICE TABLE---------------------
                           SORT BY IIT
         IIT         CHAR(8)        ITEM  ID, SAME AS IN ITEM2.IIT
                                    BUT CAN REPEAT.
         IODN        CHAR(12)       CATALOGUE NUMBER OR ORDER
                                    NUMBER. SAME AS ITEM2.IODN,
                                    NO CODES ALLOWED.               */
      DCL IRP   FIXED BIN(31);  /* ITEM NORMAL PRICE IN DOLLARS
                                    AND CENTS.                      */
      DCL IPQ   FIXED BIN(31);  /* QUANTITY OR NUMBER OF UNITS OF
                                    PURCHASE FOR WHICH THE PRICE IS
                                    VALID.                          */
      DCL PSD        CHAR(8);   /* START DATE OF EFFECTIVE PRICE. */
      DCL PED        CHAR(8);   /* END   DATE OF EFFECTIVE PRICE. */
      DCL IEP   FIXED BIN(31);   /* EFFECTIVE PRICE, MAY HAVE TO BE
                                    COMPUTED FROM REGULAR PRICE.    */

/* VIDEO3.ICOMP5 TABLE -- -------COMPLEMENT ITEM TABLE----------
                           SORTED BY IIT

         IIT         CHAR(8)        ITEM  ID OF ONLY THOSE ITEMS WHICH
                                    HAVE COMPLEMENT ITEMS. CAN REPEAT
                                    SAME AS ITEM2.IIT.
         ICIT        CHAR(8)        ITEM  ID OF ITEMS WHICH SHOULD BE
                                    SUGGESTED FOR PURCHASE, IF THIS
                                    ITEM IS PURCHASED. SAME AS
                                    ITEM2.IIT.
         IFC  FIXED BIN(31)         FIRST COMMERCIAL FRAME NUMBER
                                    OF SUGGESTED ITEM.
         ILC  FIXED BIN(31)         LAST  COMMERCIAL FRAME NUMBER
                                    OF SUGGESTED ITEM.
         IEC  FIXED BIN(31)         END   COMMERCIAL FRAME NUMBER
                                    OF SUGGESTED ITEM.              */

/* VIDEO3.CUSTM5 TABLE -- -------CUSTOMER TABLE----------------
                           SORTED BY CID                          */

      DCL CID        CHAR(12);  /* CUSTOMER ID, CREDIT CARD
```

FILE: SHOWQ5    PLISQL    A    SAN JOSE RESEARCH LABORATORY - VM/SP CMS (1.11)

```
                                      IDENTIFICATION NUMBER        */
        DCL PASS        CHAR(8);  /* PASS WORD                     */
        DCL CADD        CHAR(74); /* MAILING ADDRESS OF CUSTOMER   */
        DCL CLIM FIXED BIN(31);   /* CREDIT LIMIT OF CUSTOMER.
                                      ORIGINALLY SET BY STORE AND
                                      PURCHASE AMOUNT DEDUCTED AT EACH
                                      PURCHASE.                    */

  /* VIDEO3.DELEV5 TABLE -- -------ITEM DELIVERY TABLE-------------
                                SORTED BY CID

         CID        CHAR(12)     CUSTOMER ID, CREDIT CARD
                                 IDENTIFICATION NUMBER.
         IODN       CHAR(12)     CATALOGUE NUMBER OR ORDER
                                 NUMBER. SAME AS ITEM2.IODN,
                                 NO CODES ALLOWED.                 */
      DCL DELD      CHAR(8);  /* DATE ON WHICH ITEM DELIVERED
                                 OR PROMISED DELIVERY.             */
      DCL DELADD    CHAR(74); /* ADDRESS WHERE ITEM TO BE DELIVERED
                                 OR LOCATION WHERE CUSTOMER TO
                                 PICK UP ITEM.                     */
      DCL AVAILD    CHAR(8);  /* DATE ON WHICH ITEM WILL BE
                                 AVAILABLE IN STOCK. IF
                                 SIZCOL2.QOH > 0 THEN VALUE =
                                 CURRENT.                          */

  /* VIDEO3.INCOM5 TABLE -- -------PURCHASE INCOMPLETE TABLE------
                                SORTED BY CID

         CID        CHAR(12)      CUSTOMER ID, CREDIT CARD
                                  IDENTIFICATION NUMBER.
                                  OF THOSE CUSTOMERS WHO INTRUPTED
                                  TRANSACTION FOR INSPECTION.
         PASS       CHAR(8)       PASS WORD
         IODN       CHAR(12)      CATALOGUE NUMBER OR ORDER
                                  NUMBER OF ITEMS PURCHASED BY
                                  CUSTOMER. SAME AS ITEM2.IODN,
                                  NO CODES ALLOWED.                */
      DCL STATE     CHAR(8);  /* STATE FROM WHICH CUSTOMER
                                  REQUESTED STATE INS (LAST ITEM)
                                  VALUE BLANK FOR ITEMS ALREADY
                                  PURCHASED.
         SIZE    CHAR(8)         ITEM SIZE, DATA OF ITEM PURCHASED.
         COLOR   CHAR(8)         ITEM COLOR, DATA OF ITEM
                                 PURCHASED.
         MODEL   CHAR(20)        ITEM MODEL, DATA OF ITEM
                                 PURCHASED.                        */
      DCL QUAN  FIXED BIN(31); /* QUANTITY OR UNITS OF ITEM
                                  PURCHASED.                       */

  /* VIDEO3.STREP5    TABLE ----------STATE REPLY TABLE-------------
                                SORTED BY STATE

         STATE      CHAR(8)       ITEM ID, SAME AS INCOM5.STATE
                                  STATE COVERING MULTIPLE TUPLES
```

FILE: SHOWQ5   PLISQL   A   SAN JOSE RESEARCH LABORATORY - VM/SP CMS (1.11)

```
                                  ARE LINKED BY SAME VALUE OF THIS
                                  FIELD.                          */
     DCL REPID      CHAR(5);    /* A REPLY ID SEQUENCE NUMBER FOR EACH
                                  TUPLE FOR SAME VALUE OF STATE   */
     DCL STREP      CHAR(10);   /* STATE CONCATINATED WITH TWO
                                  CHARACTERS FORM REPLY STRING
         DFCL  FIXED BIN(31)      TEXT COLOR DISPLAY CODE. USED
                                  BY SCREEN GENERATOR PROGRAM.
         DBCL  FIXED BIN(31)      BACK GROUND COLOR DISPLAY CODE. USED
                                  BY SCREEN GENERATOR PROGRAM.
         DSL   FIXED BIN(31)      TEXT LETTER SIZE DISPLAY CODE.
                                  USED BY SCREEN GENERATOR PROGRAM.*/
     DCL RLOC       CHAR(2);    /* ROW LOCATION IN SCREEN          */
     DCL CLOC       CHAR(2);    /* COLUMN LOCATION IN SCREEN       */
     DCL REPTXT     CHAR(40);   /* REPLY TEXT FOR SCREEN           */
     DCL NSTATE     CHAR(8);    /*  NEXT STATE SAME AS INCOM5.STATE
         IVF   FIXED BIN(31)      VIDEO FRAME NUMBER FOR STATIC
                                  DISPLAY.                         */

 /* VIDEO3.SCREN5   TABLE ----------SCREEN   TABLE-------------------
                                  SORTED BY STREP,TSEQ

         REPID      CHAR(5)      REPLY ID SEQUENCE NUMBER FOR EACH
                                 SCREEN GENERATED BY SYSTEM
         STREP      CHAR(10)     STATE CONCATINATED WITH TWO
                                 CHARACTERS FORM REPLY STRING */
     DCL NSCEN      CHAR(10);  /* NEXT STATE-REPLY SCREEN
         DFCL  FIXED BIN(31)      TEXT COLOR DISPLAY CODE. USED
                                  BY SCREEN GENERATOR PROGRAM.
         DBCL  FIXED BIN(31)      BACK GROUND COLOR DISPLAY CODE. USED
                                  BY SCREEN GENERATOR PROGRAM.
         DSL   FIXED BIN(31)    TEXT LETTER SIZE DISPLAY CODE.
         RLOC       CHAR(2)     ROW LOCATION IN SCREEN
         CLOC       CHAR(2)     COLUMN LOCATION IN SCREEN
                                USED BY SCREEN GENERATOR PROGRAM.
         REPTXT     CHAR(40)    REPLY TEXT FOR SCREEN
         NSTATE     CHAR(8)      NEXT STATE SAME AS INCOM5.STATE */

    /* ------------------------------------------------------------*/
     DCL ID  CHAR(8) INIT('GHOSH   ');
     DCL PASSW CHAR(8) INIT('GHOSH   ');
 EXEC SQL END DECLARE SECTION;
    /* ------------------------------------------------------------ */
     DCL XC8           CHAR(8);
     DCL XC12          CHAR(12);
     DCL FN       FIXED BIN(31);
     DCL (RS, RC)      CHAR(8);
     DCL RCODE    FIXED BIN(31);
     DCL T             CHAR(25);
  DCL 1 XI,                    /* ITEM STRUCTURE */
       2 IIT      CHAR(8),     /* ITEM  ID, UNIQUE FOR AN ITEM. */
       2 IIC      CHAR(20),    /* ITEM  KEY                     */
       2 IODN     CHAR(12),    /* CATALOGUE NUMBER OR ORDER
                                  NUMBER.                       */
       2 ICIT     CHAR(8),     /* ITEM  ID OF COMPLEMENT ITEM.  */
```

FILE: SHOWQ5    PLISQL    A    SAN JOSE RESEARCH LABORATORY - VM/SP CMS (1.11)

```
          2 INM        CHAR(40),    /* NAME OF ITEM.                    */
          2 IVF  FIXED BIN(31),     /* VIDEO FRAME NUMBER FOR STATIC
                                        DISPLAY.                        */
          2 IFM  FIXED BIN(31),     /* FIRST FRAME # FOR DISPLAYING
                                        ITEM FROM DIFFERENT POSITIONS. */
          2 ILM  FIXED BIN(31),     /* LAST   FRAME # FOR DISPLAYING
                                        ITEM FROM DIFFERENT POSITIONS. */
          2 IFC  FIXED BIN(31),     /* FIRST COMMERCIAL FRAME NUMBER. */
          2 ILC  FIXED BIN(31),     /* LAST   COMMERCIAL FRAME NUMBER. */
          2 IEC  FIXED BIN(31);     /* END    COMMERCIAL FRAME NUMBER. */

   DCL 1 XDI,                       /* DEPARTMENT INDEX TABLE           */
          2 IDEPT      CHAR(20),    /* DEPARTMENT NAME IN WHICH ITEM
                                        SOLD, REPEATING VALUE.          */
          2 IIT        CHAR(8),     /* ITEM  ID, NON UNIQUE.            */
          2 INM        CHAR(40),    /* NAME OF ITEM.                    */
          2 IFC  FIXED BIN(31),     /* FIRST COMMERCIAL FRAME NUMBER. */
          2 ILC  FIXED BIN(31),     /* LAST   COMMERCIAL FRAME NUMBER. */
          2 IEC  FIXED BIN(31);     /* END    COMMERCIAL FRAME NUMBER. */

   DCL 1 XBI,                       /* BRAND NAME INDEX TABLE           */
          2 IBRAND     CHAR(20),    /* BRAND NAME OF ITEM
                                        REPEATING VALUE                 */
          2 IIT        CHAR(8),     /* ITEM  ID, NON UNIQUE.            */
          2 INM        CHAR(40),    /* NAME OF ITEM.                    */
          2 IFC  FIXED BIN(31),     /* FIRST COMMERCIAL FRAME NUMBER. */
          2 ILC  FIXED BIN(31),     /* LAST   COMMERCIAL FRAME NUMBER. */
          2 IEC  FIXED BIN(31);     /* END    COMMERCIAL FRAME NUMBER. */

   DCL 1 XT,                        /* ITEM TEXT TABLE                  */
          2 TIT        CHAR(8),     /* ITEM ID.
                                        IF TEXTS COVERING MULTIPLE TUPLES
                                        ARE LINKED BY SAME VALUE OF THIS
                                        FIELD.                          */
          2 TCN        CHAR(8),     /* CONTINUATION NUMBER. A LINK CODE
                                        FOR ITEMS HAVING SAME TEXT.     */
          2 TSEQ       CHAR(7),     /* A SEQUENCE NUMBER FOR EACH TUPLE
                                        OF THIS TABLE.                  */
          2 DFCL FIXED BIN(31),     /* TEXT COLOR DISPLAY CODE. USED
                                        BY SCREEN GENERATOR PROGRAM.    */
          2 DBCL FIXED BIN(31),     /* BACK GROUND COLOR DISPLAY CODE. USED
                                        BY SCREEN GENERATOR PROGRAM.    */
          2 DSL  FIXED BIN(31),     /* TEXT LETTER SIZE DISPLAY CODE. */
          2 TTX        CHAR(74);    /* TEXT.                            */

   DCL 1 CS,                        /* MICRO INFORMATION TABLE          */
          2 IIT    CHAR(8),         /* ITEM NUMBER.                     */
          2 SIZE   CHAR(8),         /* ITEM SIZE, DATA ONLY FOR SIZES
                                        OF THE ITEM AVAILABLE IN STORE. */
          2 COLOR  CHAR(8),         /* ITEM COLOR, DATA ONLY FOR COLORS
                                        OF THE ITEM AVAILABLE IN STORE. */
          2 MODEL  CHAR(20),        /* ITEM MODEL, DATA ONLY FOR MODELS
                                        OF THE ITEM AVAILABLE IN STORE  */
          2 IODN   CHAR(12),        /* ITEM CATALOGUE, NO CODES         */
          2 IBRAND CHAR(20),        /* BRAND NAME OF ITEM
```

FILE: SHOWQ5    PLISQL    A    SAN JOSE RESEARCH LABORATORY - VM/SP CMS (1.11)

```
                                        REPEATING VALUE.          */
        2 ISP      CHAR(8),       /* ITEM SALES PROMOTION CODE. POINTS
                                      TO TABLE SALE2.              */
        2 IWN      CHAR(8),       /* ITEM WARRANTY CODE. POINTS TO
                                      TABLE WARRAN.                */
        2 IFM  FIXED BIN(31),     /* FIRST MICRO INFORMATION FRAME
                                      NUMBER.                      */
        2 ILM  FIXED BIN(31),     /* LAST  MICRO INFORMATION FRAME
                                      NUMBER.                      */
        2 IEM  FIXED BIN(31),     /* END   MICRO INFORMATION FRAME
                                      NUMBER.                      */
        2 QOH BIN FIXED (31),     /* ITEM QUANTITY ON HAND.        */
        2 ISW BIN FIXED (31);     /* SHIPPING WEIGHT OF EACH ITEM. */

DCL 1 XS(10),                     /* SALES TABLE                   */
        2 ISP          CHAR(8),   /* SALES PROMOTION CODE          */
        2 SSD          CHAR(8),   /* START DATE OF SALES PROMOTION. */
        2 SED          CHAR(8),   /* TERMINATION DATE OF SALES      */
        2 STXT         CHAR(74),  /* TERMS AND CONDITIONS OF SALES  */
        2 SFC  FIXED BIN(31),     /* FIRST SALES PROMOTION FRAME
                                      NUMBER.                      */
        2 SLC  FIXED BIN(31),     /* LAST   SALES PROMOTION FRAME
                                      NUMBER.                      */
        2 SEC  FIXED BIN(31);     /* END SALES PROMOTION FRAME
                                      NUMBER.                      */

DCL 1 XW,                         /* WARRANTY TABLE                */
        2 IWN          CHAR(8),   /* WARRANTY CODE                 */
        2 WTXT         CHAR(40),  /* TEXTUAL DETAILS OF WARRANTY.   */
        2 WGEN         CHAR(40),  /* INFORMATION NEEDED TO OBTAIN OR
                                      GENERATE WARRANTY.           */
        2 WFI  FIXED BIN(31),     /* FIRST WARRANTY INFORMATION FRAME
                                      NUMBER.                      */
        2 WLI  FIXED BIN(31);     /* LAST WARRANTY INFORMATION FRAME
                                      NUMBER.                      */

DCL 1 XP,                         /* PRICE TABLE                   */
        2 IIT        CHAR(8),     /* ITEM  ID                      */
        2 IODN       CHAR(12),    /* CATALOGUE NUMBER OR ORDER
                                      NUMBER.                      */
        2 IRP  FIXED BIN(31),     /* ITEM NORMAL PRICE IN DOLLARS
                                      AND CENTS.                   */
        2 IPQ  FIXED BIN(31),     /* QUANTITY OR NUMBER OF UNITS OF
                                      PURCHASE FOR WHICH THE PRICE IS
                                      VALID.                       */
        2 PSD          CHAR(8),   /* START DATE OF EFFECTIVE PRICE. */
        2 PED          CHAR(8),   /* END   DATE OF EFFECTIVE PRICE. */
        2 IEP  FIXED BIN(31);     /* EFFECTIVE PRICE.              */

DCL 1 XCI(10),                    /* COMPLEMENT ITEM TABLE         */
        2 IIT          CHAR(8),   /* ITEM  ID OF ONLY THOSE ITEMS WHICH
                                      HAVE COMPLEMENT ITEMS.       */
        2 ICIT         CHAR(8),   /* ITEM  ID OF ITEMS WHICH SHOULD BE
                                      SUGGESTED FOR PURCHASE, IF THIS
                                      ITEM IS PURCHASED.           */
```

FILE: SHOWQ5   PLISQL   A   SAN JOSE RESEARCH LABORATORY - VM/SP CMS (1.11)

```
            2 IFC   FIXED BIN(31),   /* FIRST COMMERCIAL FRAME NUMBER
                                        OF SUGGESTED ITEM.            */
            2 ILC   FIXED BIN(31),   /* LAST  COMMERCIAL FRAME NUMBER
                                        OF SUGGESTED ITEM.            */
            2 IEC   FIXED BIN(31);   /* END   COMMERCIAL FRAME NUMBER
                                        OF SUGGESTED ITEM.            */

    DCL 1 XCU,                       /* CUSTOMER TABLE                */
            2 CID        CHAR(12),   /* CUSTOMER ID, CREDIT CARD
                                        IDENTIFICATION NUMBER         */
            2 PASS       CHAR(8),    /* PASSWORD                      */
            2 CADD       CHAR(74),   /* MAILING ADDRESS OF CUSTOMER   */
            2 CLIM   FIXED BIN(31);  /* CREDIT LIMIT OF CUSTOMER.     */

    DCL 1 XDL,                       /* ITEM DELIVERY TABLE           */
            2 CID        CHAR(12),   /* CUSTOMER ID,                  */
            2 IODN       CHAR(12),   /* CATALOGUE NUMBER OR ORDER
                                        NUMBER.                       */
            2 DELD       CHAR(8),    /* DATE ON WHICH ITEM DELIVERED
                                        OR PROMISED DELIVERY.         */
            2 DELADD     CHAR(74),   /* ADDRESS WHERE ITEM TO BE DELIVERED
                                        OR LOCATION WHERE CUSTOMER TO
                                        PICK UP ITEM.                 */
            2 AVAILD     CHAR(8);    /* DATE ON WHICH ITEM WILL BE
                                        AVAILABLE IN STOCK.           */

    DCL 1 XIN,                       /* PURCHASE INCOMPLETE TABLE     */
            2 CID        CHAR(12),   /* CUSTOMER ID,                  */
            2 PASS       CHAR(8),    /* PASSWORD                      */
            2 IODN       CHAR(12),   /* CATALOGUE NUMBER OR ORDER
                                        NUMBER OF ITEMS PURCHASED BY
                                        CUSTOMER.                     */
            2 STATE      CHAR(8),    /* STATE FROM WHICH CUSTOMER
                                        REQUESTED STATE INS (LAST ITEM) */
            2 SIZE     CHAR(8),      /* ITEM SIZE, DATA OF ITEM PURCHASED.*/
            2 COLOR    CHAR(8),      /* ITEM COLOR, DATA OF ITEM
                                        PURCHASED.                    */
            2 MODEL      CHAR(20),   /* ITEM MODEL, DATA OF ITEM
                                        PURCHASED.                    */
            2 QUAN   FIXED BIN(31);  /* QUANTITY OR UNITS OF ITEM
                                        PURCHASED.                    */

    DCL 1 SR,                        /* STATE REPLY TABLE    */
            2 STATE      CHAR(8),    /* STATE */
            2 REPID      CHAR(5),    /* A REPLY ID */
            2 STREP      CHAR(10),   /* STATE REPLY */
            2 DFCL   FIXED BIN(31),  /* FORGROUND COLOR  */
            2 DBCL   FIXED BIN(31),  /* BACK GROUND COLOR */
            2 DSL    FIXED BIN(31),  /* TEXT LETTER SIZE DISPLAY CODE. */
            2 RLOC       CHAR(2),    /* ROW LOCATION IN SCREEN     */
            2 CLOC       CHAR(2),    /* COLUMN LOCATION IN SCREEN   */
            2 REPTXT     CHAR(40),   /* REPLY TEXT FOR SCREEN       */
            2 NSTATE     CHAR(8),    /* NEXT STATE SAME AS INCOM5.STATE */
            2 IVF    FIXED BIN(31);  /* VIDEO FRAME NUMBER FOR STATIC
                                        DISPLAY.                     */
```

FILE: SHOWQ5   PLISQL   A   SAN JOSE RESEARCH LABORATORY - VM/SP CMS (1.11)

```
DCL 1 SC,                         /*  SCREEN  TABLE         */
      2 REPID      CHAR(5),       /*  REPLY ID */
      2 STREP      CHAR(10),      /*  STATE REPLY */
      2 NSCEN      CHAR(10),      /* NEXT STATE-REPLY SCREEN */
      2 DFCL  FIXED BIN(31),      /* FORE GROUND COLOR  */
      2 DBCL  FIXED BIN(31),      /*  BACK GROUND COLOR DISPLAY CODE. */
      2 DSL   FIXED BIN(31),      /*  TEXT LETTER SIZE DISPLAY CODE. */
      2 RLOC       CHAR(2),       /* ROW LOCATION IN SCREEN      */
      2 CLOC       CHAR(2),       /* COLUMN LOCATION IN SCREEN    */
      2 REPTXT     CHAR(40),      /* REPLY TEXT FOR SCREEN          */
      2 NSTATE     CHAR(8);       /*  NEXT STATE SAME AS INCOM5.STATE */

   DCL YC8           CHAR(8);  /* WORKING VARIABLE         */
   DCL 1 XMD(100),                 /* ALL NON-MENU TOUPLES */
         2 DTXS      CHAR(30),
         2 DNS       CHAR(8),
         2 DIT       CHAR(8);
   DCL 1 XST,                      /* STATISTICS OF NON-MENU TOUPLES */
         2 COUNT     BIN FIXED, /* COUNT OF SATISFYING TOUPLES */
         2 CDNS      BIN FIXED, /* COUNT OF NON-ZERO DNS   */
         2 CDIT      BIN FIXED; /* COUNT OF NON-ZERO DIT */

DCL 1 XTD(100),                        /* DISPLAY TEXT          */
      2 DFCL  FIXED BIN(31),    /* TEXT COLOR DISPLAY CODE. USED
                                   BY SCREEN GENERATOR PROGRAM.   */
      2 DBCL  FIXED BIN(31),    /* BACK GROUND COLOR DISPLAY CODE. USED
                                   BY SCREEN GENERATOR PROGRAM.   */
      2 DSL   FIXED BIN(31),    /* TEXT LETTER SIZE DISPLAY CODE. */
      2 TTX        CHAR(74);    /* TEXT.                         */

DCL 1 XSR(100),                  /*  SCREEN TEXT          */
      2 REPID      CHAR(5),      /* A REPLY ID */
      2 STREP      CHAR(10),     /* STATE REPLY */
      2 DFCL  FIXED BIN(31),     /*  FORGROUND COLOR  */
      2 DBCL  FIXED BIN(31),     /*  BACK GROUND COLOR  */
      2 DSL   FIXED BIN(31),     /* TEXT LETTER SIZE DISPLAY CODE. */
      2 RLOC       CHAR(2),      /* ROW LOCATION IN SCREEN     */
      2 CLOC       CHAR(2),      /* COLUMN LOCATION IN SCREEN    */
      2 REPTXT     CHAR(46),     /* REPLY TEXT FOR SCREEN     */
      2 NSTATE     CHAR(8),      /*  NEXT STATE SAME AS INCOM5.STATE */
      2 IVF   FIXED BIN(31);     /* VIDEO FRAME NUMBER FOR STATIC
                                    DISPLAY.                  */

   DCL 1 XSI(100),              /* INDEX SCREEN TEXT        */
         2 IIT       CHAR(8),   /* ITEM  ID, NON UNIQUE.     */
         2 INM       CHAR(40),  /* NAME OF ITEM.             */
         2 IFC   FIXED BIN(31), /* FIRST COMMERCIAL FRAME NUMBER. */
         2 ILC   FIXED BIN(31), /* LAST  COMMERCIAL FRAME NUMBER. */
         2 IEC   FIXED BIN(31); /* END   COMMERCIAL FRAME NUMBER. */

   DCL 1 XI1(100)    STATIC,    /* STATIC ITEM TABLE     */
         2 IIT       CHAR(8),   /* ITEM  ID, UNIQUE FOR AN ITEM. */
         2 IIC       CHAR(20),  /* ITEM  KEY                 */
```

FILE: SHOWQ5    PLISQL    A    SAN JOSE RESEARCH LABORATORY - VM/SP CMS (1.11)

```
          2 IODN      CHAR(12),    /* CATALOGUE NUMBER OR ORDER
                                      NUMBER.                      */
          2 ICIT        CHAR(8),   /* ITEM  ID OF COMPLEMENT ITEM.  */
          2 INM        CHAR(40),   /* NAME OF ITEM.                 */
          2 IVF  FIXED BIN(31),    /* VIDEO FRAME NUMBER FOR STATIC
                                      DISPLAY.                     */
          2 IFM  FIXED BIN(31),    /* FIRST FRAME # FOR DISPLAYING
                                      ITEM FROM DIFFERENT POSITIONS. */
          2 ILM  FIXED BIN(31),    /* LAST  FRAME # FOR DISPLAYING
                                      ITEM FROM DIFFERENT POSITIONS. */
          2 IFC  FIXED BIN(31),    /* FIRST COMMERCIAL FRAME NUMBER. */
          2 ILC  FIXED BIN(31),    /* LAST  COMMERCIAL FRAME NUMBER. */
          2 IEC  FIXED BIN(31);    /* END   COMMERCIAL FRAME NUMBER. */
      DCL 1 ITM,                    /* SELECTED ITEM STRUCTURE */
            2 IIT    CHAR(8),
            2 INM    CHAR(40),
            2 COLOR  CHAR(8),
            2 SIZE   CHAR(8),
            2 MODEL  CHAR(20),
            2 QUAN   FIXED BIN(31),
            2 STREP  CHAR(10),
            2 IEP    FIXED BIN(31);
      DCL SVDTYPE         CHAR(8);
      DCL (I,II,IMAX,IX)    BIN FIXED;
      DCL ITEMPOS          BIN FIXED STATIC;
      DCL CH9              CHAR(9);
/*****************************************************************/
/*         ERROR HANDLING                                       */
/*****************************************************************/
EXEC SQL INCLUDE SQLCA;
/* THIS PROGRAM WILL IGNORE WARNING AS THEY WILL NOT AFFECT RESULTS */
EXEC SQL WHENEVER SQLWARNING CONTINUE;
    EXEC SQL WHENEVER SQLERROR GOTO SQLERR;
/* EXEC SQL WHENEVER NOT FOUND GOTO SQLERR;          */
%SKIP;
/* ---------------------------------------------------------- */
CONNECT: ENTRY (T, RCODE);
   T = 'EXEC SQL CONNECT          ';
   EXEC SQL CONNECT :ID IDENTIFIED BY :PASSW;
   RCODE = SQLCODE;
GOTO DONE;
/* ---------------------------------------------------------- */
SUGGITM: ENTRY (XC8, XCI,XL,T, RCODE);    /* GET SUGGESTED ITEMS */
   C8 = XC8;  T = 'EXEC SQL DECLARE S4  CURSO';
   IMAX = 10;          /* MAXIMUM NUMBER OF COMPLEMENTARY ITEMS */
   I = 0;
   EXEC SQL DECLARE  S4  CURSOR FOR
       SELECT *  FROM VIDEO3.ICOMP5  WHERE IIT = :C8;
   RCODE = SQLCODE;
   T = 'EXEC SQL OPEN S4         ';
   EXEC SQL OPEN S4;
   RCODE = SQLCODE;
   T = 'EXEC SQL FETCH S4         ';
   DO WHILE (I <  IMAX & RCODE = 0); /* GET COMP. ITEMS  */
```

FILE: SHOWQ5   PLISQL   A   SAN JOSE RESEARCH LABORATORY - VM/SP CMS (1.11)

```
      EXEC SQL FETCH S4  INTO :IIT, :ICIT, :IFC, :ILC, :IEC;
      RCODE = SQLCODE;
      IF (I < IMAX & RCODE = 0) THEN
      DO;  /* FILL XCI */
        I = I + 1;
        XCI.IIT(I) = IIT;  XCI.ICIT(I) = ICIT;
        XCI.IFC(I) = IFC;  XCI.ILC(I) = ILC;
        XCI.IEC(I)  = IEC;
        END;  /* OF FILLING XCI */
     END;  /* OF RETRIEVING COMP. ITEMS   */
    T = 'EXEC SQL CLOSE S4         ';
    EXEC SQL CLOSE S4;
    RCODE = SQLCODE;
    XL = I;
  GOTO DONE;
  /* -------------------------------------------------------------- */
  RPLTXT: ENTRY (XC8, XSR,XL,T, RCODE);      /* GET DISPLAY STREP TABLE */
    C8 = XC8;  T = 'EXEC SQL DECLARE T2 CURSO';
    IMAX = 100;            /* MAXIMUM SIZE OF TEXT */
    I = 0;
    I8 = SUBSTR(C8,1,5)||'    ';
    EXEC SQL DECLARE T2 CURSOR FOR
         SELECT * FROM VIDEO3.STREP5  WHERE STATE = :C8 UNION
         SELECT * FROM VIDEO3.STREP5  WHERE STATE = :I8
                          ORDER BY 1;
    RCODE = SQLCODE;
    T = 'EXEC SQL OPEN T2          ';
    EXEC SQL OPEN T2;
    RCODE = SQLCODE;
    T = 'EXEC SQL FETCH T2         ';
    DO WHILE (I <  IMAX & RCODE = 0); /* GET TEXT FROM TABLE */
       EXEC SQL FETCH T2 INTO :STATE, :REPID,  :STREP,  :DFCL,
                              :DBCL, :DSL, :RLOC,  :CLOC,
                              :REPTXT,  :NSTATE, :IVF;
      RCODE = SQLCODE;
      IF (I < IMAX & RCODE = 0) THEN
      DO;  /* FILL XSR */
        I = I + 1;
        XSR.REPID(I) = REPID;  XSR.STREP(I) = STREP;
        XSR.DFCL(I) = DFCL;  XSR.DBCL(I) = DBCL;
        XSR.DSL(I)  = DSL;  XSR.RLOC(I) = RLOC;
        XSR.CLOC(I)  = CLOC;  XSR.REPTXT(I) = REPTXT;
        XSR.NSTATE(I)  = NSTATE; XSR.IVF(I) = IVF;
        END;  /* OF FILLING XSR */
     END;  /* OF RETRIEVING TEXT FORM TABLE */
    T = 'EXEC SQL CLOSE T2         ';
    EXEC SQL CLOSE T2;
    RCODE = SQLCODE;
    XL = I ;
  GOTO DONE;
  /* -------------------------------------------------------------- */
  WARRTXT: ENTRY (ITM, XTD,XL,T, RCODE);      /* GET TEXT FROM WARRAN5 */
    I8 = ITM.IIT;
    CL8 = '';  S8 = '';  CHV20 = '';
    IF ITM.COLOR ¬= '' THEN CL8 = ITM.COLOR;
```

FILE: SHOWQ5   PLISQL   A   SAN JOSE RESEARCH LABORATORY - VM/SP CMS (1.11)

```
   IF ITM.SIZE ¬= ''  THEN S8 = ITM.SIZE;
   IF ITM.MODEL ¬= ''  THEN CHV20 = ITM.MODEL;
   IMAX = 100;            /* MAXIMUM SIZE OF TEXT */
   I = 2;  /* FILL XTD FROM THIRD  ELEMENT */
   IF CHV20 ¬= '' THEN
   DO; /* MODEL SPECIFIED */
     T = 'EXEC SQL DECLARE T9 CUR  ';
     EXEC SQL DECLARE T9 CURSOR FOR
              SELECT IWN
                  FROM VIDEO3.SIZCOL5   WHERE IIT = :I8 AND
                  COLOR = :CL8  AND SIZE = :S8 AND MODEL = :CHV20;
     RCODE = SQLCODE;
     T = 'OPEN CURSOR T9            ';
     EXEC SQL OPEN T9;
     RCODE = SQLCODE;
     T = 'EXEC SQL FETCH T9         ';
     EXEC SQL FETCH T9 INTO :IWN;
     RCODE = SQLCODE;
     T = 'EXEC SQL CLOSE T9         ';
     EXEC SQL CLOSE T9;
     RCODE = SQLCODE;
     END;  /* WHEN MODEL SPECIFIED */
   ELSE IF S8 ¬= '' THEN
   DO; /* UPTO SIZE SPECIFIED */
     T = 'EXEC SQL DECLARE CUR T10 ';
     EXEC SQL DECLARE T10 CURSOR FOR SELECT IWN
                  FROM VIDEO3.SIZCOL5   WHERE IIT = :I8 AND
                  COLOR = :CL8  AND SIZE = :S8;
     RCODE = SQLCODE;
     T = 'OPEN CURSOR T10           ';
     EXEC SQL OPEN T10;
     RCODE = SQLCODE;
     T = 'EXEC SQL FETCH T10        ';
     EXEC SQL FETCH T10 INTO :IWN;
     RCODE = SQLCODE;
     T = 'EXEC SQL CLOSE T10        ';
     EXEC SQL CLOSE T10;
     RCODE = SQLCODE;
     END;  /* OF UPTO SIZE SPECIFIED */
   ELSE IF CL8 ¬= '' THEN
   DO; /* UPTO COLOR SPECIFIED */
     T = 'EXEC SQL DECLARE CUR T11 ';
     EXEC SQL DECLARE T11 CURSOR FOR SELECT IWN
                  FROM VIDEO3.SIZCOL5   WHERE IIT = :I8 AND
                  COLOR = :CL8;
     RCODE = SQLCODE;
     T = 'OPEN CURSOR T11           ';
     EXEC SQL OPEN T11;
     RCODE = SQLCODE;
     T = 'EXEC SQL FETCH T11        ';
     EXEC SQL FETCH T11 INTO :IWN;
     RCODE = SQLCODE;
     T = 'EXEC SQL CLOSE T11        ';
     EXEC SQL CLOSE T11;
     RCODE = SQLCODE;
```

FILE: SHOWQ5   PLISQL   A   SAN JOSE RESEARCH LABORATORY - VM/SP CMS (1.11)

```
      END;  /* OF UPTO COLOR SPECIFIED */
   ELSE IF I8 ¬= '' THEN
   DO; /* UPTO ITEM NAME SPECIFIED */
      T = 'EXEC SQL DECLARE CUR T12 ';
      EXEC SQL DECLARE T12 CURSOR FOR SELECT IWN
                 FROM VIDEO3.SIZCOL5   WHERE IIT = :I8;
      RCODE = SQLCODE;
      T = 'OPEN CURSOR T12            ';
      EXEC SQL OPEN T12;
      RCODE = SQLCODE;
      T = 'EXEC SQL FETCH T12         ';
      EXEC SQL FETCH T12 INTO :IWN;
      RCODE = SQLCODE;
      T = 'EXEC SQL CLOSE T12         ';
      EXEC SQL CLOSE T12;
      RCODE = SQLCODE;
      END;  /* OF UPTO NAME SPECIFIED */
   IF RCODE ¬= 0 THEN /* NO WARRANTY FOR ITEM */
   DO;
      XTD(I+1) = XTD(1);
      XTD.TTX(I+1) = ' NO WARRANTY  CODE FOR THE ITEM AVAILABLE ';
      XL = I+1;
      GOTO DONE;
      END;
   T = 'EXEC SQL DECLARE T7       ';
   EXEC SQL DECLARE T7 CURSOR FOR
        SELECT WTXT FROM VIDEO3.WARRAN5   WHERE IWN = :IWN;
   RCODE = SQLCODE;
   T = 'EXEC SQL OPEN T7          ';
   EXEC SQL OPEN T7;
   RCODE = SQLCODE;
   T = 'EXEC SQL FETCH T7         ';
   DO WHILE (I <  IMAX & RCODE = 0); /* GET TEXT FROM TABLE */
      EXEC SQL FETCH T7 INTO  :WTXT;
      RCODE = SQLCODE;
      IF RCODE = 0 THEN
      DO;  /* FILL XTD */
         I = I + 1;
         XTD(I) = XTD(I - 1); /* COPY PARAMETERS INTO XTD ARRAY */
         XTD.TTX(I) = WTXT;
         END;  /* OF FILLING XTD */
      END;  /* OF RETRIEVING TEXT FORM TABLE */
   T = 'EXEC SQL CLOSE T7         ';
   EXEC SQL CLOSE T7;
   RCODE = SQLCODE;
   XL = I ;
   GOTO DONE;
/* ------------------------------------------------------------- */
SALETXT: ENTRY (ITM, XS,XL,T, RCODE);     /* GET TEXT FROM SALE5 */
   I8 = ITM.IIT;
   CL8 = '';  S8 = ''; CHV20 = '';
   IF ITM.COLOR ¬= '' THEN CL8 = ITM.COLOR;
   IF ITM.SIZE ¬= ''  THEN S8 = ITM.SIZE;
   IF ITM.MODEL ¬= ''  THEN CHV20 = ITM.MODEL;
   IMAX = 10;            /* MAXIMUM SIZE OF TEXT */
```

FILE: SHOWQ5   PLISQL   A   SAN JOSE RESEARCH LABORATORY - VM/SP CMS (1.11)

```
I = 0;  /* FILL XTD FROM SECOND ELEMENT */
IF CHV20 ¬= '' THEN
DO; /* MODEL SPECIFIED */
   T = 'EXEC SQL DECLARE CUR T13 ';
   EXEC SQL DECLARE T13 CURSOR FOR SELECT ISP
              FROM VIDEO3.SIZCOL5   WHERE IIT = :I8 AND
              COLOR = :CL8  AND SIZE = :S8 AND MODEL = :CHV20;
   RCODE = SQLCODE;
   T = 'OPEN CURSOR T13            ';
   EXEC SQL OPEN T13;
   RCODE = SQLCODE;
   T = 'EXEC SQL FETCH T13        ';
   EXEC SQL FETCH T13 INTO :ISP;
   RCODE = SQLCODE;
   T = 'EXEC SQL CLOSE T13        ';
   EXEC SQL CLOSE T13;
   RCODE = SQLCODE;
   END;  /* WHEN MODEL SPECIFIED */
ELSE IF S8 ¬= '' THEN
DO; /* UPTO SIZE SPECIFIED */
   T = 'EXEC SQL DECLARE CUR T14 ';
   EXEC SQL DECLARE T14 CURSOR FOR SELECT ISP
              FROM VIDEO3.SIZCOL5   WHERE IIT = :I8 AND
              COLOR = :CL8  AND SIZE = :S8;
   RCODE = SQLCODE;
   T = 'OPEN CURSOR T14            ';
   EXEC SQL OPEN T14;
   RCODE = SQLCODE;
   T = 'EXEC SQL FETCH T14        ';
   EXEC SQL FETCH T14 INTO :ISP;
   RCODE = SQLCODE;
   T = 'EXEC SQL CLOSE T14        ';
   EXEC SQL CLOSE T14;
   RCODE = SQLCODE;
   END;  /* OF UPTO SIZE SPECIFIED */
ELSE IF CL8 ¬= '' THEN
DO; /* UPTO COLOR SPECIFIED */
   T = 'EXEC SQL DECLARE CUR T15 ';
   EXEC SQL DECLARE T15 CURSOR FOR SELECT ISP
              FROM VIDEO3.SIZCOL5   WHERE IIT = :I8 AND
              COLOR = :CL8;
   RCODE = SQLCODE;
   T = 'OPEN CURSOR T15            ';
   EXEC SQL OPEN T15;
   RCODE = SQLCODE;
   T = 'EXEC SQL FETCH T15        ';
   EXEC SQL FETCH T15 INTO :ISP;
   RCODE = SQLCODE;
   T = 'EXEC SQL CLOSE T15        ';
   EXEC SQL CLOSE T15;
   RCODE = SQLCODE;
   END;  /* OF UPTO COLOR SPECIFIED */
ELSE IF I8 ¬= '' THEN
DO; /* UPTO ITEM NAME SPECIFIED */
   T = 'EXEC SQL DECLARE CUR S3 ';
```

FILE: SHOWQ5   PLISQL   A   SAN JOSE RESEARCH LABORATORY - VM/SP CMS (1.11)

```
         EXEC SQL DECLARE S3  CURSOR FOR SELECT ISP
                     FROM VIDEO3.SIZCOL5  WHERE IIT = :I8;
         RCODE = SQLCODE;
         T = 'OPEN CURSOR S3          ';
         EXEC SQL OPEN S3 ;
         RCODE = SQLCODE;
         T = 'EXEC SQL FETCH S3        ';
         EXEC SQL FETCH S3  INTO :ISP;
         RCODE = SQLCODE;
         T = 'EXEC SQL CLOSE S3        ';
         EXEC SQL CLOSE S3 ;
         RCODE = SQLCODE;
         END; /* OF UPTO NAME SPECIFIED */
      IF RCODE -= 0 THEN /* NO SALE CODE FOR ITEM */
      DO;
        XS(2) = XS(1);
        XS.STXT(2) = ' NO SALE  CODE FOR THE ITEM AVAILABLE ';
        GOTO DONE;
        END;
      T = 'EXEC SQL DECLARE T8        ';
      EXEC SQL DECLARE T8 CURSOR FOR
          SELECT * FROM VIDEO3.SALE5   WHERE ISP = :ISP;
      RCODE = SQLCODE;
      T = 'EXEC SQL OPEN T8          ';
      EXEC SQL OPEN T8;
      RCODE = SQLCODE;
      T = 'EXEC SQL FETCH T8         ';
      DO WHILE (I <  IMAX & RCODE = 0); /* GET TEXT FROM TABLE */
         EXEC SQL FETCH T8 INTO  :ISP, :SSD, :SED, :STXT,
                               :SFC, :SLC, :SEC;
         RCODE = SQLCODE;
         IF RCODE = 0 THEN
         DO;  /* FILL XS */
           I = I + 1;
           XS.ISP(I) = ISP; XS.SSD(I) = SSD;  XS.SED(I) = SED;
           XS.STXT(I) = STXT; XS.SFC(I) = SFC; XS.SLC(I) =  SLC;
           XS.SEC(I) = SEC;
          END;  /* OF FILLING XS */
        END;  /* OF RETRIEVING TEXT FORM TABLE */
      T = 'EXEC SQL CLOSE T8         ';
      EXEC SQL CLOSE T8;
      RCODE = SQLCODE;
       XL = I ;
    GOTO DONE;
    /* ---------------------------------------------------------------- */
    DISTXT: ENTRY (XC8, XTD,XL,T, RCODE);      /* GET DISPLAY TEXT2 TABLE */
      C8 = XC8;  T = 'EXEC SQL DECLARE S1 CURSO';
      IMAX = 100;            /* MAXIMUM SIZE OF TEXT */
      I = 0;
      L4:
      EXEC SQL DECLARE S1 CURSOR FOR
          SELECT * FROM VIDEO3.TEXT5   WHERE TIT = :C8;
      RCODE = SQLCODE;
      T = 'EXEC SQL OPEN S1          ';
      EXEC SQL OPEN S1;
```

FILE: SHOWQ5   PLISQL   A   SAN JOSE RESEARCH LABORATORY - VM/SP CMS (1.11)

```
    RCODE = SQLCODE;
    T = 'EXEC SQL FETCH S1          ';
    DO WHILE (I <  IMAX & RCODE = 0); /* GET TEXT FROM TABLE */
      EXEC SQL FETCH S1 INTO :TIT, :TCN, :TSEQ,
                            :DFCL, :DBCL, :DSL, :TTX;
      RCODE = SQLCODE;
      IF (TIT = C8 & RCODE = 0) THEN
      DO;   /* FILL XTD */
        I = I + 1;
        XTD.DFCL(I) = DFCL;  XTD.DBCL(I) = DBCL;
        XTD.DSL(I) = DSL;  XTD.TTX(I) = TTX;
        IF TCN ¬= '         ' THEN  DO; /* RESET CURSOR */
          C8 = TCN;
          T = 'EXEC SQL CLOSE S1          ';
          EXEC SQL CLOSE S1;
          GOTO L4;
          END; /* RESETTING CURSOR */
        END;  /* OF FILLING XTD */
      END;  /* OF RETRIEVING TEXT FORM TABLE */
    T = 'EXEC SQL CLOSE S1          ';
    EXEC SQL CLOSE S1;
    RCODE = SQLCODE;
    XL = I ;
  GOTO DONE;
  /* -------------------------------------------------------------- */
  ITEMINF: ENTRY (XC8, XI, T, RCODE);
    C8 = XC8;  T = 'FETCH ITEM INFORMATION   ';
    EXEC SQL SELECT *
        INTO :IIT, :IIC, :IODN, :ICIT, :INM,
             :IVF, :IFM, :ILM, :IFC, :ILC, :IEC
        FROM VIDEO3.ITEM5
        WHERE IIT = :C8;
    RCODE = SQLCODE;
    IF RCODE = 0 THEN DO;
      XI.IIT = IIT; XI.IIC = IIC; XI.IODN = IODN; XI.ICIT = ICIT;
      XI.INM = INM; XI.IVF = IVF; XI.IFM = IFM; XI.ILM = ILM;
      XI.IFC = IFC; XI.ILC = ILC; XI.IEC = IEC;
      END;
  GOTO DONE;
  /* -------------------------------------------------------------- */
  ITEMNM: ENTRY (XC8, C40, T, RCODE);
    C8 = XC8;  T = 'FETCH ITEM NAME          ';
    C40 = '';
    EXEC SQL SELECT INM INTO :INM
        FROM VIDEO3.ITEM5
        WHERE IIT = :C8;
    RCODE = SQLCODE;
    IF RCODE = 0 THEN
      C40 = INM;
  GOTO DONE;
  /* -------------------------------------------------------------- */
  ITEMCSM: ENTRY (ITM,MSCI,XSR,XL,T, RCODE);   /* GET ITEM COLORS */

    DCL LASTITEM_BIT  BIT(1) INIT('0'B); /* INDICATES IF THE LAST
               MENU ITEM IS TO BE MOVED TO END OF XSR TABLE */
```

FILE: SHOWQ5   PLISQL   A   SAN JOSE RESEARCH LABORATORY - VM/SP CMS (1.11)

```
         /* FETCH ITEM HEADER AND ONE ITEM FROM STREP5  */
     SVDTYPE = XSR.NSTATE(1);
     C8 = XSR.NSTATE(1);   T = 'EXEC SQL DECLARE T3 CURSO';
     IMAX = 6;             /* MAXIMUM SIZE OF TEXT */
     I = 0;
     EXEC SQL DECLARE T3 CURSOR FOR
          SELECT * FROM VIDEO3.STREP5  WHERE STATE = :C8;
     RCODE = SQLCODE;
     T = 'EXEC SQL OPEN T3          ';
     EXEC SQL OPEN T3;
     RCODE = SQLCODE;
     T = 'EXEC SQL FETCH T3         ';
     DO WHILE (I <  IMAX & RCODE = 0); /* GET TEXT FROM TABLE */
        EXEC SQL FETCH T3 INTO :STATE, :REPID,  :STREP,  :DFCL,
                               :DBCL, :DSL, :RLOC,  :CLOC,
                               :REPTXT,  :NSTATE, :IVF;
        RCODE = SQLCODE;
        IF (I < IMAX & RCODE = 0) THEN
        DO;  /* FILL XSR WITH HEADER */
          I = I + 1;
          XSR.REPID(I) = REPID;  XSR.STREP(I) = STREP;
          XSR.DFCL(I) = DFCL;  XSR.DBCL(I) = DBCL;
          XSR.DSL(I)  = DSL;  XSR.RLOC(I) = RLOC;
          XSR.CLOC(I)  = CLOC;  XSR.REPTXT(I) = REPTXT;
          XSR.NSTATE(I)  = NSTATE; XSR.IVF(I) = IVF;
          END;  /* OF FILLING XSR */
        END;  /* OF RETRIEVING TEXT FORM TABLE */
     T = 'EXEC SQL CLOSE T3          ';
     EXEC SQL CLOSE T3;
     RCODE = SQLCODE;

          /* FETCH DISTINCT ITEM COLOR OR SIZE OR MODEL
             FROM SIZCOL5 AND STORE IN XSR.
           IN XSR STORE THE LAST ITEM FROM STREP5 AS EVERY MSCI
             ELEMENT */
     C8 = ITM.IIT;
     IF SUBSTR(SVDTYPE,1,5) = 'COLOR' THEN
        T = 'EXEC SQL DECLARE T4 CURSO';
     ELSE IF SUBSTR(SVDTYPE,1,4) = 'SIZE' THEN
        T = 'EXEC SQL DECLARE T5 CURSO';
     ELSE IF SUBSTR(SVDTYPE,1,5) = 'MODEL' THEN
        T = 'EXEC SQL DECLARE T6 CURSO';
     CL8 = ITM.COLOR;
     S8 = ITM.SIZE;
     IF I > 1 THEN  /* LAST MENU ITEM TO BE MOVED TO LAST OF XSR */
        I = I - 1;
     ELSE IF I = 1 THEN  /* NO MENU ITEM IN STREP5 */
     DO;
        LASTITEM_BIT = '1'B;
        IF CLOC = ' 0' THEN CLOC = ' 1';
        END;
     CHV20V = '';
     XL = I ;
```

FILE: SHOWQ5   PLISQL   A   SAN JOSE RESEARCH LABORATORY - VM/SP CMS (1.11)

```
IMAX = 95;
IF SUBSTR(SVDTYPE,1,5) = 'COLOR' THEN
DO;
   EXEC SQL DECLARE T4 CURSOR FOR
         SELECT COLOR, IEM  FROM VIDEO3.SIZCOL5
                        WHERE IIT = :C8 AND QOH > 0
                           ORDER BY COLOR;
   END;
ELSE IF SUBSTR(SVDTYPE,1,4) = 'SIZE' THEN
DO;
   EXEC SQL DECLARE T5 CURSOR FOR
         SELECT SIZE, IEM  FROM VIDEO3.SIZCOL5
                        WHERE IIT = :C8 AND COLOR = :CL8 AND QOH > 0
                           ORDER BY SIZE;
   END;
ELSE IF SUBSTR(SVDTYPE,1,5) = 'MODEL' THEN
DO;
   EXEC SQL DECLARE T6 CURSOR FOR
         SELECT MODEL, IEM  FROM VIDEO3.SIZCOL5
               WHERE IIT = :C8 AND COLOR = :CL8 AND SIZE = :S8
                     AND QOH > 0
                           ORDER BY MODEL;
   END;
RCODE = SQLCODE;
IF SUBSTR(SVDTYPE,1,5) = 'COLOR' THEN
DO;
   T = 'EXEC SQL OPEN T4          ';
   EXEC SQL OPEN T4;
   END;
ELSE IF SUBSTR(SVDTYPE,1,4) = 'SIZE' THEN
DO;
   T = 'EXEC SQL OPEN T5          ';
   EXEC SQL OPEN T5;
   END;
ELSE IF SUBSTR(SVDTYPE,1,5) = 'MODEL' THEN
DO;
   T = 'EXEC SQL OPEN T6          ';
   EXEC SQL OPEN T6;
   END;
RCODE = SQLCODE;
DO WHILE (I <  IMAX & RCODE = 0); /* GET TEXT FROM TABLE */
   IF SUBSTR(SVDTYPE,1,5) = 'COLOR' THEN
   DO;
     T = 'EXEC SQL FETCH T4         ';
     EXEC SQL FETCH T4 INTO :COLOR, :IEM;
     CHV20 = COLOR;
     END;
   ELSE IF SUBSTR(SVDTYPE,1,4) = 'SIZE' THEN
   DO;
     T = 'EXEC SQL FETCH T5         ';
     EXEC SQL FETCH T5 INTO :SIZE, :IEM;
     CHV20 = SIZE;
     END;
   ELSE IF SUBSTR(SVDTYPE,1,5) = 'MODEL' THEN
   DO;
```

FILE: SHOWQ5    PLISQL    A    SAN JOSE RESEARCH LABORATORY - VM/SP CMS (1.11)

```
      T = 'EXEC SQL FETCH T6        ';
      EXEC SQL FETCH T6 INTO :MODEL, :IEM;
      CHV20 = MODEL;
      END;
   RCODE = SQLCODE;
   IF (I < IMAX & RCODE = 0 & (CHV20 ¬= CHV20V | I = XL)) THEN
   DO;  /* FILL XSR */
      CHV20V = CHV20;
      I = I + 1;
      II = MOD(I,MSCI);
      IF II = 0 & ¬LASTITEM_BIT THEN
                   /* STORE THE LAST ELEMENT OF STREP5 */
      DO;
        XSR.REPID(I) = REPID;  XSR.STREP(I) = STREP;
        XSR.DFCL(I) = DFCL;   XSR.DBCL(I) = DBCL;
        XSR.DSL(I)  = DSL;  XSR.RLOC(I) = RLOC;
        XSR.CLOC(I)  = CLOC;  XSR.REPTXT(I) = REPTXT;
        XSR.NSTATE(I)  = NSTATE; XSR.IVF(I) = IVF;
        I = I + 1;
        IF I >= IMAX THEN GOTO DONE;
        END;
      II = 2*I; CH9 = II;
      XSR.DFCL(I) = DFCL;   XSR.DBCL(I) = DBCL;
      XSR.DSL(I)  = DSL; XSR.RLOC(I) = SUBSTR(CH9,8,2);
      XSR.CLOC(I) = CLOC;
      IF SUBSTR(SVDTYPE,1,5) = 'COLOR' THEN
      DO;  /* SAVE STREP  AND COLOR */
        XSR.REPTXT(I) = COLOR;
        DO IX = 1 TO 6;  /* BUILD IN CH6 ITEM PADDED WITH 0 */
          IF SUBSTR(ITM.IIT,IX,1) ¬= ' ' THEN
           SUBSTR(CH6,IX,1) = SUBSTR(ITM.IIT,IX,1);
          ELSE  SUBSTR(CH6,IX,1) = '0';
          END;
        XSR.STREP(I) = CH6||SUBSTR(COLOR,2,2);
        END;
      ELSE IF SUBSTR(SVDTYPE,1,4) = 'SIZE' THEN
      DO;  /* SAVE STREP AND SIZE */
        XSR.REPTXT(I) = SIZE;
        XSR.STREP(I) = SUBSTR(ITM.STREP,1,8)||SUBSTR(SIZE,1,1);
        END;
      ELSE IF SUBSTR(SVDTYPE,1,5) = 'MODEL' THEN
      DO;  /* SAVE STREP AND MODEL */
        XSR.REPTXT(I) = MODEL;
        XSR.STREP(I) = SUBSTR(ITM.STREP,1,9)||SUBSTR(MODEL,1,1);
        END;
      XSR.NSTATE(I)  = XSR.NSTATE(1); XSR.IVF(I) = IEM;
      END;  /* OF FILLING XSR */
   END;  /* OF RETRIEVING TEXT FORM TABLE */
IF SUBSTR(SVDTYPE,1,5) = 'COLOR' THEN
DO;
   T = 'EXEC SQL CLOSE T4       ';
   EXEC SQL CLOSE T4;
   END;
ELSE IF SUBSTR(SVDTYPE,1,4) = 'SIZE' THEN
DO;
```

FILE: SHOWQ5   PLISQL   A   SAN JOSE RESEARCH LABORATORY - VM/SP CMS (1.11)

```
      T = 'EXEC SQL CLOSE T5          ';
      EXEC SQL CLOSE T5;
      END;
   ELSE IF SUBSTR(SVDTYPE,1,5) = 'MODEL' THEN
   DO;
      T = 'EXEC SQL CLOSE T6          ';
      EXEC SQL CLOSE T6;
      END;
   RCODE = SQLCODE;
   IF XL = I THEN /* REQUESTED COLOR OR SIZE OR MODEL OF ITEM
                     NOT IN STOCK  */
   DO; I = I + 1;
      IF SUBSTR(SVDTYPE,1,5) = 'COLOR' THEN
         XSR.REPTXT(I) = 'REQUESTED COLOR OUT OF STOCK.';
      ELSE IF SUBSTR(SVDTYPE,1,4) = 'SIZE' THEN
         XSR.REPTXT(I) = 'REQUESTED SIZE OUT OF STOCK.';
      ELSE IF SUBSTR(SVDTYPE,1,5) = 'MODEL' THEN
         XSR.REPTXT(I) = 'REQUESTED MODEL OUT OF STOCK.';
      XSR.DFCL(I) = DFCL;  XSR.DBCL(I) = DBCL;
      XSR.RLOC(I) = RLOC;  XSR.CLOC(I) = CLOC;
      XSR.DSL(I)  = DSL;
      XSR.NSTATE(I)  = XSR.NSTATE(1); XSR.IVF(I) = IVF;
      XL = I;
      RCODE = -5;
      GOTO DONE;
      END;
   IF ¬LASTITEM_BIT THEN /* MOVE LAST MENU ITEM TO XSR */
   DO;
      I = I + 1;
      XSR.REPID(I) = REPID;  XSR.STREP(I) = STREP;
      XSR.DFCL(I) = DFCL;  XSR.DBCL(I) = DBCL;
      XSR.DSL(I)  = DSL;  XSR.RLOC(I) = RLOC;
      XSR.CLOC(I)  = CLOC;  XSR.REPTXT(I) = REPTXT;
      XSR.NSTATE(I)  = NSTATE; XSR.IVF(I) = IVF;
      END;  /* MOVING LAST MENU ITEM */
   XL = I ;
   IF SUBSTR(SVDTYPE,1,5) = 'MODEL' THEN  /* SAVE ITEM NAME */
   DO;
      T = 'FETCH ITEM NAME          ';
      EXEC SQL SELECT INM
           INTO :INM
             FROM VIDEO3.ITEM5
               WHERE IIT = :C8;
      RCODE = SQLCODE;
      IF RCODE = 0 THEN ITM.INM = INM;
      END;  /* OF SAVING ITEM NAME  */
   GOTO DONE;
   /* ------------------------------------------------------------- */
   ADJQUAN: ENTRY (ITM,TYP,T, RCODE);
                   /*   CHECK QUANTITY OF ITEM REQUESTED.
                     IF QUANTITY AVAILABLE ADJUST QOH IN SIZCOL5 */
      C8 = ITM.IIT;
      CL8 = ITM.COLOR;
      S8 = ITM.SIZE;
      CH20 = ITM.MODEL;
```

FILE: SHOWQ5   PLISQL   A   SAN JOSE RESEARCH LABORATORY - VM/SP CMS (1.11)

```
T = 'FETCH ITEM QUANTITY       ';
EXEC SQL SELECT QOH
      INTO  :QOH
         FROM VIDEO3.SIZCOL5
                  WHERE IIT = :C8 AND COLOR = :CL8 AND SIZE = :S8
                        AND MODEL = :CH20;
RCODE = SQLCODE;
IF RCODE = 0  THEN
DO;
   IF TYP = 'SUB' & QOH < ITM.QUAN THEN
         /* RETURN QUANTITY AVAILABLE IN ITM.QUAN  */
   DO;
     ITM.QUAN = QOH;
     GOTO DONE;
     END;
   ELSE IF TYP = 'SUB' & QOH >= ITM.QUAN THEN
         /* SUBTRACT REQUESTED QUANTITY FROM QOH IN SIZCOL5 */
     F31 = QOH - ITM.QUAN;
   ELSE IF TYP = 'ADD' THEN
         /* ADD REQUESTED QUANTITY TO QOH IN SIZCOL5 */
     F31 = QOH + ITM.QUAN;
         /* ADJUSTING QOH  IN SIZCOL5 */
   T = 'UPDATE ITEM QUANTITY     ';
   EXEC SQL UPDATE VIDEO3.SIZCOL5
      SET QOH = :F31
            WHERE IIT = :C8 AND COLOR = :CL8 AND SIZE = :S8
                  AND MODEL = :CH20;
   RCODE = SQLCODE;
   END;
GOTO DONE;
/* --------------------------------------------------------- */
IPRICE: ENTRY (XC8, XP, T, RCODE);
  C8 = XC8;  T = 'FETCH ITEM PRICE        ';
  EXEC SQL SELECT *
      INTO :IIT, :IODN, :IRP, :IPQ,
           :PSD, :PED, :IEP
      FROM VIDEO3.PRICE5
      WHERE IIT = :C8 AND IPQ = 1;
  RCODE = SQLCODE;
  IF RCODE = 0 THEN DO;
    XP.IIT = IIT; XP.IODN = IODN; XP.IRP = IRP; XP.IPQ = IPQ;
    XP.PSD = PSD; XP.PED = PED; XP.IEP = IEP;
    END;
GOTO DONE;
/* --------------------------------------------------------- */
CHARGE: ENTRY (XC12, XL, T, RCODE);
  C12 = XC12;  T = 'CHARGE CUSTOMER CREDIT  ';
  EXEC SQL SELECT CLIM
        INTO  :CLIM
        FROM VIDEO3.CUSTM5
        WHERE CID = :C12;
  RCODE = SQLCODE;
  IF RCODE -= 0 THEN GOTO DONE;
  IF CLIM >= XL THEN  /* SUFFICIENT CREDIT */
  DO;  /* CHARGE ACCOUNT */
```

FILE: SHOWQ5   PLISQL   A   SAN JOSE RESEARCH LABORATORY - VM/SP CMS (1.11)

```
     XCU.CLIM = CLIM;
     XL = XCU.CLIM - XL;
     EXEC SQL UPDATE VIDEO3.CUSTM5
       SET CLIM = :XL
         WHERE CID = :C12;
     END; /* OF CHARGING ACCOUNT */
   ELSE  /* INSUFFICIENT CREDIT */
   DO;
     XCU.CLIM = CLIM;
     XL = XL - XCU.CLIM;
     RCODE = 999999;
     END;  /* OF HANDLING INSUFFICIENT CREDIT */
 GOTO DONE;
 /* ------------------------------------------------------- */
 PASSWD: ENTRY (XC12, XC8, T, RCODE);
   C12 = XC12;  T = 'FETCH CUSTOMER PASSWORD  ';
   EXEC SQL SELECT *
        INTO :CID, :PASS, :CADD, :CLIM
        FROM VIDEO3.CUSTM5
        WHERE CID = :C12;
   RCODE = SQLCODE;
   XC8 = PASS;
 GOTO DONE;
 /* ------------------------------------------------------- */
 INXDATA: ENTRY(XC20, XSI,XL, T, RCODE);
     /* GET DSIPLAY XSI TABLE      */
   T = 'EXEC SQL INXDATA INTO XSI';
   IMAX = 100;
   I = 20;
   DO WHILE (I > 0);
     IF SUBSTR(XC20,I,1) = ' ' THEN I = I - 1;
     ELSE GOTO L1;
     END;
   L1:
   EXEC SQL DECLARE S2 CURSOR FOR
     SELECT * FROM VIDEO3.DEPT5
       WHERE IDEPT LIKE :CHV20;
   CHV20 = '%'||SUBSTR(XC20,1,I)||'%';
   RCODE = SQLCODE;
   T = 'EXEC SQL OPEN S2        ';
   EXEC SQL OPEN S2;
   RCODE = SQLCODE;
   T = 'EXEC SQL FETCH S2       ';
   I = 0;
   DO WHILE (I <  IMAX & RCODE = 0); /* GET INDEX FROM TABLE */
     EXEC SQL FETCH S2 INTO :IDEPT, :IIT, :INM, :IFC,
                            :ILC, :IEC;
     RCODE = SQLCODE;
     IF (IDEPT = XC20 & RCODE = 0) THEN
     DO;  /* FILL XSI */
       I = I + 1;
       XSI.IIT(I) = IIT;  XSI.INM(I) = INM;
       XSI.IFC(I) = IFC;  XSI.ILC(I) = ILC;
       XSI.IEC(I)  = IEC;
       END;  /* OF FILLING XSR */
```

FILE: SHOWQ5   PLISQL   A   SAN JOSE RESEARCH LABORATORY - VM/SP CMS (1.11)

```
      END;  /* OF RETRIEVING TEXT FORM TABLE */
    T = 'EXEC SQL CLOSE S2          ';
    EXEC SQL CLOSE S2;
    RCODE = SQLCODE;
    XL = I ;
GOTO DONE;
/* ----------------------------------------------------------------- */
FINDIT: ENTRY(XI, FN, T, RCODE);
   F1 = FN;
   T = 'EXEC SQL FIND ITEM FOR FM';
   EXEC SQL SELECT *
          INTO   :IIT,  :IIC,  :IODN, :ICIT, :INM,
                 :IVF,  :IFM, :ILM,  :IFC,  :ILC, :IEC
            FROM VIDEO3.ITEM5
            WHERE IFC <= :F1 AND ILC >= :F1
            AND ILC - IFC = (SELECT MIN (ILC - IFC) FROM VIDEO3.ITEM5
                        WHERE IFC <= :F1 AND ILC >= :F1);
   RCODE = SQLCODE;
   XI.IIT = IIT;  XI.IIC = IIC;  XI.IODN = IODN;  XI.ICIT = ICIT;
   XI.INM = INM;  XI.IVF = IVF;  XI.IFM = IFM;  XI.ILM = ILM;
   XI.IFC = IFC;  XI.ILC = ILC;  XI.IEC = IEC;
 GOTO DONE;
/* ----------------------------------------------------------------- */
ITEMCUR: ENTRY(FF, FL, T, RCODE);
   T = 'EXEC SQL ITEM CURSOR';
   IF FF = 1000 | FL = 54000 THEN DO; RCODE = -10; GOTO DONE; END;
   FF = FF + 1; /* TO AVIOD DEMO ITEM */
   EXEC SQL DECLARE C1 CURSOR FOR
        SELECT *
          INTO   :IIT,  :IIC,  :IODN, :ICIT, :INM,
                 :IVF,  :IFM, :ILM,  :IFC,  :ILC, :IEC
            FROM VIDEO3.ITEM5
         WHERE IFC >= :FF  AND ILC <= :FL
         ORDER BY IFC;
   RCODE = SQLCODE;
   EXEC SQL OPEN C1;
   RCODE = SQLCODE;
   EXEC SQL FETCH C1;
   RCODE = SQLCODE;
   XI1.IIT = '';  XI1.IIC = '';  XI1.IODN = '';  XI1.ICIT = '';
   XI1.INM = '';  XI1.IVF = 0;  XI1.IFM = 0;  XI1.ILM = 0;
   XI1.IFC = 0;  XI1.ILC = 0;  XI1.IEC = 0;
   I = 0;
   DO WHILE (SQLCODE ¬= 100);
     I = I + 1;
     IF  I > 100 THEN DO; RCODE = -10; GOTO DONE; END;
       XI1.IIT(I) = IIT;  XI1.IIC(I) = IIC;  XI1.IODN(I) = IODN;
       XI1.ICIT(I) = ICIT; XI1.INM(I) = INM;  XI1.IVF(I) = IVF;
       XI1.IFM(I) = IFM;  XI1.ILM(I) = ILM;
       XI1.IFC(I) = IFC;  XI1.ILC(I) = ILC;  XI1.IEC(I) = IEC;
     EXEC SQL FETCH C1;
       RCODE = SQLCODE;
       IF SQLCODE < 0 THEN GOTO SQLERR;
       END;
     EXEC SQL CLOSE C1;
```

63
-65-

```
     RCODE = SQLCODE;
     IF  I = 0 THEN  RCODE = -10;
   GOTO DONE;
   /* ----------------------------------------------------------- */
   ITEMSET: ENTRY(XI, T, RCODE);
    Fl = XI.IFC;  T = 'EXEC SQL ITEMSET     ';
    RCODE = -10;
    ITEMPOS = 0;
    DO I = 1 TO 100;
      IF XI1.IFC(I) = Fl THEN DO; ITEMPOS = I;
         I = 100; RCODE = 0; END;
     END;
     GOTO DONE;
   /* ----------------------------------------------------------- */
   GOTO DONE;
   /* ----------------------------------------------------------- */
   ADJITEM: ENTRY(XI,   RP, T, RCODE);
     T = 'EXEC SQL ADJACENT ITEM   ';
     I = 0;
     IF RP = 'NI' THEN DO; /* GET NEXT ITEM */
        ITEMPOS = ITEMPOS + 1; I = ITEMPOS;
        END; /* OF NEXT ITEM */
     ELSE IF RP = 'PI' THEN DO; /* GET PREVIOUS ITEM */
        ITEMPOS = ITEMPOS - 1; I = ITEMPOS;
        END;  /* OF PREVIOUS ITEM */
     IF I > 0 & I <= 100 THEN DO;
        IF XI1.IVF(I) = '' | XI1.IIT(I) = ''
           THEN DO; RCODE = -5; GOTO DONE; END;
         XI.IIT = XI1.IIT(I);  XI.IIC = XI1.IIC(I);
         XI.IODN  = XI1.IODN(I); XI.ICIT = XI1.ICIT(I);
         XI.INM = XI1.INM(I);  XI.IVF = XI1.IVF(I);
         XI.IFM = XI1.IFM(I);  XI.ILM = XI1.ILM(I);
         XI.IFC = XI1.IFC(I);  XI.ILC = XI1.ILC(I);
         XI.IEC = XI1.IEC(I);
       RCODE = 0;
       END;
     ELSE
       RCODE = -5;
   GOTO DONE;
   /* ----------------------------------------------------------- */
   COMMIT: ENTRY (T, RCODE);
     T = 'COMMIT WORK              ';
     EXEC SQL COMMIT WORK;
     RCODE = SQLCODE;
   GOTO DONE;
   /*************************************************************/
   /*         ROUTINE FOR HANDLING ERRORS                     */
   /*************************************************************/
   SQLERR:
      DISPLAY ('UNEXPECTED SQL ERROR RETURNED');
      DISPLAY ('CHANGES WILL BE BACKED OUT');
      DISPLAY ('FAILING SQL STATEMENT IS');
   ERR1: DISPLAY (T);
      DISPLAY(SQLCODE);
      RCODE = SQLCODE;
```

FILE: SHOWQ5    PLISQL    A    SAN JOSE RESEARCH LABORATORY - VM/SP CMS (1.11)

```
%SKIP;
/* IGNORE ERRORS DURING ROLLBACK TO AVOID ERROR ROUTINE LOOP        */
EXEC SQL WHENEVER SQLERROR CONTINUE;
EXEC SQL ROLLBACK WORK;
GOTO DONE;
/* -------------------------------------------------------------- */
DONE:
END SHOWQ;
```

FILE: QKSHOP1  PLIOPT   A   SAN JOSE RESEARCH LABORATORY - VM/SP CMS (1.11)

```
QKSHOP1: PROCEDURE OPTIONS ( MAIN );
/* --------------------------------------------------------------- */
    DCL (ADDR, INDEX, SIGN, SUBSTR, TRANSLATE, MOD) BUILTIN;
    DCL  SHOWVI  ENTRY EXTERNAL,     /* INITIALIZE VIDEO PLAYER    */
         DISTXT  ENTRY EXTERNAL,     /* GET DISPLAY TEXT           */
         RPLTXT  ENTRY EXTERNAL,     /* GET REPLY OPTIONS TEXT     */
         ITEMINF ENTRY EXTERNAL,     /* GET ITEM INFORMATION       */
         ITEMNM  ENTRY EXTERNAL,     /* GET ITEM NAME              */
         ITEMCSM ENTRY EXTERNAL,     /* GET ITEM COLORS,SIZE,MODEL */
         WARRTXT ENTRY EXTERNAL,     /* GET WARRANTY TEXT          */
         SALETXT ENTRY EXTERNAL,     /* GET ITEM SALE INFORNATION  */
         ADJQUAN ENTRY EXTERNAL,     /* ADJUST ITEM QUANTITY       */
         CHARGE  ENTRY EXTERNAL,     /* CHARGE CUSTOMER CREDIT     */
         IPRICE  ENTRY EXTERNAL,     /* GET ITEM PRICE             */
         ITEMCUR ENTRY EXTERNAL,     /* PUTS DEMO ITEMS IN XI1     */
         ITEMSET ENTRY EXTERNAL,     /* CURSOR FOR SELECT. DEMO ITEM */
         SUGGITM ENTRY EXTERNAL,     /* GET SUGGESTED ITEMS        */
         ADJITEM ENTRY EXTERNAL,     /* GETS ADJACENT  DEMO ITEM   */
         INXDATA ENTRY EXTERNAL,     /* GET INDEX DATA             */
         PASSWD  ENTRY EXTERNAL,     /* FETCH CUSTOMER PASSWORD    */
         FRMNU   ENTRY EXTERNAL,     /* FETCH FRAME NUMBER         */
         FINDIT  ENTRY EXTERNAL,     /* FIND ITEM FROM FRAME NUMBER */
         ASMFILE ENTRY EXTERNAL,     /* PRODUCES A CMS FILE OF SCREEN*/
         WAITPC  ENTRY EXTERNAL,     /* WAIT FOR REPLY FROM PC     */
         CONNECT ENTRY EXTERNAL,     /* CONNECT TO SQL/DS          */
         SEARCH  ENTRY EXTERNAL,     /* FETCH VIDEO DISK FRAME     */
         STOP    ENTRY EXTERNAL,     /* STOP  VIDEO DISK           */
         AUTOSTP ENTRY EXTERNAL,     /* AUTO STOP VIDEO DISK       */
         COMMIT  ENTRY EXTERNAL,     /* COMMIT ALL WORK            */
         PLI3270 ENTRY EXTERNAL;     /* DISPLAY SCREEN WAIT FOR REPLY*/
/* --------------------------------------------------------------- */

    DCL   SCREEN         CHAR(1760); /* SCREEN BUFFER              */
    DCL   DFCL           BIN FIXED(31); /* SCREEN TEXT COLOR       */
    DCL   DBCL           BIN FIXED(31); /* SCREEN BACK GROUND COLOR */
    DCL   STMT           CHAR(25);    /* STATEMENT VARIBALE        */
    DCL   RCODE          BIN FIXED(31);  /* RETURN CODE FROM SQL   */
    DCL   CV             BIN FIXED(31); /* VIDEO FRAME NUMBER       */
    DCL 1 CVS,
          2  CV1   BIN FIXED(31), /* VIDEO FRAME NUMBER */
          2  PCVC  VAR CHAR(72); /* PC VIDEO COMMAND   */
    DCL CVSPTR   POINTER;        /* POINTER TO CVS     */
/*--------------------------------------------------------------- */

    DCL 1 XI,                     /* ITEM STRUCTURE */
          2 IIT        CHAR(8),   /* ITEM  ID, UNIQUE FOR AN ITEM. */
          2 IIC        CHAR(20),  /* ITEM  KEY                     */
          2 IODN       CHAR(12),  /* CATALOGUE NUMBER OR ORDER
                                     NUMBER.                       */
          2 ICIT       CHAR(8),   /* ITEM  ID OF COMPLEMENT ITEM.  */
          2 INM        CHAR(40),  /* NAME OF ITEM.                 */
          2 IVF     FIXED BIN(31), /* VIDEO FRAME NUMBER FOR STATIC
                                     DISPLAY.                      */
          2 IFM     FIXED BIN(31), /* FIRST FRAME # FOR DISPLAYING
                                     ITEM FROM DIFFERENT POSITIONS. */
```

```
        2 ILM   FIXED BIN(31),    /* LAST  FRAME # FOR DISPLAYING
                                      ITEM FROM DIFFERENT POSITIONS. */
        2 IFC   FIXED BIN(31),    /* FIRST COMMERCIAL FRAME NUMBER. */
        2 ILC   FIXED BIN(31),    /* LAST  COMMERCIAL FRAME NUMBER. */
        2 IEC   FIXED BIN(31);    /* END   COMMERCIAL FRAME NUMBER. */

    DCL 1 XDI,                    /* DEPARTMENT INDEX TABLE          */
        2 IDEPT     CHAR(20),     /* DEPARTMENT NAME IN WHICH ITEM
                                      SOLD, REPEATING VALUE.         */
        2 IIT       CHAR(8),      /* ITEM  ID, NON UNIQUE.           */
        2 INM       CHAR(40),     /* NAME OF ITEM.                   */
        2 IFC   FIXED BIN(31),    /* FIRST COMMERCIAL FRAME NUMBER. */
        2 ILC   FIXED BIN(31),    /* LAST  COMMERCIAL FRAME NUMBER. */
        2 IEC   FIXED BIN(31);    /* END   COMMERCIAL FRAME NUMBER. */

    DCL 1 XBI,                    /* BRAND NAME INDEX TABLE          */
        2 IBRAND    CHAR(20),     /* BRAND NAME OF ITEM
                                      REPEATING VALUE                */
        2 IIT       CHAR(8),      /* ITEM  ID, NON UNIQUE.           */
        2 INM       CHAR(40),     /* NAME OF ITEM.                   */
        2 IFC   FIXED BIN(31),    /* FIRST COMMERCIAL FRAME NUMBER. */
        2 ILC   FIXED BIN(31),    /* LAST  COMMERCIAL FRAME NUMBER. */
        2 IEC   FIXED BIN(31);    /* END   COMMERCIAL FRAME NUMBER. */

    DCL 1 XT,                     /* ITEM TEXT TABLE                 */
        2 TIT       CHAR(8),      /* ITEM ID.
                                      IF TEXTS COVERING MULTIPLE TUPLES
                                      ARE LINKED BY SAME VALUE OF THIS
                                      FIELD.                         */
        2 TCN       CHAR(8),      /* CONTINUATION NUMBER. A LINK CODE
                                      FOR ITEMS HAVING SAME TEXT.    */
        2 TSEQ      CHAR(7),      /* A SEQUENCE NUMBER FOR EACH TUPLE
                                      OF THIS TABLE.                 */
        2 DFCL  FIXED BIN(31),    /* TEXT COLOR DISPLAY CODE. USED
                                      BY SCREEN GENERATOR PROGRAM.   */
        2 DBCL  FIXED BIN(31),    /* BACK GROUND COLOR DISPLAY CODE. USED
                                      BY SCREEN GENERATOR PROGRAM.   */
        2 DSL   FIXED BIN(31),    /* TEXT LETTER SIZE DISPLAY CODE. */
        2 TTX       CHAR(74);     /* TEXT.                           */

    DCL 1 CS,                     /* MICRO INFORMATION TABLE         */
        2 IIT    CHAR(8),         /* ITEM NUMBER.                    */
        2 SIZE   CHAR(8),         /* ITEM SIZE, DATA ONLY FOR SIZES
                                      OF THE ITEM AVAILABLE IN STORE. */
        2 COLOR  CHAR(8),         /* ITEM COLOR, DATA ONLY FOR COLORS
                                      OF THE ITEM AVAILABLE IN STORE. */
        2 MODEL  CHAR(20),        /* ITEM MODEL, DATA ONLY FOR MODELS
                                      OF THE ITEM AVAILABLE IN STORE */
        2 IODN   CHAR(12),        /* ITEM CATALOGUE, NO CODES        */
        2 IBRAND CHAR(20),        /* BRAND NAME OF ITEM
                                      REPEATING VALUE.               */
        2 ISP    CHAR(8),         /* ITEM SALES PROMOTION CODE. POINTS
                                      TO TABLE SALE2.                */
        2 IWN    CHAR(8),         /* ITEM WARRANTY CODE. POINTS TO
                                      TABLE WARRAN.                  */
```

FILE: QKSHOP1  PLIOPT  A   SAN JOSE RESEARCH LABORATORY - VM/SP CMS (1.11)

```
        2 IFM  FIXED BIN(31),   /* FIRST MICRO INFORMATION FRAME
                                    NUMBER.                       */
        2 ILM  FIXED BIN(31),   /* LAST  MICRO INFORMATION FRAME
                                    NUMBER.                       */
        2 IEM  FIXED BIN(31),   /* END   MICRO INFORMATION FRAME
                                    NUMBER.                       */
        2 QOH BIN FIXED (31),   /* ITEM QUANTITY ON HAND.        */ .
        2 ISW BIN FIXED (31);   /* SHIPPING WEIGHT OF EACH ITEM. */

DCL 1 XS(10),                   /* SALES TABLE                   */
        2 ISP        CHAR(8),   /* SALES PROMOTION CODE          */
        2 SSD        CHAR(8),   /* START DATE OF SALES PROMOTION. */
        2 SED        CHAR(8),   /* TERMINATION DATE OF SALES      */
        2 STXT       CHAR(74),  /* TERMS AND CONDITIONS OF SALES  */
        2 SFC  FIXED BIN(31),   /* FIRST SALES PROMOTION FRAME
                                    NUMBER.                       */
        2 SLC  FIXED BIN(31),   /* LAST  SALES PROMOTION FRAME
                                    NUMBER.                       */
        2 SEC  FIXED BIN(31);   /* END SALES PROMOTION FRAME
                                    NUMBER.                       */

DCL 1 XW,                       /* WARRANTY TABLE                */
        2 IWN        CHAR(8),   /* WARRANTY CODE                 */
        2 WTXT       CHAR(40),  /* TEXTUAL DETAILS OF WARRANTY.   */
        2 WGEN       CHAR(40),  /* INFORMATION NEEDED TO OBTAIN OR
                                    GENERATE WARRANTY.            */
        2 WFI  FIXED BIN(31),   /* FIRST WARRANTY INFORMATION FRAME
                                    NUMBER.                       */
        2 WLI  FIXED BIN(31);   /* LAST WARRANTY INFORMATION FRAME
                                    NUMBER.                       */

DCL 1 XP,                       /* PRICE TABLE                   */
        2 IIT        CHAR(8),   /* ITEM  ID                      */
        2 IODN       CHAR(12),  /* CATALOGUE NUMBER OR ORDER
                                    NUMBER.                       */
        2 IRP  FIXED BIN(31),   /* ITEM NORMAL PRICE IN DOLLARS
                                    AND CENTS.                    */
        2 IPQ  FIXED BIN(31),   /* QUANTITY OR NUMBER OF UNITS OF
                                    PURCHASE FOR WHICH THE PRICE IS
                                    VALID.                        */
        2 PSD        CHAR(8),   /* START DATE OF EFFECTIVE PRICE. */
        2 PED        CHAR(8),   /* END   DATE OF EFFECTIVE PRICE. */
        2 IEP  FIXED BIN(31);   /* EFFECTIVE PRICE.              */

DCL 1 XCI(10),                  /* COMPLEMENT ITEM TABLE         */
        2 IIT        CHAR(8),   /* ITEM  ID OF ONLY THOSE ITEMS WHICH
                                    HAVE COMPLEMENT ITEMS.        */
        2 ICIT       CHAR(8),   /* ITEM  ID OF ITEMS WHICH SHOULD BE
                                    SUGGESTED FOR PURCHASE, IF THIS
                                    ITEM IS PURCHASED.            */
        2 IFC  FIXED BIN(31),   /* FIRST COMMERCIAL FRAME NUMBER
                                    OF SUGGESTED ITEM.            */
        2 ILC  FIXED BIN(31),   /* LAST  COMMERCIAL FRAME NUMBER
                                    OF SUGGESTED ITEM.            */
        2 IEC  FIXED BIN(31);   /* END   COMMERCIAL FRAME NUMBER
```

FILE: QKSHOP1  PLIOPT   A   SAN JOSE RESEARCH LABORATORY - VM/SP CMS (1.11)

```
                                    OF SUGGESTED ITEM.           */
  DCL 1 XCU,                     /* CUSTOMER TABLE               */
        2 CID       CHAR(12),    /* CUSTOMER ID, CREDIT CARD
                                    IDENTIFICATION NUMBER        */
        2 PASS      CHAR(8),     /* PASSWORD                     */
        2 CADD      CHAR(74),    /* MAILING ADDRESS OF CUSTOMER  */
        2 CLIM    FIXED BIN(31); /* CREDIT LIMIT OF CUSTOMER.    */

  DCL 1 XDL,                     /* ITEM DELIVERY TABLE          */
        2 CID       CHAR(12),    /* CUSTOMER ID,                 */
        2 IODN      CHAR(12),    /* CATALOGUE NUMBER OR ORDER
                                    NUMBER.                      */
        2 DELD      CHAR(8),     /* DATE ON WHICH ITEM DELIVERED
                                    OR PROMISED DELIVERY.        */
        2 DELADD    CHAR(74),    /* ADDRESS WHERE ITEM TO BE DELIVERED
                                    OR LOCATION WHERE CUSTOMER TO
                                    PICK UP ITEM.                */
        2 AVAILD    CHAR(8);     /* DATE ON WHICH ITEM WILL BE
                                    AVAILABLE IN STOCK.          */

  DCL 1 XIN,                     /* PURCHASE INCOMPLETE TABLE    */
        2 CID       CHAR(12),    /* CUSTOMER ID,                 */
        2 PASS      CHAR(8),     /* PASSWORD                     */
        2 IODN      CHAR(12),    /* CATALOGUE NUMBER OR ORDER
                                    NUMBER OF ITEMS PURCHASED BY
                                    CUSTOMER.                    */
        2 STATE     CHAR(8),     /* STATE FROM WHICH CUSTOMER
                                    REQUESTED STATE INS (LAST ITEM) */
        2 SIZE    CHAR(8),       /* ITEM SIZE, DATA OF ITEM PURCHASED.*/
        2 COLOR   CHAR(8),       /* ITEM COLOR, DATA OF ITEM
                                    PURCHASED.                   */
        2 MODEL     CHAR(20),    /* ITEM MODEL, DATA OF ITEM
                                    PURCHASED.                   */
        2 QUAN    FIXED BIN(31); /* QUANTITY OR UNITS OF ITEM
                                    PURCHASED.                   */

  DCL 1 SR,                      /*  STATE REPLY TABLE     */
        2 STATE     CHAR(8),     /*  STATE */
        2 REPID     CHAR(5),     /* A REPLY ID  */
        2 STREP     CHAR(10),    /* STATE REPLY  */
        2 DFCL  FIXED BIN(31),   /*  FOREGROUND COLOR  */
        2 DBCL  FIXED BIN(31),   /*  BACK GROUND COLOR  */
        2 DSL  FIXED BIN(31),    /* TEXT LETTER SIZE DISPLAY CODE. */
        2 RLOC      CHAR(2),     /* ROW LOCATION IN SCREEN     */
        2 CLOC      CHAR(2),     /* COLUMN LOCATION IN SCREEN   */
        2 REPTXT    CHAR(40),    /* REPLY TEXT FOR SCREEN      */
        2 NSTATE    CHAR(8),     /*  NEXT STATE SAME AS INCOM5.STATE */
        2 IVF  FIXED BIN(31);    /* VIDEO FRAME NUMBER FOR STATIC
                                    DISPLAY.                    */

  DCL 1 SC,                      /*  SCREEN  TABLE          */
        2 REPID     CHAR(5),     /*  REPLY ID */
        2 STREP     CHAR(10),    /*  STATE REPLY */
        2 NSCEN     CHAR(10),    /* NEXT STATE-REPLY SCREEN */
```

FILE: QKSHOP1  PLIOPT   A    SAN JOSE RESEARCH LABORATORY - VM/SP CMS (1.11)

```
        2 DFCL  FIXED BIN(31),  /* FOREGROUND COLOR */
        2 DBCL  FIXED BIN(31),  /*  BACK GROUND COLOR DISPLAY CODE. */
        2 DSL   FIXED BIN(31),  /*  TEXT LETTER SIZE DISPLAY CODE. */
        2 RLOC          CHAR(2),  /* ROW LOCATION IN SCREEN       */
        2 CLOC          CHAR(2),  /* COLUMN LOCATION IN SCREEN    */
        2 REPTXT        CHAR(40),  /* REPLY TEXT FOR SCREEN        */
        2 NSTATE        CHAR(8);   /*  NEXT STATE SAME AS INCOM5.STATE */


     DCL  (YC8,XC8)          CHAR(8);   /* WORKING VARIABLE       */
     DCL  XC20              CHAR(20);  /* WORKING VARIABLE       */
     DCL 1 XMD(100),              /* ALL NON-MENU TOUPLES */
           2 DTXS     CHAR(30),
           2 DNS      CHAR(8),
           2 DIT      CHAR(8);


     DCL 1 XST,              /* STATISTICS OF NON-MENU TOUPLES */
           2 COUNT     BIN FIXED, /* COUNT OF SATISFYING TOUPLES */
           2 CDNS      BIN FIXED, /* COUNT OF NON-ZERO DNS    */
           2 CDIT      BIN FIXED; /* COUNT OF NON-ZERO DIT */

   DCL 1 XTD(100),                    /* DISPLAY TEXT                 */
        2 DFCL  FIXED BIN(31),   /* TEXT COLOR DISPLAY CODE. USED
                                    BY SCREEN GENERATOR PROGRAM.   */
        2 DBCL  FIXED BIN(31),   /* BACK GROUND COLOR DISPLAY CODE. USED
                                    BY SCREEN GENERATOR PROGRAM.   */
        2 DSL  FIXED BIN(31),    /* TEXT LETTER SIZE DISPLAY CODE. */
        2 TTX        CHAR(74);   /* TEXT.                        */

   DCL 1 XSR(100) EXTERNAL,     /*  SCREEN TEXT             */
        2 REPID      CHAR(5),    /* A REPLY ID */
        2 STREP      CHAR(10),   /* STATE REPLY  */
        2 DFCL  FIXED BIN(31),   /*  FOREGROUND COLOR  */
        2 DBCL  FIXED BIN(31),   /*  BACK GROUND COLOR  */
        2 DSL  FIXED BIN(31),    /* TEXT LETTER SIZE DISPLAY CODE. */
        2 RLOC       CHAR(2),    /* ROW LOCATION IN SCREEN     */
        2 CLOC       CHAR(2),    /* COLUMN LOCATION IN SCREEN    */
        2 REPTXT     CHAR(74),   /* REPLY TEXT FOR SCREEN    */
        2 NSTATE     CHAR(8),    /*  NEXT STATE SAME AS INCOM5.STATE */
        2 IVF  FIXED BIN(31);    /* VIDEO FRAME NUMBER FOR STATIC
                                    DISPLAY.                 */

   DCL 1 XSI(100) EXTERNAL,     /* SCREEN INDEX TEXT          */
        2 IIT        CHAR(8),    /* ITEM  ID, NON UNIQUE.      */
        2 INM        CHAR(40),   /* NAME OF ITEM.            */
        2 IFC  FIXED BIN(31),    /* FIRST COMMERCIAL FRAME NUMBER. */
        2 ILC  FIXED BIN(31),    /* LAST  COMMERCIAL FRAME NUMBER. */
        2 IEC  FIXED BIN(31);    /* END   COMMERCIAL FRAME NUMBER. */

   DCL SPTXT(10)      CHAR(80);  /* SPECIAL TEXT FOR SCREEN */
   DCL NSPL      FIXED BIN;      /* NUMBER OF SPECIAL LINES */
   DCL LSPL      FIXED BIN;      /* LENGTH OF SPECIAL LINES */

      DCL CH1(19)        CHAR(1) INIT('1','2','3','4','5','6',
                 '7','8','9','A','B','C','D','E','F',
```

FILE: QKSHOP1  PLIOPT   A   SAN JOSE RESEARCH LABORATORY - VM/SP CMS (1.11)

```
                          'G','H','I','J');
        DCL (IC,I,II,IX,IY,IZ,IXC,III)    BIN FIXED;
        DCL FTXT       CHAR(74);   /* FIXED 74 CHAR STRING */
        DCL DTL        FIXED BIN;      /* DISPLAY TEXT LINE       */
        DCL TERMINAL       CHAR(7);    /* TYPE OF TERMAINAL       */
        DCL REPLYMODE      CHAR(8);    /* USER REPLY MODE         */
        DCL DTYPE          CHAR(8);    /* DISPLAY STATE           */
        DCL REPLYFLD       CHAR(32);   /* REPLY FIELD             */
        DCL DTYPEIXSV(20)  BIN FIXED;  /* SAVE LABEL INDEX OF DTYPE */
        DCL REPLYSV(20)    CHAR(20);   /* SAVES STATE AND REPLY OF
                                          PATH TRAVERSED  */
        DCL SVCHA20(20)    CHAR(20);   /* SAVES 20 CHARACTERS STRING */
        DCL SVNSTATE(20)   CHAR(8);    /* SAVES NEXT STATE    */
        DCL SVCV(20)       FIXED BIN(31); /* SAVES NEXT STATE    */
        DCL SVBACKUPSC(20)  CHAR(20);  /* SAVES BACKUP SCREEN     */
        DCL SVFIRSTMSC      CHAR(20);  /* SAVES BACKUP SCREEN     */
        DCL 1 CITEM,       /* CURRENT ITEM STRUCTURE */
              2 IIT    CHAR(8),
              2 INM    CHAR(40),
              2 COLOR  CHAR(8),
              2 SIZE   CHAR(8),
              2 MODEL  CHAR(20),
              2 QUAN   FIXED BIN(31),
              2 STREP  CHAR(10),
              2 IEP    FIXED BIN(31);
        DCL 1 SVITM(25),   /* SAVES SELECTED ITEM STRUCTURE */
              2 IIT    CHAR(8),
              2 INM    CHAR(40),
              2 COLOR  CHAR(8),
              2 SIZE   CHAR(8),
              2 MODEL  CHAR(20),
              2 QUAN   FIXED BIN(31),
              2 STREP  CHAR(10),
              2 IEP    FIXED BIN(31);
        DCL NUITEM       FIXED BIN;  /* NUMBER OF ITEMS PURCHASED */
        DCL SVIXTM       CHAR(8);    /* SAVE ITEM NAME FROM INDEX */
        DCL 1 SUGITM(50),            /*  SUGGESTED ITEMS */
              2 REPID     CHAR(5),   /* A REPLY ID */
              2 PURIIT    CHAR(10),  /* PURCHASED IIT */
              2 DFCL   FIXED BIN(31),  /*  FOREGROUND COLOR  */
              2 DBCL   FIXED BIN(31),  /*  BACK GROUND COLOR */
              2 DSL    FIXED BIN(31),  /* TEXT LETTER SIZE DISPLAY CODE. */
              2 RLOC      CHAR(2),   /* ROW LOCATION IN SCREEN      */
              2 CLOC      CHAR(2),   /* COLUMN LOCATION IN SCREEN   */
              2 REPTXT    CHAR(74),  /* REPLY TEXT FOR SCREEN       */
              2 NSTATE    CHAR(8),   /*  NEXT STATE     */
              2 IVF    FIXED BIN(31); /* VIDEO FRAME NUMBER FOR STATIC
        DCL NSUGITM     FIXED BIN;  /* NUMBER OF SUGGESTED ITEMS */
        DCL SUGITM_BIT    BIT(1) INIT('0'B); /* SUGGESTED ITEM BEING
                                              PROCESSED */
        DCL SUGITMHDR_BIT  BIT(1) INIT('0'B);  /* HEADER FOR SUGITM */
        DCL NEWSUGITM_BIT  BIT(1) INIT('1'B);  /* NEW SUGGESTED ITEM */
        DCL PURSUGITM_BIT  BIT(1) INIT('0'B);  /* PURCHASE OF SUGGESTED
                                              ITEM BIT */
        DCL STACK        BIN FIXED; /* STATE STACK */
```

FILE: QKSHOP1  PLIOPT   A   SAN JOSE RESEARCH LABORATORY - VM/SP CMS (1.11)

```
DCL STACKSIZ        BIN FIXED;  /* STACK SIZE */
DCL SCSTACK         BIN FIXED;  /* SCREEN STACK  */
DCL SVSCSTACK       BIN FIXED;  /* SAVE SCREEN STACK  */
DCL SVSCREEN        CHAR(10);   /* SAVED SCREEN NAME */
DCL YC12            CHAR(12);
DCL CH14            CHAR(14);
DCL CH9             CHAR(9);
DCL CH5             CHAR(5);
DCL CH2             CHAR(2);
DCL (XL,XL1)        BIN FIXED(31);

DCL SLOC            FIXED BIN;   /* STARTING LOCATION OF DISPLAY
                                    POSITION IN A LINEAR BUFFER */
DCL DW              FIXED BIN;   /* DISPLAY WIDTH */
DCL SHDL            FIXED BIN;   /* STARTING HEADER LINE */
DCL SDL             FIXED BIN;   /* STARTING ITEM  LINE */
DCL NSL             FIXED BIN;   /* NUMBER OF SCREEN ITEMS */
DCL NHL             FIXED BIN;   /* NUMBER OF SCREEN HEADER */
DCL NBL             FIXED BIN;   /* NUMBER OF BLANK LINES */
DCL SDLXSR          FIXED BIN;   /* STARTING ITEM  LINE IN XSR
                                    WHEN SCREEN DATA IN
                                    MULTIPLE STRUCTURES */
DCL NXSRL           FIXED BIN;   /* NUMBER OF ITEM  LINES IN XSR
                                    WHEN SCREEN DATA IN
                                    MULTIPLE STRUCTURES */
DCL DL              FIXED BIN;   /* DISPLAY LENGTH */
DCL DCOL        FIXED BIN(31);   /* DISPLAY COLOR */
DCL BKCOL       FIXED BIN(31);   /* DISPLAY BACK GROUND COLOR */
DCL DFON            CHAR(8);     /* DISPLAY FONT TYPE */
DCL DRLOC           CHAR(2);     /* DISPLAY ROW LOCATION */
DCL DCLOC           CHAR(2);     /* DISPLAY COLUMN LOCATION */
DCL TXT            CHAR(74);     /* DISPLAY TEXT */
DCL LI             FIXED BIN;    /* LABEL INDEX */
DCL MSCL           FIXED BIN;    /* MAX LINES ON ONE SCREEN */
DCL MSCI           FIXED BIN;    /* MAX ITEMS ON ONE SCREEN */
DCL SPSCBOT        CHAR(74);     /* SPECIAL SCREEN BOTTOM */

DCL CHA5(26)        CHAR(5) INIT('(1)  ','(2)  ','(3)  ','(4)  ',
                    '(5)  ','(6)  ','(7)  ','(8)  ','(9)  ',
                    '(0)  ','(11) ','(12) ','(13) ','(14) ',
                    '(15) ','(16) ','(17) ','(18) ','(19) ',
                    '(20) ','(21) ','(22) ','(23) ','(24) ',
                    '(25) ','(26) ');

DCL BRANDIX_BIT     BIT(1) INIT('0'B);
DCL XSR_BIT         BIT(1) INIT('0'B);
DCL XTD_BIT         BIT(1) INIT('0'B);
DCL XSI_BIT         BIT(1) INIT('0'B);
DCL NODATA_BIT      BIT(1) INIT('0'B);
DCL MORESC_BIT      BIT(1) INIT('0'B);
DCL SPTXT_BIT       BIT(1) INIT('0'B);
DCL STSCBOT_BIT     BIT(1) INIT('1'B);
DCL SPSCBOT_BIT     BIT(1) INIT('0'B);
DCL WNGRPLY_BIT     BIT(1) INIT('0'B);
DCL ITEMWSOFT_BIT   BIT(1) INIT('1'B); /* MENU ITEM AND SOFTKEY
```

FILE: QKSHOP1  PLIOPT   A   SAN JOSE RESEARCH LABORATORY - VM/SP CMS (1.11)

```
                                      IN SAME SCREEN */
    DCL XSRHM_BIT       BIT(1) INIT('0'B); /* MODIFY XSR HEADER  */
    DCL SVINMORESC      FIXED BIN INIT(0);   /* SAVE INMORESC */
    DCL INMORESC        FIXED BIN INIT(0);   /* TEMP VALUE OF NUMBER
                                         OF MORE SCREENS */
    DCL 1 SNL(21),           /* STATE NAME-LABELS  */
          2 STATEN     CHAR(8) INIT('FISC0000','REQ00000','DEPT0000',
                       'GNINX000','INDEX000','ITEM0000',
                       'SEINX000','INS00000','WARR0000',
                       'SALE0000','COLOR000','SIZE0000',
                       'MODEL000','BQ000000','BUY00000',
                       'PUR00000','WHC00000','DEMO0000',
                       'ITEMOD00','MOPTD000','DNI00000'),
          2 STATEL     LABEL INIT(FISC0000,REQ00000,DEPT0000,
                       GNINX000,INDEX000,ITEM0000,
                       SEINX000,INS00000,WARR0000,
                       SALE0000,COLOR000,SIZE0000,
                       MODEL000,BQ000000,BUY00000,
                       PUR00000,WHC00000,DEMO0000,
                       ITEMOD00,MOPTD000,DNI00000);
    DCL PCREP     CHAR(32);    /* PC REPLY                 */
    DCL PCREPTR   POINTER;     /* POINTER FOR PC REPLY  */
    DCL PCKPRP2   CHAR(1);
    DCL ERTBL(20) CHAR(40);    /* ERROR MESSAGES  */
    DCL ERLN      FIXED BIN;   /* NUMBER OF LINES OF ERROR MSG */
    DCL ERTYP     CHAR(10);    /* ERROR TYPE  */
    DCL AMOUNT    FIXED BIN(31);   /* AMOUNT OF PURCHASE */
    DCL IAM       FIXED BIN(31);   /* AMOUNT OF FOR AN ITEM */
    DCL TAX       FIXED BIN(31);   /* AMOUNT OF ALL PURCHASES */
    DCL TOTAL     FIXED BIN(31);   /* TOTAL  OF ALL PURCHASES */
    DCL OVERCHG   FIXED BIN(31);   /* PURCHASE OVER CREDIT    */
    DCL QADJ      CHAR(3);     /* QUANTITY ADJUST  */
    DCL 1  SOFTKEYTAB(4),      /* SOFT KEY TABLE */
          2  SKEY      CHAR(1),
          2  RLOC      CHAR(2),
          2  CLOC      CHAR(2),
          2  SKNAME    CHAR(20),
          2  NSTATE    CHAR(8);

    DCL SOFTKEY_BIT    BIT(1) INIT('0'B);
    DCL TSOFTKEY_BIT   BIT(1) INIT('0'B); /* TOUCHED SOFTKEY */
    DCL NSOFTKEY       BIN FIXED;  /* NUMBER OF SOFT KEYS */
    DCL DEMOIFC    FIXED BIN(31);   /* FIRST COMMERCIAL OF DEMO ITEM */
    DCL DEMOILC    FIXED BIN(31);   /* LAST  COMMERCIAL OF DEMO ITEM */
    DCL DEMOITM        CHAR(8);     /* SAVE DEMO ITEM NAME */
    DCL SPCT       FIXED BIN(31);   /* SALE DISCOUNT PER CENT   */
    DCL ERRORST_BIT    BIT(1) INIT('0'B); /* ERRORST BIT       */

/****************************************************************/
/*        START PROGRAM                                         */
/****************************************************************/

STACKSIZ = 20; /* STACK SIZE */
CVSPTR  = ADDR(CVS); /* POINTER TO PC-VIDEO INTERFACE */
REPLYFLD = '';
```

FILE: QKSHOP1  PLIOPT   A   SAN JOSE RESEARCH LABORATORY - VM/SP CMS (1.11)

```
TERMINAL = 'IBM3279';
REPLYMODE = '79KB';  /* USER REPLY BY 3279 KEY BOARD */
MSCL = 10;    /* MAXIMUM NUMBER OF ITEMS ON ONE SCREEN */
REPLYFLD = ''; II = 0;
IF TERMINAL = 'IBMPC ' THEN   /* INITIAL COMMUNICATION WITH PC */
DO WHILE( REPLYFLD ¬= 'OK' & II < 11);
   II = II + 1;
   DISPLAY('#∂/OK/∂#');
   DISPLAY('#/++/#') REPLY(REPLYFLD);
   IF (REPLYFLD ¬= 'OK' & II > 10) THEN GOTO DONE;
   END;  /* OF INITIAL COMM. WITH PC */
ELSE DISPLAY('PROGRAM HAS STARTED');
IF TERMINAL = 'IBMPC ' THEN PCREPTR = ADDR(PCREP);
IF REPLYMODE = 'PCKP' THEN PCKPRP2 = ' ';
DTL = 0;
CALL CONNECT (STMT, RCODE);
IF TERMINAL ¬= 'IBMPC ' THEN CALL SHOWVI;
                /* INITIALIZE DISCO-VISION PLAYER */

REPLYSV = '';
SVBACKUPSC = '';
SVFIRSTMSC = '';
SVCHA20 = '';
STACK = 1;
SCSTACK = 1;
FISC0000:
            /* STATE FISC */
NODATA_BIT = '0'B;  /* GET DATA BIT ON */
WNGRPLY_BIT = '0'B;
LI = 0;  /* LABEL INDEX SET TO ZERO */
DTYPE = 'FISC0000';
CALL DSPLAY; /* DISPLAY STATE FISC
                AND RETURN REPLY IN REPLYFLD */
FISC000R:

   IF SUBSTR(REPLYFLD,1,2) = 'HX' THEN GOTO DONE;
   YC12 = REPLYFLD;  /* CUSTOMER ID */
   CALL PASSWD (YC12,YC8,STMT,RCODE);/* FETCH PASSWORD FROM TABLE */
   IF RCODE ¬= 0 THEN  /* WRONG CUSTOMER ID */
   DO;
     NODATA_BIT = '0'B; WNGRPLY_BIT = '1'B;
     IF TERMINAL = 'IBMPC ' THEN /* FETCH CUSTOMER PASSWORD */
     DO;
       DISPLAY('#∂/WRONG CUSTOMER ID. ENTER AGAIN/∂#');
       DISPLAY('#/++/#') REPLY(REPLYFLD);
       END;
     ELSE IF TERMINAL = 'IBM3279' | TERMINAL = 'IBM3277' THEN
       DO;
         STSCBOT_BIT = '0'B; SPSCBOT_BIT = '1'B;
         SPSCBOT = ' WRONG CUSTOMER ID . ENTER AGAIN ';
         CALL DSPLAY;
         END;
     GOTO FISC000R;
     END;
   NODATA_BIT = '1'B; WNGRPLY_BIT = '0'B;
```

FILE: QKSHOP1  PLIOPT   A    SAN JOSE RESEARCH LABORATORY - VM/SP CMS (1.11)

```
   IF TERMINAL = 'IBMPC ' THEN /* FETCH CUSTOMER PASSWORD */
   DO;
      DISPLAY('#ə/ENTER PASSWORD/ə#');
      DISPLAY('#/++/#') REPLY(REPLYFLD);
      END;
   ELSE IF TERMINAL = 'IBM3279'  | TERMINAL = 'IBM3277' THEN
   DO; SPSCBOT  = ' ENTER PASSWORD '; SPSCBOT_BIT = '1'B;
      STSCBOT_BIT = '0'B; CALL DSPLAY; END;


   IF SUBSTR(REPLYFLD,1,2) = 'HX' THEN GOTO DONE;
   II = 0;
   DO WHILE(II < 5 & REPLYFLD ¬= YC8);
                 /* INCORRECT PASSWORD FROM CUSTOMER */
      II = II + 1;
      IF TERMINAL = 'IBMPC ' THEN /* ASK CUSTOMER PASSWORD AGAIN */
      DO;
         DISPLAY('#ə/WRONG PASSWORD. ENTER AGAIN/ə#');
         DISPLAY('#/++/#') REPLY(REPLYFLD);
         END;
      ELSE IF TERMINAL = 'IBM3279'  | TERMINAL = 'IBM3277' THEN
      DO;
         STSCBOT_BIT = '0'B; SPSCBOT_BIT = '1'B; WNGRPLY_BIT = '1'B;
         SPSCBOT  = ' WRONG PASSWORD. ENTER AGAIN ';
         CALL DSPLAY;
         END;
      END;
   IF II >= 5 THEN GOTO DONE;

   LI = 1;  /* STATE INDEX */

      /* INITIALIZE THE SAVING OF ITEMS REQUESTED  */
   NUITEM = 0;
   SVITM.IIT = '';  SVITM.INM = '';  SVITM.COLOR = '';
   SVITM.SIZE = '';  SVITM.MODEL = '';  SVITM.STREP = '';
   SVITM.QUAN = 0;    SVITM.IEP = 0;
   SUGITM.REPID = ''; SUGITM.PURIIT = ''; SUGITM.DFCL = 0;
   SUGITM.DBCL = 0; SUGITM.DSL = 0; SUGITM.RLOC = '';
   SUGITM.CLOC = ''; SUGITM.REPTXT = ''; SUGITM.NSTATE = '';
   SUGITM.IVF = 0;   PURSUGITM_BIT = '0'B;
   SUGITM_BIT = '0'B;  SUGITMHDR_BIT = '0'B; NSUGITM = 0;
   CALL PURINC;

    PURINC: PROC;

       /* THIS PROCEDURE CHECKS THE ICOM5 TABLE TO DETERMINE
          IF THIS CUSTOMER INTERUPTED PURCHASE OF AN ITEM
          FOR INSPECTION. IF SO, THEN SYSTEM FETCHES CUSTOMER STATE,
          FILLS THE SVITM STRUCTURE
          AND BRANCHES TO THE LAST STATE GIVEN BY INCOM5.STATE;
          IF NO ENTRY OF CUSTOMER FOUND IN ICOM5.CID THEN
          CONTINUE TO REQ00000 STATE.  */

    END PURINC;
```

FILE: QKSHOP1  PLIOPT   A   SAN JOSE RESEARCH LABORATORY - VM/SP CMS (1.11)

```
REQ00000:
                /* REQUEST STATE */
NODATA_BIT = '0'B; WNGRPLY_BIT = '0'B;
SPSCBOT = ''; SPSCBOT_BIT = '0'B;
SPTXT_BIT = '0'B; ITEMWSOFT_BIT = '1'B;
NBL = 0;
DFCL = 1; DBCL = 5;
DTYPEIXSV = 2;
SCREEN = '';

STACK = 2;
SCSTACK = 2;
REPLYSV(SCSTACK) = 'REQ00000HD';
REPLYSV(SCSTACK-1) = 'FISC000001';
SVBACKUPSC(SCSTACK) = 'REQ00000HD';
SVBACKUPSC(SCSTACK-1) = 'FISC000001';

DTYPE = 'REQ00000';
STSCBOT_BIT = '1'B;
LI = 2;  /* STATE INDEX */
GOTO LA;
DEPT0000: DTYPE = 'DEPT0000';   GOTO LA; /* STATE DEPT */
GNINX000: DTYPE = 'GNINX000';   GOTO LA; /* STATE GENERATE INDEX */
INDEX000: DTYPE = 'INDEX000';   GOTO LA; /* STATE INDEX */
ITEM0000: DTYPE = 'ITEM0000';   GOTO LA; /* STATE ITEM */
SEINX000: DTYPE = 'SEINX000';   GOTO LA; /* STATE SECOND INDEX */
INS00000: DTYPE = 'INS00000';   GOTO LA; /* STATE INSPECT */
WARR0000: DTYPE = 'WARR0000';   GOTO LA; /* STATE WARRANTY */
SALE0000: DTYPE = 'SALE0000';   GOTO LA; /* STATE PRICE */
COLOR000: DTYPE = 'COLOR000';   GOTO LA; /* STATE COLOR */
SIZE0000: DTYPE = 'SIZE0000';   GOTO LA; /* STATE SIZE */
MODEL000: DTYPE = 'MODEL000';   GOTO LA; /* STATE MODEL */
BQ000000: DTYPE = 'BQ000000';   GOTO LA; /* STATE BUY QUANTITY */
BUY00000: DTYPE = 'BUY00000';   GOTO LA; /* STATE BUY */
PUR00000: DTYPE = 'PUR00000';   GOTO LA; /* STATE PURCHASE */
ITEMOD00: DTYPE = 'ITEMOD00';   GOTO LA; /* STATE DEMO ITEM */
WHC00000: DTYPE = 'WHC00000';   GOTO LA; /* STATE COND. FOR WARRANTY */
DEM00000: DTYPE = 'DEM00000';   GOTO LA; /* STATE DEMO */
MOPTD000: DTYPE = 'MOPTD000';   GOTO LA; /* STATE MORE OPTIONS FOR
                                           FOR DEMO ITEM */
DNI00000: DTYPE = 'DNI00000';            /* STATE NO ITEM */

LA:
  CALL DSPLAY; /* DISPLAY SCREEN  AND VIDEO */
  CALL RPLTRANS;
  CALL REPGO;
  GOTO SNL.STATEL(LI);
GOTO DONE;
/*************************************************************/
/*         SUBROUTINES                                     */
/*************************************************************/
/* ======================================================== */
/* CONNECT: ENTRY (        T, RCODE);   CONNECT TO SQL/DS    */
/* COMMIT:  ENTRY (        T, RCODE);   COMMIT ALL WORK      */
/* DISTXT:  ENTRY (XC8, XTD,XL,T, RCODE);  GET DISPLAY TEXT  */
```

FILE: QKSHOP1  PLIOPT   A   SAN JOSE RESEARCH LABORATORY - VM/SP CMS (1.11)

```
/* RPLTXT:  ENTRY (XC8, XSR,XL,T, RCODE);   GET REPLY OPTIONS TEXT */
/* INXDATA: ENTRY (XC20,XSI,XL,T, RCODE);   GET INDEX DATA        */
/* PASSWD:  ENTRY (C12, C8, T, RCODE);   FETCH CUSTOMER PASSWORD  */
/* ===================================================================== */

DSPLAY: PROC;
        /* BRANCHES ON DTYPE, RETRIEVES TEXT DATA USING DTYPE AND
           STORES IN TXT.
           GENERATES STARTING LOCATION OF DISPLAY AND STORES IN SLOC.
           GENERATE WIDTH OF DISPLAY WITHIN SCREEN AND STORE IN DW.
           LENGTH OF DISPLAY WITHIN SCREEN, STORE IN DL.
           FOREGROUND COLOR, STORE IN DCOL.
           BACKGROUND COLOR, STORE IN BKCOL.
           FONT, STORE IN DFON.
           NUMBER OF LINES OF DISPLAY, STORE IN DL.
           CALL THE APPROPRIATE ROUTINES TO DISPLAY INFORMATION
           DEPENDING UPON THE DISPLAY TERMINAL.
           0 VALUE OF ANY PARAMETER WILL IMPLY THAT THE
           PARAMERTER IS NOT BEING USED.            */

   DCL (II,III)  BIN FIXED;
   IF SUBSTR(DTYPE,1,5) ¬= 'BUYOO' THEN /* DO NOT MODIFY XSR HDR */
     XSRHM_BIT = '0'B;

   IF ¬NODATA_BIT THEN /* INITIALIZE THE DATA PARAMETERS */
   DO;
     MORESC_BIT = '0'B;
     SDLXSR = 0; NXSRL = 0; SHDL = 0; SDL = 0; NHL = 0;
     NSPL = 0;  LSPL = 0; NSOFTKEY = 0; NBL = 0;
     SOFTKEYTAB = '';
     SPSCBOT_BIT = '0'B; SPTXT_BIT = '0'B; SOFTKEY_BIT = '0'B;
     ITEMWSOFT_BIT = '1'B;
     END;
   IF SUBSTR(DTYPE,1,5) = 'ITEMO' &
      SUBSTR(SNL.STATEN(DTYPEIXSV(STACK)),1,5) = 'INDEX' THEN
        /* SAVE ITEM STATE */
     DO;
       IF SUBSTR(REPLYFLD,1,1) = 'B' THEN /* ITEM ARRIVED FORM
                                             BACKUP FROM DEMO */
       DO;  /* SET SVNSTATE */
         II = MOD(STACK-2,STACKSIZ) + 1;
         IF TERMINAL = 'IBM3277' | TERMINAL = 'IBM3279' THEN
           /* SET SVNSTATE FROM REPLYSV(STACK) */
           SVNSTATE(STACK) = REPLYSV(STACK);
         ELSE IF TERMINAL = 'IBMPC ' THEN
           /* SET SVNSTATE FROM REPLYSV(STACK-1) */
           SVNSTATE(STACK) = REPLYSV(II);
         END;
       SVIXTM = SVNSTATE(STACK);
       END; /* OF SAVING ITEM STATE */
   IF DTYPE = 'FISCO000' | DTYPE = 'REQ00000' THEN
     XC8 = DTYPE;
   ELSE IF SUBSTR(DTYPE,1,5) = 'DEMOO' &
       SUBSTR(SVNSTATE(STACK-1),1,6) = 'ITEMOD' THEN
     XC8 = DEMOITM;
```

FILE: QKSHOP1  PLIOPT   A    SAN JOSE RESEARCH LABORATORY - VM/SP CMS (1.11)

```
    ELSE IF (SUBSTR(DTYPE,1,5) = 'ITEMO' |
        (SUBSTR(DTYPE,1,5) = 'DEMOO' &
         SVNSTATE(STACK) = 'DEMOO000' &
        SUBSTR(SVNSTATE(STACK-1),1,6) ¬= 'ITEMOD')) THEN
    XC8 = SVIXTM;
    ELSE XC8 = SVNSTATE(STACK);

    IF ¬NODATA_BIT & DTYPE = 'INDEX000' & BRANDIX_BIT THEN
                    /* BRAND INDEX */
        SUBSTR(XC8,6,1) = 'B';
    IF DTYPE = 'FISC0000'
    THEN DO;  /* SCREEN FOR CUSTOMERID */
      IF TERMINAL = 'IBMPC ' THEN  /* WAIT FOR CUSTOMERID */
        DO; DISPLAY('#@/ENTER CUSTOMER ID./@#');
            DISPLAY('#/++/#') REPLY(REPLYFLD); END;
      ELSE  IF ¬NODATA_BIT THEN  /* NON IBMPC AND DATA NEEDED */
        DO;  /* FETCH DATA USING RPLTXT, SET DFON, AND PREPROCESSING
                BEFORE DISPLAY REQUEST EXCEPT FOR IBMPC  */
          XSR.DFCL = 0; XSR.DBCL = 0; XSR.DSL = 0; XSR.REPID = '';
          XSR.RLOC = ''; XSR.CLOC = '';  XSR.IVF = 0;
          XSR.STREP = '';  XSR.REPTXT = '';  XSR.NSTATE = '';
          XSR_BIT = '1'B;   XTD_BIT = '0'B; XSI_BIT = '0'B;
          CALL RPLTXT(XC8,XSR,XL,STMT,RCODE);
          SHDL = 1; SDL = 0; NHL = 3;
          DL = XL;
          II = XSR.RLOC(SHDL); III = XSR.CLOC(SHDL) + 15;
          SLOC = (II - 1)*80 + III; DW = 1;
          IF XSR.DSL(SHDL) = 1 THEN DFON = 'ITALIC';  /* ITALIC FONT  */
          IF XSR.DSL(SHDL) = 0 THEN DFON = '0';  /* STANDARD FONT  */
          IF ¬WNGRPLY_BIT THEN SPSCBOT  = ' ENTER CUSTOMER ID ';
          SPSCBOT_BIT = '1'B; STSCBOT_BIT = '0'B;
          END;  /* OF DATA ACQUIRING BY RPLTXT AND PREPROCESSING */
      STACK = MOD(STACK,STACKSIZ) + 1;
      SCSTACK = MOD(SCSTACK,STACKSIZ) + 1;
      REPLYSV(SCSTACK) = 'FISC000001';
      REPLYSV(SCSTACK-1)= 'FISC000001';
      SVBACKUPSC(SCSTACK) = REPLYSV(SCSTACK);
      SVBACKUPSC(SCSTACK-1) = REPLYSV(SCSTACK);
      SVNSTATE(STACK) = 'REQ00000';
      SVCV(STACK) = XSR.IVF(SHDL);
      END;  /* OF FISC0000  */

    ELSE IF ¬NODATA_BIT  & ( SUBSTR(DTYPE,1,5) = 'ITEMO' |
                             SUBSTR(DTYPE,1,5) = 'WARRO' |
                             SUBSTR(DTYPE,1,5) = 'SALEO' |
                             SUBSTR(DTYPE,1,5) = 'DEMOO') THEN
            /* FETCH DATA USING RPLTXT, DISTXT, ITEMINF AND
               IPRICE AND SET DFONT    */
    DO;  /* FETCH DATA IF REQUEST NOT MORE */
      XTD.DFCL = 0; XTD.DBCL = 0; XTD.DSL = 0; XTD.TTX = '';
      XTD_BIT = '1'B;
      IF ¬(SUBSTR(DTYPE,1,5) = 'WARRO' |
           SUBSTR(DTYPE,1,5) = 'SALEO') THEN /* GET ITEM TEXT AND
                         ITEM INFORMATION */
        DO;
```

FILE: QKSHOP1  PLIOPT   A   SAN JOSE RESEARCH LABORATORY - VM/SP CMS (1.11)

```
    CITEM.IIT = ''; CITEM.INM = ''; CITEM.COLOR = '';
    CITEM.SIZE = ''; CITEM.MODEL = ''; CITEM.QUAN = 0;
    CITEM.STREP = ''; CITEM.IEP = 0;
    CITEM.IIT = XC8;

    II = 0;
    TSOFTKEY_BIT = '0'B;
    IF SUGITM_BIT THEN  /* DELETE CITEM.IIT FROM SUGITM TABLE */
    DO WHILE (II < NSUGITM+1);
      II = II + 1;
      IF SUGITM.NSTATE(II) = CITEM.IIT THEN /* SUGGESTED ITEM
                                                 LOCATED  */
      DO;
        DO III = II TO NSUGITM;  /* ELIMINATE CITEM.IIT */
          SUGITM(III) = SUGITM(III+1);
          END;   /* OF ELIMINATING CITEM.IIT  */
        II = NSUGITM + 1;  /* EXIT FROM II LOOP */
        NSUGITM = NSUGITM - 1;
        END;  /* OF HANDLING SUGGESTED ITEM */
      END; /* OF SEARCHING SUGITM TABLE */

    CALL DISTXT(XC8,XTD,XL,STMT,RCODE); /* GET ITEM TEXT */
    SHDL = 1; SDL = 2; NHL = 1;
    DL = XL;
    II = 2; III = 1;
    SLOC = (II - 1)*80 + III; DW = 1;
    IF XTD.DSL(SHDL) = 1 THEN DFON = 'ITALIC';  /* ITALIC FONT  */
    IF XTD.DSL(SHDL) = 0 THEN DFON = '0';  /* STANDARD FONT  */

    XI.IIT = ''; XI.IIC = ''; XI.IODN = ''; XI.ICIT = '';
    XI.INM = ''; XI.IVF = 0; XI.IFM = 0; XI.ILM = 0;
    XI.IFC = 0; XI.ILC = 0; XI.IEC = 0;
    CALL ITEMINF(XC8,XI,STMT,RCODE); /* GET ITEM INFORMATION */
    END;  /* OF FETCHING ITEM TEXT & INFORMATION */
  ELSE IF SUBSTR(DTYPE,1,5) = 'WARRO' THEN  /* GET WARRENTY
                                                 TEXT */
  DO;
    XTD.TTX(1) = ' WARRANTY FOR '; /* FIRST LINE FOR WARRANTY */
    XTD.TTX(2) = XI.INM; /* ITEM NAME */
    SHDL = 1; SDL = 3; NHL = 2;
    CALL WARRTXT(CITEM,XTD,XL,STMT,RCODE); /* GET WARR TEXT */
    DL = XL;
    II = 2; III = 1;
    SLOC = (II - 1)*80 + III; DW = 1;
    END;  /* OF FETCHING WARRANTY TEXT & INFORMATION */

        /* GET SALE INFORMATION */

  CALL SALETXT(CITEM,XS,XL,STMT,RCODE); /* GET SALE TEXT */
  SPCT = 100;   /* NO SALE DISCOUNT */
  IF XS.ISP(1) = 'S1       ' THEN SPCT = 90; /* 10% DISCOUNT
                                                 ON PRICE */
    ELSE IF XS.ISP(1) = 'S2       ' THEN SPCT = 95; /* 5%
                                                 DISCOUNT ON PRICE */
  IF SUBSTR(DTYPE,1,5) = 'SALEO' THEN  /* ADJUST DL  */
```

FILE: QKSHOP1  PLIOPT   A   SAN JOSE RESEARCH LABORATORY - VM/SP CMS (1.11)

```
DO;
  DL = XL;
  II = 2; III = 1;
  SLOC = (II - 1)*80 + III; DW = 1;
  END;  /* OF ADJUSTING DL FOR SALE0  */
       /* END OF FETCHING SALE INFORMATION */

IF  SUBSTR(DTYPE,1,5) = 'ITEM0' & SUBSTR(XC8,1,4) ¬= 'DEMO' &
    SUBSTR(DTYPE,1,5) ¬= 'WARR0'
THEN
       /* GET ITEM PRICE */
DO;
  XP.IIT = ''; XP.IODN = ''; XP.IRP = 0; XP.IPQ = 0;
  XP.PSD = ''; XP.PED = ''; XP.IEP = 0;
  CALL IPRICE(XC8,XP,STMT,RCODE); /* GET ITEM PRICE */
   XP.IEP = XP.IEP*SPCT;  /* ADJUST FOR SALE DISCOUNT */
  IF  SUBSTR(DTYPE,1,5) ¬= 'SALE0'  THEN
  DO; /* DISPLAY PRICE AS SPECIAL TEXT */
    SPTXT_BIT = '1'B;
    NSPL = NSPL + 1;  LSPL = 80;
    CH14 = XP.IEP;
    SPTXT(NSPL) = ' THE PRICE OF EACH UNIT IS '
        ||SUBSTR(CH14,6,5)||'.'||SUBSTR(CH14,11,2);
    END;  /* OF PRICE AS SPECIAL TEXT */
  END;  /* OF GETTING ITEM PRICE */

XSR.DFCL = 0; XSR.DBCL = 0; XSR.DSL = 0; XSR.REPID = '';
XSR.RLOC = ''; XSR.CLOC = ''; XSR.IVF = 0;
XSR.STREP = '';  XSR.REPTXT = '';  XSR.NSTATE = '';
XSR_BIT = '1'B;
IF SUBSTR(SVIXTM,1,4) ¬= 'DEMO' THEN XC8 = DTYPE;
CALL RPLTXT(XC8,XSR,XL,STMT,RCODE); /* GET ITEM OPTIONS */
SDLXSR = 1; NXSRL = XL - SDLXSR + 1;
IF SUBSTR(DTYPE,1,5) = 'WARR0' |
   SUBSTR(DTYPE,1,5) = 'SALE0' THEN  /* SET  FONT FROM XSR */
DO;
  IF XSR.DSL(1) = 1 THEN DFON = 'ITALIC';  /* ITALIC FONT  */
  IF XSR.DSL(1) = 0 THEN DFON = '0';  /* STANDARD FONT  */
  DO II = 1 TO DL;  /* MOVE COLOR AND FONT INF TO XTD */
    XTD.DFCL(II) = XSR.DFCL(1); XTD.DBCL(II) = XSR.DBCL(1);
    XTD.DSL(II) = XSR.DSL(1);
    END; /* OF II LOOP */
  IF  SUBSTR(DTYPE,1,5) = 'SALE0' THEN  /* TRANSFER DATA
                     FROM XS AND XSR TO XTD */
  DO;
    IF XS.SSD(1) = '       0' THEN  /* ITEM NOT ON SALE */
    DO;
      DO II = 1 TO DL;  /* MOVE XS.STXT TO  TTX */
        XTD.TTX(II) = XS.STXT(II);
        END; /* OF II LOOP */
      CH14 = XP.IEP;
      XTD.TTX(DL+1) = ' THE CURRENT PRICE OF EACH UNIT IS '
         ||SUBSTR(CH14,6,5)||'.'||SUBSTR(CH14,11,2);
      SHDL = 0; SDL = 1; NHL = 0; DL = DL + 1;
      SDLXSR = 6; NXSRL = XL - SDLXSR + 1;
```

FILE: QKSHOP1  PLIOPT  A  SAN JOSE RESEARCH LABORATORY - VM/SP CMS (1.11)

```
            XTD.DFCL(DL) = XSR.DFCL(1); XTD.DBCL(DL) = XSR.DBCL(1);
            XTD.DSL(DL) = XSR.DSL(1);
            END;  /* OF ITEM NOT ON SALE */
          ELSE  /* ITEM  ON SALE */
          DO;
            XSR.REPTXT(2) = 'SALE STARTED ON '||XS.SSD(1)||
              ', ENDS '||XS.SED(1);
            CH14 = XP.IEP;
            XSR.REPTXT(3) = 'SALE PRICE IS '
              ||SUBSTR(CH14,6,5)||'.'||SUBSTR(CH14,11,2);
            CH14 = XP.IRP;
            XSR.REPTXT(4) = 'REGULAR PRICE IS '
              ||SUBSTR(CH14,8,5)||'.'||SUBSTR(CH14,13,2);
            SHDL = 1; SDL = 6; NHL = 5; DL = NXSRL;
            XTD_BIT = '0'B;
            END;  /* OF ITEM ON SALE */
          END;  /* OF HANDLING SALE0  */

        END;  /* SETTING FONT FOR WARRANTY AND SALE INF */
      END;  /* OF DATA ACQUIRING FOR ITEM PREPROCESSING */


    ELSE IF ¬NODATA_BIT  THEN
            /* FETCH DATA USING RPLTXT, SET DFON, AND PREPROCESSING
               BEFORE DISPLAY REQUEST   */
    DO;   /* FETCH DATA IF REQUEST NOT MORE */
      XSR.DFCL = 0; XSR.DBCL = 0; XSR.DSL = 0; XSR.REPID = '';
      XSR.RLOC = ''; XSR.CLOC = ''; XSR.IVF = 0;
      XSR.STREP = '';  XSR.REPTXT = '';  XSR.NSTATE = '';
      XSR_BIT = '1'B;   XTD_BIT = '0'B; XSI_BIT = '0'B;

      IF DTYPE = 'COLOR000' | DTYPE = 'SIZE0000' |
        DTYPE = 'MODEL000' THEN
          /* FETCH DATA USING ITEMCSM   */
      DO;
        XSR.NSTATE(1) = DTYPE;
        CALL ITEMCSM(CITEM,MSCI,XSR,XL,STMT,RCODE);
        IF RCODE < 0 THEN /* ITEM OUT OF STOCK */
        DO;
          ERTBL = ''; ERLN = 2; ERTYP = 'ERRORNOSTK';
          ERTBL(1) =  XSR.REPTXT(XL);
          ERTBL(2) = ' PLEASE BACKUP.';
          CALL ERPAC;
          CALL RPLTRANS;
          RETURN;
          END; /* OF ITEM OUT OF STOCK HANDLING */
        END;  /* OF DATA ACQUIRING BY ITEMCSM PREPROCESSING */

      ELSE IF SUGITM_BIT & DTYPE = 'INDEX000' THEN
            /* FILL XSR FROM SUGITM */
      DO;
        IF NSUGITM < 1 THEN /* NO SUGGESTED ITEM */
        DO;
          ERTBL = ''; ERLN = 2; ERTYP = 'ERRORNOSUG';
          ERTBL(1) = ' NO SUGGESTED ITEMS.';
```

FILE: QKSHOP1  PLIOPT   A    SAN JOSE RESEARCH LABORATORY - VM/SP CMS (1.11)

```
        ERTBL(2) = ' PLEASE BACKUP.';
        CALL ERPAC;
        CALL RPLTRANS;
        RETURN;
        END; /* OF NO SUGGESTED ITEMS HANDLING */
      ELSE DO;  /* TRANSFER SUGGESTED ITEMS TO XSR */
        XL = NSUGITM + 1;
        DO II = 1 TO NSUGITM + 1;
          XSR(II) = SUGITM(II);
          SUBSTR(XSR.STREP(II),1,8) = SUGITM.NSTATE(II);
          END;  /* OF II LOOP */
      END;  /* OF ATLEAST ONE SUGGESTED ITEM */
    END; /* OF FILLING XSR FROM SUGITM TABLE */

    ELSE CALL RPLTXT(XC8,XSR,XL,STMT,RCODE);

    SHDL = 1; SDL = 2; NHL = 1; NXSRL = XL - NHL;
    SDLXSR = SDL; DL = XL;


    IF SUBSTR(DTYPE,1,5) = 'INDEX'  & NXSRL < 1 THEN
              /* SELECTED ITEM NOT IMPLEMENTED */
        DO;
          ERTBL = ''; ERLN = 3; ERTYP = 'ERRORNOTIM';
          ERTBL(1) = ' ERROR: ITEM NOT IMPLEMENTED.';
          ERTBL(2) = ' OR OUT OF STOCK.';
          ERTBL(3) = ' PLEASE BACKUP';
          CALL ERPAC;
          SUBSTR(REPLYFLD,1,1) = 'B'; /* REPLY BACKUP */
          IF TERMINAL = 'IBMPC ' &  REPLYMODE = 'PCKP' THEN
            SUBSTR(REPLYFLD,2,1) = 'Y';
          RETURN;
          END;  /* OF HANDLING NOT IMPLEMENTED CASE */

  IF SUBSTR(DTYPE,1,5) = 'INDEX' & ¬SUGITMHDR_BIT THEN
              /* FILL HEADER OF SUGITM TABLE */
    DO;
      SUGITM(1) = XSR(1);
      SUGITM.REPTXT(1) = 'SELECT A SUGGESTED ITEM ';
      SUGITMHDR_BIT = '1'B;
      END; /* OF HEADER FOR SUGITM TABLE */

    IF SUBSTR(DTYPE,1,5) = 'BQ000' THEN
                    /* PUT ITEM REQUESTED IN HDR */
      DO;
        XSR(4) = XSR(1);  /* MOVE HEADER TO LINE 4 */
        XSR.REPTXT(1) = CITEM.INM; XSR.RLOC(1) = ' 2';
        XSR(2) = XSR(1);  XSR.RLOC(2) = ' 4';
        XSR.REPTXT(2) = ' COLOR = '||CITEM.COLOR||
                        ' SIZE = '||CITEM.SIZE;
        XSR(3) = XSR(1);  XSR.RLOC(3) = ' 6';
        XSR.REPTXT(3) = ' MODEL = '||CITEM.MODEL;
        XL = 1;  DL = XL; NHL = 4; SDL = DL + 1;
        END;
      IF SUBSTR(DTYPE,1,5) = 'BUY00' &
```

FILE: QKSHOP1  PLIOPT   A   SAN JOSE RESEARCH LABORATORY - VM/SP CMS (1.11)

```
        (SUBSTR(SNL.STATEN(DTYPEIXSV(STACK)),1,5) = 'BQ000' |
         SUBSTR(SNL.STATEN(DTYPEIXSV(STACK)),1,5) = 'BUY00')  THEN
                       /* FILL XSR FROM SVITM   */
     DO;
       IF SUBSTR(SNL.STATEN(DTYPEIXSV(STACK)),1,5) = 'BQ000' &
          ¬XSRHM_BIT & REPLYFLD ¬= 'BACKUP' THEN
          /* TRANSFER CURRENT ITEM TO SVITM  */
       DO;
         NUITEM = NUITEM + 1;
         SVITM.IIT(NUITEM) = CITEM.IIT;
         SVITM.INM(NUITEM) = CITEM.INM;
         SVITM.COLOR(NUITEM) = CITEM.COLOR;
         SVITM.SIZE(NUITEM) = CITEM.SIZE;
         SVITM.MODEL(NUITEM) = CITEM.MODEL;
         SVITM.QUAN(NUITEM) = CITEM.QUAN;
         SVITM.STREP(NUITEM) = CITEM.STREP;
         SVITM.IEP(NUITEM) = CITEM.IEP;

               /* GET SUGGESTED ITEMS  */
         CALL SUGGITM(SVITM.IIT(NUITEM),XCI,XL1,STMT,RCODE);
         IF XL1 > 0 THEN  /* SUGGESTED ITEMS FETCHED */
         DO;
           DO IX = 1 TO XL1; /* CHECK IX COMP. ITEMS ARE NEW */
             NEWSUGITM_BIT = '1'B;  /*  NEW SUGGESTED ITEM */
             DO II = 1 TO NUITEM;  /* CHECK SVITM FOR NEW ITEM */
               IF SVITM.IIT(II) = XCI.ICIT(IX) THEN /* SUGGESTED
                         ITEM HAS BEEN ALREADY SELECTED */
               NEWSUGITM_BIT = '0'B;
             END;  /* OF CHECKING SVITM TABLE */
             DO II = 1 TO NSUGITM + 1; /* CHECK SUGITM FOR
                                          NEW ITEM  */
               IF SUGITM.NSTATE(II) = XCI.ICIT(IX) THEN /* SUGGESTED
                         ITEM HAS BEEN ALREADY SELECTED */
               NEWSUGITM_BIT = '0'B;
             END;  /* OF CHECKING SUGITM TABLE */
             IF NEWSUGITM_BIT THEN  /* SAVE COPM. ITEM */
             DO;
               NSUGITM = NSUGITM + 1;
               CH9 = NSUGITM;
               SUGITM.REPID(NSUGITM+1) = SUBSTR(CH9,5,5);
               SUGITM.PURIIT(NSUGITM+1) = XCI.IIT(IX);
               SUGITM.DFCL(NSUGITM+1) = SUGITM.DFCL(NSUGITM);
               SUGITM.DBCL(NSUGITM+1) = SUGITM.DBCL(NSUGITM);
               SUGITM.DSL(NSUGITM+1) = SUGITM.DSL(NSUGITM);
               II = 2*MOD((NSUGITM-1),MSCI) + 4;
               CH9 = II;  /* ROW LOCATION */
               SUGITM.RLOC(NSUGITM+1) = SUBSTR(CH9,8,2);
               II = SUGITM.CLOC(NSUGITM);
               IF II < 1 THEN
               DO; II = 1; CH9 = II;
                 SUGITM.CLOC(NSUGITM+1) = SUBSTR(CH9,9,1);
               END;
               ELSE SUGITM.CLOC(NSUGITM+1) = SUGITM.CLOC(NSUGITM);
               CALL ITEMNM(XCI.ICIT(IX),SUGITM.REPTXT(NSUGITM+1),
                         STMT,RCODE);  /* GET COMP. ITEM NAME
```

FILE: QKSHOP1  PLIOPT   A   SAN JOSE RESEARCH LABORATORY - VM/SP CMS (1.11)

```
                                      IN SUGITM.REPTXT */
          SUGITM.NSTATE(NSUGITM+1) = XCI.ICIT(IX);
          SUGITM.IVF(NSUGITM+1) = XCI.IEC(IX);
          END;  /* OF SAVING COMP. ITEM IN SUGITM TABLE */
        END;  /* OF IX LOOP */
      END;  /* OF SAVING SUGGESTED ITEMS */
    END;  /* OF CTIEM TO SVITM TRANSFER */

        /* MODIFY HEADER FOR INSUFFICIENT CREDIT */
IF XSRHM_BIT THEN
DO;
  CH14 = OVERCHG;
  XSR.REPTXT(1) = 'YOUR PURCHASE REQUEST EXCEEDS CREDIT BY '
    ||SUBSTR(CH14,8,5)||'.'||SUBSTR(CH14,13,2);
  END;  /* OF MODIFYING XSR HEADER */

      /* TRANSFER SECOND TUPLE OF XSR TO LAST TUPLE */
NXSRL = NXSRL + NUITEM;
IX = XL + NUITEM + 1;
SDLXSR = SDLXSR + 1;  /* ITEMS START INCREASED BY 1 */
    /* MOVE THE TWO SOFTKEYS TO THE LAST TWO ELEMENTS OF
              XSR   */
XSR(IX-1) = XSR(2); XSR(IX) = XSR(3);
    /* INSERT A SECOND HEADER IN XSR */
XSR.REPID(2) = XSR.REPID(1);
XSR.STREP(2) = XSR.STREP(1);
XSR.DFCL(2) = XSR.DFCL(1);
XSR.DBCL(2) = XSR.DBCL(1);
XSR.DSL(2)  = XSR.DSL(1);
XSR.RLOC(2) = ' 4';
XSR.CLOC(2) = ' 1';
XSR.NSTATE(2) = XSR.NSTATE(1);
XSR.IVF(2)  = XSR.IVF(1);
XSR.REPTXT(2) = ' ITEM     ITEM NAME       '||
  '     COLOR  SIZE   MODEL   QTY  AMOUNT ';
AMOUNT = 0;
DO II = 1 TO NUITEM; /* MOVE REQUESTED ITEMS INTO XSR */
  CH9 = II;
  XSR.REPID(II+2) = SUBSTR(CH9,5,5);
  XSR.STREP(II+2) = SVITM.STREP(II);
  XSR.DFCL(II+2) = XSR.DFCL(IX);
  XSR.DBCL(II+2) = XSR.DBCL(IX);
  XSR.DSL(II+2)  = XSR.DSL(IX);
  IZ = 2*(NHL+2) + II - 1;
  CH9 = IZ;
  XSR.RLOC(II+2) = SUBSTR(CH9,8,2);
  XSR.CLOC(II+2) = ' 2';
  XSR.NSTATE(II+2) = 'BUY00000';
  XSR.IVF(II+2)  = XSR.IVF(IX);
  CH14 = SVITM.QUAN(II); CH9 = SUBSTR(CH14,6,9);
  IAM = SVITM.QUAN(II)*SVITM.IEP(II); /* TOTAL AMOUNT OF
                  PURCHASE OF AN ITEM */
  AMOUNT = AMOUNT + IAM;
  CH14 = IAM;
  FTXT = SVITM.INM(II);
```

FILE: QKSHOP1  PLIOPT   A   SAN JOSE RESEARCH LABORATORY - VM/SP CMS (1.11)

```
        IZ = 41;  CALL ELTRBLK(IZ,FTXT); IZ = IZ - 1;
        IY = 40;  CALL ELLDBLK(IY,FTXT);
        IF IZ-IY+1 > 27 THEN IZ = 27;
        ELSE IZ = IZ-IY+1;
        IF IZ < 1 THEN   /* ERROR IN LENGTH OF STRING */
          CALL ERRORST;
        SUBSTR(XSR.REPTXT(II+2),1,27) =
             SUBSTR(FTXT,IY,IZ);
        SUBSTR(XSR.REPTXT(II+2),29) =
           SVITM.COLOR(II)||SUBSTR(SVITM.SIZE(II),1,3)||
           SUBSTR(SVITM.MODEL(II),1,11)||SUBSTR(CH9,7,3)||
           SUBSTR(CH14,6,5)||'.'||SUBSTR(CH14,11,2);
        END;  /* OF MOVING REQUESTED ITEMS INTO XSR  */
     XL = XL + NUITEM + 1;  DL = XL;  NHL = 2;  SDL = NHL + 1;
     SPTXT_BIT = '1'B;
     NSPL = NSPL + 1;  LSPL = 80;
     TAX = (AMOUNT*6)/100;
     CH14 = TAX;
     SPTXT(NSPL) = ' THE SALES TAX ON  ALL YOUR REQUESTED '||
        'MERCHANDIZE IS       '||
           SUBSTR(CH14,6,5)||'.'||SUBSTR(CH14,11,2);
     NSPL = NSPL + 1;
     TOTAL = AMOUNT + TAX;    .
     CH14 = TOTAL;
     SPTXT(NSPL) = ' THE TOTAL PRICE FOR ALL YOUR REQUESTED '||
        'MERCHANDIZE IS       '||
           SUBSTR(CH14,6,5)||'.'||SUBSTR(CH14,11,2);
     NSPL = NSPL + 1;
     NBL = 1;  /* ONE BLANK LINE BEFORE NEXT TEXT */
     IF XSRHM_BIT THEN  /* CREDIT EXCEEDED DELETE ITEM */
     SPTXT(NSPL) = ' PLEASE DELETE SOME ITEMS TO REDUCE TOTAL '
                     ||'AMOUNT.';
     ELSE
     SPTXT(NSPL) = ' TO DELETE A SELECTED ITEM-ENTER ITEM NUMBER';
     END;  /* GENERATING DATA IN XSR FOR BUY000  */

II = DL - SDL + 1;
IF II > MSCI THEN NSL = MSCI;
  ELSE NSL = II;
II = XSR.RLOC(SHDL); III = XSR.CLOC(SHDL);
IF III = 0 THEN /* CENTER DISPLAY */
DO;
   III = 75; CALL ELTRBLK(III,XSR.REPTXT(SHDL));
   III = (75 - III)/2;
   END;  /* OF CENTERING HEADER */
SLOC = (II - 1)*80 + III; DW = 1;
IF XSR.DSL(SHDL) = 1 THEN DFON = 'ITALIC';  /* ITALIC FONT */
IF XSR.DSL(SHDL) = 0 THEN DFON = '0';  /* STANDARD FONT */
END;  /* OF DATA ACQUIRING  PREPROCESSING */

           /* FILL THE SOFT KEY TABLE IF ANY */
IF ¬NODATA_BIT  & XSR_BIT THEN   /* CHECK FOR SOFT KEY */
DO;
   IF NXSRL = 0 THEN NXSRL = XL;
   IX = 0;  II = SDLXSR - 1;
```

FILE: QKSHOP1  PLIOPT   A    SAN JOSE RESEARCH LABORATORY - VM/SP CMS (1.11)

```
DO WHILE( II < SDLXSR + NXSRL - 1);
  II = II + 1;
  IF SUBSTR(XSR.STREP(II),8,2) = 'SK' THEN /* SOFT KEY */
  DO;  /* FILL SOFTKEYTAB AND ELIMINATE FROM XSR */
    IX = IX + 1;
    IF IX > 4 THEN /* ERROR */
    DO;
      ERTBL = ''; ERLN = 1; ERTYP = 'ERRORSOKEY';
      ERTBL(1) = ' ERROR: NUMBER OF SOFT KEYS EXCEED 4.';
      CALL ERPAC;
      GOTO DONE;
      END;  /* OF ERROR HANDLING */
        /* TRANSFER SOFT KEY INTO SOFTKEYTAB */
    SOFTKEYTAB.SKEY(IX) = SUBSTR(XSR.REPID(II),5,1);
    SOFTKEYTAB.RLOC(IX) = XSR.RLOC(II);
    SOFTKEYTAB.CLOC(IX) = XSR.CLOC(II);
    III = 41; FTXT = XSR.REPTXT(II);
    IY = 40;
    CALL ELTRBLK(III,FTXT); III = III - 1;
    CALL ELLDBLK(IY,FTXT);
    IF III-IY+1 < 1 THEN  /* ERROR IN LENGTH OF STRING */
      CALL ERRORST;
    SOFTKEYTAB.SKNAME(IX) = SUBSTR(FTXT,IY,III-IY+1);
    SOFTKEYTAB.NSTATE(IX) = XSR.NSTATE(II);
        /* REMOVE SOFT KEY FROM XSR */
    III = II - 1;
    DO WHILE( III < SDLXSR + NXSRL - 1);
      III = III + 1;
      XSR.REPID(III) = XSR.REPID(III+1);
      XSR.STREP(III) = XSR.STREP(III+1);
      XSR.DFCL(III) = XSR.DFCL(III+1);
      XSR.DBCL(III) = XSR.DBCL(III+1);
      XSR.DSL(III)  = XSR.DSL(III+1);
      XSR.RLOC(III) = XSR.RLOC(III+1);
      XSR.CLOC(III) = XSR.CLOC(III+1);
      XSR.REPTXT(III) = XSR.REPTXT(III+1);
      XSR.NSTATE(III) = XSR.NSTATE(III+1);
      XSR.IVF(II)   = XSR.IVF(II+1);
      END; /* OF III LOOP */
    II = II - 1;
    NXSRL = NXSRL- 1;
    SOFTKEY_BIT = '1'B;
    END;  /* OF TRANSFERING SOFT KEY DATA */
  END;  /* OF II LOOP  */
  IF NXSRL = 0 | SUBSTR(DTYPE,1,5) = 'SALEO' THEN
    /* NO ITEM WITH SOFT KEY */
    ITEMWSOFT_BIT = '0'B;
  NSOFTKEY = IX;
  END; /* OF FILLING SOFTKEY DATA  */

IF ¬NODATA_BIT THEN /* ELIMINATE CODES FROM TEXT */
DO;
  III = MAX(DL,NXSRL);
  DO II = 1 TO III; /* ELIMINATE '""' FORM TEXT DATA */
    IF XTD_BIT THEN DO;
```

FILE: QKSHOP1  PLIOPT   A    SAN JOSE RESEARCH LABORATORY - VM/SP CMS (1.11)

```
        IF SUBSTR(XTD.TTX(II),1,1) = '*' THEN
          SUBSTR(XTD.TTX(II),1,1) = ' ';
        IX = INDEX(XTD.TTX(II),'""');
        IF IX ¬= 0 THEN SUBSTR(XTD.TTX(II),IX,2) = '  ';
        IF SUBSTR(XTD.TTX(II),74,1) = '*' THEN
          SUBSTR(XTD.TTX(II),74,1) = ' ';
      END;
    IF XSR_BIT THEN DO;
      IX = INDEX(XSR.REPTXT(II),'""');
      IF IX ¬= 0 THEN SUBSTR(XSR.REPTXT(II),IX,2) = '  ';
      END;
    END;  /* OF II LOOP  */
  END; /* ELIMINATING CODES FROM TEXT DATA */

 IF DTYPE = 'MODEL000' & NXSRL = 1 THEN /* ASSUME THAT THE USER
             SELECT THE ONLY MODEL. DO NOT DISPLAY */
 DO;
   IF REPLYFLD = 'BACKUP' THEN /* DO NOT CHANGE REPLYFLD */
   DO;
     REPLYFLD = '';
     SUBSTR(REPLYFLD,1,1) = 'B';
     IF TERMINAL = 'IBMPC  ' &  REPLYMODE = 'PCKP' THEN
       SUBSTR(REPLYFLD,2,1) = PCKPRP2;
     END;
   ELSE
   DO;
     REPLYFLD = '';
     SUBSTR(REPLYFLD,1,1) = '1';
     IF TERMINAL = 'IBMPC  ' &  REPLYMODE = 'PCKP' THEN
     SUBSTR(REPLYFLD,2,1) = 'Y';
     END;
   RETURN; /* TO RPLTRANS  */
   END;  /* OF SKIPING MODEL DISPLAY */

       /* ADJUST FOR MORE SCREEN */
 IF SUBSTR(DTYPE,1,5) ¬= SUBSTR(STATEN(DTYPEIXSV(STACK)),1,5) &
    SUBSTR(REPLYFLD,1,1) ¬= 'B'
   THEN INMORESC =  SVINMORESC;
 ELSE INMORESC = 0;

 IF SUBSTR(REPLYFLD,1,1) = 'M' THEN /* SAVE SERIAL NUMBER
                                    OF MORE SCREEN */
   SVINMORESC = DIVIDE(SDL,MSCI,6);
 ELSE SVINMORESC = 0;

 SVSCSTACK = SCSTACK;
 IF INMORESC > 0 THEN
 DO;
   STACK = MOD(STACK-INMORESC,STACKSIZ);
   SCSTACK = MOD(SCSTACK-INMORESC,STACKSIZ);
   END;
 REPLYSV(SCSTACK) = REPLYSV(SVSCSTACK);
 IF SUBSTR(REPLYFLD,1,1) = 'N' THEN
   SVBACKUPSC(SVSCSTACK) = 'REQ00000HD';
 ELSE IF  SVBACKUPSC(SVSCSTACK) = ''  &
```

SA9-83-009

0140302

87
-88-

FILE: QKSHOP1 PLIOPT   A   SAN JOSE RESEARCH LABORATORY - VM/SP CMS (1.11)

```
          SUBSTR(REPLYFLD,1,1) = 'B' THEN /* BACKUP ERROR */
   DO;
     IF SVSCSTACK ¬= STACKSIZ THEN
       DO;
         ERTBL = ''; ERLN = 2; ERTYP = 'ERRORBACKS';
         ERTBL(1) = ' ERROR: BACKUP OUT OF PHASE WITH PC.';
         ERTBL(2) = ' SYSTEM ABANDS. PLEASE START AGAIN.';
         CALL ERPAC;
         GOTO DONE;
         END; /* OF ERROR HANDLING */
       END; /* OF HANDLING ¬FISC0000 CASE */
     ELSE  SVBACKUPSC(SCSTACK) = SVBACKUPSC(SVSCSTACK);
       SVBACKUPSC(SCSTACK+1) = REPLYSV(SCSTACK);

   IF TERMINAL = 'IBMPC '   THEN
     CALL PCDSPL;
   IF  TERMINAL = 'IBM3279' | TERMINAL = 'IBM3277' THEN
     CALL DSPL779;

     PCDSPL: PROC ;
       /* SHIP THE FOLLOWING PARAMETER LIST TO PC ONLY IF
          SECOND CHARACTER OF PC REPLY IS Y:
          DTYPE,MLL,NL,DLL,PCFCL,PCBCL,PCFON,PCSRLOC,
          PCSCLOC,XSR.REPTXT OR XTD.TTX TO PC.
          ALL VARIABLES HAVE TO BE TRANSMITTED
          AS CHARACTERS.
          INDEX TO ITEMS WILL BE ATTACHED BY PC.
          IF PC DOES NOT HAVE FONT GENERATOR THEN
          USE DFON AND XSR TO GENERATE TEXT IN SPECIFIED FONT
          USING PCCHAR AND STORE IN XSR.
          WAIT FOR REPLY IN PCREP  */

       DCL MLL    VAR CHAR(3);      /* MAXIMUM LINE LENGTH  */
       DCL NL     VAR CHAR(3);      /* NUMBER OF LINES      */
       DCL DLL    VAR CHAR(3);      /* DISPLAY LINE LENGTH  */
       DCL PCFCL      CHAR(3);      /* PC FOREGROUND COLOR */
       DCL PCBCL      CHAR(3);      /* PC BACK GROUND COLOR */
       DCL PCFON      CHAR(2);      /* PC FONT              */
       DCL PCSRLOC VAR CHAR(3);     /* PC SCREEN ROW LOCA.  */
       DCL PCSCLOC VAR CHAR(3);     /* PC SCREEN COL. LOCA. */
       DCL RECHD      CHAR(3);      /* RECORD HEADER        */
       DCL RECTL      CHAR(3);      /* RECORD TAIL          */
       DCL TXT    VAR CHAR(74);     /* TEXT TO BE SEND TO PC */
       DCL SCREENID   CHAR(20);     /* SCREEN ID            */
       DCL CH8        CHAR(8);      /* FIXED 8  CHAR STRING */
       DCL CH10       CHAR(10);     /* FIXED 10 CHAR STRING */
       DCL PCREP      CHAR(32);     /* REPLY FROM PC        */
       DCL (I,IX,II) BIN FIXED;
       DCL IY         BIN FIXED;
       DCL INL        BIN FIXED;    /* NUMBER OF LINES IN HEADER */
       DCL NIS       FIXED BIN;  /* NUMBER OF ITEMS IN THE SCREEN */
       DCL SL         BIN FIXED;    /* STARTING LINE        */
       DCL EL         BIN FIXED;    /* ENDING   LINE        */

              /* COMPUTE SCREEN ID AND SAVE IN SCREENID
```

FILE: QKSHOP1  PLIOPT   A   SAN JOSE RESEARCH LABORATORY - VM/SP CMS (1.11)

```
              FOR USE BY SENDPCTYP */

  RECHD  = '∂‡%'; /* RECORD HEADER FOR SCREEN ID */
  RECTL  = '%‡∂'; /* RECORD TAIL FOR SCREEN ID   */

            /* FIRST SCREENS FOR FISC0000 & REQ00000 */
  IF DTYPE = 'FISC0000' THEN
    CVS.CV1 = XSR.IVF(1);
  ELSE IF DTYPE = 'REQ00000' THEN
    CVS.CV1 = XSR.IVF(SHDL);

            /* CONSTRUCT SCREEN ID */

  SCREENID = '';
  IF SUBSTR(SVCHA20(STACK),1,7) = 'SOFTKEY' THEN /* SOFTKEY */
    FTXT = REPLYSV(SCSTACK-1);
  IF SUBSTR(REPLYFLD,1,1) = 'B' THEN /* SCREEN ID FROM
                                       SVBACKUPSC */
    FTXT = SVBACKUPSC(SCSTACK);
  ELSE FTXT = REPLYSV(SCSTACK);     /* SCREEN ID */

  IX = 21;  CALL ELTRBLK(IX,FTXT); IX = IX - 1;
  IY = 20;  CALL ELLDBLK(IY,FTXT);
  IF IX-IY+1 < 1 THEN  /* ERROR IN LENGTH OF STRING */
    CALL ERRORST;
      SCREENID = RECHD||SUBSTR(FTXT,IY,IX-IY+1)||RECTL;
      IF SUBSTR(REPLYFLD,1,1) ¬= 'B' THEN
      DO; /* CHANGE REPLYSV AND SVBACKUPSC */
        SVBACKUPSC(SCSTACK) = SUBSTR(FTXT,IY,IX-IY+1);
        REPLYSV(SCSTACK-1) = SUBSTR(FTXT,IY,IX-IY+1);
        END;  /* OF NON BACKUP CASE */
      ELSE
        REPLYSV(SCSTACK) = SVBACKUPSC(SCSTACK);

  INL = NHL;          /* NUMBER OF LINES IN HEADER */
  MSCI = MSCL - INL; /* MAX NUMBER OF ITEMS ON A SCREEN */
  IF ¬MORESC_BIT THEN SDL = NHL + 1;
  II = DL -SDL + 1;
  IF II  > MSCI THEN  /* MORE THAN MSCI DISPLAY LINES */
  DO;  EL = SDL + MSCI - 1; MORESC_BIT = '1'B;
    NSL = MSCI;
    END;
  ELSE  /* LESS THAN MSCI DISPLAY LINES */
  DO; EL = DL; MORESC_BIT = '0'B;
    NSL = DL - SDL + 1;
    END;

  IF (REPLYMODE = 'PCKP' & PCKPRP2  = 'Y' ) |
        (LI = 2 & PCKPRP2 ¬= 'N') THEN
            /* SEND SCREEN DISPLAY INFORMATION TO PC */
  DO;
    SUBSTR(REPLYFLD,2,1) = ' ';
           /* SEND HEADER AND ITEMS TO PC */
    DO;
      IF DTYPE = 'REQ00000' THEN /* SET STACK FOR REQ */
```

FILE: QKSHOP1 PLIOPT   A   SAN JOSE RESEARCH LABORATORY - VM/SP CMS (1.11)

```
      DO;
        SVBACKUPSC(SCSTACK) = 'REQ00000HD';
        REPLYSV(SCSTACK) = SVBACKUPSC(SCSTACK);
        FTXT = SVBACKUPSC(SCSTACK);      /* SCREEN ID */
        IX = 21;   CALL ELTRBLK(IX,FTXT); IX = IX - 1;
        IY = 20;   CALL ELLDBLK(IY,FTXT);
        IF IX-IY+1 < 1 THEN  /* ERROR IN LENGTH OF STRING */
        CALL ERRORST;
        SCREENID = RECHD||SUBSTR(FTXT,IY,IX-IY+1)||RECTL;
        SVNSTATE(STACK) = XSR.NSTATE(1);
        SVCV(STACK) = XSR.IVF(SHDL);
        END;
RESD1:     /* SCREEN TRANSMISSION TO PC BEGINS */
CALL SENDPCTYP;  /* SEND PC SCREEN TYPE */
        /* CV1 WAS SAVED FROM LAST REPLYFLD FROM PC */
CALL SEARCHP;
TXT = CVS.PCVC;
CALL SENDPCVDC;  /* SEND PC VIDEO COMMAND IN TXT */
IF SUBSTR(DTYPE,1,5) = 'DEMOO' THEN /* START COMMERCIAL
                                               DISPLAY */
DO;
   IF XI.ILC > XI.IFC & XI.ILC ¬= 0 THEN
   DO;
      DISPLAY('#/%%/#');    /* PAUSE FOR COMPLETION OF
                                    VIDEO COMMAND */
      IF SUBSTR(XI.IIT,1,4) ¬= 'DEMO' THEN
            /* POSITION VIDEO TO START OF COMMERCIAL */
      DO;
         CVS.CV1 = XI.IFC;
         CALL SEARCHP;
         TXT = CVS.PCVC;
         CALL SENDPCVDC;  /* SEND PC VIDEO COMMAND IN TXT */
         DISPLAY('#/%%/#');    /* PAUSE FOR COMPLETION OF
                                    VIDEO COMMAND */
      END;  /* OF START OF COMMERCIAL */
               /* START COMMERCIAL */
      CVS.CV1 = XI.ILC;
      CALL AUTSTPP;
      TXT = CVS.PCVC;
      CALL SENDPCVDC;
      END; /* OF SENDING COMMERCIAL DISPLAY */
   ELSE DO;  /* NO COMMERCIAL MESSAGE */
      SPTXT_BIT = '1'B;
      NSPL = NSPL + 1;   LSPL = 80;
      SPTXT(NSPL) = ' NO DEMO AVAILABLE FOR REQUESTED'
                    ||' ITEM. PLEASE BACKUP. ';
      XSR_BIT = '0'B;
      END;  /* OF NO COMMERCIAL */
   END;  /* OF COMMERCIAL HANDLING */

   IF MORESC_BIT THEN CH9 = MSCI;
   ELSE CH9 = NSL;
   IF NSL > 9   THEN  NL = SUBSTR(CH9,8,2)||',';
   ELSE  NL = SUBSTR(CH9,9,1)||',';
```

FILE: QKSHOP1  PLIOPT   A   SAN JOSE RESEARCH LABORATORY - VM/SP CMS (1.11)

```
IF XTD_BIT THEN
  MLL = '80,';        /* MAX LINE LENGTH      */
ELSE IF XSR_BIT THEN
  MLL = '40,';        /* MAX LINE LENGTH      */
IF SUBSTR(DTYPE,1,5) = 'WARRO' THEN /* DISPLAY WARRANTY
                      IN BOLD LETTERS */
  MLL = '40,';
INL = NHL;           /* NUMBER OF LINES IN HEADER */
NL = NHL||',';       /* FOR PC NUMBER OF LINES IN HEADER */
MSCI = MSCL - INL;   /* MAX NUMBER OF ITEMS ON A SCREEN */
SHDL = 1;            /* HEADER DATA IN LOCATION */
CALL SENDPCHDR;      /* SEND PC SCREEN HEADER */
IF XTD_BIT THEN
  DLL = '74,';        /* WIDTH OF DISPLAY  */
ELSE IF XSR_BIT THEN
  DLL = '35,';        /* WIDTH OF DISPLAY  */

IF XTD_BIT THEN
DO;
  CH14 = XTD.DFCL(SHDL); PCFCL = SUBSTR(CH14,14,1)||',';
  CALL COLORTRANS(PCFCL);
  CH14 = XTD.DBCL(SHDL); PCBCL = SUBSTR(CH14,14,1)||',';
  CALL COLORTRANS(PCBCL);
  CH14 = XTD.DSL(SHDL);  PCFON = SUBSTR(CH14,14,1)||',';
  IX = 2*NHL+2; CH9 = IX;
  IF IX > 9 THEN PCSRLOC = SUBSTR(CH9,8,2)||',';
  ELSE  PCSRLOC = SUBSTR(CH9,9,1)||',';
  IF SUBSTR(DTYPE,1,5) = 'WARRO' THEN
    PCSCLOC = '0';    /* CENTER DISPLAY  */
  ELSE PCSCLOC = '1'; /* DISPLAY START IN COL 1 */
  CALL SENDPCTXT; /* SEND PC NSL LINES OF TEXT  */
  IF SPTXT_BIT THEN  /* DISPLAY SPTXT AFTER XTD */
  DO;
    IX = 2*NHL + NSL + 3;
    CH9 = IX;
    IF IX > 9 THEN PCSRLOC = SUBSTR(CH9,8,2)||',';
    ELSE  PCSRLOC = SUBSTR(CH9,9,1)||',';
    CALL SENDPCSPTXT; /* SEND PC NSPL LINES OF SPTXT  */
  END;   /* OF SPTXT DISPLAY */
END;

IF XSR_BIT & NSL > 0 & ITEMWSOFT_BIT THEN
                      /* SEND PC XSR TEXT */
DO;
  IF XTD_BIT THEN IX = SDLXSR ;
    ELSE IX = SDL;
  IF SOFTKEY_BIT THEN NSL = NXSRL;
  CH14 = XSR.DFCL(IX); PCFCL = SUBSTR(CH14,14,1)||',';
  CALL COLORTRANS(PCFCL);
  CH14 = XSR.DBCL(IX); PCBCL = SUBSTR(CH14,14,1)||',';
  CALL COLORTRANS(PCBCL);
  CH14 = XSR.DSL(IX);  PCFON = SUBSTR(CH14,14,1)||',';
  PCSRLOC = XSR.RLOC(IX)||','; PCSCLOC = XSR.CLOC(IX);
  IF NSL > 0 THEN
    CALL SENDPCITEMS; /* SEND PC NSL LINES OF ITEMS */
```

FILE: QKSHOP1  PLIOPT   A   SAN JOSE RESEARCH LABORATORY - VM/SP CMS (1.11)

```
          END;

       IF SPTXT_BIT & ¬XTD_BIT THEN  /* SEND PC SPTXT */
       DO;
          IX = 2*(NHL+1) + NSL+ 4; CH9 = IX;
          IF IX > 9 THEN PCSRLOC = SUBSTR(CH9,8,2)||',';
          ELSE  PCSRLOC = SUBSTR(CH9,9,1)||',';
          PCSCLOC = '1';
          CALL SENDPCSPTXT; /* SEND PC NSPL LINES OF SPTXT  */
          END;
             /* SET SCREEN ROW  & COLUMN LOCATIONS  */

       IF SOFTKEY_BIT THEN  /* SEND PC SOFT KEYS */
          CALL SENDPCSOFTKEY;
       IF DTYPE = 'REQ00000' THEN /* STANDARD SCREEN BOTTOM */
          STSCBOT_BIT = '1'B;
       ELSE STSCBOT_BIT = '0'B;
       CALL SENDPCBOT;    /* SEND PC SCREEN BOTTOM */
       CALL SENDPCSEND;   /* SEND PC SCREEN END */
       END; /* OF SNEDING ONE HEADER AND ITEMS TO PC */

     IF DTYPE = 'INS00000' THEN /* INS STATE */
     DO;
       END;

     IF DTYPE = 'WARR0000' THEN /* W STATE */
     DO;
       END;

     IF DTYPE = 'WHC00000' THEN /* WHC STATE */
     DO;
       END;

     IF DTYPE = 'ITEM0D00' THEN /* DI STATE */
     DO;
       END;

     IF DTYPE = 'MOPTD000' THEN /* MOPTD  STATE */
     DO;
       END;

     IF DTYPE = 'DNI00000' THEN /* DNI STATE */
     DO;
       END;

     REPLYFLD = ' ';
     DISPLAY(' ') REPLY(REPLYFLD);
     END; /* OF Y AS SECOND CHARACTER IN PC REPLY */

   ELSE IF REPLYMODE = 'PCKP' & PCKPRP2 = 'N'  THEN
         /* PC HAS SCREEN, WAIT FOR A REPLY  */
      DO; REPLYFLD = ''; DISPLAY('#ə/OK/ə#');
        DISPLAY(SCREENID);
        DISPLAY('#/++/#') REPLY(REPLYFLD);
```

92
-54-

FILE: QKSHOP1  PLIOPT   A    SAN JOSE RESEARCH LABORATORY - VM/SP CMS (1.11)

```
        END;

   IF REPLYFLD = 'R' THEN GOTO RESD1;
   IF REPLYFLD = 'HX' THEN GOTO DONE;
   IF REPLYFLD = 'CY' | REPLYFLD = 'CN' | REPLYFLD = 'NY' |
      REPLYFLD = 'NN' | REPLYFLD = 'MY' | REPLYFLD = 'MN' |
      REPLYFLD = 'QN' | REPLYFLD = 'QY' | REPLYFLD = 'ZN' |
      REPLYFLD = 'ZY' | REPLYFLD = 'WY' | REPLYFLD = 'WN' |
      REPLYFLD = 'XY' | REPLYFLD = 'XN' |
      REPLYFLD = 'BY' | REPLYFLD = 'BN' THEN RETURN;
   ON CONVERSION BEGIN;   /* HANDLE NON NUMBER REPLY */
     DISPLAY('a#%ERRORREPLY%#a');
     DISPLAY('#a/ERROR: NON NUMBER REPLY = '||REPLYFLD||'/a#');
     DISPLAY('#a/SEND NUMBER REPLY/a#');
     DISPLAY('#/++/#') REPLY(REPLYFLD);
     END;
   IX = SUBSTR(REPLYFLD,1,1);
   IF IX = 0 THEN IX = MSCI;
   IX = IX + SDL - 1;
   IF  XSR.IVF(IX) -= 0 THEN /* NEW VIDEO FRAME */
     CVS.CV1 = XSR.IVF(IX); /* SAVE VIDEO FRAME NUMBER FOR
                SENDING TO PC WITH NEXT SCREEN */


 SENDPCTYP: PROC;
   /* SNEDS PC TYPE OF SCREEN */

   DISPLAY(SCREENID);

   IF SUBSTR(DTYPE,1,5) = 'BUY00' THEN /* DO NOT CACHE SCREEN */
   DISPLAY('#%aa%#');
   ELSE IF SUBSTR(DTYPE,1,5) = 'BQ000' THEN /* REPLY NOT A
                            MENU ITEM */
   DISPLAY('%a##a%');
   END SENDPCTYP;

 SENDPCHDR: PROC;
        /* SEND SCREEN HEADER TO PC ONE LINE AT A TIME */

   DO I = SHDL TO INL; /* SEND HEADER TO PC 1 LINE AT A TIME */
     RECHD = 'a#/';   /* RECORD HEADER FOR SCREEN HEADER */
     RECTL = '/#a';   /* RECORD TAIL FOR SCREEN HEADER */
     NL = '1,';
     IF XTD_BIT THEN DO;
       CH14 = XTD.DFCL(I); PCFCL = SUBSTR(CH14,14,1)||',';
                       /* PC FOREGROUND COLOR */
       CALL COLORTRANS(PCFCL);
       CH14 = XTD.DBCL(I); PCBCL = SUBSTR(CH14,14,1)||',';
       CALL COLORTRANS(PCBCL);
                       /* PC BACK GROUND COLOR */
       PCFON = '0,';    /* PC FONT. 1 LINE OF HEADER */
       IX = 2*I; CH9 = IX;
       PCSRLOC = SUBSTR(CH9,8,2)||','; /* HEADER ROW LOCATION */
       PCSCLOC = '0';   /* HEADER COLUMN LOCATION */
       END; /* OF  DATA FROM XTD  */
```

FILE: QKSHOP1  PLIOPT   A   SAN JOSE RESEARCH LABORATORY - VM/SP CMS (1.11)

```
        ELSE IF XSR_BIT THEN DO;
          CH14 = XSR.DFCL(I); PCFCL = SUBSTR(CH14,14,1)||',';
                        /* PC FOREGROUND COLOR */
          CALL COLORTRANS(PCFCL);
          CH14 = XSR.DBCL(I); PCBCL = SUBSTR(CH14,14,1)||',';
          CALL COLORTRANS(PCBCL);
                        /* PC BACK GROUND COLOR */
          /* SET SCREEN ROW  & COLUMN LOCATIONS  */
          PCSRLOC = XSR.RLOC(I)||','; PCSCLOC = XSR.CLOC(I);
          CH14 = XSR.DSL(I);
          IF SUBSTR(DTYPE,1,5) = 'REQ00' THEN PCFON = '7,';
          ELSE PCFON = SUBSTR(CH14,14,1)||',';  /* SET PC FONT */
          END; /* OF  DATA FROM XSR  */
        IF XTD_BIT THEN
        DO;
          IF SUBSTR(XTD.TTX(I),74,1) = '*' THEN
             SUBSTR(XTD.TTX(I),74,1) = ' ';
          IX = 75;
          IY = 74;
          FTXT = SUBSTR(XTD.TTX(I),1,IX-1);
          IF SUBSTR(FTXT,1,1) = '*' THEN
             SUBSTR(FTXT,1,1) = ' ';
          END;
        ELSE IF XSR_BIT THEN
        DO;
          IX = 75;
          IY = 74;
          FTXT = SUBSTR(XSR.REPTXT(I),1,IX-1);
          END;
        CALL ELTRBLK(IX,FTXT); IX = IX - 1;
        CALL ELLDBLK(IY,FTXT);
        IF IX-IY+1 < 1 THEN  /* ERROR IN LENGTH OF STRING */
          CALL ERRORST;
        IF SUBSTR(DTYPE,1,5) = 'REQ00'  & I = 1 THEN
             /* TEXT LENGTH 40 AND COLOR */
        DO; DLL = '34,'; PCFCL = '10,'; PCBCL = '0,'; END;
        ELSE IF SUBSTR(DTYPE,1,5) = 'BUY00'  THEN
             /* TEXT LENGTH 74 */
        DO; MLL = '80,'; DLL = '74,'; END;
        ELSE DO; CH9 = IX; DLL = SUBSTR(CH9,8,2)||','; END;
        IF MLL = DLL THEN PCSCLOC = '1';  /* NO CENTERING */
        DISPLAY(RECHD||MLL||NL||DLL||PCFCL||PCBCL||PCFON||PCSRLOC||
                PCSCLOC||RECTL);
        RECHD = '#@/';    /* RECORD HEADER FOR HEADER TEXT */
        RECTL = '/@#';    /* RECORD TAIL FOR HEADER TEXT */
        DISPLAY(RECHD||SUBSTR(FTXT,IY,IX-IY+1)||RECTL);
        END; /* OF I LOOP    */
      END SENDPCHDR;

  SENDPCSKP: PROC;
        /* SEND PC SKIP INSTRUCTIONS FOR NUMBER OF LINES
           IN TXT */

      RECHD = '@#+'; /* RECORD HEADER FOR SKIP  */
      RECTL = '+#@'; /* RECORD TAIL FOR SKIP */
```

FILE: QKSHOP1  PLIOPT   A   SAN JOSE RESEARCH LABORATORY - VM/SP CMS (1.11)

```
      DISPLAY(RECHD||TXT||RECTL);  /* SKIP TXT LINES */
      END SENDPCSKP;

   SENDPCTXT: PROC;
           /* SEND PC INL LINES OF TEXT LOCATED IN
              XTD  STARTING FROM ELEMENT SDL */
      DCL NSLT        FIXED BIN;

      NSLT = NSL;
      CH9 = NSLT;
      RECHD = '@#/'; /* RECORD HEADER FOR TEXT  PARAM */
      RECTL = '/#@'; /* RECORD TAIL FOR TEXT  PARAM */
      IF SUBSTR(DTYPE,1,5) = 'WARRO' THEN
        DO; MLL = '40,'; DLL = '38,'; END;
      ELSE DO; MLL = '80,'; DLL = '74,'; END;
      IF NSLT < 10 THEN NL = SUBSTR(CH9,9,1)||',';
      ELSE NL = SUBSTR(CH9,8,2)||',';
      DISPLAY(RECHD||MLL||NL||DLL||PCFCL||PCBCL||PCFON||PCSRLOC||
              PCSCLOC||RECTL);
      DO I = SDL TO SDL + NSL - 1;
        IF SUBSTR(XTD.TTX(I),74,1) = '*' THEN
           SUBSTR(XTD.TTX(I),74,1) = ' ';
        IX = 75;
        IY = 74;
        FTXT = SUBSTR(XTD.TTX(I),1,IX-1);
        IF SUBSTR(FTXT,1,1) = '*' THEN
           SUBSTR(FTXT,1,1) = ' ';
        CALL ELTRBLK(IX,FTXT); IX = IX - 1;
        CALL ELLDBLK(IY,FTXT);
        IF IX < 1 THEN  /* ERROR IN LENGTH OF STRING */
          CALL ERRORST;
        RECHD = '#@/'; /* RECORD HEADER FOR TEXT  */
        RECTL = '/@#'; /* RECORD TAIL FOR TEXT  */
        IF SUBSTR(DTYPE,1,5) = 'WARRO' & IX-IY+1 > 38 THEN
          IX = 38;   /* FOR CENTERING ON BOLD TYPE */
        ELSE IX = IX-IY+1;
        DISPLAY(RECHD||SUBSTR(FTXT,IY,IX)||RECTL);
        END; /* OF I LOOP    */
      END SENDPCTXT;

   SENDPCSPTXT: PROC;
           /* SEND PC NSPL + | LINES OF SPTXT */
      DCL NSLT        FIXED BIN;

      IF SUBSTR(DTYPE,1,5) = 'BUYOO' THEN NSPL = NSPL - 1;
         /* IN BUYOO LAST LINE PRECEEDED BY NBL BLANK LINES */
      IZ = IX;  /* SAVE STARTING ROW LOCATION */
      NSLT = NSPL;
      CH9 = NSLT;
      RECHD = '@#/'; /* RECORD HEADER FOR TEXT  PARAM */
      RECTL = '/#@'; /* RECORD TAIL FOR TEXT  PARAM */
      MLL = '80,';    DLL = '74,';
      IF NSLT < 10 THEN NL = SUBSTR(CH9,9,1)||',';
      ELSE NL = SUBSTR(CH9,8,2)||',';
      DISPLAY(RECHD||MLL||NL||DLL||PCFCL||PCBCL||PCFON||PCSRLOC||
```

FILE: QKSHOP1  PLIOPT   A    SAN JOSE RESEARCH LABORATORY - VM/SP CMS (1.11)

```
         PCSCLOC||RECTL);
RECHD = '#a/'; /* RECORD HEADER FOR TEXT */
RECTL = '/a#'; /* RECORD TAIL FOR TEXT */
DO I = 1 TO NSPL;
  IX = LSPL+1; IY = LSPL;
  CALL ELTRBLK(IX,SPTXT(I)); IX = IX - 1;
  CALL ELLDBLK(IY,SPTXT(I));
  IF IX-IY+1 < 1 THEN  /* ERROR IN LENGTH OF STRING */
     CALL ERRORST;
  DISPLAY(RECHD||SUBSTR(SPTXT(I),IY,IX-IY+1)||RECTL);
  END; /* OF SENDING SPTXT LOOP */
IF SUBSTR(DTYPE,1,5) = 'BUY00' THEN  /* DISPLAY LAST LINE
                   FOLLOWED BY NBL BLANK LINE */
DO;
  IZ = IZ + NSPL + NBL; /* ADJUST ROWLOC FOR NBL BLANK LINE */
  CH9 = IZ;
  NSPL = NSPL + 1;
  IF IZ > 9 THEN PCSRLOC = SUBSTR(CH9,8,2)||',';
    ELSE  PCSRLOC = SUBSTR(CH9,9,1)||',';
  NL = '1,';
  RECHD = 'a#/'; /* RECORD HEADER FOR TEXT  PARAM */
  RECTL = '/#a'; /* RECORD TAIL FOR TEXT  PARAM */
  DISPLAY(RECHD||MLL||NL||DLL||PCFCL||PCBCL||PCFON||PCSRLOC||
      PCSCLOC||RECTL);
  RECHD = '#a/'; /* RECORD HEADER FOR TEXT */
  RECTL = '/a#'; /* RECORD TAIL FOR TEXT */
  IX = LSPL+1; IY = LSPL;
  CALL ELTRBLK(IX,SPTXT(NSPL)); IX = IX - 1;
  CALL ELLDBLK(IY,SPTXT(NSPL));
  IF IX-IY+1 < 1 THEN  /* ERROR IN LENGTH OF STRING */
     CALL ERRORST;
  DISPLAY(RECHD||SUBSTR(SPTXT(NSPL),IY,IX-IY+1)||RECTL);
  END;  /* OF HANDLING LAST LINE OF BUY00 */
END SENDPCSPTXT;

SENDPCITEMS: PROC;
      /* SENDS PC NL LINES OF ITEMS LOCATED IN XTD
         OR XSR STARTING FROM ELEMENT SDL */

DCL (IZ,IK)  FIXED BIN;

RECHD = 'a%/'; /* RECORD HEADER FOR LIST ITEMS */
RECTL = '/%a'; /* RECORD TAIL FOR LIST ITEMS */
IF XTD_BIT & XSR_BIT THEN NIS = NXSRL;
ELSE NIS = NSL;
CH9 = NIS;
IF XTD_BIT | SPSCBOT_BIT | SUBSTR(DTYPE,1,5) = 'BUY00' THEN
DO;
  MLL = '80,';  DLL = '74,';
  END;
ELSE DO;
  MLL = '40,';  DLL = '35,';
  END;
NL = SUBSTR(CH9,9,1)||',';
```

FILE: QKSHOP1   PLIOPT   A   SAN JOSE RESEARCH LABORATORY - VM/SP CMS (1.11)

```
        DISPLAY(RECHD||MLL||NL||DLL||PCFCL||PCBCL||PCFON||PCSRLOC||
               PCSCLOC||RECTL);
        II = 0;
        DO  WHILE( II < NIS);
          II = II + 1;
          IF XTD_BIT & XSR_BIT THEN I = SDLXSR + II - 1;
          ELSE I = SDL + II - 1;
          IF XSR_BIT THEN DO;
            IX = 75; IZ = 74;
            FTXT = SUBSTR(XSR.REPTXT(I),1,IX-1);
            CALL ELTRBLK(IX,FTXT); IX = IX - 1;
            CALL ELLDBLK(IZ,FTXT);
            IY = 11;
            IF SUBSTR(DTYPE,1,5) = 'BUY00' THEN
                /* USE SCREENID FOR NEXT SCREEN */
              CH10 = SUBSTR(SCREENID,4,10);
            ELSE CH10 = XSR.STREP(I);
            CALL ELTRBLK(IY,CH10); IY = IY - 1;
            IF IX-IZ+1 < 1 | IY < 1 THEN  /* ERROR IN LENGTH
                                             OF STRING */
              CALL ERRORST;
            TXT = SUBSTR(FTXT,IZ,IX-IZ+1);
            TXT = TXT||':!'||SUBSTR(CH10,1,IY);
            END;
          ELSE IF XSI_BIT THEN
          DO;
            IX = 41; IZ = 40;
            FTXT = SUBSTR(XSI.INM(I),1,IX-1);
            CALL ELTRBLK(IX,FTXT); IX = IX - 1;
            CALL ELLDBLK(IZ,FTXT);
            IY = 9; CH8 = XSI.IIT(I);
            CALL ELTRBLK(IY,CH8); IY = IY - 1;
            IF IX-IZ+1 < 1 | IY < 1 THEN  /* ERROR IN STRING LENGTH */
              CALL ERRORST;
            TXT = SUBSTR(FTXT,IZ,IX-IZ+1);
            TXT = TXT||':!'||SUBSTR(CH8,1,IY);
            END;
          RECHD = 'ə%+';     /* RECORD HEADER FOR ITEM TEXT */
          RECTL = '+%ə';     /* RECORD TAIL FOR ITEM TEXT */
          DISPLAY(RECHD||TXT||RECTL);
          END; /* OF II LOOP    */
        END SENDPCITEMS;

      SENDPCBOT: PROC;
             /* SEND PC SCREEN BOTTOM */

        IF SPSCBOT_BIT THEN
        DO;
          RECHD = 'ə‡/';     /* RECORD HEADER FOR SCREEN END */
          RECTL = '/‡ə';     /* RECORD TAIL FOR SCREEN END */
          IX = 75; CALL ELTRBLK(IX,SPSCBOT); IX = IX - 1;
          IY = 84; CALL ELLDBLK(IY,SPSCBOT);
          CH9 = IX;
          MLL = '80,'; NL = '1,'; DLL = SUBSTR(CH9,8,2)||',';
          II = 2*(NHL + NIS) + 1; I = MIN(II,22);
```

FILE: QKSHOP1 PLIOPT A SAN JOSE RESEARCH LABORATORY - VM/SP CMS (1.11)

```
  CH9 = I;
  PCSRLOC = SUBSTR(CH9,8,2)||','; PCSCLOC = '1,';
  DISPLAY(RECHD||MLL||NL||DLL||PCFCL||PCBCL||PCFON||PCSRLOC||
     PCSCLOC||RECTL);
  RECHD = '#∂/';    /* RECORD HEADER FOR SCREEN END */
  RECTL = '/∂#';    /* RECORD TAIL FOR SCREEN END */
  IF IX-IY+1 < 1 THEN  /* ERROR IN LENGTH OF STRING */
     CALL ERRORST;
  DISPLAY(RECHD||SUBSTR(SPSCBOT,IY,IX-IY+1)||RECTL);
  END;
RECHD = '#∂%';    /* RECORD HEADER FOR SCREEN END */
RECTL = '%∂#';    /* RECORD TAIL FOR SCREEN END */
I = MOD(SCSTACK-2,STACKSIZ) + 1;
IF SUBSTR(DTYPE,1,5) ¬= SUBSTR(STATEN(DTYPEIXSV(STACK)),1,5)
   THEN /* BACKUP FROM FIRST SCREEN EXCEPT ITEM0 */
DO;
   I = I - SVINMORESC;
   IF SUBSTR(REPLYFLD,1,1) ¬= 'M' THEN /* NO MORE SCREENS */
     SVINMORESC = 0;
   END;
IF DTYPE ¬= 'REQ00000' &
   DTYPE ¬= 'PUR00000' THEN /* SEND BACKUP BOTTOM */
DO;
   IX = 21;  CALL ELTRBLK(IX,SVBACKUPSC(I)); IX = IX - 1;
   IF IX < 1 THEN  /* ERROR IN LENGTH OF STRING */
     CALL ERRORST;
   DISPLAY(RECHD||'B:!'||SUBSTR(SVBACKUPSC(I),1,IX)||RECTL);
   END;
IF STSCBOT_BIT THEN
DO;  /* SEND STANDARD SCREEN BOTTOM */
   DISPLAY(RECHD||'C:!FISC000001'||RECTL);
   DISPLAY(RECHD||'N:!REQ00000HD'||RECTL);
   END; /* OF STANDARD SCREEN BOTTOM */
IF MORESC_BIT THEN
DO;
   I = DIVIDE(SDL,MSCI,6) + 1;
   CH9 = I;
   IF SUBSTR(SVCHA20(STACK),1,7) = 'SOFTKEY' THEN /* SOFTKEY */
     FTXT = REPLYSV(SCSTACK - 1);
   ELSE FTXT = REPLYSV(SCSTACK);    /* PREFIX OF SCREEN ID */
   IX = 21;  CALL ELTRBLK(IX,FTXT); IX = IX - 1;
   IF IX < 2 THEN  /* ERROR IN LENGTH OF STRING */
     CALL ERRORST;
   IF SUBSTR(FTXT,IX-1,1) = 'M' THEN /* ELIMINATE LAST TWO
                                         CHARACTERS */
   IX = IX - 2;
   IY = 20;  CALL ELLDBLK(IY,FTXT);
   IF IX-IY+1 < 1 THEN  /* ERROR IN LENGTH OF STRING */
     CALL ERRORST;
   IF SUBSTR(SVCHA20(STACK),1,7) = 'SOFTKEY' THEN /* SOFTKEY */
   DISPLAY(RECHD||'M:!'||SUBSTR(FTXT,IY,IX-IY+1)||
       SUBSTR(SVCHA20(STACK),9,2)||'M'||
       SUBSTR(CH9,9,1)||RECTL);
   ELSE DISPLAY(RECHD||'M:!'||SUBSTR(FTXT,IY,IX-IY+1)||'M'||
       SUBSTR(CH9,9,1)||RECTL);
```

FILE: QKSHOP1  PLIOPT  A    SAN JOSE RESEARCH LABORATORY - VM/SP CMS (1.11)

```
        END;
      END SENDPCBOT;

    SENDPCSOFTKEY: PROC;
         /* SEND PC SOFTKEY */

      IF SUBSTR(DTYPE,1,5) = 'SALE0' & XS.ISP(1) ¬= 'SO      ' |
         SUBSTR(DTYPE,1,5) = 'WARRO' |
         SUBSTR(DTYPE,1,5) = 'PUR00' THEN
        MLL = '40,';
      ELSE MLL = '80,';
      NL = '1,';
      PCFCL = '0,';  PCBCL = '14,'; PCFON = '0,';
      DO I = 1 TO NSOFTKEY; /* SEND SOFT KEY SCREEN LINE */
        RECHD = 'ə#/';     /* RECORD HEADER FOR SCREEN END */
        RECTL = '/#ə';     /* RECORD TAIL FOR SCREEN END */
        IX = 21; FTXT = SOFTKEYTAB.SKNAME(I);
        IY = 20;
        CALL ELTRBLK(IX,FTXT); IX = IX - 1;
        CALL ELLDBLK(IY,FTXT);
        CH9 = IX; DLL = SUBSTR(CH9,8,2)||',';
        PCSRLOC = SOFTKEYTAB.RLOC(I)||',';
        PCSCLOC =SOFTKEYTAB.CLOC(I);
        DISPLAY(RECHD||MLL||NL||DLL||PCFCL||PCBCL||PCFON
             ||PCSRLOC||PCSCLOC||RECTL);
        RECHD = '#ə/';     /* RECORD HEADER FOR SCREEN END */
        RECTL = '/ə#';     /* RECORD TAIL FOR SCREEN END */
        IF IX-IY+1 < 1 THEN /* ERROR IN LENGTH OF STRING */
          CALL ERRORST;
        DISPLAY(RECHD||SUBSTR(FTXT,IY,IX-IY+1)||RECTL);
      END;
      RECHD = '#ə%';     /* RECORD HEADER FOR SCREEN END */
      RECTL = '%ə#';     /* RECORD TAIL FOR SCREEN END */
      DO I = 1 TO NSOFTKEY; /* SEND SOFTKEY REPLY SCREENID */
        FTXT = REPLYSV(SCSTACK);     /* SCREEN ID */
        IX = 21;   CALL ELTRBLK(IX,FTXT); IX = IX - 1;
        IY = 20;   CALL ELLDBLK(IY,FTXT);
        IF IX-IY+1 < 1 THEN /* ERROR IN LENGTH OF STRING */
          CALL ERRORST;
        DISPLAY(RECHD||SOFTKEYTAB.SKEY(I)||':'||
            SUBSTR(FTXT,IY,IX-IY+1)||
            SUBSTR(SOFTKEYTAB.SKNAME(I),1,2)||RECTL);
      END;
    END SENDPCSOFTKEY;

    SENDPCSEND: PROC;
       /* SEND PC END OF SCREEN */

      RECHD = '#/+';     /* RECORD HEADER FOR SCREEN END */
      RECTL = '+/#';     /* RECORD TAIL FOR SCREEN END */
      DISPLAY(RECHD||RECTL);
    END SENDPCSEND;

    SENDPCVDC: PROC;
       /* SNEDS PC VIDEO COMMAND IN TXT */
```

FILE: QKSHOP1  PLIOPT   A    SAN JOSE RESEARCH LABORATORY - VM/SP CMS (1.11)

```
        RECHD  = '#%/'; /* RECORD HEADER FOR VIDEO COMMAND */
        RECTL  = '/%#'; /* RECORD TAIL FOR VIDEO COMMAND */
        DISPLAY(RECHD||TXT||RECTL);
                    /* SEND SCREEN ID TO PC */
        END SENDPCVDC;

     /* CALL PCCHAR;
             WILL GENERATE PC SCREEN FROM XSR AND
                SEND TO PC AND PROCESS STANDARD REPLY FROM PC */

      END PCDSPL;

   DSPL779: PROC;
        /*   CHECK DTYPE AND SET SLOC,DW,DL, & DFON.
             IF DFON = 'ITALIC' THEN
                CALL ITALSC(DTYPE).
             IF DFON = '0'     THEN.
                CALL ALPHASC.
            OR CALL COLORSC.
           THEN WAIT FOR REPLYFLD */

      DCL (II,STI,III)        BIN FIXED;

      MSCI = MSCL - NHL;
      II = DL - SDL + 1;
      IF II > MSCI THEN  /* DISPLAY DATA MORE THAN ONE SCREEN */
        DO; MORESC_BIT = '1'B; NSL = MSCI;
          END;
      ELSE  DO; MORESC_BIT = '0'B; NSL = DL - SDL + 1; END;

      IF DTYPE = 'FISCO000' & TERMINAL = 'IBM3279'
      THEN  DO; /* SET SLOC DW FOR STATE FISC ON IBM3279 */
        CV = XSR.IVF(1); CALL SEARCH(ADDR(CV));
             /* DISPLAY FIRST VIDEO SCREEN */
        NSL = 0;  /* NO ITEMS */
        IF  DFON = 'ITALIC' THEN
        DO; /* HANDLE ITALIC FONT  */
          DW = 1;  SVSCREEN = 'FISC';
          CALL ITALSC(SVSCREEN);
          END; /* OF HANDLING FISC ON IBM3279  IN ITALIC */

        IF   DFON = '0' THEN
        DO; /* HANDLE STANDARD FONT  */
          DW = 2;
          CALL COLORSC ;
          END; /* OF HANDLING FISC ON IBM3279  STANDARD FONT */
        END; /* OF FISC & IBM3279  */

      ELSE IF  TERMINAL = 'IBM3279'
      THEN  DO; /* SET SLOC DW FOR STATE REQ ON IBM3279 */
        IF DTYPE = 'REQ00000' THEN
        DO;
          CV = XSR.IVF(SHDL); CALL SEARCH(ADDR(CV));
              /* DISPLAY FIRST VIDEO SCREEN */
```

FILE: QKSHOP1   PLIOPT   A    SAN JOSE RESEARCH LABORATORY - VM/SP CMS (1.11)

```
      END;

          /* SET START OF ITEM NUMBERING  */
      IF SUBSTR(DTYPE,1,5) = 'ITEM0' |
         SUBSTR(DTYPE,1,5) = 'DEMO0' THEN STI = 1;
      ELSE STI = SDL;

      IF SUBSTR(DTYPE,1,5) = 'DEMO0' THEN /* HANDLE COMMERCIAL */
      DO;
         IF XI.ILC > XI.IFC & XI.ILC -= 0 THEN
         DO;
            IF SUBSTR(XI.IIT,1,4) -= 'DEMO' THEN
                    /* POSITION VIDEO TO START OF COMMERCIAL */
              CALL SEARCH(ADDR(XI.IFC));
            CALL AUTOSTP(ADDR(XI.ILC)); /* DISPLAY COMMERCIAL */
            END;  /* OF COMMERCIAL HANDLING */
         ELSE /* NO COMMERCIAL AVAILABLE */
            DO;
               SPTXT_BIT = '1'B;
               NSPL = NSPL + 1;  LSPL = 80;
               SPTXT(NSPL) = ' NO DEMO AVAILABLE FOR REQUESTED'
                        ||' ITEM. PLEASE BACKUP. ';
               XSR_BIT = '0'B;
               END;  /* OF NO COMMERCIAL HANDLING */
         END; /* OF COMMERCIAL HANDLING */

      IF XSR_BIT & NSL > 0 & -(NODATA_BIT & XTD_BIT) THEN
                        /* ATTACH INDEX TO ITEMS */
         CALL ATTINX(STI);
      IF  DFON = 'ITALIC' THEN
      DO; /* HANDLE ITALIC FONT  */
         IF DTYPE = 'REQ00000' THEN DW = 2;
         ELSE DW = 1;
         SVSCREEN = SUBSTR(DTYPE,1,5);
         CALL ITALSC(SVSCREEN); /* DISPLAY PRESTORED SCREEN */
         END; /* OF HANDLING REQ ON IBM3279  IN ITALIC */

      IF  DFON = '0' THEN
      DO; /* HANDLE STANDARD FONT  */
         DW = 2;
         CALL COLORSC ;
         END; /* OF IBM3279  STANDARD FONT */

      STI = 0;
      IF REPLYFLD = 'HX' THEN GOTO DONE;
      IF REPLYFLD = 'B ' THEN  /* DISPLAY VIDEO FOR BACKUP */
      DO;
         IF SUBSTR(DTYPE,1,5) = 'PUR00' THEN /* BACKUP IS NOT
                              VALID FOR THIS STATE */
         DO;
            ERTBL = ''; ERLN = 2; ERTYP = 'ERRORNOBAK';
            ERTBL(1) = ' ALL ITEMS HAVE BEEN CHARGED.'||
                     ' BACKUP NOT ';
            ERTBL(2) = ' VALID. PLEASE ENTER NEW REQUEST.';
            CALL ERPAC;
```

FILE: QKSHOP1   PLIOPT   A    SAN JOSE RESEARCH LABORATORY - VM/SP CMS (1.11)

```
        CALL RPLTRANS;
        RETURN;
        END;  /* OF HANDLING INVALID BACKUP */
    II = STACK - 2;
    II = MOD(II,STACKSIZ) + 1;
    IF  SVCV(II) ¬= 0 THEN   /* NEW VIDEO FRAME */
       CV = SVCV(II);
    CALL SEARCH(ADDR(CV));
    RETURN;
    END;
 IF REPLYFLD = 'C ' | REPLYFLD = 'N ' | REPLYFLD = 'M '
    THEN RETURN;
 ELSE IF SOFTKEY_BIT &
    ( REPLYFLD = 'Q ' | REPLYFLD = 'Z ' | REPLYFLD = 'W ' |
     REPLYFLD = 'X ' ) THEN RETURN;
 ON CONVERSION BEGIN;
    ERTBL = ''; ERLN = 1; ERTYP = 'ERRORNONUM';
    ERTBL(1) = ' ERROR: NON NUMERICAL REPLY = '||REPLYFLD;
    CALL ERPAC;
    GOTO DONE;
    END;
 II = 33; CALL ELTRBLK(II,REPLYFLD);
 IF II < 2 THEN  /* ERROR IN LENGTH OF STRING */
    CALL ERRORST;
 IF XTD_BIT & XSR_BIT THEN
    STI = SUBSTR(REPLYFLD,1,II-1) + SDLXSR - 1;
 ELSE STI = SUBSTR(REPLYFLD,1,II-1) + SDL - 1;
 IF XSR.IVF(STI) ¬= 0 THEN  /* NEW VIDEO FRAME */
    CV = XSR.IVF(STI);
 IF SUBSTR(DTYPE,1,6) ¬= 'ITEMOD' &
    SUBSTR(DTYPE,1,5) ¬= 'DEMOO' THEN  /* IN DEMO STATE
          FRMNU FETCHES CV, FOR ITEMOD VIDEO HAS ALREADY
          BEEN DISPLAYED, OTHERWISE VIDEO FRAME IN CV */
    CALL SEARCH(ADDR(CV));
        /* DISPLAY VIDEO PICTURE FOR REPLY */
 END; /* OF IBM3279  */

ATTINX: PROC(STI);
        /* IF INDEX HAS NOT BEEN ATTACHED TO AN ITEM THEN
           ATTACH INDEX TO  POSSIBLE ACTIONS  */

    DCL (STI,IX)  BIN FIXED;
    IX = 0;
    DO II = STI TO SDL+NSL-1;
     IX = IX + 1;
     IF IX >  MSCI THEN IX = MOD(IX,MSCI);
     IF XSR_BIT &        /* DATA IN XSR TABLE  */
       (SUBSTR(XSR.REPTXT(II),1,2) ¬= ' (' &
        (SUBSTR(XSR.REPTXT(II),4,1) ¬= ')' |
         SUBSTR(XSR.REPTXT(II),5,1) ¬= ')')) THEN
           /* ITEM DOES NOT HAVE INDEX */
       XSR.REPTXT(II) = ' '||CHA5(IX)||SUBSTR(XSR.REPTXT(II),1);
     ELSE IF XTD_BIT &      /* DATA IN XTD TABLE  */
       (SUBSTR(XTD.TTX(II),1,2) ¬= ' (' &
        (SUBSTR(XTD.TTX(II),4,1) ¬= ')' |
```

```
FILE: QKSHOP1  PLIOPT   A   SAN JOSE RESEARCH LABORATORY - VM/SP CMS (1.11)

             SUBSTR(XTD.TTX(II),5,1) -= ')')) THEN
                   /* ITEM DOES NOT HAVE INDEX */
             XTD.TTX(II) = ' '||CHA5(IX)||SUBSTR(XTD.TTX(II),1);
          END; /* OF ATTACHING INDEX */
        END ATTINX;

     END DSPL779;

   IF MORESC_BIT THEN NODATA_BIT = '1'B; /* DO NOT FETCH DATA */
   ELSE NODATA_BIT = '0'B; /* HAVE TO FETCH DATA */

   END DSPLAY;
   /* ------------------------------------------------------------ */

  ITALSC: PROCEDURE (SVSCREEN);

          /* DISPLAYS PRESTORED COLOR SCREEN USING GDDM */

     DCL      SVSCREEN           CHAR(8);

     DECLARE (
       FSINIT ENTRY(                                              ),
                                 /* INITIALIZE                    */
       FSSHOW ENTRY(   CHAR(8)                                    ),
                                 /* SHOW SAVED SCREEN             */
       FSTERM ENTRY(                                              )
                                 /* TERMINATE                     */
             )OPTIONS(ASM,INTER);

     CALL FSINIT;
     SVSCREEN = 'FISC';
     CALL FSSHOW(SVSCREEN);    /* RECALL SCREEN */
             /* HIT ENTER TO CONTINUE */
     CALL FSTERM;

     END ITALSC;

  ALPHASC: PROC ;

     DECLARE (
       ASCGET ENTRY(    BIN FIXED(31),BIN FIXED(31),CHAR(*)),
                            /* QUERY CHARACTER CODES */
       ASCPUT ENTRY(    BIN FIXED(31),BIN FIXED(31),CHAR(*)),
                            /* SET CHARACTER CODES   */
       ASDFLD ENTRY(    BIN FIXED(31),BIN FIXED(31),BIN FIXED(31),
                        BIN FIXED(31),BIN FIXED(31),BIN FIXED(31)),
                            /* DEFINE ALPHANUMERIC FIELD */
       ASFCUR ENTRY(    BIN FIXED(31),BIN FIXED(31),BIN FIXED(31) ),
                            /* MOVE CURSOR            */
       ASREAD ENTRY(    BIN FIXED(31),BIN FIXED(31),BIN FIXED(31) )
                            /* DEVICE OUTPUT/INPUT */
             )OPTIONS(ASM,INTER);
```

FILE: QKSHOP1 PLIOPT  A  SAN JOSE RESEARCH LABORATORY - VM/SP CMS (1.11)

```
DECLARE (
  FSINIT ENTRY(            ),
                              /* INITIALIZE   */
  FSPCLR ENTRY(                               ),
                              /* PAGE CLEAR   */
  FSTERM ENTRY(                             )
                              /* TERMINATE  */
         )OPTIONS(ASM,INTER);

DECLARE (
  GSCHAR ENTRY(DEC FLOAT(6),DEC FLOAT(6),BIN FIXED(31),CHAR(*)),
                              /* CHARACTER STRING AT */
  GSCOL  ENTRY(BIN FIXED(31)),
                              /* SET COLOR */
  GSFLD  ENTRY(    BIN FIXED(31),BIN FIXED(31),BIN FIXED(31),
               BIN FIXED(31) ),
                              /* GRAPHICS FIELD  */
  GSSCLS ENTRY(                               ),
                              /* CLOSE SEGMENT   */
  GSSEG  ENTRY(    BIN FIXED(31) ),
                              /* CREATE SEGMENT  */
  GSWIN  ENTRY(    DEC FLOAT(6),DEC FLOAT(6),DEC FLOAT(6),
               DEC FLOAT(6) )
                              /* SPECIFY WINDOW */
         )OPTIONS(ASM,INTER);

DECLARE    SCREEN     CHARACTER(1760),
           STRING     CHAR(80),
           X_POS      BIN FIXED(31) INITIAL ( 0    ),
           Y_POS      BIN FIXED(31) INITIAL ( 2500 ),
           X_SCALE    FLOAT BIN(21) INITIAL ( 1.0 ),
           Y_SCALE    FLOAT BIN(21) INITIAL ( 1.0 );
DCL        REPLYFLD             CHAR(32);
DCL        (I,II,L)             BIN FIXED;
DCL        CLO                  BIN FIXED;
DCL        (ATTYPE,ATTMODE)     BIN FIXED(31);

CALL FSINIT;
CALL GSFLD(1,1,32,80);    /* INITIALIZES SCREEN */
CALL GSWIN (0,4095,0,3071);   /* DEFINES SCREEN */

STRING = '';
X_POS = 0;
CALL FSPCLR; /* CLEARS SCREEN */
CALL GSSEG(1);  /* OPEN SEGMENT 1 */

CLO = 1;
CALL GSCOL(CLO);  /* SET COLOR */
X_POS = 0; Y_POS = Y_POS - 95*Y_SCALE; L = 80;
STRING = (80)'*';
CALL GSCHAR(X_POS,Y_POS,L,STRING);

IF NHL > 0 THEN    /* DISPLAY THE HEADER */
DO I = 1 TO NHL;
  IF XSR_BIT THEN CLO = XSR.DFCL(SHDL+I-1);
```

FILE: QKSHOP1  PLIOPT   A   SAN JOSE RESEARCH LABORATORY - VM/SP CMS (1.11)

```
      IF XTD_BIT THEN CLO = XTD.DFCL(SHDL+I-1);
      CALL GSCOL(CLO);  /* SET COLOR */
      X_POS = 0; Y_POS = Y_POS - 95*Y_SCALE; L = 80;
      IF XSR_BIT THEN STRING = XSR.REPTXT(SHDL+I-1);
      IF XTD_BIT THEN STRING = XTD.TTX(SHDL+I-1);
      II = 81;
      CALL ELTRBLK(II,STRING);
      IF II < 1 THEN  /* ERROR IN LENGTH OF STRING */
        CALL ERRORST;
      II = (I - 1)*80 + 1;
      SUBSTR(SCREEN,II,40) = STRING;
      CALL GSCHAR(X_POS,Y_POS,L,STRING);
      END;  /* OF DISPLAYING HEADER */
    I = NHL + 1;  DTL = SDL - 1;
    DO WHILE (I <= NHL+NSL & DTL < DL); /* MOVE DATA INTO SCREEN */
    I = I + 1;
    DTL = DTL + 1;
    IF XSR_BIT THEN CLO = XSR.DFCL(DTL);
    IF XTD_BIT THEN CLO = XTD.DFCL(DTL);
    CALL GSCOL(CLO);  /* SET COLOR */
    X_POS = 0; Y_POS = Y_POS - 95*Y_SCALE; L = 80;
    IF XSR_BIT THEN STRING = XSR.REPTXT(DTL);
    IF XTD_BIT THEN STRING = XTD.TTX(DTL);
    II = (I - 1)*80 + 1;
    SUBSTR(SCREEN,II,40) = STRING;
    CALL GSCHAR(X_POS,Y_POS,L,STRING);
    END; /* OF MOVING DATA INTO SCREEN */
    CLO = 1;
    CALL GSCOL(CLO);  /* SET COLOR */
    X_POS = 0; Y_POS = Y_POS - 95*Y_SCALE; L = 80;
    STRING = (80)'*';
    CALL GSCHAR(X_POS,Y_POS,L,STRING);
    IF STSCBOT_BIT THEN CALL SCREENBOT;    /* GET SCREEN BOTTOM */
    DO I = 17 TO 19; /* DISPLAY SCREEN BOTTOM */
      X_POS = 0; Y_POS = Y_POS - 95*Y_SCALE; L = 80;
      II = (I - 1)*80 + 1;
      STRING = SUBSTR(SCREEN,II,80);
      CALL GSCHAR(X_POS,Y_POS,L,STRING);
      END; /* SCREEN BOTTOM DISPLAY */
    REPLYFLD = ' ';

    CALL GSSCLS; /* CLOSE SEGMENT */
    CALL ASDFLD(1,29,2,1,32,0);     /* DECLARE FIELD FOR REPLY */
    CALL ASCPUT(1,32,'                                ');
                    /* PUT BLANKS IN REPKY POSITION */
    CALL ASFCUR(1,1,1);   /* POSITIONS CURSOR RELATIVE TO FIELDID */
    CALL ASREAD(ATTYPE,ATTMODE,COUNT);
    CALL ASCGET(1,32,REPLYFLD);    /* GET REPLY IN REPLYFLD */
        /* HIT ENTER TO CONTINUE */
    CALL FSTERM;

    END ALPHASC;
    /* ------------------------------------------------------------ */
COLORSC: PROC ;
```

FILE: QKSHOP1 PLIOPT   A   SAN JOSE RESEARCH LABORATORY - VM/SP CMS (1.11)

```
/* DISPLAYS THE 3279 SCREEN IN COLOR AND SAVES THE
   DISPLAYED SCREEN IN SCREEN */
/* COLOR CODES: 0 = BLACK; 1 = RED; 2 = BLUE; 3 = MAGENTA;
   4 = GREEN; 5 = YELLOW; 6 = CYAN; 7 = WHITE */
DCL (LNF,LN77,LNB,LNBH,L2,L3,L4,III) BIN FIXED;
DCL L1   STATIC   BIN FIXED;
DCL (TXT, TXT1) CHAR(80);
DCL CL BIN FIXED(31);      -
DCL R32INT  EXT ENTRY (FIXED(31) BIN, FIXED(31) BIN) OPTIONS(ASM);
DCL R32ERS  EXT ENTRY OPTIONS(ASM); /* ERASE THE SCREEN    */
DCL R32COL  EXT ENTRY (FIXED(31) BIN) OPTIONS(ASM);   /* SET COLOR */
DCL R32REC  EXT ENTRY (FIXED(31) BIN, FIXED(31) BIN,
                       FIXED(31) BIN) OPTIONS(ASM);   /* SET RECT */
DCL R32MOV  EXT ENTRY (FIXED(31) BIN, FIXED(31) BIN) OPTIONS(ASM);
DCL R320TX  EXT ENTRY (, FIXED(31) BIN) OPTIONS(ASM);
DCL R32ITX  EXT ENTRY (, FIXED(31) BIN, FIXED(31) BIN) OPTIONS(ASM);
DCL GRAFEND  EXT ENTRY OPTIONS(ASM);
DCL RLEN BIN FIXED(31); /* ACTUAL LENGTH OF REPLY FIELD */
DCL (LLX,LLY,URX,URY) BIN FIXED(31);

   /* ALL ENTRIES STARTING WITH R32 RESIDE ON WELLER 193    */

CALL R32INT(80,32); /* SCREEN INITIALIZATION */
CALL R32ERS;            /* SCREEN ERASE    */
IF XTD_BIT & SDL ¬= 0 THEN CL = XTD.DBCL(SDL);
ELSE IF XTD_BIT & SHDL ¬= 0 THEN CL = XTD.DBCL(SHDL);
ELSE IF XSR_BIT & SHDL ¬= 0 THEN CL = XSR.DBCL(SHDL);
ELSE IF XSR_BIT & SDL ¬= 0 THEN CL = XSR.DBCL(SDL);
ELSE CL = 5;    /* YELLOW COLOR */
IF CL = 0 THEN CL = 5;
CALL R32COL(CL);
LLX = 1; LLY = 1; URX = 80; URY = 32;
CALL R32REC(LLX,LLY,URX,URY); /* SET BACKGROUND COLOR */
IF SLOC = 1 THEN SLOC = 2;
LNF = 0; LNB = 32; LN77 = 0;
IF NHL > 0 THEN    /* DISPLAY THE HEADER */
DO L2 = 1 TO NHL;
  LNF = LNF + DW;   LNB = LNB - DW; LN77 = LN77 + 1;
  IF XTD_BIT THEN
  DO;  /* DISPLAY FORM XSR  */
    LNB = 32 - L2;
    CL = XTD.DFCL(SHDL+L2-1);
    IF CL = 0 THEN CL = 1;
    CALL R32COL(CL);
    IF SUBSTR(DTYPE,1,5) = 'WARRO' THEN /* CENTER DISPLAY */
      CALL R32MOV(21,LNB);
    ELSE CALL R32MOV(2,LNB);
    TXT = XTD.TTX(SHDL+L2-1);
    END; /* OF XTD DISPLAY */
  ELSE IF XSR_BIT THEN
  DO;  /* DISPLAY FORM XSR  */
    LNB = 32 - XSR.RLOC(SHDL+L2-1);
    CL = XSR.DFCL(SHDL+L2-1);
    IF CL = 0 THEN CL = 1;
```

106

~~108~~

FILE: QKSHOP1  PLIOPT   A   SAN JOSE RESEARCH LABORATORY - VM/SP CMS (1.11)

```
      CALL R32COL(CL);
      IF XSR.CLOC(SHDL+L2-1) = ' 0' |
        ( SUBSTR(DTYPE,1,5) = 'SALEO' & XS.ISP(1) ¬= 'SO        ')
           THEN /* CENTER THE HEADER */
      DO;
        III = 75; CALL ELTRBLK(III,XSR.REPTXT(SHDL+L2-1));
        III = (75 - III)/2;
        CH9 = III;
        XSR.CLOC(SHDL+L2-1) = SUBSTR(CH9,8,2);
        END;  /* OF CENTERING HEADER */
      CALL R32MOV(XSR.CLOC(SHDL+L2-1),LNB);
      TXT = XSR.REPTXT(SHDL+L2-1);
      END; /* OF XSR DISPLAY */
    L4 = 81;
    CALL ELTRBLK(L4,TXT);
    IF L4 < 1 THEN  /* ERROR IN LENGTH OF STRING */
      CALL ERRORST;
    CALL R32OTX(TXT,L4);
    END;  /* OF DISPLAYING HEADER */
  L2 = LNF; LNBH = LNB;
  L1 = SDL - 1;

  IF ((XSR_BIT & ¬XTD_BIT) | (¬XSR_BIT & XTD_BIT)) THEN
    DO;
      DO WHILE ((L2 <= 22 - DW) & (L1 <SDL+NSL-NSOFTKEY-1));
                 /* BUILD THE COLOR BUFFER  USING XSR DATA OR
                    XTD DATA */
        L1 = L1 + 1;
        IF SUBSTR(DTYPE,1,5) = 'SALEO' & XS.ISP(1) ¬= 'SO        '
             THEN   /* CENTER DISPLAY */
          SLOC = 21;
        ELSE IF XSR_BIT & XSR.CLOC(L1) ¬= '' THEN
          SLOC = XSR.CLOC(L1);
        ELSE SLOC = 2;
        IF XSR_BIT THEN TXT = XSR.REPTXT(L1);
        ELSE IF XTD_BIT THEN TXT = XTD.TTX(L1);
        TXT = SUBSTR(TXT,2);
        IF XTD_BIT THEN DO;
          IF XTD.DFCL(L1) = 0 THEN CL = 1;
          ELSE CL = XTD.DFCL(L1);
          L2 = L2 + DW;
          LNF = LNF + DW; LNB = LNB - DW; LN77 = LN77 + 1;
          END; /* OF XTD CASE  */
        IF XSR_BIT THEN DO;
          IF XSR.DFCL(L1) = 0 THEN CL = 1;
          ELSE CL = XSR.DFCL(L1);
          LNF = XSR.RLOC(L1);   LNB = LNBH - LNF;   LN77 = LNF;
          L2 = XSR.RLOC(L1);
          END; /* OF XSR CASE  */
          CALL COLORBUF;  /* BUILD THE COLOR BUFFER */
        END; /* OF BUILDING THE COLOR BUFFER FROM EITHER XSR OR XTD */
      IF SPTXT_BIT THEN  /* DISPLAY NSPL LINES OF SPECIAL TEXT */
      DO;
        L2 = L2 + DW;  L1 = 0;  /* SKIP ONE LINE */
        LNF = LNF + DW; LNB = LNB - DW; LN77 = LN77 + 1;
```

FILE: QKSHOP1  PLIOPT   A   SAN JOSE RESEARCH LABORATORY - VM/SP CMS (1.11)

```
          DO WHILE ((L2 <= 30 - DW) & (L1 < NSPL));
            L2 = L2 + DW;  L1 = L1 + 1;
            LNF = LNF + DW; LNB = LNB - DW; LN77 = LN77 + 1;
            TXT = SPTXT(L1);
            CALL COLORBUF;  /* BUILD THE COLOR BUFFER */
          END;  /* OF SPTXT LOOP */
        END;     /* OF SPTXT_BIT LOOP */
      END;    /* OF XSR_BIT OR XTD LOOP */

  ELSE IF (XSR_BIT & XTD_BIT) THEN /* BUILD COLOR BUFFER USING
                 XTD DATA FIRST THEN XSR DATA */
  DO;
    DO WHILE ((L2 <= 22 - DW) & (L1 < SDL+NSL-1));
                   /* BUILD THE COLOR BUFFER */
      L1 = L1 + 1;
      IF SUBSTR(DTYPE,1,5) = 'WARRO' THEN /* CENTER DISPLAY */
      DO;
        CALL R32MOV(21,LNB);
        SLOC = 21;
        END;  /* OF CENTERING WARRANTY DISPLAY */
      ELSE SLOC = 1;
      L2 = L2 + DW;
      TXT = XTD.TTX(L1);
      TXT = SUBSTR(TXT,2);
      IF XTD.DFCL(L1) = 0 THEN CL = 1;
      ELSE CL = XTD.DFCL(L1);
      LNF = LNF + DW; LNB = LNB - DW; LN77 = LN77 + 1;
      CALL COLORBUF;  /* BUILD THE COLOR BUFFER */
      END; /* OF BUILDING THE COLOR BUFFER FROM XTD DATA */

      IF SPTXT_BIT THEN  /* DISPLAY NSPL LINES OF SPECIAL TEXT */
      DO;
        L2 = L2 + DW;  L1 = 0;  /* SKIP ONE LINE */
        LNF = LNF + DW; LNB = LNB - DW; LN77 = LN77 + 1;
        DO WHILE ((L2 <= 28 - DW) & (L1 < NSPL));
          L2 = L2 + DW;  L1 = L1 + 1;
          LNF = LNF + DW; LNB = LNB - DW; LN77 = LN77 + 1;
          TXT = SPTXT(L1);
          CALL COLORBUF;  /* BUILD THE COLOR BUFFER */
        END;  /* OF SPTXT LOOP */
      END;     /* OF SPTXT_BIT LOOP */

    L1 = SDLXSR - 1;
    DO WHILE ((L2 <= 30 - DW) & (L1 < SDLXSR+NXSRL-1));
                   /* BUILD THE COLOR BUFFER */
      L1 = L1 + 1;
      TXT = XSR.REPTXT(L1);
      TXT = SUBSTR(TXT,2);
      IF XSR.DFCL(L1) = 0 THEN CL = 1;
      ELSE CL = XSR.DFCL(L1);
      LNF = MAX(XSR.RLOC(L1), L2); LNB = LNBH - LNF;
      LN77 = MIN(LNF, 22);
      L2 = LNF + DW;
      CALL COLORBUF;  /* BUILD THE COLOR BUFFER */
      END; /* OF BUILDING THE COLOR BUFFER FROM XSR DATA */
```

FILE: QKSHOP1  PLIOPT   A   SAN JOSE RESEARCH LABORATORY - VM/SP CMS (1.11)

```
        END; /* OF BUILDING THE COLOR BUFFER FROM XTD DATA  AND
               XSR DATA  */

     COLORBUF: PROC;
         /* BUILD THE COLOR BUFFER */

        DCL II  BIN FIXED;

        SLOC = MOD(SLOC,80) ;
        L3 = INDEX (TXT, ')x');
        IF L3 -= 0  THEN DO; /* DISPLAY LINE IN TWO COLORS */
          SUBSTR(TXT, L3 + 1, 1) = ' ';
          CALL R32COL(CL);
          CALL R32MOV(SLOC,LNB);/* STARTING POSITION OF TEXT */
          TXT1 = SUBSTR( TXT, SLOC, 35);
          SUBSTR(SCREEN,(LN77-1)*80+SLOC,35) = TXT1;
          CALL R32OTX(TXT1, 35);
          CL = 2; CALL R32COL(CL);        /* BLUE COLOR CODE */
          CALL R32MOV(36,LNB);/* STARTING POSITION OF TEXT */
          TXT1 = SUBSTR( TXT, 36, 45);
          SUBSTR(SCREEN,(LN77-1)*80+36,45) = TXT1;
          L4 = 81;
          CALL ELTRBLK(L4,TXT1);
          IF L4 < 2 THEN  /* ERROR IN LENGTH OF STRING */
            CALL ERRORST;
          IF L4 = 0 THEN CALL R32OTX(TXT1,L4-1);
          END;   /* SET TWO COLOR LINE  */
        ELSE DO; /* DISPLAY DIFFERENT LINE IN DIFFERENT COLOR */
          CALL R32COL(CL);       /* COLOR CODE */
          CALL R32MOV(SLOC,LNB);/* STARTING POSITION OF TEXT */
          SUBSTR(SCREEN,(LN77-1)*80+1,80) = TXT;
          L4 = 81;
          CALL ELTRBLK(L4,TXT);
          IF L4 < 2 THEN  /* ERROR IN LENGTH OF STRING */
            CALL ERRORST;
          IF TXT -= '' & L4 -= 0 THEN  CALL R32OTX(TXT, L4-1);
          IF TXT -= '' & L4 = 0 THEN   CALL R32OTX(TXT, 80);
          END; /* OF DISPLAY LINE IN ONE COLOR  */
        END COLORBUF;

     IF SPSCBOT_BIT THEN
     DO;
         /* FILL IN SPECIAL SCREEN BOTTOM */
       IF STSCBOT_BIT THEN LNB = 6; ELSE LNB = 4;
       CALL R32MOV(5,LNB);
       TXT = SPSCBOT;
       L4 = 81;
       CALL ELTRBLK(L4,TXT);
       IF L4 < 2 THEN  /* ERROR IN LENGTH OF STRING */
         CALL ERRORST;
       CALL R32OTX(TXT,L4-1);
       END;  /* OF SPECIAL SCREEN BOTTOM */

     IF STSCBOT_BIT THEN
     DO;
```

109

-₹₹₹-

FILE: QKSHOP1  PLIOPT   A   SAN JOSE RESEARCH LABORATORY - VM/SP CMS (1.11)

```
/* FILL IN SCREEN BOTTOM */
LNB = 5;   CALL R32MOV(5,LNB);
TXT = 'SELECT AN ITEM NUMBER AND HIT ENTER';
L4 = 81;
CALL ELTRBLK(L4,TXT);
IF L4 < 2 THEN  /* ERROR IN LENGTH OF STRING */
   CALL ERRORST;
CALL R32OTX(TXT,L4-1);
LNB = 4;   CALL R32MOV(5,LNB);
IF SUBSTR(DTYPE,1,5) = 'PUR00' THEN /* DO NOT INCLUDE
            BACKUP AS POSSIBLE REPLY OPTIONS */
TXT = 'OTHER REPLY OPTIONS:'
               ||' C = CANCEL   N = NEW REQUEST';
   ELSE TXT = 'OTHER REPLY OPTIONS: B = BACKUP  '
               ||' C = CANCEL   N = NEW REQUEST';
L4 = 81;
CALL ELTRBLK(L4,TXT);
IF L4 < 2 THEN  /* ERROR IN LENGTH OF STRING */
   CALL ERRORST;
CALL R32OTX(TXT,L4-1);
END;  /* OF STANDARD SCREEN BOTTOM */
IF MORESC_BIT THEN  /* MORE SCREEN OPTION */
DO;
  LNB = 3;  CALL R32MOV(5,LNB);
  TXT = 'M = MORE TEXT ';
  L4 = 81;
  CALL ELTRBLK(L4,TXT);
  IF L4 < 2 THEN  /* ERROR IN LENGTH OF STRING */
    CALL ERRORST;
  CALL R32OTX(TXT,L4-1);
  END;  /* OF MORESC HANDING */
IF SOFTKEY_BIT THEN  /* SOFTKEY OPTION */
DO;
  LNB = 2;  CALL R32MOV(1,LNB); ..
  TXT = '';
  DO I = 1 TO NSOFTKEY; /* MOVE SOFTKEY DATA */
    II = (I - 1)*19;
    IZ = 21;
    CALL ELTRBLK(IZ,SOFTKEYTAB.SKNAME(I));
    IF IZ < 2 THEN  /* ERROR IN LENGTH OF STRING */
      CALL ERRORST;
    TXT = SUBSTR(TXT,1,II)||'  '||SOFTKEYTAB.SKEY(I)||' = '||
        SUBSTR(SOFTKEYTAB.SKNAME(I),1,IZ-1);
    END;  /* OF I LOOP */
  L4 = 81;
  CALL ELTRBLK(L4,TXT);
  IF L4 < 2 THEN  /* ERROR IN LENGTH OF STRING */
    CALL ERRORST;
  CALL R32OTX(TXT,L4-1);
  END;  /* END OF SOFTKEY HANDLING */
REPLYFLD = '';
CALL R32MOV(1,1);
CALL R32ITX(REPLYFLD,32,RLEN);
REPLYFLD = TRANSLATE( REPLYFLD, 'ABCDEFGHIJKLMNOPQRSTUVWXYZ',
                              'abcdefghijklmnopqrstuvwxyz');
```

FILE: QKSHOP1  PLIOPT   A   SAN JOSE RESEARCH LABORATORY - VM/SP CMS (1.11)

```
    CALL GRAFEND;
    RETURN;
END COLORSC;

SC3277: PROC ;
     /* DISPLAY XTD ON 3277 */

   DCL SC        FIXED BIN;         /* SCREEN COLUMN  */
   DCL SPOS      FIXED BIN;         /* SCREEN POSITION */
   DCL I         FIXED BIN;

   SC = 1;
   SCREEN = ' ';
   REPLYFLD = ' '; CALL PLI3270 (SCREEN, REPLYFLD);
   SUBSTR(SCREEN,1,80) = (80)'*';
   I = 1;   DTL = SDL - 1;
   DO WHILE (I <= NSL & DTL < DL); /* MOVE DATA INTO SCREEN */
     I = I + 1;
     DTL = DTL + 1;
     IF XSR_BIT THEN
     DO;
        SPOS = (XSR.RLOC(DTL)-1)*80 + XSR.CLOC(DTL);
        SUBSTR(SCREEN,SPOS,40) = XSR.REPTXT(DTL);
        END;
     IF XTD_BIT THEN
        DO;
        SPOS = (I - 1)*80*DW + SC;
        SUBSTR(SCREEN,SPOS,80) = XTD.TTX(DTL);
        END;
     END; /* OF MOVING DATA INTO SCREEN */
   SPOS = SPOS + 80*DW;
   SUBSTR(SCREEN,SPOS,80) = (80)'*';
   IF STSCBOT_BIT THEN CALL SCREENBOT;
   END SC3277;

SCREENBOT: PROC ;

     /* ANY SPECIAL DISPLAY FOR LINES 17-22 OF SCREEN
        FOR DIFFERENT TERMINALS AND SCREEN STATE */

   DCL (I,II,SPOS,SC)    BIN FIXED;
   DCL TXT       CHAR(80);

   SC = 1;
   I = 16;
   I = I + 1;
   SPOS = (I - 1)* 80 + SC;
   SUBSTR(SCREEN,SPOS,80) = (80)'*';
   IF SPSCBOT_BIT THEN
   DO;   /* DISPLAY SPECIAL SCREEN BOTTOM */
     I = I + 1; SC = 5;
     SPOS = (I - 1)* 80 + SC;
     SUBSTR(SCREEN,SPOS,80) = SPSCBOT;
     END;   /* OF SPECIAL SCREEN BOTTOM */
```

FILE: QKSHOP1 PLIOPT A SAN JOSE RESEARCH LABORATORY - VM/SP CMS (1.11)

```
    IF STSCBOT_BIT THEN
    DO; /* DISPLAY STANDARD SCREEN BOTTOM */
      I = I + 1; SC = 5;
      SPOS = (I - 1)* 80 + SC;
      SUBSTR(SCREEN,SPOS,36) = ' SELECT AN ITEM NUMBER AND HIT ENTER';
      I = I + 1;
      SPOS = (I - 1)* 80 + SC;
      IF SUBSTR(DTYPE,1,5) = 'PUR00' THEN /* DO NOT INCLUDE BACKUP
                        AS POSSIBLE REPLY OPTIONS */
        SUBSTR(SCREEN,SPOS,53) = 'OTHER REPLY OPTIONS: '
             ||' C = CANCEL  N = NEW REQUEST ';
      ELSE SUBSTR(SCREEN,SPOS,66) = 'OTHER REPLY OPTIONS:  B = '
             ||'BACKUP   C = CANCEL  N = NEW REQUEST ';
      END; /* OF STANDARD SCREEN BOTTOM */

    IF MORESC_BIT THEN  /* MORE SCREEN APPLICABLE */
    DO;
      I = I + 1;
      SPOS = (I - 1)* 80 + SC;
      SUBSTR(SCREEN,SPOS,15) = 'M = MORE SCREEN';
      END; /* MORE SCREEN APPLICABLE */
    I = I + 1;
    SPOS = (I - 1)* 80 + SC;
    SUBSTR(SCREEN,SPOS,10) = 'HE = HELP';
    IF SOFTKEY_BIT THEN  /* SOFTKEY OPTION */
    DO;
      SPOS = 20*80 + 1;
      TXT = '';
      DO II = 1 TO NSOFTKEY; /* MOVE SOFTKEY DATA */
        TXT = TXT||'  '||SOFTKEYTAB.SKEY(II)||' = '||
            SOFTKEYTAB.SKNAME(II);
        END; /* OF II LOOP */
      SUBSTR(SCREEN,SPOS,80) = TXT;
      END; /* OF SOFTKEY HANDLING */
    IF SOFTKEY_BIT THEN I = 21;
    ELSE I = I + 1;
    SC = 1;
    SPOS = (I - 1)* 80 + SC;
    SUBSTR(SCREEN,SPOS,80) = (80)'*';
    END SCREENBOT;

  RPLTRANS: PROC ;

    IF REPLYMODE = 'PCKP' THEN
      PCKPRP2 = SUBSTR(REPLYFLD,2,1);
    IF SUBSTR(REPLYFLD,1,2) = 'HX' THEN GOTO DONE; /* EXIT */

      /* TRANSLATE REPLY & SAVE SCREEN */

    IF MORESC_BIT & NODATA_BIT &
        SUBSTR(REPLYFLD,1,1) ¬= 'M' THEN
        NODATA_BIT = '0'B;

    IF REPLYMODE = '77KB' | REPLYMODE = '79KB' |
```

FILE: QKSHOP1  PLIOPT   A   SAN JOSE RESEARCH LABORATORY - VM/SP CMS (1.11)

```
          REPLYMODE = 'PCKB' THEN
      DO; /* DECODE KEY BOARD COMMANDS */
        IF (SUBSTR(REPLYFLD,1,2) = 'M ') |
           (SUBSTR(REPLYMODE,1,2) = 'PC' & REPLYFLD = 'MY') |
           (SUBSTR(REPLYMODE,1,2) = 'PC' & REPLYFLD = 'MN') THEN
              /* HANDLE MORE TEXT */
        DO;
          SDL = SDL + NSL;  /* ADJUST FOR STARTING POSITION IN
                                 FETCHED DATA */
          IF SDL > DL THEN /* REQUEST NOT VALID */
          DO;
            ERTBL = '';  ERLN = 1;  ERTYP = 'ERRORNMREQ';
            ERTBL(1) = 'MORE TEXT REQUEST NOT VALID';
            CALL ERPAC;
            GOTO DONE;
            END;
          REPLYFLD = 'MORE TEXT';
          STACK = MOD(STACK,STACKSIZ) + 1;
          SCSTACK = MOD(SCSTACK,STACKSIZ) + 1;
          DTYPEIXSV(STACK) = LI;
          SVNSTATE(STACK) = SVNSTATE(STACK-1);
          IF TERMINAL = 'IBM3277' | TERMINAL = 'IBM3279' THEN
             SVCV(STACK) = CV;
          ELSE IF TERMINAL = 'IBMPC  ' THEN
             SVCV(STACK) = CVS.CV1;
          SVCHA20(STACK) = '';
          I = DIVIDE(SDL,MSCI,6);
          CH9 = I;
          IF SUBSTR(SVCHA20(STACK-1),1,7) = 'SOFTKEY' THEN /* SOFTKEY */
              FTXT = REPLYSV(SCSTACK - 2);
          ELSE FTXT = REPLYSV(SCSTACK - 1);     /* PREFIX OF SCREEN ID */
          IX = 21;  CALL ELTRBLK(IX,FTXT); IX = IX - 1;
          IF IX < 2 THEN  /* ERROR IN LENGTH OF STRING */
             CALL ERRORST;
          IF SUBSTR(FTXT,IX-1,1) = 'M' THEN /* ELIMINATE LAST TWO
                                                 CHARACTERS */
          IX = IX - 2;
          IY = 20;  CALL ELLDBLK(IY,FTXT);
          IF SUBSTR(SVCHA20(STACK-1),1,7) = 'SOFTKEY' THEN /* SOFTKEY */
             REPLYSV(SCSTACK) = SUBSTR(FTXT,IY,IX-IY+1)||
                 SUBSTR(SVCHA20(STACK),9,2)||'M'||
                   SUBSTR(CH9,9,1);
          ELSE REPLYSV(SCSTACK) = SUBSTR(FTXT,IY,IX-IY+1)||'M'||
                 SUBSTR(CH9,9,1);
          GOTO SNL.STATEL(LI);
          END;  /* OF CASE M */

        ELSE IF SUBSTR(REPLYFLD,1,2) = 'B ' |
               (SUBSTR(REPLYMODE,1,2) = 'PC' & REPLYFLD = 'BY') |
               (SUBSTR(REPLYMODE,1,2) = 'PC' & REPLYFLD = 'BN') THEN
                  /* BACKUP SCREEN */
        DO;
          IF SUBSTR(DTYPE,1,5) = 'PUR00' THEN /* BACKUP IS NOT
                                          VALID FOR THIS STATE */
            DO;
```

```
        ERTBL = ''; ERLN = 2; ERTYP = 'ERRORNOBAK';
        ERTBL(1) = ' ALL ITEMS HAVE BEEN CHARGED.'||
                     ' BACKUP NOT ';
        ERTBL(2) = ' VALID. PLEASE ENTER NEW REQUEST.';
        CALL ERPAC;
        CALL RPLTRANS;
        RETURN;
        END;  /* OF HANDLING INVALID BACKUP */

     IF REPLYMODE = '77KB' | REPLYMODE = '79KB' |
        REPLYMODE = 'PCKB' THEN
     DO;
        REPLYFLD = 'BACKUP';
        LI  = DTYPEIXSV(STACK);
        IF LI = 0 | LI = 1 THEN  /* BACKUP TO STATE REQ00000 */
           LI = 2;
        STACK = MOD(STACK-2,STACKSIZ) + 1;
        SCSTACK = MOD(SCSTACK-2,STACKSIZ) + 1;
        CVS.CV1 = SVCV(STACK);
        IF SDL > MSCI + NHL THEN /* BACKUP WITHIN
                                             WITHIN MORE SCREEN */
        DO;
           SDL = SDL - MSCI;
           NODATA_BIT = '1'B;
           MORESC_BIT = '1'B;
           END;
        ELSE NODATA_BIT = '0'B;
        SUGITM_BIT = '0'B;
        GOTO SNL.STATEL(LI);
        END; /* OF 77KB OR 79KB OR PCKB CASE */
     END;  /* OF CASE B */
   ELSE IF SUBSTR(REPLYFLD,1,2) = 'C ' THEN /* CANCEL TRANSACTION */
     DO; REPLYFLD = 'CANCEL'; LI = 1;
     QADJ = 'ADD';
     DO IX = 1 TO NUITEM;  /* RETURN ALL ITEMS TO INVENTORY */
        CALL ADJQUAN(SVITM(IX),QADJ,STMT,RCODE);
                  /* ADD ITEM QUANTITY REQUESTED TO QOH */
        IF RCODE ¬= 0 THEN /* ERROR BACKUP */
        DO;
           ERTBL = ''; ERLN = 2; ERTYP = 'ERRORINV';
           ERTBL(1) = ' ERROR: COULD NOT UPDATE INVENTORY.';
           ERTBL(2) = ' PLEASE BACKUP';
           CALL ERPAC;
           END;  /* OF ERROR HANDLING */
        END; /* OF RETURNING ALL REQUESTED ITEMS */
     PCKPRP2 = ' ';  GOTO FISCO000; END;
   ELSE IF SUBSTR(REPLYFLD,1,2) = 'N ' |
        (SUBSTR(REPLYMODE,1,2) = 'PC' & REPLYFLD = 'NY') |
        (SUBSTR(REPLYMODE,1,2) = 'PC' & REPLYFLD = 'NN') THEN
             /* NEW REQUEST  */
     DO; REPLYFLD = 'NEW REQUEST'; LI = 2; SUGITM_BIT = '0'B;
        GOTO REQ00000;
        END;
   ELSE IF SUBSTR(REPLYFLD,1,2) = 'HE' THEN /* HELP REQUESTED */
     DO;
```

FILE: QKSHOP1  PLIOPT   A    SAN JOSE RESEARCH LABORATORY - VM/SP CMS (1.11)

```
       REPLYFLD = 'HELP';
       SCREEN = ' ';
       SUBSTR(SCREEN,250, 50) = 'HELP SERVICE NOT IMPLEMENTED';
       IF STSCBOT_BIT THEN CALL SCREENBOT ;
       IF REPLYMODE = 'PCKB' THEN
       DO;
         DISPLAY('ə%+ HELP SERVICE NOT IMPLEMENTED +%ə');
         DISPLAY(' ') REPLY(REPLYFLD);
         END;
       ELSE IF REPLYMODE = '77KB' THEN
            CALL SC3277;
       ELSE IF REPLYMODE = '79KB' THEN DO;
         DL = 1;
         IF XSR_BIT THEN
            XSR.REPTXT(SDL) = ' HELP SERVICE NOT IMPLEMENTED ';
         IF XTD_BIT THEN
           XTD.TTX(SDL) = ' HELP SERVICE NOT IMPLEMENTED ';
         CALL COLORSC ;
         END;
       CALL RPLTRANS ;
       END; /* OF HELP REQUEST */
     END;  /* OF KEY BOARD COMMANDS TRANSLATION */

   IF REPLYMODE = '77KP' | REPLYMODE = '79KP' |
      REPLYMODE = 'PCKP' THEN
   DO; /* DECODE KEY PAD COMMANDS */
     IF (SUBSTR(REPLYFLD,1,2) = 'M ') |
         (SUBSTR(REPLYMODE,1,2) = 'PC' & REPLYFLD = 'MY') |
         (SUBSTR(REPLYMODE,1,2) = 'PC' & REPLYFLD = 'MN') THEN
            /* HANDLE MORE TEXT */
     DO;
       SDL = SDL + NSL;  /* ADJUST FOR STARTING POSITION IN
                            FETCHED DATA */
       IF SDL > DL THEN /* REQUEST NOT VALID */
       DO;
         IF REPLYMODE = 'PCKP' THEN
           DISPLAY('#ə/MORE TEXT REQUEST NOT VALID/ə#');
         ELSE DISPLAY('MORE TEXT REQUEST NOT VALID');
         GOTO DONE;
         END;
       REPLYFLD = 'MORE TEXT';
       STACK = MOD(STACK,STACKSIZ) + 1;
       SCSTACK = MOD(SCSTACK,STACKSIZ) + 1;
       DTYPEIXSV(STACK) = LI;
       SVNSTATE(STACK) = SVNSTATE(STACK-1);
       IF TERMINAL = 'IBM3277' | TERMINAL = 'IBM3279' THEN
         SVCV(STACK) = CV;
       ELSE IF TERMINAL = 'IBMPC ' THEN
         SVCV(STACK) = CVS.CV1;
       SVCHA20(STACK) = '';
       I = DIVIDE(SDL,MSCI,6);
       CH9 = I;
       IF SUBSTR(SVCHA20(STACK-1),1,7) = 'SOFTKEY' THEN /* SOFTKEY */
         FTXT = REPLYSV(SCSTACK - 2);
       ELSE FTXT = REPLYSV(SCSTACK - 1);    /* PREFIX OF SCREEN ID */
```

FILE: QKSHOP1  PLIOPT    A    SAN JOSE RESEARCH LABORATORY - VM/SP CMS (1.11)

```
IX = 21;  CALL ELTRBLK(IX,FTXT); IX = IX - 1;
IF IX < 2 THEN   /* ERROR IN LENGTH OF STRING */
  CALL ERRORST;
IF IX-IY+1 < 1 THEN  /* ERROR IN LENGTH OF STRING */
  CALL ERRORST;
IF SUBSTR(FTXT,IX-1,1) = 'M' THEN /* ELIMINATE LAST TWO
                                  CHARACTERS */
IX = IX - 2;
IY = 20;  CALL ELLDBLK(IY,FTXT);
IF SUBSTR(SVCHA20(STACK-1),1,7) = 'SOFTKEY' THEN /* SOFTKEY */
  REPLYSV(SCSTACK) = SUBSTR(FTXT,IY,IX-IY+1)||
      SUBSTR(SVCHA20(STACK),9,2)||'M'||
        SUBSTR(CH9,9,1);
ELSE REPLYSV(SCSTACK) = SUBSTR(FTXT,IY,IX-IY+1)||'M'||
      SUBSTR(CH9,9,1);
GOTO SNL.STATEL(LI);
END;  /* OF CASE M */
ELSE IF SUBSTR(REPLYFLD,1,1) = 'B' |
    (SUBSTR(REPLYMODE,1,2) = 'PC' & REPLYFLD = 'BY') |
    (SUBSTR(REPLYMODE,1,2) = 'PC' & REPLYFLD = 'BN') THEN
        /* BACKUP SCREEN */
DO;
  IF SUBSTR(DTYPE,1,5) = 'PUR00' THEN /* BACKUP IS NOT
                              VALID FOR THIS STATE */
  DO;
    ERTBL = ''; ERLN = 2; ERTYP = 'ERRORNOBAK';
    ERTBL(1) = ' ALL ITEMS HAVE BEEN CHARGED.'||
            ' BACKUP NOT';
    ERTBL(2) = ' VALID. PLEASE ENTER NEW REQUEST.';
    CALL ERPAC;
    CALL RPLTRANS;
    RETURN;
    END;  /* OF HANDLING INVALID BACKUP */

  IF REPLYMODE = '77KP' | REPLYMODE = '79KP' |
    REPLYMODE = 'PCKP' THEN
  DO;
    REPLYFLD = 'BACKUP';
    LI   = DTYPEIXSV(STACK);
    IF LI = 0 | LI = 1 THEN  /* BACKUP TO STATE REQ00000 */
      LI = 2;
    STACK = MOD(STACK-2,STACKSIZ) + 1;
    SCSTACK = MOD(SCSTACK-2,STACKSIZ) + 1;
    CVS.CV1 = SVCV(STACK);
    IF SDL > MSCI + NHL THEN /* BACKUP WITHIN
                            MORE SCREEN */
    DO;
      SDL = SDL - MSCI;
      NODATA_BIT = '1'B;
      MORESC_BIT = '1'B;
      END;
    ELSE NODATA_BIT = '0'B;
    SUGITM_BIT = '0'B;
    GOTO SNL.STATEL(LI);
    END; /* OF 77KP OR 79KP OR PCKP CASE */
```

FILE: QKSHOP1  PLIOPT   A    SAN JOSE RESEARCH LABORATORY - VM/SP CMS (1.11)

```
      END;  /* OF CASE B */
    ELSE IF SUBSTR(REPLYFLD,1,1) = 'C' THEN /* CANCEL TRANSACTION */
      DO; REPLYFLD = 'CANCEL'; LI = 1;
      QADJ = 'ADD';
      DO IX = 1 TO NUITEM;  /* RETURN ALL ITEMS TO INVENTORY */
        CALL ADJQUAN(SVITM(IX),QADJ,STMT,RCODE);
                  /* ADD ITEM QUANTITY REQUESTED TO QOH */
        IF RCODE ¬= 0 THEN /* ERROR BACKUP */
        DO;
           ERTBL = ''; ERLN = 2; ERTYP = 'ERRORINV';
           ERTBL(1) = ' ERROR: COULD NOT UPDATE INVENTORY.';
           ERTBL(2) = ' PLEASE BACKUP';
           CALL ERPAC;
           END;  /* OF ERROR HANDLING */
        END; /* OF RETURNING ALL REQUESTED ITEMS */
        PCKPRP2 = ' ';   GOTO FISCO0000; END;
    ELSE IF SUBSTR(REPLYFLD,1,1) = 'N' |
           (SUBSTR(REPLYMODE,1,2) = 'PC' & REPLYFLD = 'NY') |
           (SUBSTR(REPLYMODE,1,2) = 'PC' & REPLYFLD = 'NN') THEN
                       /* NEW REQUEST  */
      DO; REPLYFLD = 'NEW REQUEST'; LI = 2; SUGITM_BIT = '0'B;
         GOTO REQ00000;
         END;
    ELSE IF SUBSTR(REPLYFLD,1,2) = 'HE' THEN /* HELP REQUESTED */
    DO;
       REPLYFLD = 'HELP';
       SCREEN = ' ';
       SUBSTR(SCREEN,250, 50) = 'HELP SERVICE NOT IMPLEMENTED';
       IF STSCBOT_BIT THEN CALL SCREENBOT ;
       IF REPLYMODE = 'PCKP' THEN
       DO;
          DISPLAY('@%+ HELP SERVICE NOT IMPLEMENTED +%@');
          DISPLAY(' ') REPLY(REPLYFLD);
          END;
       ELSE IF REPLYMODE = '77KP' THEN
             CALL SC3277;
       ELSE IF REPLYMODE = '79KP' THEN DO;
          DL = 1;
          IF XSR_BIT THEN
            XSR.REPTXT(SDL) = ' HELP SERVICE NOT IMPLEMENTED ';
          IF XTD_BIT THEN
            XTD.TTX(SDL) = ' HELP SERVICE NOT IMPLEMENTED ';
          CALL COLORSC ;
          END;
       CALL RPLTRANS ;
       END; /* OF HELP REQUEST */
     END;  /* OF KEY PAD COMMANDS TRANSLATION */

  IF REPLYMODE = '77TS' | REPLYMODE = '79TS' |
     REPLYMODE = 'PCTS' THEN
  DO; /* DECODE TOUCH SCREEN COMMANDS */
     END;  /* OF TOUCH SCREEN COMMANDS TRANSLATION */

  END RPLTRANS;
```

FILE: QKSHOP1   PLIOPT   A    SAN JOSE RESEARCH LABORATORY - VM/SP CMS (1.11)

```
PCCHAR: PROC ;

   IF DFON = 'ITALIC' THEN
      CALL PCISC ;
         /* GENERATES PC SCREEN FROM XTD OR XSR IN ITALIC FONT
            STORES IN SCREEN. ALSO
            STORE FOREGROUND COLOR IN TAB.DFCL(SDL) AND
            BACK GROUND COLOR IN TAB.DBCL(SDL)
            WHERE TAB IS EITHER XTD OR XSR  */
   IF DFON = '0' THEN
      CALL PCASC ;
         /* GENERATES PC SCREEN FROM XTD OR XSR IN ALPHABETIC  FONT
            STORES IN SCREEN. ALSO
            STORE FOREGROUND COLOR IN TAB.DFCL(SDL) AND
            BACK GROUND COLOR IN TAB.DBCL(SDL)
            WHERE TAB IS EITHER XTD OR XSR  */

      /* SEND DATA STREAM TO PC AND WAIT FOR REPLY
         --------------------------------------------------        */

   END PCCHAR;

PCISC: PROC ;
         /* GENERATES PC SCREEN FROM XTD OR XSR IN ITALIC FONT
            STORES IN SCREEN. ALSO
            STORE FOREGROUND COLOR IN TAB.DFCL(SDL) AND
            BACK GROUND COLOR IN TAB.DBCL(SDL)
            WHERE TAB IS EITHER XTD OR XSR  */

   END PCISC;

PCASC: PROC ;
         /* GENERATES PC SCREEN FROM XTD OR XSR IN ALPHABETIC  FONT
            STORES IN SCREEN. ALSO
            STORE FOREGROUND COLOR IN TAB.DFCL(SDL) AND
            BACK GROUND COLOR IN TAB.DBCL(SDL)
            WHERE TAB IS EITHER XTD OR XSR  */

   END PCASC;

ELLDBLK: PROC(IY,FTXT);
   /* ELIMINATE LEADING BLANKS FROM TXT */

   DCL (II,IY)    BIN FIXED;
   DCL FTXT        CHAR(80);

   II = IY; IY = 0;
   DO WHILE ( IY < II );
      IY = IY + 1;
      IF SUBSTR(FTXT,IY,1) ¬= ' ' THEN RETURN;
      END;
   END ELLDBLK;

ELTRBLK: PROC(IX,FTXT);
   /* ELIMINATE TAILING BLANKS FROM TXT */
```

FILE: QKSHOP1  PLIOPT   A   SAN JOSE RESEARCH LABORATORY - VM/SP CMS (1.11)

```
   DCL (II,IX)     BIN FIXED;
   DCL FTXT          CHAR(80);

   IF IX < 81 THEN SUBSTR(FTXT,IX) = '';
   II = IX;
   DO WHILE ( II > 1 );
     II = II - 1;
     IF SUBSTR(FTXT,II,1) ¬= ' ' THEN II = 0;
     ELSE IX = II;
     END;
   END ELTRBLK;

COLORTRANS:  PROC (CH3);
              /* TRANSLATES IBM3279  COLOR TO IBMPC COLOR OR
          VICE VERSA */
   DCL CH3     CHAR(3);
   DCL TCH3    CHAR(3);

   TCH3 = '';
   IF TERMINAL = 'IBMPC ' THEN
      /* TRANSLATE IBM3279 COLOR TO IBMPC COLOR */
   DO;
     IF CH3 = '1,' THEN TCH3 = '4,';          /* RED */
     ELSE IF CH3 = '2,' THEN TCH3 = '1,';  /* BLUE */
     ELSE IF CH3 = '3,' THEN TCH3 = '5,';  /* MAGENTA */
     ELSE IF CH3 = '4,' THEN TCH3 = '2,';  /* GREEN */
     ELSE IF CH3 = '5,' THEN TCH3 = '14,'; /* YELLOW */
     ELSE IF CH3 = '6,' THEN TCH3 = '3,';  /* CYAN */
     ELSE IF CH3 = '7,' THEN TCH3 = '7,';  /* WHITE */
     ELSE IF CH3 = '0,' THEN TCH3 = '0,';  /* BLACK */
     END;  /* OF TRANSLATING IBM3279 COLOR TO IBMPC COLOR */

   ELSE IF TERMINAL = 'IBM3279' THEN
        /* TRANSLATE IBMPC COLOR TO IBM3279 COLOR */
   DO;
     IF CH3 = '1,' | CH3 = '9,' THEN TCH3 = '2';         /* BLUE */
     ELSE IF CH3 = '2,' | CH3 = '10,' THEN TCH3 = '4,'; /* GREEN */
     ELSE IF CH3 = '3,' | CH3 = '11,' THEN TCH3 = '6,'; /* CYAN */
     ELSE IF CH3 = '4,' | CH3 = '12,' THEN TCH3 = '1,'; /* RED */
     ELSE IF CH3 = '5,' | CH3 = '13,' THEN TCH3 = '3,'; /* MAGENTA */
     ELSE IF CH3 = '0,' | CH3 = '8,' THEN TCH3 = '0,';  /* BLACK */
     ELSE IF CH3 = '7,' | CH3 = '15,' THEN TCH3 = '7,'; /* WHITE */
     ELSE IF CH3 = '6,' | CH3 = '14,' THEN TCH3 = '5,'; /* YELLOW */
     END;  /* OF TRANSLATING IBMPC COLOR TO IBM3279 COLOR */

   CH3 = TCH3;
   END COLORTRANS;

REPGO:  PROC;
    /* ON THE BASIS OF THE USER REPLYFLD THIS PROCEDURE
       BRANCHES TO THE NEXT STATE    */

   DCL (II,IX,III,IXC) BIN FIXED;
   DCL IQ          FIXED BIN(31);
```

FILE: QKSHOP1  PLIOPT   A   SAN JOSE RESEARCH LABORATORY - VM/SP CMS (1.11)

```
DCL CH1      CHAR(1);
DCL CH5      CHAR(5);
DCL TXT      VAR CHAR(74);

IF SUBSTR(REPLYFLD,1,2) = 'HX' THEN GOTO DONE;
IF TERMINAL = 'IBMPC  ' & REPLYFLD = 'R' THEN
DO;
  DISPLAY('#@/INVALID RETRANSMIT REQUEST/@#');
  GOTO DONE;
  END;
IF SUBSTR(DTYPE,1,5) = 'DEMO0' THEN /* FIND FRAME NUMBER
                    AND DETERMINE ITEMID FROM IT */
DO;
  DEMOIFC = XI.IFC; DEMOILC = XI.ILC;  DEMOITM = XI.IIT;
  IF TERMINAL = 'IBMPC  ' THEN /* ASK PC TO GET FRAME NUMBER */
  DO;
    DISPLAY('@#%DEMO0000ST%#@');
    CALL STOPP;  /* STOP VIDEO DISK */
    TXT = CVS.PCVC;
    DISPLAY('#%/'||TXT||'/%#');  /* SEND PC VIDEO COMMAND */
    CALL FRMNUP;  /* GET VIDEO DISK FRAME NUMBER */
    TXT = CVS.PCVC;
    DISPLAY('#%/'||TXT||'/%#');  /* SEND PC VIDEO COMMAND */
    DISPLAY('#/++/#') REPLY(REPLYFLD);
    CH5 = SUBSTR(REPLYFLD,1,5);
    CV = CH5;
    CALL FINDIT(XI,CV,STMT,RCODE); /* LOCATE ITEM FROM CV */
    CVS.CV1 = XI.IVF;
    REPLYFLD = '1Y';
    END; /* OF IBMPC CASE HANDLING */
  ELSE IF TERMINAL = 'IBM3279' | TERMINAL = 'IBM3277' THEN
                  /* GET FRAME NUMBER */
  DO;
    CALL STOP;
    CALL FRMNU(ADDR(CV)); /* GET FRAME NUMBER OF VIDEO DISK */
    CALL FINDIT(XI,CV,STMT,RCODE); /* LOCATE ITEM FROM CV */
    CV = XI.IVF;
    CALL SEARCH(ADDR(CV));  /* DISPLAY STATIC PICTURE */
    END; /* OF IBM3279 & IBM3277 CASE HANDLING */
  SVIXTM = XI.IIT;
  END;  /* OF DEMO STATE */

IF SUGITM_BIT THEN /* PREVIOUS ITEM PURCHASED WAS A
                    SUGGESTED ITEM */
  PURSUGITM_BIT = '1'B;
ELSE PURSUGITM_BIT = '0'B;  /* INITIALIZE OF PURSUGITM_BIT */
SUGITM_BIT = '0'B;  /* INITIALIZE SUGGESTED ITEM BIT */

IF XSR_BIT THEN  /* FIND NEXT STATE FROM XSR */
DO;
  IX = 0 ;
  ON CONVERSION BEGIN;  /* HANDLE NON NUMBER REPLY */
    IF TERMINAL = 'IBMPC  ' & REPLYMODE = 'PCKP' THEN
    DO;
      ERTBL = ''; ERLN = 2; ERTYP = 'ERRORSENDNU';
```

0140302

120

-122-

```
        ERTBL(1) = 'ERROR: NON NUMBER REPLY = '||REPLYFLD;
        ERTBL(2) = 'SEND NUMBER REPLY';
        CALL ERPAC;
        END;
     IF REPLYMODE = '77KB' | REPLYMODE = '79KB' THEN
     DO;
        ERTBL = ''; ERLN = 2; ERTYP = 'ERRORSENDNU';
        ERTBL(1) = 'ERROR: NON NUMBER REPLY = '||REPLYFLD;
        ERTBL(2) = 'SEND NUMBER REPLY';
        CALL ERPAC;
        END;
     END;  /* OF HANDLING CONVERSION ERROR */
   IF SOFTKEY_BIT THEN /* LOCATE NEXT STATE FROM SOFTKEYTAB */
   DO;
     CH1 = SUBSTR(REPLYFLD,1,1);
     IX = 0;
     DO II = 1 TO NSOFTKEY; /* LOCATE INDEX OF SOFTKEY REPLY */
        IF SOFTKEYTAB.SKEY(II) = CH1 THEN /* LOCATED SOFT KEY */
        DO; IX = II; II = NSOFTKEY + 1; END;
        END;  /* OF II LOOP */
     IF IX = 0 & ITEMWSOFT_BIT THEN GOTO FINDITEM;
     IF IX = 0 THEN /* ERROR */
     DO;
        ERTBL = ''; ERLN = 1; ERTYP = 'ERRORSTKEY';
        ERTBL(1) = ' ERROR: NOT A VALID SOFT KEY.';
        CALL ERPAC;
        GOTO DONE;
        END;  /* OF ERROR HANDLING */

           /* CHARGE CUSTOMER CREDIT */
     IF SUBSTR(DTYPE,1,5) = 'BUY00' & IX ¬= 0 &
        SOFTKEYTAB.SKEY(IX) = 'Q' THEN /* CHARGE CREDIT */
     DO;
        TOTAL = TOTAL/100;  /* ADJUST FOR DECIMAL */
        CALL CHARGE(YC12,TOTAL,STMT,RCODE);  /* CHARGE ACCOUNT */
        IF RCODE = 999999  THEN /* CUSTOMER DOES NOT HAVE SUFFICIENT
                            CREDIT  */
        DO;
           XSRHM_BIT = '1'B;  /* SET BUY SCREEN MODIFICATION BIT */
           OVERCHG = TOTAL;  /* AMOUNT OF OVER CHARGE */
           END;  /* OF HANDLING OVER CHARGE */
        ELSE IF RCODE = 0 THEN    /* ITEMS PURCHASED, CLEAN ITEM LIST */
           DO; NUITEM = 0;  CITEM = ''; END;
        ELSE IF RCODE ¬= 0 THEN   /* ERROR IN SQL */
        DO;
           ERTBL = ''; ERLN = 2; ERTYP = 'ERRORCHARG';
           ERTBL(1) = ' ERROR: MULTIPLE CUSTOMER WITH SAME ID';
           ERTBL(2) = ' OR SOME ERROR IN CHARGING ACCOUNT';
           CALL ERPAC;
           GOTO DONE;
           END;  /* OF ERROR HANDLING */
        END; /* OF HANDLING CHARGE REQUEST */

        /*  SAVE STATE INFORMATION */
     STACK = MOD(STACK,STACKSIZ) + 1;
```

FILE: QKSHOP1  PLIOPT   A    SAN JOSE RESEARCH LABORATORY - VM/SP CMS (1.11)

```
SCSTACK = MOD(SCSTACK,STACKSIZ) + 1;
DTYPEIXSV(STACK) = LI;
IF TSOFTKEY_BIT THEN /* FTXT FROM PREVIOUS REPLYSV */
DO;
   III = 20;
   IY = 19;
   FTXT = REPLYSV(MOD(SCSTACK-2,STACKSIZ)+1);
   END; /* OF HANDLING FTXT FROM PREVIOUS REPLYSV */
ELSE IF CITEM.IIT -= '' THEN /* REPLYSV FROM CITM */
DO;
   III = 9;
   FTXT = CITEM.IIT;
   IY = 8;
   END; /* OF REPLYSV FROM CITM */
ELSE DO;  /* REPLYSV FROM SOFTKEY NAME */
   III = 10;
   FTXT = SOFTKEYTAB.SKNAME(IX);
   IY = 9;
   END; /* OF REPLYSV FROM SOFTKEY NAME */
CALL ELTRBLK(III,FTXT); III = III - 1;
CALL ELLDBLK(IY,FTXT);
IF III-IY+1 < 1 THEN  /* ERROR IN LENGTH OF STRING */
   CALL ERRORST;
REPLYSV(SCSTACK) = SUBSTR(FTXT,IY,III-IY+1)||
                   SUBSTR(SOFTKEYTAB.SKNAME(IX),1,2);
IF XSRHM_BIT THEN  /* RETURN TO BUY STATE */
   SVNSTATE(STACK) = 'BUY00000';
ELSE SVNSTATE(STACK) = SOFTKEYTAB.NSTATE(IX);
SVCV(STACK) = XSR.IVF(1);
SVCHA20(STACK) = 'SOFTKEY '||SUBSTR(SOFTKEYTAB.SKNAME(IX),1,2);
    /* FIND NEXT STATE */
LI = 0;
IF SUBSTR(DTYPE,1,5) = 'INDEX' &
   SUBSTR(XSR.NSTATE(IX),1,4) = 'DEMO' THEN /* CHANGE
       FIRST HEADER LINE OF XSR FOR DEMO STATE */
   XSR.NSTATE(1) = 'DEMO0000';
IF SUBSTR(DTYPE,1,5) = 'INDEX' THEN IX = 1;  /* NEXT STATE
                                    FROM FIRST HEADER LINE */
IF SUBSTR(SOFTKEYTAB.NSTATE(IX),1,6) = 'ITEMOD' THEN
   III = 6;
ELSE III = 5;
DO II = 1 TO 21;  /* SEARCH LABEL */
   IF -XSRHM_BIT & SUBSTR(SNL.STATEN(II),1,III) =
          SUBSTR(SOFTKEYTAB.NSTATE(IX),1,III) |
     XSRHM_BIT & SUBSTR(SNL.STATEN(II),1,III) = 'BUY00' THEN
DO; LI = II; II = 21; END;
END;  /* OF LABEL SEARCHING LOOP */
IF LI = 0 THEN  /* ERROR EXIT  */
DO;
   ERTBL = ''; ERLN = 2; ERTYP = 'ERRORSTATE';
   ERTBL(1) = ' ERROR: NEXT STATE NOT A VALID ';
   ERTBL(2) = ' LABEL IN PROGRAM';
   CALL ERPAC;
   GOTO DONE;
   END;  /* OF ERROR HANDLING */
```

FILE: QKSHOP1  PLIOPT   A   SAN JOSE RESEARCH LABORATORY - VM/SP CMS (1.11)

```
      IF SUBSTR(DTYPE,1,5) = 'BUYOO' &
         SNL.STATEN(LI) = 'INDEX000' THEN /* SUGGESTED ITEMS
                                               REQUESTED */
         SUGITM_BIT = '1'B;
      TSOFTKEY_BIT = '1'B; /* TOUCHED SOFTKEY */

      RETURN;
      END; /* OF SOFTKEY HANDING */

      FINDITEM:
      IF TERMINAL = 'IBMPC  ' & REPLYMODE = 'PCKP' THEN
        IX = SUBSTR(REPLYFLD,1,1);
      ELSE
      DO; II = 33; CALL ELTRBLK(II,REPLYFLD);
        IF II < 2 THEN  /* ERROR IN LENGTH OF STRING */
           CALL ERRORST;
        IX = SUBSTR(REPLYFLD,1,II-1);
        END;
      IF IX = 0 THEN IX = MSCI;
      IF XTD_BIT & XSR_BIT THEN IX = IX +SDLXSR - 1;
      ELSE IF XSR_BIT & SUBSTR(SNL.STATEN(LI),1,5) ¬= 'BUYOO' THEN
        IX = IX + SDL - 1;

      IF PURSUGITM_BIT & NSUGITM > 0 THEN
         /* ELIMINATE PURCHASED ITEM FROM SUGITM TABLE */
      DO;
        DO III = IX TO NSUGITM;
          SUGITM(III) = SUGITM(III+1);
          END;  /* OF III LOOP */
        NSUGITM = NSUGITM - 1;
        END; /* OF ELIMINATING PURCHASED ITEM FROM SUGITM TABLE */

      IF LI ¬= 0 & REPLYFLD ¬= 'MORE TEXT' & REPLYFLD ¬= 'BACKUP'
      THEN  /* SAVE STATE */
      DO;
        IF SUBSTR(SNL.STATEN(LI),1,5) = 'BQ000' THEN
             /* SAVE QUANTITY OF UNITES REQUESTED */
        DO;
          IQ   = IX - SDL + 1;
          CITEM.QUAN = IQ;
          CITEM.IEP = XP.IEP;
          QADJ = 'SUB';
          CALL ADJQUAN(CITEM,QADJ,STMT,RCODE);
                    /* CHECK ITEM QUANTITY REQUESTED, IF QUANTITY
                       NOT AVAILABLE THEN RETURN AVAIL. QUAN IN
                       SVITM.QUAN   */
          IF CITEM.QUAN ¬= IQ THEN
          DO; /* REQUEST DIFFERENT ITEM QUANTITY  */
            ERTBL = ''; ERLN = 3; ERTYP = 'ERRORQUAN';
            CH14 = CITEM.QUAN;
            ERTBL(1) = 'AT PRESENT ONLY '||SUBSTR(CH14,12,3)||
                    ' UNITS OF ITEM ';
            ERTBL(2) = CITEM.INM;
            ERTBL(3) = ' AVAILABLE. PLEASE ENTER BACKUP.';
```

FILE: QKSHOP1  PLIOPT   A   SAN JOSE RESEARCH LABORATORY - VM/SP CMS (1.11)

```
        CALL ERPAC;
        CITEM.QUAN = 0;
        CALL RPLTRANS;
        CALL REPGO;
        RETURN;
        END;
     IX = 1;  /* NEXT STATE FROM FIRST HEADER LINE */
     END;  /* OF BUY QUANTITY CASE */

   ELSE IF SUBSTR(SNL.STATEN(LI),1,5) = 'BUY00'  &
          NUITEM > 0  & IX <= NUITEM THEN
          /* ADJUST QOH IN SIZCOL5 TABLE AND
              THE ELIMINATE ITEM FROM PURCHASE LIST AND
              ALL SUGGESTED ITEMS OF THE ELIMINATED ITEM
              FROM SUGITM TABLE */
   DO;
        /* ELIMINATE SUGGESTED ITEMS  OF DELETED ITEM */
     II = 0;
     DO WHILE (II < NSUGITM+1);
       II = II + 1;
       IF SVITM.IIT(IX) = SUBSTR(SUGITM.PURIIT(II),1,8) THEN
            /* PURCHASE ITEM LOCATED IN SUGITM TABLE */
       DO;
         DO III = II TO NSUGITM;  /* ELIMINATE SUGITM */
           SUGITM(III) = SUGITM(III+1);
           END;  /* OF ELIMINATING CITEM.IIT  */
         NSUGITM = NSUGITM - 1;
         END; /* OF HANDLING PURCHASED ITEM */
       END; /* OF SEARCHING SUGITM TABLE */

     QADJ = 'ADD';
     CALL ADJQUAN(SVITM(IX),QADJ,STMT,RCODE);
            /* ADD ITEM QUANTITY REQUESTED TO QOH */
     DO II = IX TO NUITEM - 1;
       SVITM.IIT(II) = SVITM.IIT(II+1);
       SVITM.INM(II) = SVITM.INM(II+1);
       SVITM.COLOR(II) = SVITM.COLOR(II+1);
       SVITM.SIZE(II) = SVITM.SIZE(II+1);
       SVITM.MODEL(II) = SVITM.MODEL(II+1);
       SVITM.QUAN(II) = SVITM.QUAN(II+1);
       SVITM.STREP(II) = SVITM.STREP(II+1);
       SVITM.IEP(II) = SVITM.IEP(II+1);
       END;  /* OF II LOOP */
     NUITEM = NUITEM - 1;
     XSRHM_BIT = '0'B;  /* NOW CLIM MAY COVER PURCHASE */
     END;  /* OF ELIMINATING ITEM IN BUY STATE */

   IF SUBSTR(SNL.STATEN(LI),1,5) = 'BUY00' THEN
       /* ADJUST REPLY TO MATCH XSR INDEX */
     IX = IX + 2;

   IF SUBSTR(SNL.STATEN(DTYPEIXSV(STACK)),1,5) = 'DEMO0' &
      SUBSTR(XSR.STREP(IX),1,6) = 'ITEMOD' THEN /* PREPARE FOR
                  SCROLLING WITHIN DEMO ITEMS  */
     DO;
```

FILE: QKSHOP1   PLIOPT   A    SAN JOSE RESEARCH LABORATORY - VM/SP CMS (1.11)

```
       CALL ITEMCUR(DEMOIFC,DEMOILC,STMT,RCODE);
       CALL ITEMSET(XI,STMT,RCODE);
       END;
    IF SUBSTR(XSR.STREP(IX),1,6) = 'ITEMOD' THEN /* FIND ADJACENT
                          DEMO ITEMS */
    DO;
       CH2 = SUBSTR(XSR.STREP(IX),9,2);
       IF CH2 = 'PI' | CH2 = 'NI' THEN  /* GET ADJACENT ITEM */
       DO;
          CALL ADJITEM(XI,CH2,STMT,RCODE);
          IF RCODE ¬= 0 THEN /* ERROR BACKUP */
          DO;
             ERTBL = ''; ERLN = 2; ERTYP = 'ERRORNOITM';
             ERTBL(1) = ' ERROR: NO MORE ITEM IN COMMERCIAL.';
             ERTBL(2) = ' PLEASE BACKUP';
             CALL ERPAC;
             END;  /* OF ERROR HANDLING */

          SVIXTM = XI.IIT;
          IF TERMINAL = 'IBM3279' | TERMINAL = 'IBM3277' THEN
                /* SEARCH VIDEO  */
          DO;
             IF XI.IVF ¬= 0  THEN /* SET NEW VIDEO FRAME */
                CV = XI.IVF;
             CALL SEARCH(ADDR(CV));
             END;
          ELSE IF TERMINAL = 'IBMPC ' THEN  /* SET CVS.CV1  */
          DO;
             IF  XI.IVF ¬= 0 THEN  /* NEW VIDEO FRAME */
                CVS.CV1 = XI.IVF;
             END;
          END;  /* ADJACENT DEMO ITEM */
       END;  /* OF ITEMOD CASE */

       /* SAVE STATE INFORMATION  */

    II = SCSTACK;   /* SAVE SCSTACK */
    STACK = MOD(STACK,STACKSIZ) + 1;
    SCSTACK = MOD(SCSTACK,STACKSIZ) + 1;
    DTYPEIXSV(STACK) = LI;
    IF SUBSTR(DTYPE,1,5) = 'BUY00' THEN /* ITEM DELETED FROM
             BUY SCREEN. DO NOT CHANGE REPLYSV */
       REPLYSV(SCSTACK) = REPLYSV(II);
    ELSE IF SUBSTR(DTYPE,1,5) = 'DEMO0'  THEN
          /* ITEM FROM DEMO, USE SVIXTM */
       REPLYSV(SCSTACK) = SVIXTM;
    ELSE IF XSR.STREP(IX) ¬= '' THEN
       REPLYSV(SCSTACK) = XSR.STREP(IX);
    IF REPLYSV(SCSTACK) = '' THEN  /* ERROR */
    DO;
       ERTBL = ''; ERLN = 2; ERTYP = 'ERRORNOSTR';
       ERTBL(1) = ' ERROR: NO REPLYSV. SYSTEM ERROR.';
       ERTBL(2) = ' ADDRESS ACCEPTION.';
       CALL ERPAC;
       END;  /* OF ERROR HANDLING */
```

0140302

```
IF SUBSTR(DTYPE,1,5) = 'DEMOO' &
   SUBSTR(SNL.STATEN(DTYPEIXSV(STACK-1)),1,5) = 'ITEMO' THEN
     /* NEXT STATE IS THE STATE BEFORE DEMO */
  XSR.NSTATE(IX) = SNL.STATEN(DTYPEIXSV(STACK-1));
SVNSTATE(STACK) = XSR.NSTATE(IX);
IF TERMINAL = 'IBM3277' | TERMINAL = 'IBM3279' THEN
  SVCV(STACK) = CV;
ELSE IF TERMINAL = 'IBMPC  ' THEN
  SVCV(STACK) = CVS.CV1;
SVCHA20(STACK) = SUBSTR(XSR.REPTXT(IX),1,20);
II = INDEX(XSR.REPTXT(IX),')');
IF SUBSTR(SNL.STATEN(LI),1,5) = 'COLOR' &
   SUBSTR(XSR.NSTATE(IX),1,5) ¬= 'INSOO' THEN
                /*  SAVE REQUESTED ITEM COLOR  */
  DO;
    IF II = 0 THEN
      CITEM.COLOR = SUBSTR(XSR.REPTXT(IX),1,8);
    ELSE CITEM.COLOR = SUBSTR(XSR.REPTXT(IX),II+3,8);
    CITEM.STREP = XSR.STREP(IX);
    END;
  ELSE IF SUBSTR(SNL.STATEN(LI),1,4) = 'SIZE' &
     SUBSTR(XSR.NSTATE(IX),1,5) ¬= 'INSOO' THEN
                /*  SAVE REQUESTED ITEM SIZE  */
  DO;
    IF II = 0 THEN
      CITEM.SIZE = SUBSTR(XSR.REPTXT(IX),1,8);
    ELSE CITEM.SIZE = SUBSTR(XSR.REPTXT(IX),II+3,8);
    CITEM.STREP = XSR.STREP(IX);
    END;
  ELSE IF SUBSTR(SNL.STATEN(LI),1,5) = 'MODEL' &
     SUBSTR(XSR.NSTATE(IX),1,5) ¬= 'INSOO' THEN
                /*  SAVE REQUESTED ITEM MODEL  */
  DO;
    IF II = 0 THEN
      CITEM.MODEL = SUBSTR(XSR.REPTXT(IX),1,20);
    ELSE CITEM.MODEL = SUBSTR(XSR.REPTXT(IX),II+3,20);
    CITEM.STREP = XSR.STREP(IX);
    END;
  END;  /* OF SAVING STATE */
IF XSR.NSTATE(IX) = 'GNINXBOO' THEN BRANDIX_BIT = '1'B;
  ELSE IF LI <= 2 THEN BRANDIX_BIT = '0'B;
LI = 0;
IF SUBSTR(DTYPE,1,5) = 'INDEX' &
   SUBSTR(XSR.NSTATE(IX),1,4) = 'DEMO' THEN /* CHANGE
       FIRST HEADER LINE OF XSR FOR DEMO STATE */
  XSR.NSTATE(1) = 'DEMO0000';
IF SUBSTR(DTYPE,1,5) = 'INDEX' THEN IX = 1;  /* NEXT STATE
                                 FROM  FIRST HEADER LINE */
IF SUBSTR(XSR.NSTATE(IX),1,6) = 'ITEMOD' THEN
  III = 6;
ELSE III = 5;
DO II = 1 TO 21;  /* SEARCH LABEL */
  IF SUBSTR(SNL.STATEN(II),1,III) =
     SUBSTR(XSR.NSTATE(IX),1,III) THEN
  DO; LI = II; II = 21; END;
```

126

```
      END;  /* OF LABEL SEARCHING LOOP */
   IF LI = 0 THEN  /* ERROR EXIT  */
   DO;
      ERTBL = '';  ERLN = 2;  ERTYP = 'ERRORSTATE';
      ERTBL(1) = ' ERROR: NEXT STATE NOT A VALID LABEL';
      ERTBL(2) = ' LABEL IN PROGRAM';
      CALL ERPAC;
      GOTO DONE;
      END;  /* OF ERROR HANDLING */
   END;  /* OF FINDING NEXT STATE FROM XSR */
   IF XSI_BIT THEN
   DO;
        /* FIND NEXT STATE FOR XSI DATA */
      END;  /* OF XSI DATA HANDLING */
END REPGO;

ERRORST: PROC;
    /* THIS PROCEDURE IS CALLED WHEN ERROR OCCURS IN
       THE LENGTH OF A STRING, LIKE A BLANK LINE */

   ERTBL = '';  ERLN = 3;  ERTYP = 'ERRORBLSTR';
   ERTBL(1) = ' ERROR: IN LENGTH OF STRING.';
   ERTBL(2) = ' POSSIBLY BLANK STRING IN DATA.';
   ERTBL(3) = ' SYSTEM QUITS.';
   ERRORST_BIT = '1'B;
   CALL ERPAC;
   GOTO DONE;
   END ERRORST;

ERPAC: PROC;
    /* THIS PROCEDURE DISPLAYS ERROR MESSAGES.
       ERTYP CONTAINS THE SCREEN TYPE FOR PC.
       ERTBL CONTAINS THE ERROR TEXT AND ERLN CONTAINS THE
       NUMBER OF LINES OF ERROR MESSAGES   */

   DCL (I,II,IX)      FIXED BIN;
   DCL FTXT    CHAR(40);
   DCL R32INT   EXT ENTRY (FIXED(31) BIN, FIXED(31) BIN) OPTIONS(ASM);
   DCL R32ERS   EXT ENTRY OPTIONS(ASM); /* ERASE THE SCREEN   */
   DCL R32COL   EXT ENTRY (FIXED(31) BIN) OPTIONS(ASM);  /* SET COLOR */
   DCL R32REC   EXT ENTRY (FIXED(31) BIN, FIXED(31) BIN, FIXED(31) BIN,
                     FIXED(31) BIN) OPTIONS(ASM);  /* SET RECT */
   DCL R32MOV   EXT ENTRY (FIXED(31) BIN, FIXED(31) BIN) OPTIONS(ASM);
   DCL R32OTX   EXT ENTRY (, FIXED(31) BIN) OPTIONS(ASM);
   DCL R32ITX   EXT ENTRY (, FIXED(31) BIN, FIXED(31) BIN) OPTIONS(ASM);
   DCL GRAFEND  EXT ENTRY OPTIONS(ASM);
   DCL RLEN BIN FIXED(31); /* ACTUAL LENGTH OF REPLY FIELD */
   DCL CL   BIN FIXED(31);

   IF TERMINAL = 'IBM3277' | TERMINAL = 'IBM3279'  THEN
   DO;  /* DISPLAY ERROR ON IBM 3277  OR IBM3279  */
      IF TERMINAL = 'IBM3279' THEN
      DO;  /* INITIALIZE SCREEN & SET BACK GROUND COLOR  */
         CALL R32INT(80,32); /* SCREEN INITIALIZATION */
         CALL R32ERS;            /* SCREEN ERASE   */
```

FILE: QKSHOP1   PLIOPT   A   SAN JOSE RESEARCH LABORATORY - VM/SP CMS (1.11)

```
CL = 5;  /* YELLOW COLOR  */
CALL R32COL(CL);
CALL R32REC(1,1,80,32); /* SET BACKGROUND COLOR */
CL = 1;  /* RED COLOR  */
CALL R32COL(CL);      /* COLOR CODE */
END;  /* IBM3279 BACK GROUND COLOR */
DO II = 1 TO ERLN;  /* DISPLAY ERROR */
IF TERMINAL = 'IBM3277' THEN
  DISPLAY('      '||ERTBL(II));
ELSE IF TERMINAL = 'IBM3279' THEN
DO;  /* IBM3279 DISPLAY  */
  CALL R32MOV(5,31-II);/* STARTING POSITION OF TEXT */
  IX = 41;
  CALL ELTRBLK(IX,ERTBL(II));
  IF IX < 2 & ERRORST_BIT THEN   /* ERROR IN LENGTH OF STRING */
      GOTO DONE;
  IF IX < 2 THEN  CALL ERRORST;
   CALL R32OTX(ERTBL(II), IX-1);
  END;  /* OF IBM3279  DISPLAY */
END;  /* OF ERROR DISPLAY  */
IF TERMINAL = 'IBM3279' THEN
DO; /* RECEIVE REPLY */
  REPLYFLD = '';
  CALL R32MOV(1,1);
  CALL R32ITX(REPLYFLD,32,RLEN);
  REPLYFLD = TRANSLATE( REPLYFLD, 'ABCDEFGHIJKLMNOPQRSTUVWXYZ',
                        'abcdefghijklmnopqrstuvwxyz');
  CALL GRAFEND;
  END;
END;  /* ERROR MSG ON IBM3277  OR IBM3279  */

IF TERMINAL = 'IBMPC  ' THEN
DO;   /* DISPLAY ERROR ON IBMPC  */
  IX = 13;
  CALL ELTRBLK(IX,ERTYP);
  IF IX < 2 & ERRORST_BIT THEN   /* ERROR IN LENGTH OF STRING */
    GOTO DONE;
  IF IX < 2 THEN  CALL ERRORST;
  DISPLAY('@#%'||SUBSTR(ERTYP,1,IX-1)||'%#@');
  DISPLAY('#%@@%#');  /* DO NOT CACHE SCREEN */
  CH9 = ERLN;
  DISPLAY('@#/40,'||SUBSTR(CH9,8,2)||',40,1,5,0,1,1/#@');
  DO II = 1 TO ERLN;  /* DISPLAY ERROR MSG */
   IX = 41;
   CALL ELTRBLK(IX,ERTBL(II));
   IF IX < 2 & ERRORST_BIT THEN   /* ERROR IN LENGTH or STRING */
      GOTO DONE;
   IF IX < 2 THEN  CALL ERRORST;
   DISPLAY('#@/'||SUBSTR(ERTBL(II),1,IX-1)||'/@#');
   END;  /* OF ERROR MSG DISPLAY */
I = MOD(SCSTACK-2,STACKSIZ) + 1;
IX = 21;   CALL ELTRBLK(IX,SVBACKUPSC(I)); IX = IX - 1;
IF IX < 1 & ERRORST_BIT THEN  /* ERROR IN LENGTH OF STRING */
  GOTO DONE;
  IF IX < 1 THEN CALL ERRORST;
```

_120_

```
     DISPLAY('#ə%B:!'||SUBSTR(SVBACKUPSC(I),1,IX)||'%ə#');
     DISPLAY('#/++/#')  REPLY(REPLYFLD);
     END;  /* ERROR MSG ON IBMPC  */


   END ERPAC;
 /* ------------------------------------------------------------ */
VCON: PROCEDURE;
  DCL CHP     POINTER;
  DCL CHR(5) CHAR(1) BASED(CHP);
  CHP = ADDR(CH5);
  DO I=1 TO 5;
    IF CHR(I) = ' ' THEN GOTO S1;
    CVS.PCVC = CVS.PCVC||CHR(I);
    S1: END;
  END VCON;

/*------------------------------------------------------------ */
SEARCHP: PROCEDURE;

   /* WILL INSTRUCT PC TO STOP VIDEO AT FRAME CVS.CV1 */

   CVS.PCVC ='';  CH14 = CVS.CV1;  CH5 = SUBSTR(CH14,10,5);
   CALL VCON;  CVS.PCVC = CVS.PCVC||'C0';
   END SEARCHP;

/*------------------------------------------------------------ */
 AUTSTPP: PROCEDURE;

     /* WILL INSTRUCT PC TO AUTO STOP VIDEO AT FRAME CVS.CV1  */

   CVS.PCVC ='';  CH14 = CVS.CV1;  CH5 = SUBSTR(CH14,10,5);
   CALL VCON;  CVS.PCVC = CVS.PCVC||'C2';
   END AUTSTPP;

/*------------------------------------------------------------ */
 STOPP: PROCEDURE;

      /* WILL INSTRUCT PC TO STOP VIDEO DISK */

   CVS.PCVC = 'B0C3';
   END STOPP;

/*------------------------------------------------------------ */
 FRMNUP: PROCEDURE;

      /* WILL INSTRUCT PC TO FETCH FRAME NUMBER FROM VIDEO DISK */

   CVS.PCVC = 'C5';
   END FRMNUP;

/*------------------------------------------------------------
   CVS.CV1 = 123;  CALL SEARCHP;  DISPLAY('SEARCH = '||CVS.PCVC);
   CVS.CV1 = 45;   CALL AUTSTPP;  DISPLAY('AUTOSP = '||CVS.PCVC);
                   CALL STOPP;    DISPLAY('STOP   = '||CVS.PCVC);
```

—129

FILE: QKSHOP1   PLIOPT   A   SAN JOSE RESEARCH LABORATORY - VM/SP CMS (1.11)

```
                         CALL FRMNUP;  DISPLAY('FRAME  = '||CVS.PCVC);
          ---------------------------------------------------------- */
   DONE:
      CALL COMMIT (STMT, RCODE);
      IF TERMINAL = 'IBMPC  ' THEN
      DO;
        DISPLAY('$∂/EXIT/∂$');
        DISPLAY('$/++/$');
        END;
      ELSE IF TERMINAL = 'IBM32777' | TERMINAL = 'IBM3279' THEN
        DISPLAY('EXIT');
      GOTO EXIT;
   /* ---------------------------------------------------------- */
   EXIT: END QKSHOP1;
   /* ************************************************************** */
```

130

CLAIMS

1. A method for dynamically generating screens of textual data upon at least one information display surface of a terminal (41,43), the terminal communicating with a database management system (31) across a message interface (33), and further having facility for locally storing (caching) and for selectively projecting information received from the database system upon the display surface, and for sending operator initiated data to the database system, comprising the steps of:

    (a) storing object names, attributes, and values relationally as tuples and relations into the database system;

    (b) exhibiting a first menu of textual data upon the display surface;

    (c) selecting of a data element from the displayed first menu by an operator at the terminal;

    (d) responsive to the operator selection, querying the relationally stored data and acquiring a set of tuples therefrom designated by the selection;

    (e) generating a text screen including any menu from the acquired tuple set; and

    (f) displaying the generated text screen upon the display, and rendering the system available for yet another selection of a data element from a displayed menu at the terminal.

2. A method according to claim 1, wherein the step of storing data relationally includes the step of storing such data in first and second normal forms.

3. A method according to claim 1, wherein the step of querying the relationally stored data includes the step of selective blocking objects and values from inclusion within a tuple or tuples defining a screen of data so as to effectuate an elision thereof from the displayed data, whereby a virtual menu is dynamically generated from the relationally stored data.

4. A method according to claim 1, wherein the step of querying and acquiring the relationally stored data includes the steps of storing the acquired data locally at the terminal and upon the condition subsequent of a selection from a displayed menu matching a previous menu selection, referencing the data from that locally stored.

5. A method according to any of claims 1 to 4 wherein the terminal is a point-of-sale terminal.

6. In a system comprising a CPU (31) hosting a database and attendant database management and accessing facilities; and at least one point-of-sale (POS) terminal (33,43) having a first (21) and a second (25) display means, a source (23) of video pictures, input means (27), message interface means (33) coupling the CPU, a local store, and a microprocessor (29) interconnecting the display means, the video source, the input means, and the interface means; a method for dynamically selecting screens of picture data from the video source on the first display means and dynamically generating screens of textual data from the database on the second display means, comprising the steps of:

   (a) storing object names, attributes, and values relationally as tuples and relations in the CPU database;

   (b) exhibiting a first menu of textual data upon the second display means;

   (c) selecting of a data element from the displayed first menu by an operator at the POS terminal and entering the selection into the terminal through the input means;

   (d) responsive to the operator selection, ascertaining whether the menu selection matches a previous selection and in the event of a match querying the local store, otherwise querying the relationally stored data in the CPU database and acquiring therefrom a set of tuples designated by the selection;

   (e) generating a text screen including any menu and any picture information from the acquired tuple set;

   (f) displaying the generated text screen upon the second display means, and responsive to the generated picture information, causing selected pictures to be obtained from the video source and projected upon the first display means; and

(g) rendering the system available for yet another selection of a data element from a menu projected on the second display means or from the picture projected on the first display.

7. A method according to claim 6, wherein the step of matching the menu selection includes the steps:

upon a match, sending activity data to the CPU, creating a text screen from the local store and projecting said text screen upon the second display means, and causing selected pictures determined from the data in the local store to be projected upon the first display means by the video source.

8. A method according to claim 6, wherein the method further includes the steps conditioned by a mismatch between a current and previous menu selection, sending a service request from the POS terminal to the CPU and invoking the database management to acquire a tuple set designated by the selection; and responsively accessing the database and generating a screen format comprising the textual screen information and layout and associated picture identification or accessing data.

9. A method according to claim 6, wherein the step of rendering the system available for yet another selection of a data element includes the selection of an attribute such as color and the like from the picture projected on the first display.

FIG. 1

VIEW AND SHOP STATE TRANSITION DIAGRAM

0140302

RELATIONAL DATABASE

APPLICATION RULES
*SALES
*SUGGESTIONS
*BILLING
*SHIPPING
*DISPLAY

| | ATTRIBUTE 1 | 2 | ---- | ATTRIBUTE n |
|---|---|---|---|---|
| TUPLE 1 | | | | |
| 2 | | | | |
| TUPLE n | | | | |

| DATABASE PROCESSOR | RULES INTERPETER |
|---|---|
| SCREEN FORMATER | COMMUNICATIONS MANAGER |

—31

TEXT SCREEN
*LINES
*WIDTH
*TEXT CHARACTER SET
*COLORS
*GRAPHICS

—33

LOCAL COMPUTER
*SCREEN GENERATION
*SCREEN CACHE
*VIDEO DISK CONTROL
*LOCAL PROGRAMS
*KEYBOARD

29

23

VIDEO DISK PLAYER

24

22

21 VIDEO SCREEN

27

KEYBOARD

25 TEXT COLOR/GRAPHICS SCREEN

FIG. 2    SYSTEM STRUCTURE

0140302

OPERATIONAL

DATA BASE

SQL LANGUAGE

| APPLICATION PROGRAM | MAINTAINENCE PROGRAMS | INTERACTIVE QUERY & UPDATE BY STORE PERSONNEL | APPLICATION PROGRAM |

VIEW & SHOP

BILLING REORDER ETC.

**FIG. 3**

**FIG. 5**

| MAIN PROGRAM |
| PRELOG |
| PURINC |

| STATE |
| DSPLAY |
| RPLTRANS |
| REPGO |

DSPLAY : PROC

| STATE |

| EXEC SQL |

| SET PARAMS |

| PCDSPL | | DSPL779 |

**FIG. 6**

VIDEO DISK
PLAYER 23 7820-II

TV MONITOR
21

IBM PC

TEXT SCREEN
25

KEYBOARD
27

22

24

33

24

VIEW & SHOP

31

3705

33

LOCAL
COMPUTER

LOCAL
DATA
BASE

3033
VM
SQL/D3

FIG. 4

PCDSPL : PROC

STATE

SETS PARAMS

SENDPCTYP

SENDPCHDR

SENDPCSKP

SENDPCITEMS

SENDPCTXT

SENDPCVDC

WAIT FOR REPLY

FIG. 7

0140302

STATE

ATTINX

ITALIC

STANDARD

CTALSC

ALPHASC

SC3277

COLORSC

VIDEO COMMAND

SEARCH

AUTOSTP

FIG. 8

| KEYBOARD |
|---|
| 77KB, 79KB, PCKB |

| KEYPAD |
|---|
| 77KP, 79KP, PCKP |

| TOUCH SCREEN |
|---|
| 77TS, 79TS, PCTS |

MORE SCREEN

BACKUP

CANCEL

NEW REQUEST

HELP

LOGIC

FIG. 9

REPGO: PROC.

NEXT STATE
USING TABLE

NEXT STATE
USING LOGIC

FIG.10

0140302

```
                    ┌──────────┐
                    │  START   │
                    └────┬─────┘
                         │
                         ▼
              ┌────────────────────┐
              │       ENTER        │
              │ CREDIT CARD NO.    │
              │   & PASSWORD       │
              └─────────┬──────────┘
                        │
                        ▼
              ┌────────────────────┐
              │  INITIAL SCREENS   │
              │   PRESENTED TO     │
              │    CUSTOMER        │
              └─────────┬──────────┘
                        │
                        ▼
              ┌────────────────────┐
              │ CUSTOMER SELECTS   │
              │ ITEM FROM MENU ON  │
              │   TEXT SCREEN      │
              └─────────┬──────────┘
```

IS SELECTED ITEM IN THE VIDEO CACHE ?

NO

YES

SEND SERVICE REQUEST TO HOST

CREATE NEW TEXT SCREEN AND SEND COMMAND TO VIDEO SOURCE

23

HOST USES APPLICATION RULES & ACCESSES DATA USING SQL

SEND ACTIVITY DATA TO HOST

HOST GENERATES SCREEN FORMATTING INFO

HOST PROCESSES & STORES IN SQL

VIDEO SOURCE ACCESSES VIDEO INFO

HOST REPLIES TO POS UPROCC 29

FIG. 11

| 1 | AUTOMOTIVE |
| 2 | HARDWARE |
| 3 | OUTDOOR COOKING |
| 4 | PAINT |
| 5 | SPORT |

FIG. 12A

| | ITEM NAME | DEPT NAME | CATEGORY | MODEL |
|---|---|---|---|---|
| 1 | 1976 CHEV. GRILL | AUTOMOTIVE | GRILLS | 350LJ |
| 2 | GAS GRILL | OUTDOOR COOKING | GRILLS | REGULAR |
| 3 | GAS GRILL | OUTDOOR COOKING | GRILLS | DELUXE |
| 4 | ELECTRIC GRILL | OUTDOOR COOKING | GRILLS | REGULAR |
| 5 | ELECTRIC GRILL | OUTDOOR COOKING | GRILLS | SUPER |
| 6 | HOW TO COOK OUTDOORS | BOOK | BOOKS | |
| 7 | HOW TO COOK OUTDOORS | OUTDOOR COOKING | BOOKS | |
| 8 | PICNIC TABLE | OUTDOOR COOKING | TABLES | REDWOOD |
| 9 | PICNIC TABLE | OUTDOOR COOKING | TABLES | ALUMINUM |

FIG. 12 B

SQL/DS QUERY

```
SELECT DISTINCT CATEGORY
FROM SKU TABLE
WHERE DEPT NAME = OUTDOOR COOKING
ORDER BY CATEGORY
```

FIG. 12C

OUTDOOR COOKING

| 1 | BOOKS |
| 2 | GRILLS |
| 3 | TABLES |

FIG. 12D